(19) Europäisches Patentamt
European Patent Office
Office européen des brevets

(11) EP 3 609 009 A1

(12) **EUROPEAN PATENT APPLICATION**

(43) Date of publication:
**12.02.2020 Bulletin 2020/07**

(21) Application number: **19199490.4**

(22) Date of filing: **21.05.2013**

(51) Int Cl.:
***H01M 8/14*** *(2006.01)* ***H01M 4/86*** *(2006.01)*
*H01M 8/22* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2012 US 201261649606 P**
**13.07.2012 US 201261671348 P**
**27.08.2012 US 201261693462 P**
**02.10.2012 US 201261708869 P**
**26.10.2012 US 201261718959 P**
**14.03.2013 US 201361783698 P**
**10.05.2013 US 201361821594 P**

(62) Document number(s) of the earlier application(s) in accordance with Art. 76 EPC:
**13799132.9 / 2 852 995**

(71) Applicant: **Blacklight Power, Inc.**
**Cranbury, NJ 08512 (US)**

(72) Inventor: **Mills, Randell L.**
**Cranbury, NJ New Jersey 08512 (US)**

(74) Representative: **Uexküll & Stolberg**
**Partnerschaft von**
**Patent- und Rechtsanwälten mbB**
**Beselerstraße 4**
**22607 Hamburg (DE)**

Remarks:
This application was filed on 25-09-2019 as a divisional application to the application mentioned under INID code 62.

(54) **CIHT POWER SYSTEM**

(57) An electrochemical power system is provided that generates an electromotive force (EMF) from the catalytic reaction of hydrogen to lower energy (hydrino) states providing direct conversion of the energy released from the hydrino reaction into electricity, the system comprising at least two components chosen from: $H_2O$ catalyst or a source of $H_2O$ catalyst; atomic hydrogen or a source of atomic hydrogen; reactants to form the $H_2O$ catalyst or source of $H_2O$ catalyst and atomic hydrogen or source of atomic hydrogen; and one or more reactants to initiate the catalysis of atomic hydrogen. The electrochemical power system for forming hydrinos and electricity can further comprise a cathode compartment comprising a cathode, an anode compartment comprising an anode, optionally a salt bridge, reactants that constitute hydrino reactants during cell operation with separate electron flow and ion mass transport, a source of oxygen, and a source of hydrogen. Due to oxidation-reduction cell half reactions, the hydrino-producing reaction mixture is constituted with the migration of electrons through an external circuit and ion mass transport through a separate path such as the electrolyte to complete an electrical circuit. A power source and hydride reactor is further provided that powers a power system comprising (i) a reaction cell for the catalysis of atomic hydrogen to form hydrinos, (ii) a chemical fuel mixture comprising at least two components chosen from: a source of $H_2O$ catalyst or $H_2O$ catalyst; a source of atomic hydrogen or atomic hydrogen; reactants to form the source of $H_2O$ catalyst or $H_2O$ catalyst and a source of atomic hydrogen or atomic hydrogen; one or more reactants to initiate the catalysis of atomic hydrogen; and a support to enable the catalysis, (iii) thermal systems for reversing an exchange reaction to thermally regenerate the fuel from the reaction products, (i) a heat sink that accepts the heat from the power-producing reactions, and (v) a power conversion system.

EP 3 609 009 A1

Fig. 1

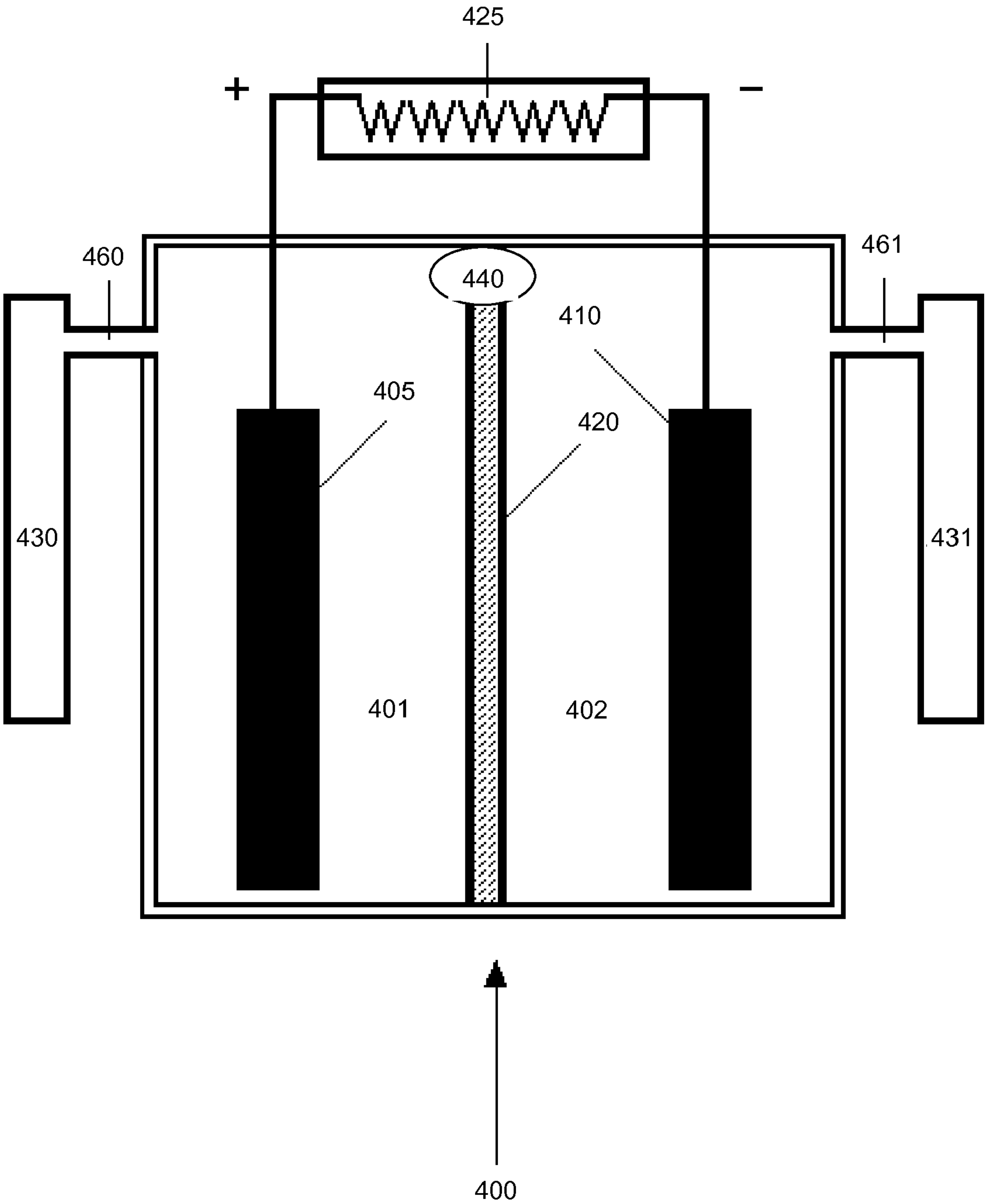

## Description

## CROSS-REFERENCES TO RELATED APPLICATIONS

This application claims the benefit of priority of U.S. Provisional Application Nos. 61/649,606, filed May 21, 2012; 61/671,348, filed July 13, 2012; 61/693,462, filed August 27, 2012; 61/708,869, filed October 2, 2012; 61/718,959, filed October 26, 2012; 61/783,698, filed March 14, 2013; and 61/821,594, filed May 10, 2013, all of which are herein incorporated by reference in their entirety.

## SUMMARY OF DISCLOSED EMBODIMENTS:

The present disclosure is directed to an electrochemical power system that generates at least one of a voltage and electricity and thermal energy comprising a vessel, the vessel comprising at least one cathode; at least one anode, at least one bipolar plate, and reactants that constitute hydrino reactants during cell operation with separate electron flow and ion mass transport, the reactants comprising at least two components chosen from: a) at least one source of $H_2O$; b) a source of oxygen, c) at least one source of catalyst or a catalyst comprising at least one of the group chosen from nH, O, $O_2$, OH, $OH^-$, and nascent $H_2O$, wherein n is an integer; and d) at least one source of atomic hydrogen or atomic hydrogen; one or more reactants to form at least one of the source of catalyst, the catalyst, the source of atomic hydrogen, and the atomic hydrogen; and one or more reactants to initiate the catalysis of atomic hydrogen. In n embodiment, the combination of the cathode, anode, reactants, and bipolar plate permit the catalysis of atomic hydrogen to form hydrinos to propagate that maintains a chemical potential or voltage between each cathode and corresponding anode. And, the system further comprising an electrolysis system. In an embodiment, electrochemical power system comprises at least one of a porous electrode, a gas diffusion electrode, and a hydrogen permeable anode wherein at least one of oxygen and $H_2O$ is supplied to the cathode and $H_2$ is supplied to the anode. The electrochemical power system may comprise at least one of a hydrided anode and a closed hydrogen reservoir having at least one surface comprising a hydrogen permeable anode. The electrochemical power system may comprise back-to-back hydrogen permeable anodes with counter cathodes comprising a unit of a stack of cells that are electrically connected in at least one manner of series and parallel. In an embodiment, the electrochemical power system further comprises at least one gas supply system each comprising a manifold, gas line, and gas channels connected to the electrode. In an embodiment, the electrochemical power system cathode comprises at least one of a capillary system and radial gas channels with circumferential perforations, a porous electrode, and a porous layer to transport at least one of $H_2O$ and $O_2$ towards the center of the cell relative to the periphery. The hydrogen permeable anode may comprise at least one of Co Tape cast, Ni tape cast Mo tape cast, Mo, a Mo alloy, MoNi, MoCu, TZM, H242, Ni, Co, a Ni alloy, NiCo, and other transition and inner transition metals and alloys, and CuCo. The hydrogen pressure supplied to the permeable anode may be maintained in the range of at least one of about 1 Torr to 500 atm, 10 Torr to 100 atm, and 100 Torr to 5 atm, and the hydrogen permeation rate may be in the range of at least one of about 1 X $10^{-13}$ mole $s^{-1}$ $cm^{-2}$ t0 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$, and 1 X $10^{-9}$ mole $s^{-1}$ $cm^{-2}$ to 1 X $10^{-8}$ mole $s^{-1}$ $cm^{-2}$. In an embodiment, the hydrogen permeable anode comprises a highly permeable membrane coated with a material that is effective at facilitating the catalysis of atomic hydrogen to form hydrinos. The coating material of the hydrogen permeable anode may comprise at least one of Mo, a Mo alloy, MoNi, MoCu, MoCo, MoB, MoC, MoSi, MoCuB, MoNiB, MoSiB, Co, CoCu, CoNi, and Ni and the H permeable material may comprise at least one of $Ni(H_2)$, $V(H_2)$, $Ti(H_2)$, $Nb(H_2)$, $Pd(H_2)$, $PdAg(H_2)$, $Fe(H_2)$, $Ta(H_2)$, stainless steel (SS), and 430 SS $(H_2)$. In an embodiment, the electrolysis system of the electrochemical power system intermittently electrolyzes $H_2O$ to provide a source of atomic hydrogen or atomic hydrogen and discharges the cell such that there is a gain in the net energy balance of the cycle. In an embodiment, the reactants of the electrochemical power system comprise at least one electrolyte chosen from: at least one molten hydroxide; at least one eutectic salt mixture; at least one mixture of a molten hydroxide and at least one other compound; at least one mixture of a molten hydroxide and a salt; at least one mixture of a molten hydroxide and halide salt; an electrolyte additive comprising a solid fuel of the present disclosure; at least one mixture of an alkaline hydroxide and an alkaline halide; at least one alkaline earth, transition metal, or Bi hydroxide additive; an additive comprising at least one of $Ni(OH)_2$, $Co(OH)_2$, $Cu(OH)_2$, $Ca(OH)_2$ and $Bi(OH)_3$; LiOH-LiBr, LiOH-NaOH, LiOH-LiBr-NaOH, LiOH-LiX-NaOH, LiOH-LiX, NaOH-NaBr, NaOH-NaI, NaOH-NaX, and KOH-KX, wherein X represents a halide), at least one matrix, and at least one additive. The additive may comprise a compound that is a source of a common ion of at least one anode corrosion product wherein the corresponding common ion effect at least partially prevents the anode from corroding. The source of a common ion may prevent the formation of at least one of CoO, NiO, and $MoO_2$. In an embodiment, the additive comprises at least one of a compound comprising a metal cation of the anode and an anion, hydroxide, a halide, oxide, sulfate, phosphate, nitrate, carbonate, chromate, perchlorate, and periodate and a compound comprising the matrix and an oxide, cobalt magnesium oxide, nickel magnesium oxide, copper magnesium oxide, CuO, CrO4, ZnO, MgO, CaO, $MoO_2$, $TiO_2$, $ZrO_2$, $SiO_2$, $Al_2O_3$, NiO,

FeO or $Fe_2O_3$, $TaO_2$, $Ta_2O_5$, VO, $VO_2$, $V_2O_3$, $V_2O_5$, $P_2O_3$, $P_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, and $CrO_3$. In an embodiment, the electrolyte is aqueous and alkaline and at least one of the pH of the electrolyte and the cell voltage are controlled to achieved stability of the anode. The cell voltage per cell during the intermittent electrolysis and discharge may be maintained above the potential that prevents the anode from substantially oxidizing.

The present disclosure is further directed to a power system that generates thermal energy comprising: at least one vessel capable of a pressure of at least one of atmospheric, above atmospheric, and below atmospheric; at least one heater, reactants that constitute hydrino reactants comprising: a) a source of catalyst or a catalyst comprising nascent $H_2O$; b) a source of atomic hydrogen or atomic hydrogen; c) reactants comprising a hydroxide compound and a halide compound to form at least one of the source of catalyst, the catalyst, the source of atomic hydrogen, and the atomic hydrogen; and one or more reactants to initiate the catalysis of atomic hydrogen wherein the reaction occurs upon at least one of mixing and heating the reactants. At least one of the hydroxide compound and the halide compound comprise at least one of alkaline, alkaline earth, transition, inner transition, and rare earth metals, and Al, Ga, In, Sn, Pb, Bi, Cd, Cu, Co, Mo, and Ni, Sb, Ge, Au, Ir, Fe, Hg, Mo, Os, Pd, Re, Rh, Ru, Se, Ag, Tc, Te, Tl, Sn, W, and Zn. In an embodiment, the reactants further comprise a source of $H_2O$ that is reacted with the products to regenerate the reactants.

The present disclosure is directed to an electrochemical power system that generates at least one of electricity and thermal energy comprising a vessel closed to atmosphere, the vessel comprising at least one cathode; at least one anode, at least one bipolar plate, and reactants that constitute hydrino reactants during cell operation with separate electron flow and ion mass transport, the reactants comprising at least two components chosen from: a) at least one source of $H_2O$; b) at least one source of catalyst or a catalyst comprising at least one of the group chosen from nH, OH, $OH^-$, nascent $H_2O$,$H_2S$, or $MNH_2$, wherein n is an integer and M is alkali metal; and c) at least one source of atomic hydrogen or atomic hydrogen, one or more reactants to form at least one of the source of catalyst, the catalyst, the source of atomic hydrogen, and the atomic hydrogen; one or more reactants to initiate the catalysis of atomic hydrogen; and a support, wherein the combination of the cathode, anode, reactants, and bipolar plate maintains a chemical potential between each cathode and corresponding anode to permit the catalysis of atomic hydrogen to propagate, and the system further comprising an electrolysis system. In an embodiment, the electrolysis system of the electrochemical power system intermittently electrolyzes $H_2O$ to provide the source of atomic hydrogen or atomic hydrogen and discharges the cell such that there is a gain in the net energy balance of the cycle. The reactants may comprise at least one electrolyte chosen from: at least one molten hydroxide; at least one eutectic salt mixture; at least one mixture of a molten hydroxide and at least one other compound; at least one mixture of a molten hydroxide and a salt; at least one mixture of a molten hydroxide and halide salt; at least one mixture of an alkaline hydroxide and an alkaline halide; LiOH-LiBr, LiOH-LiX, NaOH-NaBr, NaOH-NaI, NaOH-NaX, and KOH-KX, wherein X represents a halide), at least one matrix, and at least one additive. The electrochemical power system may further comprise a heater. The cell temperature of the electrochemical power system above the electrolyte melting point may be in at least one range chosen from about 0 to 1500 °C higher than the melting point, from about 0 to 1000 °C higher than the melting point, from about 0 to 500 °C higher than the melting point, 0 to about 250 °C higher than the melting point, and from about 0 to 100 °C higher than the melting point. In embodiments, the matrix of the electrochemical power system comprises at least one of oxyanion compounds, aluminate, tungstate, zirconate, titanate, sulfate, phosphate, carbonate, nitrate, chromate, and manganate, oxides, nitrides, borides, chalcogenides, silicides, phosphides, and carbides, metals, metal oxides, nonmetals, and nonmetal oxides; oxides of alkali, alkaline earth, transition, inner transition, and earth metals, and Al, Ga, In, Sn, Pb, S, Te, Se, N, P, As, Sb, Bi, C, Si, Ge, and B, and other elements that form oxides or oxyanions; at least one oxide such as one of an alkaline, alkaline earth, transition, inner transition, and rare earth metal, and Al, Ga, In, Sn, Pb, S, Te, Se, N, P, As, Sb, Bi, C, Si, Ge, and B, and other elements that form oxides, and one oxyanion and further comprise at least one cation from the group of alkaline, alkaline earth, transition, inner transition, and rare earth metal, and Al, Ga, In, Sn, and Pb cations; $LiAlO_2$, MgO, $Li_2TiO_3$, or $SrTiO_3$; an oxide of the anode materials and a compound of the electrolyte; at least one of a cation and an oxide of the electrolyte; an oxide of the electrolyte MOH (M = alkali); an oxide of the electrolyte comprising an element, metal, alloy, or mixture of the group of Mo, Ti, Zr, Si, Al, Ni, Fe, Ta, V, B, Nb, Se, Te, W, Cr, Mn, Hf, Co, and M', wherein M' represents an alkaline earth metal; $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO; an oxide of the cathode material and optionally an oxide of the electrolyte; $Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2PO_4$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and M'O, wherein M' represents an alkaline earth metal, and MgO; an oxide of an element of the anode or an element of the same group, and $Li_2MoO_4$, $MoO_2$, $Li_2WO_4$, $Li_2CrO_4$, and $Li_2Cr_2O_7$ with a Mo anode, and the additive comprises at least one of S, $Li_2S$, oxides, $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $P_2O_3$, $P_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MgO, $Li_2TiO_3$, $LiAlO_2$, $Li_2MoO_3$ or $Li_2MoO_4$, $Li_2ZrO_3$, $Li_2SiO_3$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_3$, or $LiCoO_2$, MnO, and $CeO_2$. At least one of the

following reactions may occur during the operation of the electrochemical power system: a) at least one of H and $H_2$ is formed at the discharge anode from electrolysis of $H_2O$; b) at least one of O and $O_2$ is formed at the discharge cathode from electrolysis of $H_2O$; c) the hydrogen catalyst is formed by a reaction of the reaction mixture; d) hydrinos are formed during discharge to produce at least one of electrical power and thermal power; e) $OH^-$ is oxidized and reacts with H to form nascent $H_2O$ that serves as a hydrino catalyst; f) $OH^-$ is oxidized to oxygen ions and H; g) at least one of oxygen ions, oxygen, and $H_2O$ are reduced at the discharge cathode; h) H and nascent $H_2O$ catalyst react to form hydrinos; and i) hydrinos are formed during discharge to produce at least one of electrical power and thermal power. In an embodiment of the electrochemical power system the at least one reaction of the oxidation of $OH^-$ and the reduction of at least one of oxygen ions, oxygen, and $H_2O$ occur during cell discharge to produce an energy that exceeds the energy during the electrolysis phase of the intermittent electrolysis. The discharge current over time may exceed the current over time during the electrolysis phase of the intermittent electrolysis. In an embodiment, the anode half-cell reaction may be

$$OH^- + 2H \text{ to } H_2O + e^- + H(1/4)$$

wherein the reaction of a first H with $OH^-$ to form $H_2O$ catalyst and $e^-$ is concerted with the $H_2O$ catalysis of a second H to hydrino. In embodiments, the discharge anode half-cell reaction has a voltage of at least one of about 1.2 volts thermodynamically corrected for the operating temperature relative to the standard hydrogen electrode, and a voltage in at least one of the ranges of about 1.5V to 0.75V, 1.3V to 0.9V, and 1.25V to 1.1V relative to a standard hydrogen electrode and 25 °C, and the cathode half-cell reactions has a voltage of at least one of about 0 V thermodynamically corrected for the operating temperature, and a voltage in at least one of the ranges of about -0.5V to +0.5V, -0.2V to +0.2V, and -0.1V to +0.1V relative to the standard hydrogen electrode and 25 °C.

In an embodiment of the electrochemical power system of the present disclosure, the cathode comprises NiO, the anode comprises at least one of Ni, Mo, H242 alloy, and carbon, and the bimetallic junction comprises at least one of Hastelloy, Ni, Mo, and H242 that is a different metal than that of the anode. The electrochemical power system may comprise at least one stack of cells wherein the bipolar plate comprises a bimetallic junction separating the anode and cathode. In an embodiment, the cell is supplied with $H_2O$, wherein the $H_2O$ vapor pressure is in at least one range chosen from about 0.001 Torr to 100 atm, about 0.001 Torr to 0.1 Torr, about 0.1 Torr to 1 Torr, about 1 Torr to 10 Torr, about 10 Torr to 100 Torr, about 100 Torr to 1000 Torr, and about 1000 Torr to 100 atm, and the balance of pressure to achieve at least atmospheric pressure is provided by a supplied inert gas comprising at least one of a noble gas and $N_2$. In an embodiment, the electrochemical power system may comprise a water vapor generator to supply $H_2O$ to the system. In an embodiment, the cell is intermittently switched between charge and discharge phases, wherein (i) the charging phase comprises at least the electrolysis of water at electrodes of opposite voltage polarity, and (ii) the discharge phase comprises at least the formation of $H_2O$ catalyst at one or both of the electrodes; wherein (i) the role of each electrode of each cell as the cathode or anode reverses in switching back and forth between the charge and discharge phases, and (ii) the current polarity reverses in switching back and forth between the charge and discharge phases, and wherein the charging comprises at least one of the application of an applied current and voltage. In embodiments, at least one of the applied current and voltage has a waveform comprising a duty cycle in the range of about 0.001% to about 95%; a peak voltage per cell within the range of about 0.1 V to 10 V; a peak power density of about 0.001 W/$cm^2$ to 1000 W/ $cm^2$, and an average power within the range of about 0.0001 W/$cm^2$ to 100 W/ $cm^2$ wherein the applied current and voltage further comprises at least one of direct voltage, direct current, and at least one of alternating current and voltage waveforms, wherein the waveform comprises frequencies within the range of about 1 to about 1000 Hz. The waveform of the intermittent cycle may comprise at least one of constant current, power, voltage, and resistance, and variable current, power, voltage, and resistance for at least one of the electrolysis and discharging phases of the intermittent cycle. In embodiments, the parameters for at least one phase of the cycle comprises: the frequency of the intermittent phase is in at least one range chosen from about 0.001 Hz to 10 MHz, about 0.01 Hz to 100 kHz, and about 0.01 Hz to 10 kHz; the voltage per cell is in at least one range chosen from about 0.1 V to 100 V, about 0.3 V to 5 V, about 0.5 V to 2 V, and about 0.5 V to 1.5 V; the current per electrode area active to form hydrinos is in at least one range chosen from about 1 microamp $cm^{-2}$ to 10 A $cm^{-2}$, about 0.1 milliamp $cm^{-2}$ to 5 A $cm^{-2}$, and about 1 milliamp $cm^{-2}$ to 1 A $cm^{-2}$; the power per electrode area active to form hydrinos is in at least one range chosen from about 1 microW $cm^{-2}$ to 10 W $cm^{-2}$, about 0.1 milliW $cm^{-2}$ to 5 W $cm^{-2}$, and about 1 milliW $cm^{-2}$ to 1 W $cm^{-2}$; the constant current per electrode area active to form hydrinos is in the range of about 1 microamp $cm^{-2}$ to 1 A $cm^{-2}$; the constant power per electrode area active to form hydrinos is in the range of about 1 milliW $cm^{-2}$ to 1 W $cm^{-2}$; the time interval is in at least one range chosen from about $10^{-4}$ s to 10,000 s, $10^{-3}$ s to 1000 s, and $10^{-2}$ s to 100 s, and $10^{-1}$ s to 10 s; the resistance per cell is in at least one range chosen from about 1milliohm to 100 Mohm, about 1 ohm to 1 Mohm, and 10 ohm to 1 kohm; conductivity of a suitable load per electrode area active to form hydrinos is in at least one range chosen from about $10^{-5}$ to 1000 $ohm^{-1}$ $cm^{-2}$, $10^{-4}$ to 100 $ohm^{-1}$ $cm^{-2}$, $10^{-3}$ to 10 $ohm^{-1}$ $cm^{-2}$, and $10^{-2}$ to 1 $ohm^{-1}$ $cm^{-2}$, and at least one of the discharge current, voltage, power, or time interval is larger than that of the electrolysis phase to give rise to

at least one of power or energy gain over the cycle. The voltage during discharge may be maintained above that which prevents the anode from excessively corroding.

In an embodiment of the electrochemical power system, the catalyst-forming reaction is given by

$$O_2 + 5H^+ + 5e^- \text{ to } 2H_2O + H(1/p);$$

the counter half-cell reaction is given by

$$H_2 \text{ to } 2H^+ + 2e^-;$$

and the overall reaction is given by

$$3/2H_2 + 1/2O_2 \text{ to } H_2O + H(1/p).$$

At least one of the following products may be formed from hydrogen during the operation of the electrochemical power system: a) a hydrogen product with a Raman peak at integer multiple of 0.23 to 0.25 $cm^{-1}$ plus a matrix shift in the range of 0 to 2000 $cm^{-1}$; b) a hydrogen product with a infrared peak at integer multiple of 0.23 to 0.25 $cm^{-1}$ plus a matrix shift in the range of 0 to 2000 $cm^{-1}$; c) a hydrogen product with a X-ray photoelectron spectroscopy peak at an energy in the range of 475 to 525 eV or 257 $\pm$25 eV, 509 $\pm$25 eV, 506 $\pm$25 eV, 305 $\pm$25 eV, 490 $\pm$25 eV, 400 $\pm$25 eV, or 468 $\pm$25 eV, plus a matrix shift in the range of 0 to 10 eV; d) a hydrogen product that causes an upfield MAS NMR matrix shift; e) a hydrogen product that has an upfield MAS NMR or liquid NMR shift of greater than -5 ppm relative to TMS; f) a hydrogen product with at least two electron-beam emission spectral peaks in the range of 200 to 300 nm having a spacing at an integer multiple of 0.23 to 0.3 $cm^{-1}$ plus a matrix shift in the range of 0 to 5000 $cm^{-1}$; and g) a hydrogen product with at least two UV fluorescence emission spectral peaks in the range of 200 to 300 nm having a spacing at an integer multiple of 0.23 to 0.3 $cm^{-1}$ plus a matrix shift in the range of 0 to 5000 $cm^{-1}$.

The present disclosure is further directed to an electrochemical power system comprising a hydrogen anode comprising a hydrogen permeable electrode; a molten salt electrolyte comprising a hydroxide; and at least one of an $O_2$ and a $H_2O$ cathode. In embodiments, the cell temperature that maintains at least one of a molten state of the electrolyte and the membrane in a hydrogen permeable state is in at least one range chosen from about 25 to 2000 °C, about 100 to 1000 °C, about 200 to 750 °C, and about 250 to 500 °C, the cell temperature above the electrolyte melting point in at least one range of about 0 to 1500 °C higher than the melting point, 0 to 1000 °C higher than the melting point, 0 to 500 °C higher than the melting point, 0 to 250 °C higher than the melting point, and 0 to 100 °C higher than the melting point; the membrane thickness is in at least one range chosen from about 0.0001 to 0.25 cm, 0.001 to 0.1 cm, and 0.005 to 0.05 cm; the hydrogen pressure is maintained in at least one range chosen from about 1 Torr to 500 atm, 10 Torr to 100 atm, and 100 Torr to 5 atm; the hydrogen permeation rate is in at least one range chosen from about 1 X $10^{-13}$ mole $s^{-1}$ $cm^{-2}$ to 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$ , and 1 X $10^{-9}$ mole $s^{-1}$ $cm^{-2}$ to 1 X $10^{-8}$ mole $s^{-1}$ $cm^{-2}$. In an embodiment, the electrochemical power system comprises a hydrogen anode comprising a hydrogen sparging electrode; a molten salt electrolyte comprising a hydroxide, and at least one of an $O_2$ and a $H_2O$ cathode. In embodiments, the cell temperature that maintains a molten state of the electrolyte is in at least one range chosen from about 0 to 1500 °C higher than the electrolyte melting point, 0 to 1000 °C higher than the electrolyte melting point, 0 to 500 °C higher than the electrolyte melting point, 0 to 250 °C higher than the electrolyte melting point, and 0 to 100 °C higher than the electrolyte melting point; the hydrogen flow rate per geometric area of the $H_2$ bubbling or sparging electrode is in at least one range chosen from about 1 X $10^{-13}$ mole $s^{-1}$ $cm^{-2}$ to 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$, and 1 X $10^{-9}$ mole $s^{-1}$ $cm^{-2}$ to 1 X $10^{-8}$ mole $s^{-1}$ $cm^{-2}$; the rate of reaction at the counter electrode matches or exceeds that at the electrode at which hydrogen reacts; the reduction rate of at least one of $H_2O$ and $O_2$ is sufficient to maintain the reaction rate of H or $H_2$, and the counter electrode has a surface area and a material sufficient to support the sufficient rate.

The present disclosure is further directed to a power system that generates thermal energy comprising: at least one vessel capable of a pressure of at least one of atmospheric, above atmospheric, and below atmospheric; at least one heater, reactants that constitute hydrino reactants comprising: a) a source of catalyst or a catalyst comprising nascent $H_2O$; b) a source of atomic hydrogen or atomic hydrogen; c) reactants to form at least one of the source of catalyst, the catalyst, the source of atomic hydrogen, and the atomic hydrogen; and one or more reactants to initiate the catalysis of atomic hydrogen wherein the reaction occurs upon at least one of mixing and heating the reactants. In embodiments, the reaction of the power system to form at least one of the source of catalyst, the catalyst, the source of atomic hydrogen, and the atomic hydrogen comprise at least one reaction chosen from a dehydration reaction; a combustion reaction; a reaction of a Lewis acid or base and a Bronsted-Lowry acid or base; an oxide-base reaction; an acid anhydride-base reaction; an acid-base reaction; a base-active metal reaction; an oxidation-reduction reaction; a decomposition reaction;

an exchange reaction, and an exchange reaction of a halide, O, S, Se, Te, $NH_3$, with compound having at least one OH; a hydrogen reduction reaction of a compound comprising O, and the source of H is at least one of nascent H formed when the reactants undergo reaction and hydrogen from a hydride or gas source and a dissociator.

The present disclosure is further directed to a battery or fuel cell system that generates an electromotive force (EMF) from the catalytic reaction of hydrogen to lower energy (hydrino) states providing direct conversion of the energy released from the hydrino reaction into electricity, the system comprising:

reactants that constitute hydrino reactants during cell operation with separate electron flow and ion mass transport,
a cathode compartment comprising a cathode,
an anode compartment comprising an anode, and
a source of hydrogen.

Other embodiments of the present disclosure are directed to a battery or fuel cell system that generates an electromotive force (EMF) from the catalytic reaction of hydrogen to lower energy (hydrino) states providing direct conversion of the energy released from the hydrino reaction into electricity, the system comprising at least two components chosen from: a catalyst or a source of catalyst; atomic hydrogen or a source of atomic hydrogen; reactants to form the catalyst or source of catalyst and atomic hydrogen or source of atomic hydrogen; one or more reactants to initiate the catalysis of atomic hydrogen; and a support to enable the catalysis,
wherein the battery or fuel cell system for forming hydrinos can further comprise a cathode compartment comprising a cathode, an anode compartment comprising an anode, optionally a salt bridge, reactants that constitute hydrino reactants during cell operation with separate electron flow and ion mass transport, and a source of hydrogen.

In an embodiment of the present disclosure, the reaction mixtures and reactions to initiate the hydrino reaction such as the exchange reactions of the present disclosure are the basis of a fuel cell wherein electrical power is developed by the reaction of hydrogen to form hydrinos. Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types for thermal power and hydrino chemical production of the present disclosure.

In an embodiment of the present disclosure, different reactants or the same reactants under different states or conditions such as at least one of different temperature, pressure, and concentration are provided in different cell compartments that are connected by separate conduits for electrons and ions to complete an electrical circuit between the compartments. The potential and electrical power gain between electrodes of the separate compartments or thermal gain of the system is generated due to the dependence of the hydrino reaction on mass flow from one compartment to another. The mass flow provides at least one of the formation of the reaction mixture that reacts to produce hydrinos and the conditions that permit the hydrino reaction to occur at substantial rates. Ideally, the hydrino reaction does not occur or doesn’t occur at an appreciable rate in the absence of the electron flow and ion mass transport.

In another embodiment, the cell produces at least one of electrical and thermal power gain over that of an applied electrolysis power through the electrodes.

In an embodiment, the reactants to form hydrinos are at least one of thermally regenerative or electrolytically regenerative.

An embodiment of the disclosure is directed to an electrochemical power system that generates an electromotive force (EMF) and thermal energy comprising a cathode, an anode, and reactants that constitute hydrino reactants during cell operation with separate electron flow and ion mass transport, comprising at least two components chosen from: a) a source of catalyst or a catalyst comprising at least one of the group of nH, OH, $OH^-$, $H_2O$, $H_2S$, or $MNH_2$ wherein n is an integer and M is alkali metal; b) a source of atomic hydrogen or atomic hydrogen; c) reactants to form at least one of the source of catalyst, the catalyst, the source of atomic hydrogen, and the atomic hydrogen; one or more reactants to initiate the catalysis of atomic hydrogen; and a support. At least one of the following conditions may occur in the electrochemical power system: a) atomic hydrogen and the hydrogen catalyst is formed by a reaction of the reaction mixture; b) one reactant that by virtue of it undergoing a reaction causes the catalysis to be active; and c) the reaction to cause the catalysis reaction comprises a reaction chosen from: (i) exothermic reactions; (ii) coupled reactions; (iii) free radical reactions; (iv) oxidation-reduction reactions; (v) exchange reactions, and (vi) getter, support, or matrix-assisted catalysis reactions. In an embodiment, at least one of a) different reactants or b) the same reactants under different states or conditions are provided in different cell compartments that are connected by separate conduits for electrons and ions to complete an electrical circuit between the compartments. At least one of an internal mass flow and an external electron flow may provide at least one of the following conditions to occur: a) formation of the reaction mixture that reacts to produce hydrinos; and b) formation of the conditions that permit the hydrino reaction to occur at substantial rates. In an embodiment, the reactants to form hydrinos are at least one of thermally or electrolytically regenerative. At least one of electrical and thermal energy output may be over that required to regenerate the reactants from the products.

Other embodiments of the disclosure are directed to an electrochemical power system that generates an electromotive force (EMF) and thermal energy comprising a cathode; an anode, and reactants that constitute hydrino reactants during cell operation with separate electron flow and ion mass transport, comprising at least two components chosen from: a) a source of catalyst or catalyst comprising at least one oxygen species chosen from $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$ that undergoes an oxidative reaction with a H species to form at least one of OH and $H_2O$, wherein the H species comprises at least one of $H_2$, H, $H^+$, $H_2O$, $H_3O^+$, OH, $OH^+$, $OH^-$, HOOH, and $OOH^-$; b) a source of atomic hydrogen or atomic hydrogen; c) reactants to form at least one of the source of catalyst, the catalyst, the source of atomic hydrogen, and the atomic hydrogen; and one or more reactants to initiate the catalysis of atomic hydrogen; and a support. The source of the O species may comprise at least one compound or admixture of compounds comprising O, $O_2$, air, oxides, NiO, CoO, alkali metal oxides, $Li_2O$, $Na_2O$, $K_2O$, alkaline earth metal oxides, MgO, CaO, SrO, and BaO, oxides from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, peroxides, alkali metal peroxides, superoxide, alkali or alkaline earth metal superoxides, hydroxides, alkali, alkaline earth, transition metal, inner transition metal, and Group III, IV, or V, hydroxides, oxyhydroxides, AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. The source of the H species may comprise at least one compound or admixture of compounds comprising H, a metal hydride, $LaNi_5H_6$, hydroxide, oxyhydroxide, $H_2$, a source of $H_2$, $H_2$ and a hydrogen permeable membrane, $Ni(H_2)$, $V(H_2)$, $Ti(H_2)$, $Nb(H_2)$, $Pd(H_2)$, $PdAg(H_2)$, $Fe(H_2)$, and stainless steel (SS) such as 430 SS ($H_2$).

In another embodiment, the electrochemical power system comprises a hydrogen anode; a molten salt electrolyte comprising a hydroxide, and at least one of an $O_2$ and a $H_2O$ cathode. The hydrogen anode may comprise at least one of a hydrogen permeable electrode such as at least one of $Ni(H_2)$, $V(H_2)$, $Ti(H_2)$, $Nb(H_2)$, $Pd(H_2)$, $PdAg(H_2)$, $Fe(H_2)$, and 430 SS($H_2$), a porous electrode that may sparge $H_2$, and a hydride such as a hydride chosen from R-Ni, $LaNi_5H_6$, $La_2Co_1Ni_9H_6$, $ZrCr_2H_{3.8}$, $LaNi_{3.55}Mn_{0.4}Al_{0.3}CO_{0.75}$, $ZrMn_{0.5}Cr_{0.2}V_{0.1}Ni_{1.2}$, and other alloys capable of storing hydrogen, $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn), $AB_5$-type: $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $AB_2$-type: $Ti_{0.51}Zr_{0.49}V_{0.70}Ni_{1.18}Cr_{0.12}$ alloys, magnesium-based alloys, $Mg_{1.9}Al_{0.1}Ni_{0.8}Co_{0.1}Mn_{0.1}$ alloy, $Mg_{0.72}Sc_{0.28}(Pd_{0.012} + Rh_{0.012})$, and $Mg_{80}Ti_{20}$, $Mg_{80}V_{20}$, $La_{0.8}Nd_{0.2}Ni_{2.4}Co_{2.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds, TiFe, TiCo, and TiNi, $AB_n$ compounds (n = 5, 2, or 1), $AB_{3\text{-}4}$ compounds, $AB_x$ (A = La, Ce, Mn, Mg; B = Ni, Mn, Co, Al), $ZrFe_2$, $Zr_{0.5}Cs_{0.5}Fe_2$, $Zr_{0.8}Sc_{0.2}Fe_2$, $YNi_5$, $LaNi_5$, $LaNi_{4.5}Co_{0.5}$, (Ce, La, Nd, Pr)$Ni_5$, Mischmetal-nickel alloy, $Ti_{0.98}Zr_{0.02}V_{0.43}Fe_{0.09}Cr_{0.05}Mn_{1.5}$, $La_2Co_1Ni_9$, FeNi, and $TiMn_2$. The molten salt may comprise a hydroxide with at least one other salt such as one chosen from one or more other hydroxides, halides, nitrates, sulfates, carbonates, and phosphates. The molten salt may comprise at least one salt mixture chosen from $CsNO_3$-CsOH, CsOH-KOH, CsOH-LiOH, CsOH-NaOH, CsOH-RbOH, $K_2CO_3$-KOH, KBr-KOH, KC1-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, $RbNO_3$-RbOH, LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I, and LiOH, NaOH, KOH, RbOH, CsOH, $Mg(OH)_2$, $Ca(OH)_2$, $Sr(OH)_2$, or $Ba(OH)_2$ and one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, TlX, and $WX_4$ wherein X =F, Cl, Br, or I. The molten salt may comprise a cation that is common to the anions of the salt mixture electrolyte; or the anion is common to the cations, and the hydroxide is stable to the other salts of the mixture.

In another embodiment of the disclosure, the electrochemical power system comprises at least one of [M"($H_2$)/MOH-M'halide/M'"] and [M"($H_2$)/M$(OH)_2$-M'halide/M'"], wherein M is an alkali or alkaline earth metal, M' is a metal having hydroxides and oxides that are at least one of less stable than those of alkali or alkaline earth metals or have a low reactivity with water, M" is a hydrogen permeable metal, and M'" is a conductor. In an embodiment, M' is metal such as one chosen from Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb. Alternatively, M and M' may be metals such as ones independently chosen from Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Other exemplary systems comprise [M'($H_2$)/MOH M"X/M'"] wherein M, M', M", and M'" are metal cations or metal, X is an anion such as one chosen from hydroxides, halides, nitrates,

sulfates, carbonates, and phosphates, and M' is $H_2$ permeable. In an embodiment, the hydrogen anode comprises a metal such as at least one chosen from V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W that reacts with the electrolyte during discharge. In another embodiment, the electrochemical power system comprises a hydrogen source; a hydrogen anode capable of forming at least one of OH, $OH^-$, and $H_2O$ catalyst, and providing H; a source of at least one of $O_2$ and $H_2O$; a cathode capable of reducing at least one of $H_2O$ or $O_2$; an alkaline electrolyte; an optional system capable of collection and recirculation of at least one of $H_2O$ vapor, $N_2$, and $O_2$, and a system to collect and recirculate $H_2$.

The present disclosure is further directed to an electrochemical power system comprising an anode comprising at least one of: a metal such as one chosen from V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W and a metal hydride such as one chosen from R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and other alloys capable of storing hydrogen such as one chosen from $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn), $AB_5$-type, $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $AB_2$-type: $Ti_{0.51}Zr_{0.49}V_{0.70}Ni_{1.18}Cr_{0.12}$ alloys, magnesium-based alloys, $Mg_{1.9}Al_{0.1}Ni_{0.8}Co_{0.1}Mn_{0.1}$ alloy, $Mg_{0.72}Sc_{0.28}(Pd_{0.012}$ + $Rh_{0.012})$, and $Mg_{80}Ti_{20}$, $Mg_{80}V_{20}$, $La_{0.8}Nd_{0.2}Ni_{2.4}Co_{2.5}$ $Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds, TiFe, TiCo, and TiNi, $AB_n$ compounds (n = 5, 2, or 1), $AB_{3\text{-}4}$ compounds, $AB_x$ (A = La, Ce, Mn, Mg; B = Ni, Mn, Co, Al), $ZrFe_2$, $Zr_{0.5}Cs_{0.5}Fe_2$, $Zr_{0.8}Sc_{0.2}Fe_2$, $YNi_5$, $LaNi_5$, $LaNi_{4.5}Co_{0.5}$, (Ce, La, Nd, Pr)$Ni_5$, Mischmetal-nickel alloy, $Ti_{0.98}Zr_{0.02}V_{0.43}Fe_{0.09}Cr_{0.05}Mn_{1.5}$, $La_2Co_1Ni_9$, FeNi, and $TiMn_2$; a separator; an aqueous alkaline electrolyte; at least one of a $O_2$ and a $H_2O$ reduction cathode, and at least one of air and $O_2$. The electrochemical system may further comprise an electrolysis system that intermittently charges and discharges the cell such that there is a gain in the net energy balance. Alternatively, the electrochemical power system may comprise or further comprise a hydrogenation system that regenerates the power system by rehydriding the hydride anode.

Another embodiment comprises an electrochemical power system that generates an electromotive force (EMF) and thermal energy comprising a molten alkali metal anode; beta-alumina solid electrolyte (BASE), and a molten salt cathode comprising a hydroxide. The molten salt cathode may comprise a eutectic mixture such as one of those of TABLE 4 and a source of hydrogen such as a hydrogen permeable membrane and $H_2$ gas. The catalyst or the source of catalyst may be chosen from OH, $OH^-$, $H_2O$, NaH, Li, K, $Rb^+$, and Cs. The molten salt cathode may comprise an alkali hydroxide. The system may further comprise a hydrogen reactor and metal-hydroxide separator wherein the alkali metal cathode and the alkali hydroxide cathode are regenerated by hydrogenation of product oxide and separation of the resulting alkali metal and metal hydroxide.

Another embodiment of the electrochemical power system comprises an anode comprising a source of hydrogen such as one chosen from a hydrogen permeable membrane and $H_2$ gas and a hydride further comprising a molten hydroxide; beta-alumina solid electrolyte (BASE), and a cathode comprising at least one of a molten element and a molten halide salt or mixture. Suitable cathodes comprise a molten element cathode comprising one of In, Ga, Te, Pb, Sn, Cd, Hg, P, S, I, Se, Bi, and As. Alternatively, the cathode may be a molten salt cathode comprising NaX (X is halide) and one or more of the group of NaX, AgX, $AlX_3$, $AsX_3$, AuX, $AuX_3$, $BaX_2$, $BeX_2$, $BiX_3$, $CaX_2$, $CdX_3$, $CeX_3$, $CoX_2$, $CrX_2$, CsX, CuX, $CuX_2$, $EuX_3$, $FeX_2$, $FeX_3$, $GaX_3$, $GdX_3$, $GeX_4$, $HfX_4$, HgX, $HgX_2$, InX, $InX_2$, $InX_3$, IrX, $IrX_2$, KX, $KAgX_2$, $KAlX_4$, $K_3AlX_6$, $LaX_3$, LiX, $MgX_2$, $MnX_2$, $MoX_4$, $MoX_5$, $MoX_6$, $NaAlX_4$, $Na_3AlX_6$, $NbX_5$, $NdX_3$, $NiX_2$, $OsX_3$, $OsX_4$, $PbX_2$, $PdX_2$, $PrX_3$, $PtX_2$, $PtX_4$, $PuX_3$, RbX, $ReX_3$, RhX, $RhX_3$, $RuX_3$, $SbX_3$, $SbX_5$, $ScX_3$, $SiX_4$, $SnX_2$, $SnX_4$, $SrX_2$, $ThX_4$, $TiX_2$, $TiX_3$, TlX, $UX_3$, $UX_4$, $VX_4$, $WX_6$, $YX_3$, $ZnX_2$, and $ZrX_4$.

Another embodiment of an electrochemical power system that generates an electromotive force (EMF) and thermal energy comprises an anode comprising Li; an electrolyte comprising an organic solvent and at least one of an inorganic Li electrolyte and $LiPF_6$; an olefin separator, and a cathode comprising at least one of an oxyhydroxide, AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$.

In another embodiment, the electrochemical power system comprises an anode comprising at least one of Li, a lithium alloy, $Li_3Mg$, and a species of the Li-N-H system; a molten salt electrolyte, and a hydrogen cathode comprising at least one of $H_2$ gas and a porous cathode, $H_2$ and a hydrogen permeable membrane, and one of a metal hydride, alkali, alkaline earth, transition metal, inner transition metal, and rare earth hydride.

The present disclosure is further directed to an electrochemical power system comprising at least one of the cells a) through h) comprising:

a) (i) an anode comprising a hydrogen permeable metal and hydrogen gas such as one chosen from $Ni(H_2)$, $V(H_2)$, $Ti(H_2)$, $Fe(H_2)$, $Nb(H_2)$ or a metal hydride such as one chosen from $LaNi_5H_6$, $TiMn_2H_x$, and $La_2Ni_9CoH_6$ (x is an integer); (ii) a molten electrolyte such as one chosen from MOH or $M(OH)_2$, or MOH or $M(OH)_2$ with M'X or $M'X_2$ wherein M and M' are metals such as ones independently chosen from Li, Na, K, Rb, Cs, Mg, Ca, Sr, and Ba, and

X is an anion such as one chosen from hydroxides, halides, sulfates, and carbonates, and (iii) a cathode comprising the metal that may be the same as that of the anode and further comprising air or $O_2$;

b)(i) an anode comprising at least one metal such as one chosen from R-Ni, Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb; (ii) an electrolyte comprising an aqueous alkali hydroxide having the concentration range of about 10 M to saturated; (iii) an olefin separator, and (iv) a carbon cathode and further comprising air or $O_2$;

c) (i) an anode comprising molten NaOH and a hydrogen permeable membrane such as Ni and hydrogen gas; (ii) an electrolyte comprising beta alumina solid electrolyte (BASE), and (iii) a cathode comprising a molten eutectic salt such as NaCl-$MgCl_2$, NaCl-$CaCl_2$, or MX-M'$X_2$' (M is alkali, M' is alkaline earth, and X and X' are halide);

d) (i) an anode comprising molten Na; (ii) an electrolyte comprising beta alumina solid electrolyte (BASE), and (iii) a cathode comprising molten NaOH;

e) (i) an anode comprising an hydride such as $LaNi_5H_6$; (ii) an electrolyte comprising an aqueous alkali hydroxide having the concentration range of about 10 M to saturated; (iii) an olefin separator, and (iv) a carbon cathode and further comprising air or $O_2$;

f) (i) an anode comprising Li; (ii) an olefin separator; (ii) an organic electrolyte such as one comprising LP30 and $LiPF_6$, and (iv) a cathode comprising an oxyhydroxide such as CoO(OH);

g) (i) an anode comprising a lithium alloy such as $Li_3Mg$; (ii) a molten salt electrolyte such as LiCl-KCl or MX-M'X' (M and M' are alkali, X and X' are halide), and (iii) a cathode comprising a metal hydride such as one chosen from $CeH_2$, $LaH_2$, $ZrH_2$, and $TiH_2$, and further comprising carbon black, and

h) (i) an anode comprising Li; (ii) a molten salt electrolyte such as LiCl-KCl or MX-M'X' (M and M' are alkali, X and X' are halide), and (iii) a cathode comprising a metal hydride such as one chosen from $CeH_2$, $LaH_2$, $ZrH_2$, and $TiH_2$, and further comprising carbon black.

The present disclosure is further directed to an electrochemical power system comprising at least one of the cells: [Ni($H_2$)/LiOH-LiBr/Ni] wherein the hydrogen electrode designated Ni($H_2$) comprises at least one of a permeation, sparging, and intermittent electrolysis source of hydrogen; [PtTi/$H_2SO_4$ (about 5 M aq) or $H_3PO_4$ (about 14.5 M aq)/PtTi] intermittent electrolysis, and [NaOH Ni($H_2$)/BASE/NaCl $MgCl_2$] wherein the hydrogen electrode designated Ni($H_2$) comprises a permeation source of hydrogen. In suitable embodiments, the hydrogen electrode comprises a metal such as nickel that is prepared to have a protective oxide coat such as NiO. The oxide coat may be formed by anodizing or oxidation in an oxidizing atmosphere such as one comprising oxygen.

The present disclosure is further directed to an electrochemical power system comprising at least one of the cells a) through d) comprising:

a) (i) an anode comprising a hydrogen electrode designated Ni($H_2$) comprising at least one of a permeation, sparging, and intermittent electrolysis source of hydrogen; (ii) a molten electrolyte such as one chosen from MOH or $M(OH)_2$, or MOH or $M(OH)_2$ with M'X or M'$X_2$ wherein M and M' are metals such as ones independently chosen from Li, Na, K, Rb, Cs, Mg, Ca, Sr, and Ba, and X is an anion such as one chosen from hydroxides, halides, sulfates, and carbonates, and (iii) a cathode comprising the metal that may be the same as that of the anode and further comprising air or $O_2$;

b) (i) an anode comprising a hydrogen electrode designated Ni($H_2$) comprises at least one of a permeation, sparging, and intermittent electrolysis source of hydrogen; (ii) a molten electrolyte such as LiOH-LiBr, NaOH-NaBr, or NaOH-NaI, and (iii) a cathode comprising the metal that may be the same as that of the anode and further comprising air or $O_2$;

c) (i) an anode comprising a noble metal such as Pt/Ti; (ii) an aqueous acid electrolyte such as $H_2SO_4$ or $H_3PO_4$ that may be in the concentration range of 1 to 10 M, and 5 to 15 M, respectively, and (iii) a cathode comprising the metal that may be the same as that of the anode and further comprising air or $O_2$, and

d) (i) an anode comprising molten NaOH and a hydrogen electrode designated Ni($H_2$) comprising a permeation source of hydrogen; (ii) an electrolyte comprising beta alumina solid electrolyte (BASE), and (iii) a cathode comprising a molten eutectic salt such as NaCl-$MgCl_2$, NaCl-$CaCl_2$, or MX-M'$X_2$' (M is alkali, M' is alkaline earth, and X and X' are halide).

Further embodiments of the present disclosure are directed to catalyst systems such as those of the electrochemical cells comprising a hydrogen catalyst capable of causing atomic H in its n=1 state to form a lower-energy state, a source of atomic hydrogen, and other species capable of initiating and propagating the reaction to form lower-energy hydrogen. In certain embodiments, the present disclosure is directed to a reaction mixture comprising at least one source of atomic hydrogen and at least one catalyst or source of catalyst to support the catalysis of hydrogen to form hydrinos. The reactants and reactions disclosed herein for solid and liquid fuels are also reactants and reactions of heterogeneous fuels comprising a mixture of phases. The reaction mixture comprises at least two components chosen from a hydrogen catalyst or source of hydrogen catalyst and atomic hydrogen or a source of atomic hydrogen, wherein at least one of

the atomic hydrogen and the hydrogen catalyst may be formed by a reaction of the reaction mixture. In additional embodiments, the reaction mixture further comprises a support, which in certain embodiments can be electrically conductive, a reductant, and an oxidant, wherein at least one reactant that by virtue of it undergoing a reaction causes the catalysis to be active. The reactants may be regenerated for any non-hydrino product by heating.

The present disclosure is also directed to a power source comprising:

a reaction cell for the catalysis of atomic hydrogen;
a reaction vessel;
a vacuum pump;
a source of atomic hydrogen in communication with the reaction vessel;
a source of a hydrogen catalyst comprising a bulk material in communication with the reaction vessel,
the source of at least one of the source of atomic hydrogen and the source of hydrogen catalyst comprising a reaction mixture comprising at least one reactant comprising the element or elements that form at least one of the atomic hydrogen and the hydrogen catalyst and at least one other element, whereby at least one of the atomic hydrogen and hydrogen catalyst is formed from the source,
at least one other reactant to cause catalysis; and
a heater for the vessel,
whereby the catalysis of atomic hydrogen releases energy in an amount greater than about 300 kJ per mole of hydrogen.

The reaction to form hydrinos may be activated or initiated and propagated by one or more chemical reactions. These reactions can be chosen for example from (i) hydride exchange reactions, (ii) halide- hydride exchange reactions, (iii) exothermic reactions, which in certain embodiments provide the activation energy for the hydrino reaction, (iv) coupled reactions, which in certain embodiments provide for at least one of a source of catalyst or atomic hydrogen to support the hydrino reaction, (v) free radical reactions, which in certain embodiments serve as an acceptor of electrons from the catalyst during the hydrino reaction, (vi) oxidation-reduction reactions, which in certain embodiments, serve as an acceptor of electrons from the catalyst during the hydrino reaction, (vi) other exchange reactions such as anion exchange including halide, sulfide, hydride, arsenide, oxide, phosphide, and nitride exchange that in an embodiment, facilitate the action of the catalyst to become ionized as it accepts energy from atomic hydrogen to form hydrinos, and (vii) getter, support, or matrix-assisted hydrino reactions, which may provide at least one of (a) a chemical environment for the hydrino reaction, (b) act to transfer electrons to facilitate the H catalyst function, (c) undergoe a reversible phase or other physical change or change in its electronic state, and (d) bind a lower-energy hydrogen product to increase at least one of the extent or rate of the hydrino reaction. In certain embodiments, the electrically conductive support enables the activation reaction.

In another embodiment, the reaction to form hydrinos comprises at least one of a hydride exchange and a halide exchange between at least two species such as two metals. At least one metal may be a catalyst or a source of a catalyst to form hydrinos such as an alkali metal or alkali metal hydride. The hydride exchange may be between at least two hydrides, at least one metal and at least one hydride, at least two metal hydrides, at least one metal and at least one metal hydride, and other such combinations with the exchange between or involving two or more species. In an embodiment, the hydride exchange forms a mixed metal hydride such as $(M_1)_x(M_2)_yH_z$ wherein x,y, and z are integers and $M_1$ and $M_2$ are metals.

Other embodiments of the present disclosure are directed to reactants wherein the catalyst in the activating reaction and/or the propagation reaction comprises a reaction of the catalyst or source of catalyst and source of hydrogen with a material or compound to form an intercalation compound wherein the reactants are regenerated by removing the intercalated species. In an embodiment, carbon may serve as the oxidant and the carbon may be regenerated from an alkali metal intercalated carbon for example by heating, use of displacing agent, electrolytically, or by using a solvent.

In additional embodiments, the present disclosure is directed to a power system comprising:

(i) a chemical fuel mixture comprising at least two components chosen from: a catalyst or source of catalyst; atomic hydrogen or a source of atomic hydrogen; reactants to form the catalyst or the source of catalyst and atomic hydrogen or a source of atomic hydrogen; one or more reactants to initiate the catalysis of atomic hydrogen; and a support to enable the catalysis,
(ii) at least one thermal system for reversing an exchange reaction to thermally regenerate the fuel from the reaction products comprising a plurality of reaction vessels,
wherein regeneration reactions comprising reactions that form the initial chemical fuel mixture from the products of the reaction of the mixture are performed in at least one reaction vessel of the plurality in conjunction with the at least one other reaction vessel undergoing power reactions,
the heat from at least one power-producing vessel flows to at least one vessel that is undergoing regeneration to provide the energy for the thermal regeneration,

the vessels are embedded in a heat transfer medium to achieve the heat flow,
at least one vessel further comprising a vacuum pump and a source of hydrogen, and may further comprise two chambers having a temperature difference maintained between a hotter chamber and a colder chamber such that a species preferentially accumulates in the colder chamber,
wherein a hydride reaction is performed in the colder chamber to form at least one initial reactant that is returned to the hotter chamber,
(iii) a heat sink that accepts the heat from the power-producing reaction vessels across a thermal barrier, and
(iv) a power conversion system that may comprise a heat engine such as a Rankine or Brayton-cycle engine, a steam engine, a Stirling engine, wherein the power conversion system may comprise thermoelectric or thermionic converters. In certain embodiments, the heat sink may transfer power to a power conversion system to produce electricity.

In certain embodiments, the power conversion system accepts the flow of heat from the heat sink, and in certain embodiments, the heat sink comprises a steam generator and steam flows to a heat engine such as a turbine to produce electricity.

In additional embodiments, the present disclosure is directed to a power system comprising:

(i) a chemical fuel mixture comprising at least two components chosen from: a catalyst or a source of catalyst; atomic hydrogen or a source of atomic hydrogen; reactants to form the catalyst or the source of catalyst and atomic hydrogen or a source of atomic hydrogen; one or more reactants to initiate the catalysis of atomic hydrogen; and a support to enable the catalysis,
(ii) a thermal system for reversing an exchange reaction to thermally regenerate the fuel from the reaction products comprising at least one reaction vessel, wherein regeneration reactions comprising reactions that form the initial chemical fuel mixture from the products of the reaction of the mixture are performed in the at least one reaction vessel in conjunction with power reactions, the heat from power-producing reactions flows to regeneration reactions to provide the energy for the thermal regeneration, at least one vessel is insulated on one section and in contact with a thermally conductive medium on another section to achieve a heat gradient between the hotter and colder sections, respectively, of the vessel such that a species preferentially accumulates in the colder section, at least one vessel further comprising a vacuum pump and a source of hydrogen, wherein a hydride reaction is performed in the colder section to form at least one initial reactant that is returned to the hotter section,
(iii) a heat sink that accepts the heat from the power-producing reactions transferred through the thermally conductive medium and optionally across at least one thermal barrier, and
(iv) a power conversion system that may comprise a heat engine such as a Rankine or Brayton-cycle engine, a steam engine, a Stirling engine, wherein the power conversion system may comprise thermoelectric or thermionic converters, wherein the conversion system accepts the flow of heat from the heat sink.

In an embodiment, the heat sink comprises a steam generator and steam flows to a heat engine such as a turbine to produce electricity.

## BRIEF DESCRIPTION OF THE DRAWINGS

FIGURE 1 is a schematic drawing of a battery and fuel cell and electrolysis cell in accordance with the present disclosure.
FIGURE 2 is a schematic drawing of a CIHT cell dipolar plate in accordance with the present disclosure.
FIGURE 3A is a repeating unit of a CIHT cell stack comprising a compound cathode, a permeation anode, and a gas feed in accordance with the present disclosure.
FIGURE 3B is a repeating unit of a CIHT cell stack comprising an anode that may be hydrided that supports electrochemical reactions from opposing sides for corresponding opposing cells in accordance with the present disclosure.
FIGURE 4 is a schematic drawing of a CIHT cell stack with a central heater in accordance with the present disclosure.
FIGURE 5 is a schematic drawing of a CIHT cell comprising $H_2O$ and $H_2$ collection and recycling systems in accordance with the present disclosure.

## DETAILED DESCRIPTION OF THE EMBODIMENTS OF THE DISCLOSURE

The present disclosure is directed to catalyst systems to release energy from atomic hydrogen to form lower energy states wherein the electron shell is at a closer position relative to the nucleus. The released power is harnessed for power generation and additionally new hydrogen species and compounds are desired products. These energy states are predicted by classical physical laws and require a catalyst to accept energy from the hydrogen in order to undergo the corresponding energy-releasing transition.

Classical physics gives closed-form solutions of the hydrogen atom, the hydride ion, the hydrogen molecular ion, and the hydrogen molecule and predicts corresponding species having fractional principal quantum numbers. Using Maxwell's equations, the structure of the electron was derived as a boundary-value problem wherein the electron comprises the source current of time-varying electromagnetic fields during transitions with the constraint that the bound $n$ = 1 state electron cannot radiate energy. A reaction predicted by the solution of the H atom involves a resonant, nonradiative energy transfer from otherwise stable atomic hydrogen to a catalyst capable of accepting the energy to form hydrogen in lower-energy states than previously thought possible. Specifically, classical physics predicts that atomic hydrogen may undergo a catalytic reaction with certain atoms, excimers, ions, and diatomic hydrides which provide a reaction with a net enthalpy of an integer multiple of the potential energy of atomic hydrogen, $E_h$ = 27.2 $eV$ where $E_h$ is one Hartree. Specific species (e.g. $He^+$, $Ar^+$, $Sr^+$, K, Li, HCl, and NaH, OH, SH, SeH, nascent $H_2O$, nH (n=integer)) identifiable on the basis of their known electron energy levels are required to be present with atomic hydrogen to catalyze the process. The reaction involves a nonradiative energy transfer followed by $q\cdot 13.6\ eV$ continuum emission or $q\cdot 13.6\ eV$ transfer to H to form extraordinarily hot, excited-state H and a hydrogen atom that is lower in energy than unreacted atomic hydrogen that corresponds to a fractional principal quantum number. That is, in the formula for the principal energy levels of the hydrogen atom:

$$E_n = -\frac{e^2}{n^2 8\pi\varepsilon_o a_H} = -\frac{13.598\ eV}{n^2}. \quad (1)$$

$$n = 1,2,3,... \quad (2)$$

where $a_H$ is the Bohr radius for the hydrogen atom (52.947 pm), e is the magnitude of the charge of the electron, and $\varepsilon_o$ is the vacuum permittivity, fractional quantum numbers:

$$n = 1,\frac{1}{2},\frac{1}{3},\frac{1}{4},...,\frac{1}{p};\ \text{where } p \leq 137 \text{ is an integer} \quad (3)$$

replace the well known parameter n = integer in the Rydberg equation for hydrogen excited states and represent lower-energy-state hydrogen atoms called "hydrinos." Then, similar to an excited state having the analytical solution of Maxwell's equations, a hydrino atom also comprises an electron, a proton, and a photon. However, the electric field of the latter increases the binding corresponding to desorption of energy rather than decreasing the central field with the absorption of energy as in an excited state, and the resultant photon-electron interaction of the hydrino is stable rather than radiative.

The $n$ = 1 state of hydrogen and the $n = \frac{1}{\text{integer}}$ states of hydrogen are nonradiative, but a transition between two nonradiative states, say $n$ = 1 to $n$ = 1/2, is possible via a nonradiative energy transfer. Hydrogen is a special case of the stable states given by Eqs. (1) and (3) wherein the corresponding radius of the hydrogen or hydrino atom is given by

$$r = \frac{a_H}{p}, \quad (4)$$

where $p$ = 1,2,3,.... In order to conserve energy, energy must be transferred from the hydrogen atom to the catalyst in units of

$$m \cdot 27.2\ eV,\ m = 1,2,3,4,.... \quad (5)$$

and the radius transitions to $\frac{a_H}{m+p}$. The catalyst reactions involve two steps of energy release: a nonradiative energy transfer to the catalyst followed by additional energy release as the radius decreases to the corresponding stable final state. It is believed that the rate of catalysis is increased as the net enthalpy of reaction is more closely matched to $m \cdot 27.2\ eV$. It has been found that catalysts having a net enthalpy of reaction within ±10%, preferably ±5%, of $m \cdot 27.2\ eV$ are suitable for most applications. In the case of the catalysis of hydrino atoms to lower energy states, the enthalpy of reaction of $m \cdot 27.2\ eV$ (Eq. (5)) is relativistically corrected by the same factor as the potential energy of the hydrino atom.

Thus, the general reaction is given by

$$m \cdot 27.2\ eV + Cat^{q+} + H\left[\frac{a_H}{p}\right] \rightarrow Cat^{(q+r)+} + re^- + H^*\left[\frac{a_H}{(m+p)}\right] + m \cdot 27.2\ eV \qquad (6)$$

$$H^*\left[\frac{a_H}{(m+p)}\right] \rightarrow H\left[\frac{a_H}{(m+p)}\right] + [(p+m)^2 - p^2] \cdot 13.6\ eV - m \cdot 27.2\ eV \qquad (7)$$

$$Cat^{(q+r)+} + re^- \rightarrow Cat^{q+} + m \cdot 27.2\ eV \text{ and} \qquad (8)$$

the overall reaction is

$$H\left[\frac{a_H}{p}\right] \rightarrow H\left[\frac{a_H}{(m+p)}\right] + [(p+m)^2 - p^2] \cdot 13.6\ eV \qquad (9)$$

*q, r, m,* and *p* are integers. $H^*\left[\frac{a_H}{(m+p)}\right]$ has the radius of the hydrogen atom (corresponding to 1 in the denominator) and a central field equivalent to $(m + p)$ times that of a proton, and $H\left[\frac{a_H}{(m+p)}\right]$ is the corresponding stable state with the radius of $\frac{1}{(m+p)}$ that of *H*. As the electron undergoes radial acceleration from the radius of the hydrogen atom to a radius of $\frac{1}{(m+p)}$ this distance, energy is released as characteristic light emission or as third-body kinetic energy. The emission may be in the form of an extreme-ultraviolet continuum radiation having an edge at $[(p+m)^2-p^2-2m] \cdot 13.6\ eV$ or $\frac{91.2}{[(p+m)^2 - p^2 - 2m]}\ nm$ and extending to longer wavelengths. In addition to radiation, a resonant kinetic energy transfer to form fast H may occur. Subsequent excitation of these fast $H(n=1)$ atoms by collisions with the background $H_2$ followed by emission of the corresponding $H(n=3)$ fast atoms gives rise to broadened Balmer $\alpha$ emission. Alternatively, fast H is a direct product of H or hydrino serving as the catalyst wherein the acceptance of the resonant energy transfer regards the potential energy rather than the ionization energy. Conservation of energy gives a proton of the kinetic energy corresponding to one half the potential energy in the former case and a catalyst ion at essentially rest in the latter case. The H recombination radiation of the fast protons gives rise to broadened Balmer $\alpha$ emission that is disproportionate to the inventory of hot hydrogen consistent with the excess power balance.

In the present disclosure the terms such as hydrino reaction, H catalysis, H catalysis reaction, catalysis when

referring to hydrogen, the reaction of hydrogen to form hydrinos, and hydrino formation reaction all refer to the reaction such as that of Eqs. (6-9)) of a catalyst defined by Eq. (5) with atomic H to form states of hydrogen having energy levels given by Eqs. (1) and (3). The corresponding terms such as hydrino reactants, hydrino reaction mixture, catalyst mixture, reactants for hydrino formation, reactants that produce or form lower-energy state hydrogen or hydrinos are also used interchangeably when referring to the reaction mixture that performs the catalysis of H to H states or hydrino states having energy levels given by Eqs. (1) and (3).

The catalytic lower-energy hydrogen transitions of the present disclosure require a catalyst that may be in the form of an endothermic chemical reaction of an integer *m* of the potential energy of uncatalyzed atomic hydrogen, 27.2 *eV,* that accepts the energy from atomic H to cause the transition. The endothermic catalyst reaction may be the ionization of one or more electrons from a species such as an atom or ion (e.g. $m$=3 for $Li \rightarrow Li^{2+}$) and may further comprise the concerted reaction of a bond cleavage with ionization of one or more electrons from one or more of the partners of the initial bond (e.g. $m$ = 2 for $NaH \rightarrow Na^{2+} + H$). $He^+$ fulfills the catalyst criterion-a chemical or physical process with an enthalpy change equal to an integer multiple of 27.2 *eV* since it ionizes at 54.417 *eV,* which is 2.27.2 *eV.* An integer number of hydrogen atoms may also serve as the catalyst of an integer multiple of 27.2 *eV* enthalpy. Hydrogen atoms $H$ (1/$p$) $p$ = 1,2,3,...137 can undergo further transitions to lower-energy states given by Eqs. (1) and (3) wherein the transition of one atom is catalyzed by one or more additional H atoms that resonantly and nonradiatively accepts $m \cdot 27.2$ *eV* with a concomitant opposite change in its potential energy. The overall general equation for the transition of $H(1/p)$ to $H(1/(p+m))$ induced by a resonance transfer of $m \cdot 27.2$ *eV* to $H(1/p')$ is represented by

$$H(1/p')+H(1/p) \rightarrow H+H(1/(p+m))+\left[2pm+m^2-p'^2+1\right]\cdot 13.6\ eV \qquad (10)$$

Hydrogen atoms may serve as a catalyst wherein $m$ = 1, $m$ = 2 , and $m$ = 3 for one, two, and three atoms, respectively, acting as a catalyst for another. The rate for the two-atom-catalyst, $2H$, may be high when extraordinarily fast H collides with a molecule to form the 2H wherein two atoms resonantly and nonradiatively accept 54.4 *eV* from a third hydrogen atom of the collision partners. By the same mechanism, the collision of two hot $H_2$ provide 3H to serve as a catalyst of 3.27.2 *eV* for the fourth. The EUV continua at 22.8 nm and 10.1 nm, extraordinary (>100 eV) Balmer $\alpha$ line broadening, highly excited H states, the product gas $H_2(1/4)$, and large energy release is observed consistent with predictions.

H(1/4) is a preferred hydrino state based on its multipolarity and the selection rules for its formation. Thus, in the case that H(1/3) is formed, the transition to H(1/4) may occur rapidly catalyzed by H according to Eq. (10). Similarly, H(1/4) is a preferred state for a catalyst energy greater than or equal to 81.6 eV corresponding to m=3 in Eq. (5). In this case the energy transfer to the catalyst comprises the 81.6 eV that forms that H*(1/4) intermediate of Eq. (7) as well as an integer of 27.2 eV from the decay of the intermediate. For example, a catalyst having an enthalpy of 108.8 eV may form H*(1/4) by accepting 81.6 eV as well as 27.2 eV from the H*(1/4) decay energy of 122.4 eV. The remaining decay energy of 95.2 eV is released to the environment to form the preferred state H(1/4) that then reacts to form $H_2(1/4)$.

A suitable catalyst can therefore provide a net positive enthalpy of reaction of $m \cdot 27.2$ *eV.* That is, the catalyst resonantly accepts the nonradiative energy transfer from hydrogen atoms and releases the energy to the surroundings to affect electronic transitions to fractional quantum energy levels. As a consequence of the nonradiative energy transfer, the hydrogen atom becomes unstable and emits further energy until it achieves a lower-energy nonradiative state having a principal energy level given by Eqs. (1) and (3). Thus, the catalysis releases energy from the hydrogen atom with a commensurate decrease in size of the hydrogen atom, $r_n = na_H$ where $n$ is given by Eq. (3). For example, the catalysis of $H(n=1)$ to $H(n=1/4)$ releases 204 *eV*, and the hydrogen radius decreases from $a_H$ to $\frac{1}{4}a_H$.

The catalyst product, $H(1/p)$, may also react with an electron to form a hydrino hydride ion $H^-(1/p)$, or two $H(1/p)$ may react to form the corresponding molecular hydrino $H_2(1/p)$. Specifically, the catalyst product, $H(1/p)$, may also react with an electron to form a novel hydride ion $H^-(1/p)$ with a binding energy $E_B$:

$$E_B = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3}+\frac{2^2}{a_0^3\left[\frac{1+\sqrt{s(s+1)}}{p}\right]^3}\right) \qquad (11)$$

where $p$ = integer > 1, $s$ = 1/2, $\hbar$ is Planck's constant bar, $\mu_o$ is the permeability of vacuum, $m_e$ is the mass of the electron,

$\mu_e$ is the reduced electron mass given by $\mu_e = \frac{m_e m_p}{\frac{m_e}{\sqrt{\frac{3}{4}}} + m_p}$ where $m_p$ is the mass of the proton, $a_o$ is the Bohr radius, and the ionic radius is $r_1 = \frac{a_0}{p}\left(1 + \sqrt{s(s+1)}\right).$ From Eq. (11), the calculated ionization energy of the hydride ion is 0.75418 *eV*, and the experimental value is 6082.99±0.15 $cm^{-1}$ (0.75418 eV). The binding energies of hydrino hydride ions may be measured by X-ray photoelectron spectroscopy (XPS).

Upfield-shifted NMR peaks are direct evidence of the existence of lower-energy state hydrogen with a reduced radius relative to ordinary hydride ion and having an increase in diamagnetic shielding of the proton. The shift is given by the sum of the contributions of the diamagnetism of the two electrons and the photon field of magnitude p (Mills GUTCP Eq. (7.87)):

$$\frac{\Delta B_T}{B} = -\mu_0 \frac{pe^2}{12 m_e a_0 \left(1 + \sqrt{s(s+1)}\right)}\left(1 + p\alpha^2\right) = -\left(p29.9 + p^2 1.59\ X\ 10^{-3}\right) ppm \qquad (12)$$

where the first term applies to $H^-$ with $p$ = 1 and $p$ = integer >1 for $H^-(1/p)$ and $\alpha$ is the fine structure constant. The predicted hydrino hydride peaks are extraordinarily upfield shifted relative to ordinary hydride ion. In an embodiment, the peaks are upfield of TMS. The NMR shift relative to TMS may be greater than that known for at least one of ordinary $H^-$, H, $H_2$, or $H^+$ alone or comprising a compound. The shift may be greater than at least one of 0, -1, -2, -3, -4, -5, -6, -7, -8, -9, -10, -11, -12, -13, -14, -15, -16, -17, -18, -19, -20, -21, - 22, -23, -24, -25, -26, -27, -28, -29, -30, -31, -32, -33, -34, -35, -36, -37, -38, -39, and -40 ppm. The range of the absolute shift relative to a bare proton, wherein the shift of TMS is about -31.5 relative to a bare proton, may be -(p29.9 + $p^2$2.74) ppm (Eq. (12)) within a range of about at least one of ± 5 ppm, ± 10 ppm, ± 20 ppm, ± 30 ppm, ± 40 ppm, ± 50 ppm, ± 60 ppm, ± 70 ppm, ± 80 ppm, ± 90 ppm, and ± 100 ppm. The range of the absolute shift relative to a bare proton may be -(p29.9 + $p^2$1.59 X $10^{-3}$) ppm (Eq. (12)) within a range of about at least one of about 0.1% to 99%, 1% to 50%, and 1% to 10%. In another embodiment, the presence of a hydrino species such as a hydrino atom, hydride ion, or molecule in a solid matrix such as a matrix of a hydroxide such as NaOH or KOH causes the matrix protons to shift upfield. The matrix protons such as those of NaOH or KOH may exchange. In an embodiment, the shift may cause the matrix peak to be in the range of about -0.1 to -5 ppm relative to TMS. The NMR determination may comprise magic angle spinning $^1H$ nuclear magnetic resonance spectroscopy (MAS $^1H$ NMR).

$H(1/p)$ may react with a proton and two $H(1/p)$ may react to form $H_2(1/p)^+$ and $H_2(1/p)$, respectively. The hydrogen molecular ion and molecular charge and current density functions, bond distances, and energies were solved from the Laplacian in ellipsoidal coordinates with the constraint of nonradiation.

$$(\eta - \zeta) R_\xi \frac{\partial}{\partial \xi}(R_\xi \frac{\partial \phi}{\partial \xi}) + (\zeta - \xi) R_\eta \frac{\partial}{\partial \eta}(R_\eta \frac{\partial \phi}{\partial \eta}) + (\xi - \eta) R_\zeta \frac{\partial}{\partial \zeta}(R_\zeta \frac{\partial \phi}{\partial \zeta}) = 0 \qquad (13)$$

The total energy $E_T$ of the hydrogen molecular ion having a central field of $+pe$ at each focus of the prolate spheroid molecular orbital is

$$E_T = -p^2 \left\{ \begin{array}{l} \dfrac{e^2}{8\pi\varepsilon_o a_H}(4\ln 3 - 1 - 2\ln 3)\left[1 + p\sqrt{\dfrac{2\hbar\sqrt{\dfrac{\dfrac{2e^2}{4\pi\varepsilon_o (2a_H)^3}}{m_e}}}{m_e c^2}}\right] \\ -\dfrac{1}{2}\hbar\sqrt{\dfrac{\dfrac{pe^2}{4\pi\varepsilon_o\left(\dfrac{2a_H}{p}\right)^3} - \dfrac{pe^2}{8\pi\varepsilon_o\left(\dfrac{3a_H}{p}\right)^3}}{\mu}} \end{array} \right\} = -p^2 16.13392\ eV - p^3 0.118755\ eV \tag{14}$$

where $p$ is an integer, $c$ is the speed of light in vacuum, and $\mu$ is the reduced nuclear mass. The total energy of the hydrogen molecule having a central field of $+pe$ at each focus of the prolate spheroid molecular orbital is

$$E_T = -p^2 \left\{ \begin{array}{l} \dfrac{e^2}{8\pi\varepsilon_o a_0}\left[\left(2\sqrt{2} - \sqrt{2} + \dfrac{\sqrt{2}}{2}\right)\ln\dfrac{\sqrt{2}+1}{\sqrt{2}-1} - \sqrt{2}\right]\left[1 + p\sqrt{\dfrac{2\hbar\sqrt{\dfrac{\dfrac{e^2}{4\pi\varepsilon_o a_0^3}}{m_e}}}{m_e c^2}}\right] \\ -\dfrac{1}{2}\hbar\sqrt{\dfrac{\dfrac{pe^2}{8\pi\varepsilon_o\left(\dfrac{a_0}{p}\right)^3} - \dfrac{pe^2}{8\pi\varepsilon_o\left(\dfrac{\left(1+\dfrac{1}{\sqrt{2}}\right)a_0}{p}\right)^3}}{\mu}} \end{array} \right\} = -p^2 31.351\ eV - p^3 0.326469\ eV \tag{15}$$

The bond dissociation energy, $E_D$, of the hydrogen molecule $H_2(1/p)$ is the difference between the total energy of the corresponding hydrogen atoms and $E_T$

$$E_D = E(2H(1/p)) - E_T \tag{16}$$

where

$$E(2H(1/p)) = -p^2 27.20\ eV \tag{17}$$

$E_D$ is given by Eqs. (16-17) and (15):

$$\begin{aligned} E_D &= -p^2 27.20\ eV - E_T \\ &= -p^2 27.20\ eV - \left(-p^2 31.351\ eV - p^3 0.326469\ eV\right) \\ &= p^2 4.151\ eV + p^3 0.326469\ eV \end{aligned} \tag{18}$$

$H_2(1/p)$ may be identified by X-ray photoelectron spectroscopy (XPS) wherein the ionization product in addition to the ionized electron may be at least one of the possibilities such as those comprising two protons and an electron, a H atom, a hydrino atom, a molecular ion, hydrogen molecular ion, and $H_2(1/p)^+$ wherein the energies may be shifted by the matrix.

The NMR of catalysis-product gas provides a definitive test of the theoretically predicted chemical shift of $H_2(1/p)$. In general, the $^1H$ NMR resonance of $H_2(1/p)$ is predicted to be upfield from that of $H_2$ due to the fractional radius in elliptic coordinates wherein the electrons are significantly closer to the nuclei. The predicted shift, $\frac{\Delta B_T}{B}$, for $H_2(1/p)$ is given by the sum of the contributions of the diamagnetism of the two electrons and the photon field of magnitude p (Mills GUTCP Eqs. (11.415-11.416)):

$$\frac{\Delta B_T}{B} = -\mu_0\left(4-\sqrt{2}\ln\frac{\sqrt{2}+1}{\sqrt{2}-1}\right)\frac{pe^2}{36a_0m_e}\left(1+p\alpha^2\right) \quad (19)$$

$$\frac{\Delta B_T}{B} = -\left(p28.01+p^2 1.49\ X\ 10^{-3}\right)ppm \quad (20)$$

where the first term applies to $H_2$ with $p$=1 and $p$=integer>1 for $H_2(1/p)$. The experimental absolute $H_2$ gas-phase resonance shift of -28.0 ppm is in excellent agreement with the predicted absolute gas-phase shift of -28.01 ppm (Eq. (20)). The predicted molecular hydrino peaks are extraordinarily upfield shifted relative to ordinary $H_2$. In an embodiment, the peaks are upfield of TMS. The NMR shift relative to TMS may be greater than that known for at least one of ordinary $H^-$, H, $H_2$, or $H^+$ alone or comprising a compound. The shift may be greater than at least one of 0, -1, -2, -3, -4, -5, -6, -7, -8, -9, -10, -11, -12, -13, -14, -15, -16, -17, -18, -19, -20, -21, -22, -23, -24, -25, -26, -27, -28, -29, -30, - 31, -32, -33, -34, -35, -36, -37, -38, -39, and -40 ppm. The range of the absolute shift relative to a bare proton, wherein the shift of TMS is about -31.5 relative to a bare proton, may be - ($p28.01 + p^2 2.56$) ppm (Eq. (20)) within a range of about at least one of ± 5 ppm, ± 10 ppm, ± 20 ppm, ± 30 ppm, ± 40 ppm, ± 50 ppm, ± 60 ppm, ± 70 ppm, ± 80 ppm, ± 90 ppm, and ± 100 ppm. The range of the absolute shift relative to a bare proton may be -($p28.01 + p^2 1.49\ X\ 10^{-3}$) ppm (Eq. (20)) within a range of about at least one of about 0.1% to 99%, 1% to 50%, and 1% to 10%.

The vibrational energies, $E_{vib}$, for the $\upsilon$ = 0 to $\upsilon$ = 1 transition of hydrogen-type molecules $H_2(1/p)$ are

$$E_{vib} = p^2 0.515902\ eV \quad (21)$$

where $p$ is an integer .

The rotational energies, $E_{rot}$, for the $J$ to $J$+1 transition of hydrogen-type molecules $H_2(1/p)$ are

$$E_{rot} = E_{J+1} - E_J = \frac{\hbar^2}{I}\left[J+1\right] = p^2\left(J+1\right)0.01509\ eV \quad (22)$$

where $p$ is an integer and $I$ is the moment of inertia. Ro-vibrational emission of $H_2(1/4)$ was observed on e-beam excited molecules in gases and trapped in solid matrix .

The $p^2$ dependence of the rotational energies results from an inverse $p$ dependence of the internuclear distance and the corresponding impact on the moment of inertia $I$. The predicted internuclear distance 2c' for $H_2(1/p)$ is

$$2c' = \frac{a_o\sqrt{2}}{p} \quad (23)$$

At least one of the rotational and vibration energies of $H_2(1/p)$ may be measured by at least one of electron-beam excitation emission spectroscopy, Raman spectroscopy, and Fourier transform infrared (FTIR) spectroscopy. $H_2(1/p)$ may be trapped in a matrix for measurement such as in at least one of MOH, MX, and $M_2CO_3$ (M = alkali; X = halide) matrix.

CATALYSTS

$He^+$, $Ar^+$, $Sr^+$, Li, K, NaH, nH (n = integer), and $H_2O$ are predicted to serve as catalysts since they meet the

catalyst criterion-a chemical or physical process with an enthalpy change equal to an integer multiple of the potential energy of atomic hydrogen, 27.2 *eV*. Specifically, a catalytic system is provided by the ionization of *t* electrons from an atom each to a continuum energy level such that the sum of the ionization energies of the t electrons is approximately $m \cdot 27.2\ eV$ where *m* is an integer. Moreover, further catalytic transitions may occur such as in the case wherein H(1/2) is first formed: $n = \frac{1}{2} \to \frac{1}{3},\ \frac{1}{3} \to \frac{1}{4},\ \frac{1}{4} \to \frac{1}{5},$ and so on. Once catalysis begins, hydrinos autocatalyze further in a process called disproportionation wherein H or H(1/p) serves as the catalyst for another H or H(1/p') (p may equal p').

Hydrogen and hydrinos may serves as catalysts. Hydrogen atoms *H*(1/*p*) *p* =1,2,3,...137 can undergo transitions to lower-energy states given by Eqs. (1) and (3) wherein the transition of one atom is catalyzed by a second that resonantly and nonradiatively accepts $m \cdot 27.2\ eV$ with a concomitant opposite change in its potential energy. The overall general equation for the transition of *H*(1/*p*) to *H*(1/(*m*+*p*)) induced by a resonance transfer of $m \cdot 27.2\ eV$ to *H*(1/*p*') is represented by Eq. (10). Thus, hydrogen atoms may serve as a catalyst wherein *m* = 1, *m* = 2, and *m* = 3 for one, two, and three atoms, respectively, acting as a catalyst for another. The rate for the two- or three-atom-catalyst case would be appreciable only when the *H* density is high. But, high H densities are not uncommon. A high hydrogen atom concentration permissive of 2H or 3H serving as the energy acceptor for a third or fourth may be achieved under several circumstances such as on the surface of the Sun and stars due to the temperature and gravity driven density, on metal surfaces that support multiple monolayers, and in highly dissociated plasmas, especially pinched hydrogen plasmas. Additionally, a three-body H interaction is easily achieved when two *H* atoms arise with the collision of a hot *H* with $H_2$. This event can commonly occur in plasmas having a large population of extraordinarily fast H. This is evidenced by the unusual intensity of atomic H emission. In such cases, energy transfer can occur from a hydrogen atom to two others within sufficient proximity, being typically a few angstroms via multipole coupling. Then, the reaction between three hydrogen atoms whereby two atoms resonantly and nonradiatively accept 54.4 *eV* from the third hydrogen atom such that 2H serves as the catalyst is given by

$$54.4\ eV + 2H + H \to 2H^{+}_{fast} + 2e^{-} + H^{*}\left[\frac{a_H}{3}\right] + 54.4\ eV \qquad (24)$$

$$H^{*}\left[\frac{a_H}{3}\right] \to H\left[\frac{a_H}{3}\right] + 54.4\ eV \qquad (25)$$

$$2H^{+}_{fast} + 2e^{-} \to 2H + 54.4\ eV \qquad (26)$$

And, the overall reaction is

$$H \to H\left[\frac{a_H}{3}\right] + [3^2 - 1^2] \cdot 13.6\ eV \qquad (27)$$

wherein $H^{*}\left[\frac{a_H}{3}\right]$ has the radius of the hydrogen atom and a central field equivalent to 3 times that of a proton and $H\left[\frac{a_H}{3}\right]$ is the corresponding stable state with the radius of 1/3 that of H. As the electron undergoes radial acceleration from the radius of the hydrogen atom to a radius of 1/3 this distance, energy is released as characteristic light emission or as third-body kinetic energy.

In another *H*-atom catalyst reaction involving a direct transition to $\left[\frac{a_H}{4}\right]$ state, two hot $H_2$ molecules collide and dissociate such that three *H* atoms serve as a catalyst of 3.27.2 *eV* for the fourth. Then, the reaction between four hydrogen atoms whereby three atoms resonantly and nonradiatively accept 81.6 *eV* from the fourth hydrogen atom such

that 3H serves as the catalyst is given by

$$81.6\ eV + 3H + H \rightarrow 3H^{+}_{fast} + 3e^{-} + H^{*}\left[\frac{a_H}{4}\right] + 81.6\ eV \quad (28)$$

$$H^{*}\left[\frac{a_H}{4}\right] \rightarrow H\left[\frac{a_H}{4}\right] + 122.4\ eV \quad (29)$$

$$3H^{+}_{fast} + 3e^{-} \rightarrow 3H + 81.6\ eV \quad (30)$$

And, the overall reaction is

$$H \rightarrow H\left[\frac{a_H}{4}\right] + [4^2 - 1^2] \cdot 13.6\ eV \quad (31)$$

The extreme-ultraviolet continuum radiation band due to the $H^{*}\left[\frac{a_H}{4}\right]$ intermediate of Eq. (28) is predicted to have short wavelength cutoff at 122.4 e*V* (10.1 nm) and extend to longer wavelengths. This continuum band was confirmed experimentally. In general, the transition of *H* to $H\left[\frac{a_H}{p = m+1}\right]$ due by the acceptance of $m \cdot 27.2\ eV$ gives a continuum band with a short wavelength cutoff and energy $E_{\left(H \rightarrow H\left[\frac{a_H}{p=m+1}\right]\right)}$ given by

$$E_{\left(H \rightarrow H\left[\frac{a_H}{p=m+1}\right]\right)} = m^2 \cdot 13.6\ eV \quad (32)$$

$$\lambda_{\left(H \rightarrow H\left[\frac{a_H}{p=m+1}\right]\right)} = \frac{91.2}{m^2}\ nm \quad (33)$$

and extending to longer wavelengths than the corresponding cutoff. The hydrogen emission series of 10.1 nm, 22.8 nm, and 91.2 nm continua were observed experimentally in intersteallr medium, the Sun and white dwarf stars.

The potential energy of $H_2O$ is 81.6 eV (Eq. (43)) [Mills GUT]. Then, by the same mechanism, the nascent $H_2O$ molecule (not hydrogen bonded in solid, liquid, or gaseous state) may serve as a catalyst (Eqs. (44-47)). The continuum radiation band at 10.1 nm and going to longer wavelengths for theoretically predicted transitions of H to lower-energy, so called "hydrino" states, was observed only arising from pulsed pinched hydrogen discharges first at BlackLight Power, Inc. (BLP) and reproduced at the Harvard Center for Astrophysics (CfA). Continuum radiation in the 10 to 30 nm region that matched predicted transitions of H to hydrino states, were observed only arising from pulsed pinched hydrogen discharges with metal oxides that are thermodynamically favorable to undergo H reduction to form HOH catalyst; whereas, those that are unfavorable did not show any continuum even though the low-melting point metals tested are very favorable to forming metal ion plasmas with strong short-wavelength continua in more powerful plasma sources.

Alternatively, a resonant kinetic energy transfer to form fast *H* may occur consistent with the observation of extraordinary Balmer $\alpha$ line broadening corresponding to high-kinetic energy H. The energy transfer to two *H* also causes pumping of the catalyst excited states, and fast *H* is produced directly as given by exemplary Eqs. (24), (28), and (47) and by resonant kinetic energy transfer.

I. Hydrinos

A hydrogen atom having a binding energy given by

$$Binding\ Energy = \frac{13.6\ eV}{(1/p)^2} \tag{34}$$

where p is an integer greater than 1, preferably from 2 to 137, is the product of the H catalysis reaction of the present disclosure. The binding energy of an atom, ion, or molecule, also known as the ionization energy, is the energy required to remove one electron from the atom, ion or molecule. A hydrogen atom having the binding energy given in Eq. (34) is hereafter referred to as a "hydrino atom" or "hydrino." The designation for a hydrino of radius $\frac{a_H}{p}$, where $a_H$ is the radius of an ordinary hydrogen atom and $p$ is an integer, is $H\left[\frac{a_H}{p}\right]$. A hydrogen atom with a radius $a_H$ is hereinafter referred to as "ordinary hydrogen atom" or "normal hydrogen atom." Ordinary atomic hydrogen is characterized by its binding energy of 13.6 eV.

Hydrinos are formed by reacting an ordinary hydrogen atom with a suitable catalyst having a net enthalpy of reaction of

$$m \cdot 27.2\ eV \tag{35}$$

where $m$ is an integer. It is believed that the rate of catalysis is increased as the net enthalpy of reaction is more closely matched to $m \cdot 27.2\ eV$. It has been found that catalysts having a net enthalpy of reaction within ±10%, preferably ±5%, of $m \cdot 27.2\ eV$ are suitable for most applications.

This catalysis releases energy from the hydrogen atom with a commensurate decrease in size of the hydrogen atom, $r_n = na_H$. For example, the catalysis of $H(n=1)$ to $H(n=1/2)$ releases 40.8 $eV$, and the hydrogen radius decreases from $a_H$ to $\frac{1}{2}a_H$. A catalytic system is provided by the ionization of $t$ electrons from an atom each to a continuum energy level such that the sum of the ionization energies of the $t$ electrons is approximately $m \cdot 27.2\ eV$ where $m$ is an integer. As a power source, the energy given off during catalysis is much greater than the energy lost to the catalyst. The energy released is large as compared to conventional chemical reactions. For example, when hydrogen and oxygen gases undergo combustion to form water

$$H_2(g) + \frac{1}{2}O_2(g) \rightarrow H_2O(l) \tag{36}$$

the known enthalpy of formation of water is $\Delta H_f = -286\ kJ/mole$ or 1.48 eV per hydrogen atom. By contrast, each ($n$=1) ordinary hydrogen atom undergoing catalysis releases a net of 40.8 $eV$. Moreover, further catalytic transitions may occur: $n = \frac{1}{2} \rightarrow \frac{1}{3}, \frac{1}{3} \rightarrow \frac{1}{4}, \frac{1}{4} \rightarrow \frac{1}{5},$ and so on. Once catalysis begins, hydrinos autocatalyze further in a process called disproportionation. This mechanism is similar to that of an inorganic ion catalysis. But, hydrino catalysis should have a higher reaction rate than that of the inorganic ion catalyst due to the better match of the enthalpy to $m \cdot 27.2\ eV$.

Hydrogen catalysts capable of providing a net enthalpy of reaction of approximately $m \cdot 27.2\ eV$ where $m$ is an integer to produce a hydrino (whereby $t$ electrons are ionized from an atom or ion) are given in TABLE 1. The atoms or ions given in the first column are ionized to provide the net enthalpy of reaction of $m \cdot 27.2\ eV$ given in the tenth column where $m$ is given in the eleventh column. The electrons, that participate in ionization are given with the ionization potential (also called ionization energy or binding energy). The ionization potential of the $n$ th electron of the atom or ion is designated by $IP_n$ and is given by the CRC. That is for example, $Li + 5.39172\ eV \rightarrow Li^+ + e^-$ and $Li^+ + 75.6402\ eV \rightarrow Li^{2+} + e^-$.

The first ionization potential, $IP_1$=5.39172 *eV*, and the second ionization potential, $IP_2$ = 75.6402 e*V*, are given in the second and third columns, respectively. The net enthalpy of reaction for the double ionization of *Li* is 81.0319 *eV* as given in the tenth column, and *m* = 3 in Eq. (5) as given in the eleventh column.

TABLE 1. Hydrogen Catalysts.

| Catalyst | IP1 | IP2 | IP3 | IP4 | IP5 | IP6 | IP7 | IP8 | Enthalpy | m |
|---|---|---|---|---|---|---|---|---|---|---|
| Li | 5.39172 | 75.6402 | | | | | | | 81.032 | 3 |
| Be | 9.32263 | 18.2112 | | | | | | | 27.534 | 1 |
| Mg | 7.646235 | 15.03527 | 80.1437 | 109.2655 | 141.27 | | | | 353.3607 | 13 |
| K | 4.34066 | 31.63 | 45.806 | | | | | | 81.777 | 3 |
| Ca | 6.11316 | 11.8717 | 50.9131 | 67.27 | | | | | 136.17 | 5 |
| Ti | 6.8282 | 13.5755 | 27.4917 | 43.267 | 99.3 | | | | 190.46 | 7 |
| V | 6.7463 | 14.66 | 29.311 | 46.709 | 65.2817 | | | | 162.71 | 6 |
| Cr | 6.76664 | 16.4857 | 30.96 | | | | | | 54.212 | 2 |
| Mn | 7.43402 | 15.64 | 33.668 | 51.2 | | | | | 107.94 | 4 |
| Fe | 7.9024 | 16.1878 | 30.652 | | | | | | 54.742 | 2 |
| Fe | 7.9024 | 16.1878 | 30.652 | 54.8 | | | | | 109.54 | 4 |
| Co | 7.881 | 17.083 | 33.5 | 51.3 | | | | | 109.76 | 4 |
| Co | 7.881 | 17.083 | 33.5 | 51.3 | 79.5 | | | | 189.26 | 7 |
| Ni | 7.6398 | 18.1688 | 35.19 | 54.9 | 76.06 | | | | 191.96 | 7 |
| Ni | 7.6398 | 18.1688 | 35.19 | 54.9 | 76.06 | 108 | | | 299.96 | 11 |
| Cu | 7.72638 | 20.2924 | | | | | | | 28.019 | 1 |
| Zn | 9.39405 | 17.9644 | | | | | | | 27.358 | 1 |
| Zn | 9.39405 | 17.9644 | 39.723 | 59.4 | 82.6 | 108 | 134 | 174 | 625.08 | 23 |
| Ga | 5.999301 | 20.51514 | | | | | | | 26.5144 | 1 |
| As | 9.8152 | 18.633 | 28.351 | 50.13 | 62.63 | 127.6 | | | 297.16 | 11 |
| Se | 9.75238 | 21.19 | 30.8204 | 42.945 | 68.3 | 81.7 | 155.4 | | 410.11 | 15 |
| Kr | 13.9996 | 24.3599 | 36.95 | 52.5 | 64.7 | 78.5 | | | 271.01 | 10 |
| Kr | 13.9996 | 24.3599 | 36.95 | 52.5 | 64.7 | 78.5 | 111 | | 382.01 | 14 |
| Rb | 4.17713 | 27.285 | 40 | 52.6 | 71 | 84.4 | 99.2 | | 378.66 | 14 |
| Rb | 4.17713 | 27.285 | 40 | 52.6 | 71 | 84.4 | 99.2 | 136 | 514.66 | 19 |
| Sr | 5.69484 | 11.0301 | 42.89 | 57 | 71.6 | | | | 188.21 | 7 |
| Nb | 6.75885 | 14.32 | 25.04 | 38.3 | 50.55 | | | | 134.97 | 5 |
| Mo | 7.09243 | 16.16 | 27.13 | 46.4 | 54.49 | 68.8276 | | | 220.10 | 8 |
| Mo | 7.09243 | 16.16 | 27.13 | 46.4 | 54.49 | 68.8276 | 125.664 | 143.6 | 489.36 | 18 |
| Ru | 7.3605 | 16.76 | 28.47 | 50 | 60 | | | | 162.5905 | 6 |
| Pd | 8.3369 | 19.43 | | | | | | | 27.767 | 1 |
| Sn | 7.34381 | 14.6323 | 30.5026 | 40.735 | 72.28 | | | | 165.49 | 6 |
| Te | 9.0096 | 18.6 | | | | | | | 27.61 | 1 |
| Te | 9.0096 | 18.6 | 27.96 | | | | | | 55.57 | 2 |
| Cs | 3.8939 | 23.1575 | | | | | | | 27.051 | 1 |
| Ba | 5.211664 | 10.00383 | 35.84 | 49 | 62 | | | | 162.0555 | 6 |
| Ba | 5.21 | 10 | 37.3 | | | | | | | |
| Ce | 5.5387 | 10.85 | 20.198 | 36.758 | 65.55 | | | | 138.89 | 5 |
| Ce | 5.5387 | 10.85 | 20.198 | 36.758 | 65.55 | 77.6 | | | 216.49 | 8 |
| Pr | 5.464 | 10.55 | 21.624 | 38.98 | 57.53 | | | | 134.15 | 5 |
| Sm | 5.6437 | 11.07 | 23.4 | 41.4 | | | | | 81.514 | 3 |
| Gd | 6.15 | 12.09 | 20.63 | 44 | | | | | 82.87 | 3 |
| Dy | 5.9389 | 11.67 | 22.8 | 41.47 | | | | | 81.879 | 3 |
| Pb | 7.41666 | 15.0322 | 31.9373 | | | | | | 54.386 | 2 |
| Pt | 8.9587 | 18.563 | | | | | | | 27.522 | 1 |
| $He^+$ | | 54.4178 | | | | | | | 54.418 | 2 |

(continued)

| Catalyst | IP1 | IP2 | IP3 | IP4 | IP5 | IP6 | IP7 | IP8 | Enthalpy | m |
|---|---|---|---|---|---|---|---|---|---|---|
| $Na^+$ | | 47.2864 | 71.6200 | 98.91 | | | | | 217.816 | 8 |
| $Mg^{2+}$ | | | 80.1437 | | | | | | 80.1437 | 3 |
| $Rb^+$ | | 27.285 | | | | | | | 27.285 | 1 |
| $Fe^{3+}$ | | | | 54.8 | | | | | 54.8 | 2 |
| $Mo^{2+}$ | | | 27.13 | | | | | | 27.13 | 1 |
| $Mo^{4+}$ | | | | | 54.49 | | | | 54.49 | 2 |
| $In^{3+}$ | | | | 54 | | | | | 54 | 2 |
| $Ar^+$ | | 27.62 | | | | | | | 27.62 | 1 |
| $Sr^+$ | | 11.03 | 42.89 | | | | | | 53.92 | 2 |

The hydrino hydride ion of the present disclosure can be formed by the reaction of an electron source with a hydrino, that is, a hydrogen atom having a binding energy of about $\frac{13.6\ eV}{n^2}$, where $n=\frac{1}{p}$ and $p$ is an integer greater than 1. The hydrino hydride ion is represented by $H^-(n=1/p)$ or $H^-(1/p)$:

$$H\left[\frac{a_H}{p}\right]+e^- \rightarrow H^-\left(n=1/p\right) \quad (37)$$

$$H\left[\frac{a_H}{p}\right]+e^- \rightarrow H^-\left(1/p\right). \quad (38)$$

The hydrino hydride ion is distinguished from an ordinary hydride ion comprising an ordinary hydrogen nucleus and two electrons having a binding energy of about 0.8 eV. The latter is hereafter referred to as "ordinary hydride ion" or "normal hydride ion." The hydrino hydride ion comprises a hydrogen nucleus including proteum, deuterium, or tritium, and two indistinguishable electrons at a binding energy according to Eqs. (39) and (40).

The binding energy of a hydrino hydride ion can be represented by the following formula:

$$Binding\ Energy=\frac{\hbar^2\sqrt{s(s+1)}}{8\mu_e a_0^2\left[\frac{1+\sqrt{s(s+1)}}{p}\right]^2}-\frac{\pi\mu_0 e^2\hbar^2}{m_e^2}\left(\frac{1}{a_H^3}+\frac{2^2}{a_0^3\left[\frac{1+\sqrt{s(s+1)}}{p}\right]^3}\right) \quad (39)$$

where $p$ is an integer greater than one, $s$=1/2, $\pi$ is pi, $\hbar$ is Planck's constant bar, $\mu_o$ is the permeability of vacuum, $m_e$ is the mass of the electron, $\mu_e$ is the reduced electron mass given by $\mu_e=\frac{m_e m_p}{\frac{m_e}{\sqrt{\frac{3}{4}}}+m_p}$ where $m_p$ is the mass of the proton, $a_H$ is the radius of the hydrogen atom, $a_o$ is the Bohr radius, and $e$ is the elementary charge. The radii are given by

$$r_2=r_1=a_0\left(1+\sqrt{s\left(s+1\right)}\right);\ s=\frac{1}{2}. \quad (40)$$

The binding energies of the hydrino hydride ion, $H^-(n=1/p)$ as a function of $p$, where $p$ is an integer, are shown in TABLE 2.

TABLE 2. The representative binding energy of the hydrino hydride ion $H^-(n=1/p)$ as a function of $p$ , Eq. (39).

| Hydride Ion | $r_1(a_o)$[a] | Binding Energy (eV)[b] | Wavelength (nm) |
|---|---|---|---|
| $H^-(n=1)$ | 1.8660 | 0.7542 | 1644 |
| $H^-(n=1/2)$ | 0.9330 | 3.047 | 406.9 |
| $H^-(n=1/3)$ | 0.6220 | 6.610 | 187.6 |
| $H^-(n=1/4)$ | 0.4665 | 11.23 | 110.4 |
| $H^-(n=1/5)$ | 0.3732 | 16.70 | 74.23 |
| $H^-(n=1/6)$ | 0.3110 | 22.81 | 54.35 |
| $H^-(n=1/7)$ | 0.2666 | 29.34 | 42.25 |
| $H^-(n=1/8)$ | 0.2333 | 36.09 | 34.46 |
| $H^-(n=1/9)$ | 0.2073 | 42.84 | 28.94 |
| $H^-(n=1/10)$ | 0.1866 | 49.38 | 25.11 |
| $H^-(n=1/11)$ | 0.1696 | 55.50 | 22.34 |
| $H^-(n=1/12)$ | 0.1555 | 60.98 | 20.33 |
| $H^-(n=1/13)$ | 0.1435 | 65.63 | 18.89 |
| $H^-(n=1/14)$ | 0.1333 | 69.22 | 17.91 |
| $H^-(n=1/15)$ | 0.1244 | 71.55 | 17.33 |
| $H^-(n=1/16)$ | 0.1166 | 72.40 | 17.12 |
| $H^-(n=1/17)$ | 0.1098 | 71.56 | 17.33 |
| $H^-(n=1/18)$ | 0.1037 | 68.83 | 18.01 |
| $H^-(n=1/19)$ | 0.0982 | 63.98 | 19.38 |
| $H^-(n=1/20)$ | 0.0933 | 56.81 | 21.82 |
| $H^-(n=1/21)$ | 0.0889 | 47.11 | 26.32 |
| $H^-(n=1/22)$ | 0.0848 | 34.66 | 35.76 |
| $H^-(n=1/23)$ | 0.0811 | 19.26 | 64.36 |
| $H^-(n=1/24)$ | 0.0778 | 0.6945 | 1785 |

a Eq. (40)
b Eq. (39)

According to the present disclosure, a hydrino hydride ion ($H^-$) having a binding energy according to Eqs. (39) and (40) that is greater than the binding of ordinary hydride ion (about 0.75 eV) for $p$ = 2 up to 23, and less for $p$ = 24 ($H^-$) is provided. For $p$ = 2 to $p$ = 24 of Eqs. (39) and (40), the hydride ion binding energies are respectively 3, 6.6, 11.2, 16.7, 22.8, 29.3, 36.1, 42.8, 49.4, 55.5, 61.0, 65.6, 69.2, 71.6, 72.4, 71.6, 68.8, 64.0, 56.8, 47.1, 34.7, 19.3, and 0.69 eV. Exemplary compositions comprising the novel hydride ion are also provided herein.

Exemplary compounds are also provided comprising one or more hydrino hydride ions and one or more other elements. Such a compound is referred to as a "hydrino hydride compound."

Ordinary hydrogen species are characterized by the following binding energies (a) hydride ion, 0.754 eV ("ordinary hydride ion"); (b) hydrogen atom ("ordinary hydrogen atom"), 13.6 eV; (c) diatomic hydrogen molecule, 15.3 eV ("ordinary hydrogen molecule"); (d) hydrogen molecular ion, 16.3 eV ("ordinary hydrogen molecular ion"); and (e) $H_3^+$, 22.6 eV ("ordinary trihydrogen molecular ion"). Herein, with reference to forms of hydrogen, "normal" and "ordinary" are synonymous.

According to a further embodiment of the present disclosure, a compound is provided comprising at least one increased binding energy hydrogen species such as (a) a hydrogen atom having a binding energy of about $\frac{13.6\ eV}{\left(\frac{1}{p}\right)^2}$,

such as within a range of about 0.9 to 1.1 times $\frac{13.6\ eV}{\left(\frac{1}{p}\right)^2}$ where p is an integer from 2 to 137; (b) a hydride ion ($H^-$) having a binding energy of about

$$Binding\ Energy = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3}+\frac{2^2}{a_0^3\left[\frac{1+\sqrt{s(s+1)}}{p}\right]^3}\right),$$

such as within a range of about 0.9 to 1.1 times

$$Binding\ Energy = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3}+\frac{2^2}{a_0^3\left[\frac{1+\sqrt{s(s+1)}}{p}\right]^3}\right)$$

where p is an integer from 2 to 24; (c) $H_4^+(1/p)$; (d) a trihydrino molecular ion, $H_3^+(1/p)$, having a binding energy of about $\frac{22.6}{\left(\frac{1}{p}\right)^2}\ eV$ such as within a range of about 0.9 to 1.1 times $\frac{22.6}{\left(\frac{1}{p}\right)^2}\ eV$ where p is an integer from 2 to 137; (e) a dihydrino having a binding energy of about $\frac{15.3}{\left(\frac{1}{p}\right)^2}\ eV$ such as within a range of about 0.9 to 1.1 times $\frac{15.3}{\left(\frac{1}{p}\right)^2}\ eV$ where p is an integer from 2 to 137; (f) a dihydrino molecular ion with a binding energy of about $\frac{16.3}{\left(\frac{1}{p}\right)^2}\ eV$ such as within a range of about 0.9 to 1.1 times $\frac{16.3}{\left(\frac{1}{p}\right)^2}\ eV$ where p is an integer, preferably an integer from 2 to 137.

According to a further embodiment of the present disclosure, a compound is provided comprising at least one increased binding energy hydrogen species such as (a) a dihydrino molecular ion having a total energy of about

$$E_T = -p^2\left\{\begin{array}{l}\frac{e^2}{8\pi\varepsilon_o a_H}(4\ln 3-1-2\ln 3)\left[1+p\sqrt{\frac{2\hbar\sqrt{\frac{\frac{2e^2}{4\pi\varepsilon_o(2a_H)^3}}{m_e}}}{m_e c^2}}\right] \\ -\frac{1}{2}\hbar\sqrt{\frac{\frac{pe^2}{4\pi\varepsilon_o\left(\frac{2a_H}{p}\right)^3}-\frac{pe^2}{8\pi\varepsilon_o\left(\frac{3a_H}{p}\right)^3}}{\mu}}\end{array}\right\} \tag{41}$$

$$= -p^2 16.13392\ eV - p^3 0.118755\ eV$$

such as within a range of about 0.9 to 1.1 times

$$E_T = -p^2 \left\{ \begin{array}{l} \frac{e^2}{8\pi\varepsilon_o a_H}(4\ln 3 - 1 - 2\ln 3)\left[1 + p\sqrt{\frac{2\hbar\sqrt{\frac{2e^2}{4\pi\varepsilon_o (2a_H)^3}}{m_e}}{m_e c^2}}\right] \\ -\frac{1}{2}\hbar\sqrt{\frac{\frac{pe^2}{4\pi\varepsilon_o\left(\frac{2a_H}{p}\right)^3} - \frac{pe^2}{8\pi\varepsilon_o\left(\frac{3a_H}{p}\right)^3}}{\mu}} \end{array} \right\}$$

$$= -p^2 16.13392\ eV - p^3 0.118755\ eV$$

where $p$ is an integer, $\hbar$ is Planck's constant bar, $m_e$ is the mass of the electron, $c$ is the speed of light in vacuum, and $\mu$ is the reduced nuclear mass, and (b) a dihydrino molecule having a total energy of about

$$E_T = -p^2 \left\{ \begin{array}{l} \frac{e^2}{8\pi\varepsilon_o a_0}\left[\left(2\sqrt{2} - \sqrt{2} + \frac{\sqrt{2}}{2}\right)\ln\frac{\sqrt{2}+1}{\sqrt{2}-1} - \sqrt{2}\right]\left[1 + p\sqrt{\frac{2\hbar\sqrt{\frac{e^2}{4\pi\varepsilon_o a_0^3}}{m_e}}{m_e c^2}}\right] \\ -\frac{1}{2}\hbar\sqrt{\frac{\frac{pe^2}{8\pi\varepsilon_o\left(\frac{a_0}{p}\right)^3} - \frac{pe^2}{8\pi\varepsilon_o\left(\frac{\left(1+\frac{1}{\sqrt{2}}\right)a_0}{p}\right)^3}}{\mu}} \end{array} \right\} \quad (42)$$

$$= -p^2 31.351\ eV - p^3 0.326469\ eV$$

such as within a range of about 0.9 to 1.1 times

$$E_T = -p^2 \left\{ \begin{array}{l} \frac{e^2}{8\pi\varepsilon_o a_0}\left[\left(2\sqrt{2} - \sqrt{2} + \frac{\sqrt{2}}{2}\right)\ln\frac{\sqrt{2}+1}{\sqrt{2}-1} - \sqrt{2}\right]\left[1 + p\sqrt{\frac{2\hbar\sqrt{\frac{e^2}{4\pi\varepsilon_o a_0^3}}{m_e}}{m_e c^2}}\right] \\ -\frac{1}{2}\hbar\sqrt{\frac{\frac{pe^2}{8\pi\varepsilon_o\left(\frac{a_0}{p}\right)^3} - \frac{pe^2}{8\pi\varepsilon_o\left(\frac{\left(1+\frac{1}{\sqrt{2}}\right)a_0}{p}\right)^3}}{\mu}} \end{array} \right\}$$

where $p$ is an $= -p^2 31.351\ eV - p^3 0.326469\ eV$
integer and $a_o$ is the Bohr radius.

According to one embodiment of the present disclosure wherein the compound comprises a negatively charged increased binding energy hydrogen species, the compound further comprises one or more cations, such as a proton, ordinary $H_2^+$, or ordinary $H_3^+$.

A method is provided herein for preparing compounds comprising at least one hydrino hydride ion. Such compounds are hereinafter referred to as "hydrino hydride compounds." The method comprises reacting atomic hydrogen with a catalyst having a net enthalpy of reaction of about $\frac{m}{2} \cdot 27\ eV,$ where m is an integer greater than 1, preferably an integer less than 400, to produce an increased binding energy hydrogen atom having a binding energy of about $\frac{13.6\ eV}{\left(\frac{1}{p}\right)^2}$ where *p* is an integer, preferably an integer from 2 to 137. A further product of the catalysis is energy. The increased binding energy hydrogen atom can be reacted with an electron source, to produce an increased binding energy hydride ion. The increased binding energy hydride ion can be reacted with one or more cations to produce a compound comprising at least one increased binding energy hydride ion.

The novel hydrogen compositions of matter can comprise:

(a) at least one neutral, positive, or negative hydrogen species (hereinafter "increased binding energy hydrogen species") having a binding energy

(i) greater than the binding energy of the corresponding ordinary hydrogen species, or

(ii) greater than the binding energy of any hydrogen species for which the corresponding ordinary hydrogen species is unstable or is not observed because the ordinary hydrogen species' binding energy is less than thermal energies at ambient conditions (standard temperature and pressure, STP), or is negative; and

(b) at least one other element. The compounds of the present disclosure are hereinafter referred to as "increased binding energy hydrogen compounds."

By "other element" in this context is meant an element other than an increased binding energy hydrogen species. Thus, the other element can be an ordinary hydrogen species, or any element other than hydrogen. In one group of compounds, the other element and the increased binding energy hydrogen species are neutral. In another group of compounds, the other element and increased binding energy hydrogen species are charged such that the other element provides the balancing charge to form a neutral compound. The former group of compounds is characterized by molecular and coordinate bonding; the latter group is characterized by ionic bonding.

Also provided are novel compounds and molecular ions comprising

(a) at least one neutral, positive, or negative hydrogen species (hereinafter "increased binding energy hydrogen species") having a total energy

(i) greater than the total energy of the corresponding ordinary hydrogen species, or

(ii) greater than the total energy of any hydrogen species for which the corresponding ordinary hydrogen species is unstable or is not observed because the ordinary hydrogen species' total energy is less than thermal energies at ambient conditions, or is negative; and

(b) at least one other element.

The total energy of the hydrogen species is the sum of the energies to remove all of the electrons from the hydrogen species. The hydrogen species according to the present disclosure has a total energy greater than the total energy of the corresponding ordinary hydrogen species. The hydrogen species having an increased total energy according to the present disclosure is also referred to as an "increased binding energy hydrogen species" even though some embodiments of the hydrogen species having an increased total energy may have a first electron binding energy less that the first electron binding energy of the corresponding ordinary hydrogen species. For example, the hydride ion of Eqs. (39)and (40) for $p$ = 24 has a first binding energy that is less than the first binding energy of ordinary hydride ion, while the total energy of the hydride ion of Eqs. (39) and (40) for $p$ = 24 is much greater than the total energy of the corresponding ordinary hydride ion.

Also provided herein are novel compounds and molecular ions comprising

(a) a plurality of neutral, positive, or negative hydrogen species (hereinafter "increased binding energy hydrogen species") having a binding energy

(i) greater than the binding energy of the corresponding ordinary hydrogen species, or

(ii) greater than the binding energy of any hydrogen species for which the corresponding ordinary hydrogen species is unstable or is not observed because the ordinary hydrogen species' binding energy is less than thermal energies at ambient conditions or is negative; and

(b) optionally one other element. The compounds of the present disclosure are hereinafter referred to as "increased binding energy hydrogen compounds."

The increased binding energy hydrogen species can be formed by reacting one or more hydrino atoms with one or more of an electron, hydrino atom, a compound containing at least one of said increased binding energy hydrogen species, and at least one other atom, molecule, or ion other than an increased binding energy hydrogen species.

Also provided are novel compounds and molecular ions comprising

(a) a plurality of neutral, positive, or negative hydrogen species (hereinafter "increased binding energy hydrogen species") having a total energy

(i) greater than the total energy of ordinary molecular hydrogen, or

(ii) greater than the total energy of any hydrogen species for which the corresponding ordinary hydrogen species is unstable or is not observed because the ordinary hydrogen species' total energy is less than thermal energies at ambient conditions or is negative; and

(b) optionally one other element. The compounds of the present disclosure are hereinafter referred to as "increased binding energy hydrogen compounds."

In an embodiment, a compound is provided comprising at least one increased binding energy hydrogen species chosen from (a) hydride ion having a binding energy according to Eqs. (39) and (40) that is greater than the binding of ordinary hydride ion (about 0.8 eV) for $p$ = 2 up to 23, and less for $p$ = 24 ("increased binding energy hydride ion" or "hydrino hydride ion"); (b) hydrogen atom having a binding energy greater than the binding energy of ordinary hydrogen atom (about 13.6 eV) ("increased binding energy hydrogen atom" or "hydrino"); (c) hydrogen molecule having a first binding energy greater than about 15.3 eV ("increased binding energy hydrogen molecule" or "dihydrino"); and (d) molecular hydrogen ion having a binding energy greater than about 16.3 eV ("increased binding energy molecular hydrogen ion" or "dihydrino molecular ion"). In the disclosure, increased binding energy hydrogen species and compounds is also referred to as lower-energy hydrogen species and compounds. Hydrinos comprise an increased binding energy hydrogen species or equivalently a lower-energy hydrogen species.

D. Additional MH-Type Catalysts and Reactions

In general, MH type hydrogen catalysts to produce hydrinos provided by the breakage of the M-H bond plus the ionization of $t$ electrons from the atom M each to a continuum energy level such that the sum of the bond energy and ionization energies of the $t$ electrons is approximately $m \cdot 27.2\ eV$ where $m$ is an integer are given in TABLE 3A. Each MH catalyst is given in the first column and the corresponding M-H bond energy is given in column two. The atom M of the MH species given in the first column is ionized to provide the net enthalpy of reaction of $m \cdot 27.2\ eV$ with the addition of the bond energy in column two. The enthalpy of the catalyst is given in the eighth column where $m$ is given in the ninth column. The electrons that participate in ionization are given with the ionization potential (also called ionization energy or binding energy). For example, the bond energy of $NaH$, 1.9245 $eV$, is given in column two. The ionization potential of the $n$th electron of the atom or ion is designated by $IP_n$ and is given by the CRC. That is for example, $Na+5.13908\ eV \rightarrow Na^{+}+e^{-}$ and $Na^{+}+47.2864\ eV \rightarrow Na^{2+}+e^{-}$. The first ionization potential, $IP_1$ = 5.13908 $eV$, and the second ionization potential, $IP_2$ = 47.2864 $eV$, are given in the second and third columns, respectively. The net enthalpy of reaction for the breakage of the $NaH$ bond and the double ionization of $Na$ is 54.35 $eV$ as given in the eighth column, and $m$ = 2 in Eq. (35) as given in the ninth column. The bond energy of BaH is 1.98991 eV and $IP_1$, $IP_2$, and $IP_3$ are 5.2117 eV, 10.00390 eV, and 37.3 eV, respectively. The net enthalpy of reaction for the breakage of the BaH bond and the triple ionization of Ba is 54.5 eV as given in the eighth column, and m=2 in Eq. (35) as given in the ninth column. The bond energy of SrH is 1.70 eV and $IP_1$, $IP_2$, $IP_3$, $IP_4$, and $IP_5$ are 5.69484 eV, 11.03013 eV, 42.89 eV, 57 eV, and 71.6 eV, respectively. The net enthalpy of reaction for the breakage of the SrH bond and the ionization of Sr to $Sr^{5+}$ is 190 eV as given in the eighth column, and m=7 in Eq. (35) as given in the ninth column.

TABLE 3A. MH type hydrogen catalysts capable of providing a net enthalpy of reaction of approximately *m·*27.2 *eV m·*27.2 *eV.* Energies in eV's.

| Catalyst | M-H Bond Energy | $IP_1$ | $IP_2$ | $IP_3$ | $IP_4$ | $IP_5$ | Enthalpy | m |
|---|---|---|---|---|---|---|---|---|
| A1H | 2.98 | 5.985768 | 18.82855 | | | | 27.79 | 1 |
| AsH | 2.84 | 9.8152 | 18.633 | 28.351 | 50.13 | | 109.77 | 4 |
| BaH | 1.99 | 5.21170 | 10.00390 | 37.3 | | | 54.50 | 2 |
| BiH | 2.936 | 7.2855 | 16.703 | | | | 26.92 | 1 |
| CdH | 0.72 | 8.99367 | 16.90832 | | | | 26.62 | 1 |
| C1H | 4.4703 | 12.96763 | 23.8136 | 39.61 | | | 80.86 | 3 |
| CoH | 2.538 | 7.88101 | 17.084 | | | | 27.50 | 1 |
| GeH | 2.728 | 7.89943 | 15.93461 | | | | 26.56 | 1 |
| InH | 2.520 | 5.78636 | 18.8703 | | | | 27.18 | 1 |
| NaH | 1.925 | 5.139076 | 47.2864 | | | | 54.35 | 2 |
| NbH | 2.30 | 6.75885 | 14.32 | 25.04 | 38.3 | 50.55 | 137.26 | 5 |
| OH | 4.4556 | 13.61806 | 35.11730 | | | | 53.3 | 2 |
| OH | 4.4556 | 13.61806 | 35.11730 | 54.9355 | | | 108.1 | 4 |
| OH | 4.4556 | 13.61806 +13.6KE | 35.11730 +13.6KE | | | | 80.39 | 3 |
| RhH | 2.50 | 7.4589 | 18.08 | | | | 28.0 | 1 |
| RuH | 2.311 | 7.36050 | 16.76 | | | | 26.43 | 1 |
| SH | 3.67 | 10.36001 | 23.3379 | 34.79 | 47.222 | 72.5945 | 191.97 | 7 |
| SbH | 2.484 | 8.60839 | 16.63 | | | | 27.72 | 1 |
| SeH | 3.239 | 9.75239 | 21.19 | 30.8204 | 42.9450 | | 107.95 | 4 |
| SiH | 3.040 | 8.15168 | 16.34584 | | | | 27.54 | 1 |
| SnH | 2.736 | 7.34392 | 14.6322 | 30.50260 | | | 55.21 | 2 |
| SrH | 1.70 | 5.69484 | 11.03013 | 42.89 | 57 | 71.6 | 190 | 7 |
| T1H | 2.02 | 6.10829 | 20.428 | | | | 28.56 | 1 |

In other embodiments, $MH^-$ type hydrogen catalysts to produce hydrinos provided by the transfer of an electron to an acceptor A, the breakage of the M-H bond plus the ionization of *t* electrons from the atom M each to a continuum energy level such that the sum of the electron transfer energy comprising the difference of electron affinity (EA) of MH and A, M-H bond energy, and ionization energies of the *t* electrons from M is approximately *m·*27.2 *eV* where *m* is an integer are given in TABLE 3B. Each $MH^-$ catalyst, the acceptor A, the electron affinity of MH, the electron affinity of A, and the M-H bond energy, are is given in the first, second, third and fourth columns, respectively. The electrons of the corresponding atom M of MH that participate in ionization are given with the ionization potential (also called ionization energy or binding energy) in the subsequent columns and the enthalpy of the catalyst and the corresponding integer *m* are given in the last column. For example, the electron affinities of OH and H are 1.82765 eV and 0.7542 eV, respectively, such that the electron transfer energy is 1.07345 eV as given in the fifth column. The bond energy of OH is 4.4556 eV is given in column six. The ionization potential of the *n*th electron of the atom or ion is designated by $IP_n$. That is for example, $O+13.61806\ eV \rightarrow O^+ + e^-$ and $O^+ +35.11730\ eV \rightarrow O^{2+} + e^-$. The first ionization potential, $IP_1 = 13.61806\ eV$, and the second ionization potential, $IP_2 = 35.11730\ eV$, are given in the seventh and eighth columns, respectively. The net enthalpy of the electron transfer reaction, the breakage of the OH bond, and the double ionization of O is 54.27 eV as given in the eleventh column, and *m* = 2 in Eq. (35) as given in the twelfth column. In other embodiments, the catalyst for H to form hydrinos is provided by the ionization of a negative ion such that the sum of its EA plus the ionization energy of one or more electrons is approximately *m* ·27.2 *eV* where *m* is an integer. Alternatively, the first electron of the negative ion may be transferred to an acceptor followed by ionization of at least one more electron such that the sum of the electron transfer energy plus the ionization energy of one or more electrons is approximately *m* ·27.2 *eV* where *m* is an integer. The electron acceptor may be H.

TABLE 3B. $MH^-$ type hydrogen catalysts capable of providing a net enthalpy of reaction of approximately $m \cdot 27.2\ eV$. Energies in eV's.

| Catalyst | Acceptor (A) | EA (MH) | EA (A) | Electron Transfer | M-H Bond Energy | $IP_1$ | $IP_2$ | $IP_3$ | $IP_4$ | Enthalpy | m |
|---|---|---|---|---|---|---|---|---|---|---|---|
| $OH^-$ | H | 1.82765 | 0.7542 | 1.07345 | 4.4556 | 13.61806 | 35.11730 | | | 54.27 | 2 |
| $SiH^-$ | H | 1.277 | 0.7542 | 0.5228 | 3.040 | 8.15168 | 16.34584 | | | 28.06 | 1 |
| $CoH^-$ | H | 0.671 | 0.7542 | -0.0832 | 2.538 | 7.88101 | 17.084 | | | 27.42 | 1 |
| $NiH^-$ | H | 0.481 | 0.7542 | -0.2732 | 2.487 | 7.6398 | 18.16884 | | | 28.02 | 1 |
| $SeH^-$ | H | 2.2125 | 0.7542 | 1.4583 | 3.239 | 9.75239 | 21.19 | 30.8204 | 42.9450 | 109.40 | 4 |

In other embodiments, $MH^+$ type hydrogen catalysts to produce hydrinos are provided by the transfer of an electron from an donor A which may be negatively charged, the breakage of the M-H bond, and the ionization of *t* electrons from the atom M each to a continuum energy level such that the sum of the electron transfer energy comprising the difference of ionization energies of MH and A, bond M-H energy, and ionization energies of the *t* electrons from M is approximately $m \cdot 27.2\ eV$ where *m* is an integer.

In an embodiment, a species such as an atom, ion, or molecule serves as a catalyst to cause molecular hydrogen to undergo a transition to molecular hydrino $H_2(1/p)$ (p is an integer). Similarly to the case with H the catalyst accepts energy from $H_2$ which in this case may be about m48.6 eV wherein m is an integer as given in Mills GUTCP. Suitable exemplary catalysts that form $H_2(1/p)$ by the direct catalysis of $H_2$ are O, V, and Cd that form $O^{2+}$, $V^{4+}$, and $Cd^{5+}$ during the catalysis reaction corresponding to m = 1, m = 2, and m = 4, respectively. The energy may be released as heat or light or as electricity wherein the reactions comprise a half-cell reaction.

In an embodiment, the catalyst comprises any species such as an atom, positively or negatively charged ion, positively or negatively charged molecular ion, molecule, excimer, compound, or any combination thereof in the ground or excited state that is capable of accepting energy of $m \cdot 27.2\ eV$, $m$ = 1,2,3,4,....(Eq. (5)). It is believed that the rate of catalysis is increased as the net enthalpy of reaction is more closely matched to $m \cdot 27.2\ eV$. It has been found that catalysts having a net enthalpy of reaction within $\pm 10\%$, preferably $\pm 5\%$, of $m \cdot 27.2\ eV$ are suitable for most applications. In the case of the catalysis of hydrino atoms to lower energy states, the enthalpy of reaction of $m \cdot 27.2\ eV$ (Eq. (5)) is relativistically corrected by the same factor as the potential energy of the hydrino atom. In an embodiment, the catalyst resonantly and radiationless accepts energy from atomic hydrogen. In an embodiment, the accepted energy decreases the magnitude of the potential energy of the catalyst by about the amount transferred from atomic hydrogen. Energetic ions or electrons may result due to the conservation of the kinetic energy of the initially bound electrons. At least one atomic H serves as a catalyst for at least one other wherein the 27.2 eV potential energy of the acceptor is cancelled by the transfer or 27.2 eV from the donor H atom being catalyzed. The kinetic energy of the acceptor catalyst H may be conserved as fast protons or electrons. Additionally, the intermediate state (Eq. (7)) formed in the catalyzed H decays with the emission of continuum energy in the form of radiation or induced kinetic energy in a third body. These energy releases may result in current flow in the CIHT cell.

In an embodiment, at least one of a molecule or positively or negatively charged molecular ion serves as a catalyst that accepts about m27.2 eV from atomic H with a decrease in the magnitude of the potential energy of the molecule or positively or negatively charged molecular ion by about m27.2 eV. For example, the potential energy of $H_2O$ given in Mills GUTCP is

$$V_e = \left(\frac{3}{2}\right)\frac{-2e^2}{8\pi\varepsilon_0\sqrt{a^2-b^2}}\ln\frac{a+\sqrt{a^2-b^2}}{a-\sqrt{a^2-b^2}} = -81.8715\ eV \qquad (43)$$

A molecule that accepts $m \cdot 27.2\ eV$ from atomic H with a decrease in the magnitude of the potential energy of the molecule by the same energy may serve as a catalyst. For example, the catalysis reaction (m =3) regarding the potential energy of $H_2O$ is

$$81.6\ eV + H_2O + H[a_H] \rightarrow 2H^+_{fast} + O^- + e^- + H^*\left[\frac{a_H}{4}\right] + 81.6\ eV \qquad (44)$$

$$H^*\left[\frac{a_H}{4}\right] \rightarrow H\left[\frac{a_H}{4}\right] + 122.4\ eV \qquad (45)$$

$$2H^+_{fast} + O^- + e^- \rightarrow H_2O + 81.6\ eV \qquad (46)$$

And, the overall reaction is

$$H[a_H] \rightarrow H\left[\frac{a_H}{4}\right] + 81.6\ eV + 122.4\ eV \qquad (47)$$

wherein $H*\left[\frac{a_H}{4}\right]$ has the radius of the hydrogen atom and a central field equivalent to 4 times that of a proton and $H\left[\frac{a_H}{4}\right]$ is the corresponding stable state with the radius of 1/4 that of H. As the electron undergoes radial acceleration from the radius of the hydrogen atom to a radius of 1/4 this distance, energy is released as characteristic light emission or as third-body kinetic energy. Based on the 10% energy change in the heat of vaporization in going from ice at 0°C to water at 100°C, the average number of H bonds per water molecule in boiling water is 3.6. Thus, in an embodiment, $H_2O$ must be formed chemically as isolated molecules with suitable activation energy in order to serve as a catalyst to form hydrinos. In an embodiment, the $H_2O$ catalyst is nascent $H_2O$.

In an embodiment, at least one of nH, O, nO, $O_2$, OH, and $H_2O$ (n = integer) may serve as the catalyst. The product of H and OH as the catalyst may be H(1/5) wherein the catalyst enthalpy is about 108.8 eV. The product of the reaction of H and $H_2O$ as the catalyst may be H(1/4). The hydrino product may further react to lower states. The product of H(1/4) and H as the catalyst may be H(1/5) wherein the catalyst enthalpy is about 27.2 eV. The product of H(1/4) and OH as the catalyst may be H(1/6) wherein the catalyst enthalpy is about 54.4 eV. The product of H(1/5) and H as the catalyst may be H(1/6) wherein the catalyst enthalpy is about 27.2 eV.

Additionally, OH may serve as a catalyst since the potential energy of OH is

$$V_e=\left(\frac{3}{4}\right)\frac{-2e^2}{8\pi\varepsilon_0\sqrt{a^2-b^2}}\ln\frac{a+\sqrt{a^2-b^2}}{a-\sqrt{a^2-b^2}}=-40.92709\ eV \qquad (48)$$

The difference in energy between the H states p = 1 and p = 2 is 40.8 eV. Thus, OH may accept about 40.8 eV from H to serve as a catalyst to form H(1/2).

Similarly to $H_2O$, the potential energy of the amide functional group $NH_2$ given in Mills GUTCP is -78.77719 eV. From the CRC, $\Delta H$ for the reaction of $NH_2$ to form $KNH_2$ calculated from each corresponding $\Delta H_f$ is (-128.9-184.9) kJ/mole = -313.8 kJ/mole (3.25 eV). From the CRC, $\Delta H$ for the reaction of $NH_2$ to form $NaNH_2$ calculated from each corresponding $\Delta H_f$ is (-123.8-184.9) kJ/mole = -308.7 kJ/mole (3.20 eV). From the CRC, $\Delta H$ for the reaction of $NH_2$ to form $LiNH_2$ calculated from each corresponding $\Delta H_f$ is (-179.5-184.9) kJ/mole = -364.4 kJ/mole (3.78 eV). Thus, the net enthalpy that may be accepted by alkali amides $MNH_2$ (M = K, Na, Li) serving as H catalysts to form hydrinos are about 82.03 eV, 81.98 eV, and 82.56 eV (m=3 in Eq. (5)), respectively, corresponding to the sum of the potential energy of the amide group and the energy to form the amide from the amide group. The hydrino product such as molecular hydrino may cause an upfield matrix shift observed by means such as MAS NMR.

Similarly to $H_2O$, the potential energy of the $H_2S$ functional group given in Mills GUTCP is -72.81 eV. The cancellation of this potential energy also eliminates the energy associated with the hybridization of the 3p shell. This hybridization energy of 7.49 eV is given by the ratio of the hydride orbital radius and the initial atomic orbital radius times the total energy of the shell. Additionally, the energy change of the S3p shell due to forming the two S-H bonds of 1.10 eV is included in the catalyst energy. Thus, the net enthalpy of $H_2S$ catalyst is 81.40 eV (m=3 in Eq. (5)). $H_2S$ catalyst may be formed from MHS (M = alkali) by the reaction

$$2MHS \text{ to } M_2S + H_2S \qquad (49)$$

This reversible reaction may form $H_2S$ in an active catalytic state in the transition state to product $H_2S$ that may catalyze H to hydrino. The reaction mixture may comprise reactants that form $H_2S$ and a source of atomic H. The hydrino product such as molecular hydrino may cause an upfield matrix shift observed by means such as MAS NMR.

Furthermore, atomic oxygen is a special atom with two unpaired electrons at the same radius equal to the Bohr radius of atomic hydrogen. When atomic H serves as the catalyst, 27.2 eV of energy is accepted such that the kinetic energy of each ionized H serving as a catalyst for another is 13.6 eV. Similarly, each of the two electrons of O can be ionized with 13.6 eV of kinetic energy transferred to the O ion such that the net enthalpy for the breakage of the O-H bond of OH with the subsequent ionization of the two outer unpaired electrons is 80.4 eV as given in TABLE 3. During the ionization of $OH^-$ to OH, the energy match for the further reaction to H(1/4) and $O^{2+}$ + $2e^-$ may occur wherein the 204 eV of energy released contributes to the CIHT cell's electrical power. The reaction is given as follows:

$$80.4\ eV + OH + H\left[\frac{a_H}{p}\right] \rightarrow O_{fast}^{2+} + 2e^- + H\left[\frac{a_H}{(p+3)}\right] + [(p+3)^2 - p^2] \cdot 13.6\ eV \quad (50)$$

$$O_{fast}^{2+} + 2e^- \rightarrow O + 80.4\ eV \quad (51)$$

And, the overall reaction is

$$H\left[\frac{a_H}{p}\right] \rightarrow H\left[\frac{a_H}{(p+3)}\right] + [(p+3)^2 - p^2] \cdot 13.6\ eV \quad (52)$$

where $m$ = 3 in Eq. (5). The kinetic energy could also be conserved in hot electrons. The observation of H population inversion in water vapor plasmas is evidence of this mechanism. The hydrino product such as molecular hydrino may cause an upfield matrix shift observed by means such as MAS NMR. Other methods of identifying the molecular hydrino product such as FTIR, Raman, and XPS are given in the disclosure.

In an embodiment wherein oxygen or a compound comprising oxygen participates in the oxidation or reduction reaction, $O_2$ may serve as a catalyst or a source of a catalyst. The bond energy of the oxygen molecule is 5.165 eV, and the first, second, and third ionization energies of an oxygen atom are 13.61806 *eV,* 35.11730 *eV,* and 54.9355 *eV,* respectively. The reactions $O_2 \rightarrow O + O^{2+}$, $O_2 \rightarrow O + O^{3+}$, and $2O \rightarrow 2O^+$ provide a net enthalpy of about 2, 4, and 1 times $E_h$, respectively, and comprise catalyst reactions to form hydrino by accepting these energies from H to cause the formation of hydrinos.

IX. Fuel Cell and Battery

An embodiment of the fuel cell and a battery 400 is shown in FIGURE 1. The hydrino reactants comprising a solid fuel or a heterogeneous catalyst comprise the reactants for corresponding cell half reactions. A catalyst-induced-hydrino-transition (CIHT) cell is enabled by the unique attributes of the catalyzed hydrino transition. The CIHT cell of the present disclosure is a hydrogen fuel cell that generates an electromotive force (EMF) from the catalytic reaction of hydrogen to lower energy (hydrino) states. Thus, it serves as a fuel cell for the direct conversion of the energy released from the hydrino reaction into electricity.

Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types considered for thermal power production given in the present disclosure. The free energy $\Delta G$ from the hydrino reaction gives rise to a potential that may be an oxidation or reduction potential depending on the oxidation-reduction chemistry to constitute the hydrino-producing reaction mixture. The potential may be used to generate a voltage in a fuel cell. The potential V may be expressed in terms of the free energy $\Delta G$:

$$V = \frac{-\Delta G}{nF} \quad (53)$$

wherein F is the Faraday constant. Given the free energy is about -20 MJ/mole H for the transition to H(1/4), the voltage may be high depending on the other cell components such as the chemicals, electrolyte, and electrodes. In an embodiment wherein the voltage is limited by the oxidation-reduction potentials of these or other components, the energy may be manifest as a higher current and corresponding power contribution from hydrino formation. As indicated by Eqs. (6-9), the energy of the hydrino transition may be released as continuum radiation. Specifically, energy is transferred to the catalyst nonradiatively to form a metastable intermediate, which decays in plasma systems with the emission of continuum radiation as the electron translates from the initial to final radius. In condensed matter such as the CIHT cell, this energy may internally convert into energetic electrons manifest as a cell current and power contribution at potentials similar to the chemical potential of the cell reactants. Thus, the power may manifest as higher current at lower voltage than that given by Eq. (53). The voltage will also be limited by the kinetics of the reaction; so, high kinetics to form hydrinos is

favorable to increase the power by increasing at least one of the current and voltage. Since the cell reaction may be driven by the large exothermic reaction of H with a catalyst to form hydrino, in an embodiment, the free energy of the conventional oxidation-reduction cell reactions to form the reactants to form hydrinos may be any value possible. Suitable ranges are about +1000 kJ/mole to -1000 kJ/mole, about +1000 kJ/mole to -100 kJ/mole, about +1000 kJ/mole to -10 kJ/mole, and about +1000 kJ/mole to 0 kJ/mole. Due to negative free energy to form hydrinos, at least one of the cell current, voltage, and power are higher than those due to the free energy of the non-hydrino reactions that can contribute to the current, voltage, and power. This applies to the open circuit voltage and that with a load. Thus, in an embodiment, the CIHT cell is distinguished over any prior Art by at least one of having a voltage higher than that predicted by the Nernst equation for the non-hydrino related chemistry including the correction of the voltage due to any polarization voltage when the cell is loaded, a higher current than that driven by convention chemistry, and a higher power than that driven by conventional chemistry.

Regarding FIGURE 1, the fuel or CIHT cell 400 comprises a cathode compartment 401 with a cathode 405, an anode compartment 402 with an anode 410, a salt bridge 420, reactants that constitute hydrino reactants during cell operation with separate electron flow and ion mass transport, and a source of hydrogen. In general embodiments, the CIHT cell is a hydrogen fuel cell that generates an electromotive force (EMF) from the catalytic reaction of hydrogen to lower energy (hydrino) states. Thus, it serves as a fuel cell for the direct conversion of the energy released from the hydrino reaction into electricity. In another embodiment, the CIHT cell produces at least one of electrical and thermal power gain over that of an applied electrolysis power through the electrodes 405 and 410. The cell consumes hydrogen in forming hydrinos and requires hydrogen addition; otherwise, in an embodiment, the reactants to form hydrinos are at least one of thermally or electrolytically regenerative. Different reactants or the same reactants under different states or conditions such as at least one of different temperature, pressure, and concentration are provided in different cell compartments that are connected by separate conduits for electrons and ions to complete an electrical circuit between the compartments. The potential and electrical power gain between electrodes of the separate compartments or thermal gain of the system is generated due to the dependence of the hydrino reaction on mass flow from one compartment to another. The mass flow provides at least one of the formation of the reaction mixture that reacts to produce hydrinos and the conditions that permit the hydrino reaction to occur at substantial rates. The mass flow further requires that electrons and ions be transported in the separate conduits that connect the compartments. The electrons may arise from at least one of the ionization of the catalyst during the reaction of atomic hydrogen with the catalyst and by an oxidation or reduction reaction of a reactant species such as an atom, a molecule, a compound, or a metal. The ionization of the species in a compartment such as the anode compartment 402 may be due to at least one of (1) the favorable free energy change from its oxidation, the reduction of a reactant species in the separate compartment such as the cathode 401, and the reaction of the migrating ion that balances charge in the compartments to electroneutrality and (2) the free energy change due to hydrino formation due to the oxidation of the species, the reduction of a species in the separate compartment, and the reaction of the migrating ion that results in the reaction to form hydrinos. The migration of the ion may be through the salt bridge 420. In another embodiment, the oxidation of the species, the reduction of a species in the separate compartment, and the reaction of the migrating ion may not be spontaneous or may occur at a low rate. An electrolysis potential is applied to force the reaction wherein the mass flow provides at least one of the formation of the reaction mixture that reacts to produce hydrinos and the conditions that permit the hydrino reaction to occur at substantial rates. The electrolysis potential may be applied through the external circuit 425. The reactants of each half-cell may be at least one of supplied, maintained, and regenerated by addition of reactants or removal of products through passages 460 and 461 to sources of reactants or reservoirs for product storage and regeneration 430 and 431.

In an embodiment, at least one of the atomic hydrogen and the hydrogen catalyst may be formed by a reaction of the reaction mixture and one reactant that by virtue of it undergoing a reaction causes the catalysis to be active. The reactions to initiate the hydrino reaction may be at least one of exothermic reactions, coupled reactions, free radical reactions, oxidation-reduction reactions, exchange reactions, and getter, support, or matrix-assisted catalysis reactions. In an embodiment, the reaction to form hydrinos provides electrochemical power. The reaction mixtures and reactions to initiate the hydrino reaction such as the exchange reactions of the present disclosure are the basis of a fuel cell wherein electrical power is developed by the reaction of hydrogen to form hydrinos. Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types for thermal power and hydrino chemical production of the present disclosure. Thus, ideally, the hydrino reaction does not occur or does not occur at an appreciable rate in the absence of the electron flow and ion mass transport.

The cell comprises at least a source of catalyst or a catalyst and a source of hydrogen or hydrogen. A suitable catalyst or source of catalyst and a source of hydrogen are those of the disclosure such as $H_2O$. In an embodiment, a species may undergo reduction at the cathode. The species may be a source of the catalyst by at least one of reduction and reaction at the cathode. In an embodiment, an oxidant undergoes reaction to form the hydrino reactants that then

react to form hydrinos. Alternatively, the final electron-acceptor reactants comprise an oxidant. The oxidant or cathode-cell reaction mixture may be located in the cathode compartment 401 having cathode 405. Alternatively, the cathode-cell reaction mixture is constituted in the cathode compartment from ion and electron migration. In one embodiment of the fuel cell, the cathode compartment 401 functions as the cathode. During operation, a positive ion may migrate from the anode to the cathode compartment. In certain embodiments, this migration occurs through a salt bridge 420. Alternatively, a negative ion may migrate from the cathode to anode compartment through a salt bridge 420. The migrating ion may be at least one of an ion of the catalyst or source of catalyst, an ion of hydrogen such as $H^+$, $H^-$, or $H^-(1/p)$, and the counterion of the compound formed by reaction of the catalyst or source of catalyst with the oxidant or anion of the oxidant. Each cell reaction may be at least one of supplied, maintained, and regenerated by addition of reactants or removal of products through passages 460 and 461 to sources of reactants or reservoirs for product storage and optionally regeneration 430 and 431.

An electrolysis cell 400 shown in FIGURE 1 comprises a cathode compartment 401 with a cathode 405, an anode compartment 402 with an anode 410, and optionally a separator or salt bridge 420. The electrolysis power is supplied by a power source that is applied between the terminals. The power source may be a power supply or a power storage unit that may be at least a second CIHT cell or a capacitor. The power storage such as the second CIHT cell or capacitor may be charged by the first CIHT cell that comprises a power source. Control electronics may switch between charging and discharging the first CIHT cell using the power source and control the charge and discharge parameters such as voltage, current, power, and load. The electrolyte may be aqueous, a molten salt, or a combination thereof such as those of the disclosure. In an electrolysis cell embodiment, the electrolysis voltage is intermittent or pulsed. The electrolyte may be a molten salt such as a molten hydroxide eutectic salt such as an alkaline or alkaline earth hydroxide and a halide salt. An exemplary electrolyte is LiOH-LiBr. The electrolyte may also be an aqueous electrolyte that may be basic, acidic, or about neutral. An exemplary basic electrolyte is an aqueous hydroxide electrolyte such as an aqueous alkali hydroxide such as KOH. An exemplary acidic electrolyte is an aqueous acid such as aqueous $H_2SO_4$ or HX (X = halide).

In an embodiment, the electrolyte may comprise a basic aqueous solution. The charging phase of the intermittent or pulsed cycle may comprise the electrolysis of $H_2O$ to $H_2$ and $O_2$. The cathode and anode reactions may comprise the reverse of Eqs. (90) and (92), respectively, except that the hydrino formation is irreversible. The cathode discharge half-cell reaction may comprise the reduction of at least one of $H_2O$ and oxygen. The reduction may be given by Eq. (92). The overpotential for the reduction reaction may cause the half-cell voltage to be about zero. In an embodiment, the reduction potential for the reduction of $O_2$ and $H_2O$ to $OH^-$ in aqueous alkaline solution (Eq. (90)) is about 0.4 V relative to the SHE and 25 °C. The overpotential for reduction on the electrode is about 0.4V such that the reduction half-cell reaction occurs at about 0 V. The anode discharge half-cell reaction may comprise the oxidation of $OH^-$ and further reaction with H to form $H_2O$ (Eq. (90)). The $H_2O$ may serve as a catalyst to form hydrinos. In an embodiment, the reduction potential for the oxidation of $OH^-$ and further reaction with H to form $H_2O$ (Eq. (90)) is about 1.23 V relative to the SHE and 25 °C. The overpotential for oxidation on the electrode is such that the oxidation half-cell reaction occurs at about 1.23 V relative to STP conditions.

The cell may comprise a solid, molten, or liquid cell. The latter may comprise a solvent. The operating conditions may be controlled to achieve a desired state or property of at least one reactant or cell component such as those of the cathode cell reactants, anode cell reactants, the salt bridge, and cell compartments. Suitable states are solid, liquid, and gaseous, and suitable properties are the conductivity to ions and electrons, physical properties, miscibility, diffusion rate, and reactivity. In the case that one or more reactants are maintained in a molten state the temperature of the compartment may be controlled to be above the reactant melting point. The heat may be from the catalysis of hydrogen to hydrinos. Alternatively, the oxidant and/or reductant reactants are molten with heat supplied by the internal resistance of the fuel cell or by external heater 450 that may be an oven. In an embodiment, the CIHT cell is surrounded by insulation such that comprising as a double-walled evacuated jacket such as a sheet metal jacket filled with insulation for conductive and radiative heat loss that is known to those skilled in the art. The cell may further comprise a heat management system that provides start up and maintenance heat on demand to supplement any heat generated internally from the reactions such as hydrino producing reactions occurring during operation. Additionally, the systems may comprise a heat rejection system to remove excess heat if necessary. The heat rejection system may comprise one known in the art such as one comprising a heat exchanger and coolant circulator wherein the heat transfer may be by at least one of forced convention, radiation, and conduction. In an embodiment, the configuration is a thermodynamically efficient retainer of heat such as a right cylindrical stack that provides an optimal volume to surface area ratio to retain heat. In an embodiment, the reactants of at least one of the cathode and anode compartments are at least partially solvated by a solvent.

The fuel cell of FIGURE 1 may further comprise at least one hydrogen system 460, 461, 430, and 431 for measuring, delivering, and controlling the hydrogen to at least one compartment. The system further comprises pump 440 to pump gases form one compartment to another. The hydrogen system may comprise a pump, at least one value, one pressure gauge and reader, and control system for supplying hydrogen to at least one of the cathode and anode compartments. The hydrogen system may recycle hydrogen or other gas from one compartment to another, using pump

440 in an embodiment.

The products may be regenerated in the cathode or anode compartments. The products may be sent to a regenerator wherein any of the regeneration chemistries of the present disclosure may be applied to regenerate the initial reactants. Cell undergoing the hydrino reaction may provide heat to those undergoing regeneration of the reactants.

The electrolyte may comprise a eutectic salt of two or more fluorides such as at least two compounds of the group of the alklali halides and alkaline earth halides. Exemplary salt mixtures include LiF-$MgF_2$, NaF-$MgF_2$, KF-$MgF_2$, and NaF-$CaF_2$. Other suitable solvents are organic chloro aluminate molten salts and systems based on metal borohydrides and metal aluminum hydrides. Additional suitable electrolytes that may be molten mixtures such as molten eutectic mixtures are given in TABLE 4.

TABLE 4. Molten Salt Electrolytes.

| | | | | |
|---|---|---|---|---|
| AlCl3-CaCl2 | AlCl3-CoCl2 | AlCl3-FeCl2 | AlCl3-KCl | AlCl3-LiCl |
| AlC13-MgCl2 | AlCl3-MnCl2 | AlCl3-NaCl | AlCl3-NiCl2 | AlCl3-ZnCl2 |
| BaCl2-CaCl2 | BaCl2-CsCl | BaCl2-KCl | BaCl2-LiCl | BaCl2-MgCl2 |
| BaCl2-NaCl | BaCl2-RbCl | BaCl2-SrCl2 | CaCl2-CaF2 | CaCl2-CaO |
| CaCl2-CoCl2 | CaCl2-CsCl | CaCl2-FeCl2 | CaCl2-FeCl3 | CaCl2-KCl |
| CaCl2-LiCl | CaCl2-MgCl2 | CaCl2-MgF2 | CaCl2-MnCl2 | CaCl2-NaAlCl4 |
| CaCl2-NaCl | CaCl2-NiCl2 | CaCl2-PbCl2 | CaCl2-RbCl | CaCl2-SrCl2 |
| CaCl2-ZnCl2 | CaF2-KCaCl3 | CaF2-KF | CaF2-LiF | CaF2-MgF2 |
| CaF2-NaF | CeCl3-CsCl | CeCl3-KCl | CeCl3-LiCl | CeCl3-NaCl |
| CeCl3-RbCl | CoCl2-FeCl2 | CoCl2-FeCl3 | CoCl2-KCl | CoCl2-LiCl |
| CoCl2-MgCl2 | CoCl2-MnCl2 | CoCl2-NaCl | CoCl2-NiCl2 | CsBr-CsCl |
| CsBr-CsF | CsBr-CsI | CsBr-CsNO3 | CsBr-KBr | CsBr-LiBr |
| CsBr-NaBr | CsBr-RbBr | CsCl-CsF | CsCl-CsI | CsCl-CsNO3 |
| CsCl-KCl | CsCl-LaCl3 | CsCl-LiCl | CsCl-MgCl2 | CsCl-NaCl |
| CsCl-RbCl | CsCl-SrCl2 | CsF-CsI | CsF-CsNO3 | CsF-KF |
| CsF-LiF | CsF-NaF | CsF-RbF | CsI-KI | CsI-LiI |
| CsI-NaI | CsI-RbI | CsNO3-CsOH | CsNO3-KNO3 | CsNO3-LiNO3 |
| CsNO3-NaNO3 | CsNO3-RbNO3 | CsOH-KOH | CsOH-LiOH | CsOH-NaOH |
| CsOH-RbOH | FeCl2-FeCl3 | FeCl2-KCl | FeCl2-LiCl | FeCl2-MgCl2 |
| FeCl2-MnCl2 | FeCl2-NaCl | FeCl2-NiCl2 | FeCl3-LiCl | FeCl3-MgCl2 |
| FeCl3-MnCl2 | FeCl3-NiCl2 | K2CO3-K2SO4 | K2CO3-KF | K2CO3-KNO3 |
| K2CO3-KOH | K2CO3-Li2CO3 | K2CO3-Na2CO3 | K2SO4-Li2SO4 | K2SO4-Na2SO4 |
| KAlCl4-NaAlCl4 | KACl4-NaCl | KBr-KCl | KBr-KF | KBr-KI |
| KBr-KNO3 | KBr-KOH | KBr-LiBr | KBr-NaBr | KBr-RbBr |
| KCl-K2CO3 | KCl-K2SO4 | KCl-KF | KCl-KI | KCl-KNO3 |
| KCl-KOH | KCl-LiCl | KCl-LiF | KCl-MgCl2 | KCl-MnCl2 |
| KCl-NaAlCl4 | KCl-NaCl | KCl-NiCl2 | KCl-PbCl2 | KCl-RbCl |
| KCl-SrCl2 | KCl-ZnCl2 | KF-K2SO4 | KF-KI | KF-KNO3 |
| KF-KOH | KF-LiF | KF-MgF2 | KF-NaF | KF-RbF |
| KFeCl3-NaCl | KI-KNO3 | KI-KOH | KI-LiI | KI-NaI |
| KI-RbI | KMgCl3-LiCl | KMgCl3-NaCl | KMnCl3-NaCl | KNO3-K2SO4 |
| KNO3-KOH | KNO3-LiNO3 | KNO3-NaNO3 | KNO3-RbNO3 | KOH-K2SO4 |
| KOH-LiOH | KOH-NaOH | KOH-RbOH | LaCl3-KCl | LaCl3-LiCl |
| LaCl3-NaCl | LaCl3-RbCl | Li2CO3-Li2SO4 | Li2CO3-LiF | Li2CO3-LiNO3 |
| Li2CO3-LiOH | Li2CO3-Na2CO3 | Li2SO4-Na2SO4 | LiAlCl4-NaAlCl4 | LiBr-LiCl |
| LiBr-LiF | LiBr-LiI | LiBr-LiNO3 | LiBr-LiOH | LiBr-NaBr |
| LiBr-RbBr | LiCl-Li2CO3 | LiCl-Li2SO4 | LiCl-LiF | LiCl-LiI |
| LiCl-LiNO3 | LiCl-LiOH | LiCl-MgCl2 | LiCl-MnCl2 | LiCl-NaCl |
| LiCl-NiCl2 | LiCl-RbCl | LiCl-SrCl2 | LiF-Li2SO4 | LiF-LiI |
| LiF-LiNO3 | LiF-LiOH | LiF-MgF2 | LiF-NaCl | LiF-NaF |
| LiF-RbF | LiI-LiOH | LiI-NaI | LiI-RbI | LiNO3-Li2SO4 |
| LiNO3-LiOH | LiNO3-NaNO3 | LiNO3-RbNO3 | LiOH-Li2SO4 | LiOH-NaOH |

(continued)

| | | | | |
|---|---|---|---|---|
| LiOH-RbOH | MgCl2-MgF2 | MgCl2-MgO | MgCl2-MnCl2 | MgCl2-NaCl |
| MgCl2-NiCl2 | MgCl2-RbCl | MgCl2-SrCl2 | MgCl2-ZnCl2 | MgF2-MgO |
| MgF2-NaF | MnCl2-NaCl | MnCl2-NiCl2 | Na2CO3-Na2SO4 | Na2CO3-NaF |
| Na2CO3-NaNO3 | Na2CO3-NaOH | NaBr-NaCl | NaBr-NaF | NaBr-NaI |
| NaBr-NaNO3 | NaBr-NaOH | NaBr-RbBr | NaCl-Na2CO3 | NaCl-Na2S4 |
| NaCl-NaF | NaCl-NaI | NaCl-NaNO3 | NaCl-NaOH | NaCl-NiCl2 |
| NaCl-PbCl2 | NaCl-RbCl | NaCl-SrCl2 | NaCl-ZnCl2 | NaF-Na2SO4 |
| NaF-NaI | NaF-NaNO3 | NaF-NaOH | NaF-RbF | NaI-NaNO3 |
| NaI-NaOH | NaI-RbI | NaNO3-Na2SO4 | NaNO3-NaOH | NaNO3-RbNO3 |
| NaOH-Na2SO4 | NaOH-RbOH | RbBr-RbCl | RbBr-RbF | RbBr-RbI |
| RbBr-RbNO3 | RbCl-RbF | RbCl-RbI | RbCl-RbOH | RbCl-SrCl2 |
| RbF-RbI | RbNO3-RbOH | CaCl2-CaH2 | | |

The molten salt electrolyte such as at least one of the exemplary salt mixtures given in TABLE 4 are $H^-$ ion conductors. In embodiments, it is implicit in the disclosure that a source of $H^-$ such as an alkali hydride such as LiH, NaH, or KH is added to the molten salt electrolyte to improve the $H^-$ ion conductivity. In other embodiments, the molten electrolyte may be an alkali metal ion conductor or a proton conductor. In other embodiments, the electrolyte comprises a hydroxide. The catalyst may be $H_2O$ that may be formed from the hydroxide.

The reaction mixture may comprise (1) a catalyst or a source of catalyst and a source of hydrogen such as $H_2O$, and at least one H, (2) a molten salt such as a eutectic salt mixture that may serve as an electrolyte that may have a high ion conductivity and may selectively allow hydroxide ion to pass comprising at least one cation from the group of Li, Na, K, Rb, Cs, Mg, Ca, Sr, and Ba and at least one halide from the group of F, Cl, Br, and I, (3) optionally a support that may be electrically conductive such as carbide such as TiC, and (4) optionally a reductant and hydride exchange reactant such as an alkaline earth metal or alkaline earth hydride.

The reactants may comprise at least one support that may also serve as a hydrogen dissociator. The support may comprise carbon, carbide, or a boride. Suitable carbon, carbides and borides are carbon black, TiC, $Ti_3SiC_2$, TiCN, SiC, $YC_2$, TaC, $Mo_2C$, WC, C, HfC, $Cr_3C_2$, ZrC, VC, NbC, $B_4C$, $CrB_2$, $ZrB_2$, $GdB_2$, $MgB_2$, and $TiB_2$. Suitable supports that may also serve as hydrogen dissociators are Pd/C, Pt/C Pd/MgO, Pd/$Al_2O_3$, Pt/MgO, and Pt/$Al_2O_3$.

The cell may be at least one of electrolyzed and discharged intermittently. The electrolysis cathode and anode may be a CIHT cell anode and cathode where the roles are reversed in switching from CIHT to electrolysis cell and back again after the cell is regenerated. The reverse current or voltage may be applied as a pulse. The pulsed reverse polarity and waveform may be in any frequency range, peak voltage, peak power, peak current, duty cycle, and offset voltage. The pulsed reversal may be DC, or the applied voltage may have be alternating or have a waveform. The application may be pulsed at a desired frequency and the waveform may have a desired frequency. Suitable pulsed frequencies are within the range of about 1 to about 1000 Hz and the duty cycle may be about 0.001% to about 95% but may be within narrower ranges of factor of two increments within this range. In an embodiment, the cell is maintained at an optimal run high frequency to minimize the input energy to make a monolayer of H that reacts to hydrinos during the discharge phase. The peak voltage per cell may be within the range of at least one of about 0.1 V to 10 V, but may be within narrower ranges of a factor of two increments within this range. In another embodiment, a high voltage pulse is applied that may in the range of about 10 V to 100 kV per cell, but may be within narrower ranges of order magnitude increments within this range. The waveform may have a frequency within the range of at least one of about 0.1 Hz to about 100 MHz, about 100 MHz to 10 GHz, and about 10 GHz to 100 GHz, but may be within narrower ranges of order magnitude increments within this range. The duty cycle may be at least one of the ranges of about 0.001% to about 95%, and about 0.1% to about 10%, but may be within narrower ranges of order magnitude increments within this range. The peak power density of the pulses may be in the range of about 0.001 W/$cm^2$ to 1000 W/ $cm^2$ but may be within narrower ranges of order magnitude increments within this range. The average power density of the pulses may be in the range of about 0.0001 W/$cm^2$ to 100 W/ cm2, but may be within narrower ranges of order magnitude increments within this range. In an embodiment, the intermittent charge-discharge frequency may be increased to decrease the charge-transfer resistance.

In an embodiment, reactants that may be short lived are generated during electrolysis that result in the formation of hydrinos and corresponding electrical power during the CIHT cell discharge phase of a repeated cycle of charge and discharge. The electrolysis power may be applied to optimize the energy from the formation of hydrinos relative to the input energy. The electrolysis conditions of voltage, waveform, duty cell, frequency and other such parameters may be adjusted to increase the electrical energy gain from the cell.

In an embodiment, the hydrogen electrode, and optionally the oxygen electrode, is replaced by an element of

a bipolar plate 507 as shown in FIGURE 2. The cell design may be based on a planar square geometrical configuration wherein the cells may be stacked to build voltage. Each cell may form a repeating unit comprising an anode current collector, porous anode, electrolyte matrix, porous cathode, and cathode current collector. One cell may be separated from the next by a separator that may comprise a bipolar plate that serves as both the gas separator and series current collector. The plate may have a cross-flow gas configuration or internal manifolding. As shown in FIGURE 2, interconnections or bipolar plates 507 separate the anode 501 from the adjacent cathode 502 in a CIHT cell stack 500 comprising a plurality of individual CIHT cells. The anode or $H_2$ plate 504 may be corrugated or comprise channels 505 that distribute hydrogen supplied through ports 503. The plate 504 with channels 505 substitutes for the hydrogen permeable membrane or intermittent electrolysis cathode (discharge anode) of other embodiments. The ports may receive hydrogen from a manifold along the ports 503 that are in turn is supplied by a hydrogen source such as a tank. The plate 504 may further ideally evenly distribute hydrogen to bubble or sparge into active areas wherein electrochemical reactions occur. The bipolar plate may further comprise an oxygen plate of the bipolar plate having a similar structure as that of the $H_2$ plate to distribute oxygen to active areas wherein an oxygen manifold supplies oxygen from a supply along oxygen ports 506. These corrugated or channeled plates are electrically conducting and are connected with anode and cathode current collectors in the active areas and maintain electrical contact. In an embodiment, all the interconnection or bipolar plates constitute the gas distribution network allowing separation of anodic and cathodic gasses. Wet seals may be formed by extension of the electrolyte/matrix such as LiOH-LiBr/$Li_2TiO_3$ or MgO tile pressed between two individual plates. The seals may prevent leakage of the reactant gases. The electrolyte may comprise a pressed pellet of the disclosure. The pressure to form an electrolyte pellet such as one comprising a hydroxide such as an alkali hydroxide such as LiOH and a halide such an alkali halide such as LiBr and a matrix such as MgO is in the range of about 1 to 500 tons per square inch. The stack may further comprise tie rods that hold pressure plates at the ends of the stack to apply pressure to the cells to maintain a desire contact between the electrolyte such as a pellet electrolyte and the electrodes. In an embodiment wherein the electrolyte or a component such as a hydroxide such as LiOH migrates by means such as evaporation, the electrolyte may be collected and recycled. The migrating species may be collected in a structure such as a collecting structure or a wicking structure that absorbs the electrolyte, and the recycling may be achieved thermally by means such as heating the collecting or wicking structure to cause a reverse migration.

The CIHT cell system may comprise a modified conventional fuel cell such as a modified alkaline or molten carbonate-type. In an embodiment, the CIHT cell comprises a stack of bipolar plates such as shown in FIGURE 2 wherein at least one of oxygen and $H_2O$ is supplied to the cathode and $H_2$ is supplied to the anode. The gases may be provided by diffusion through a porous or diffusion electrode, and $H_2$ may also be provided by permeation through a suitable hydrogen permeable electrode. The hydrogen permeable electrode may comprise at least one of Mo, a Mo alloy such as MoNi, MoCu, MoCo, TZM, and H242, Ni, Co, a Ni alloy such as NiCo, and other transition and inner transition metals and alloys such as CuCo. The application of $H_2$ is in an amount sufficient to retard anode corrosion while maintaining electrical power gain. The permeation anode may be run at increasing current densities with proportional increases in hydrogen permeation rate. The hydrogen permeation rate may be controlled by at least one of increasing the hydrogen pressure to the membrane, increasing the cell temperature, decreasing the membrane thickness, and changing the membrane composition such as the wt%s of metals of an the alloy such as a Mo alloy. In an embodiment, a hydrogen dissociator such as a noble metal such as Pt or Pd is coated on the interior of the permeation anode such as a Mo or MoCu anode to increase the amount of atomic H to increase the permeation rate. The hydrogen pressure may be maintained in the range of at least one of about 1 Torr to 500 atm, 10 Torr to 100 atm, or 100 Torr to 5 atm. The hydrogen permeation rate may be in the range of at least one of about 1 X $10^{-13}$ mole $s^{-1}$ $cm^{-2}$ to 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$, or 1 X $10^{-9}$ mole $s^{-1}$ $cm^{-2}$ to 1 X $10^{-8}$ mole $s^{-1}$ $cm^{-2}$. The hydrogen consumed by permeation may have a corresponding theoretical power from forming $H_2O$ that is significantly less than the power of the CIHT cell due to hydrino formation. Therefore, the hydrogen supply system such as the manifolds, lines, and channels, and permeation anodes may be proportionally more compact than those of a conventional hydrogen-oxygen fuel cell. In an embodiment, the anode traps a gas boundary layer of $H_2$ from a source such as at least one of in situ electrolysis, permeation, and sparging. The matrix such as MgO may assist in trapping $H_2$ gas at the anode. In an embodiment, the anode active surface is face downward such that $H_2$ is trapped when diffusing vertically. In an embodiment, the hydrogen permeation pressure may be less than atmospheric to prevent expansion or physical distortion of the anode. The hydrogen permeable anode may comprise a highly permeable membrane coated with a material that is effective at facilitating the hydrino reaction such as Mo or a Mo alloy such as MoNi, MoCu, MoCo, Co, CoCu, CoNi. Exemplary H permeable materials are Ni($H_2$), V($H_2$), Ti($H_2$), Nb($H_2$), Pd($H_2$), PdAg($H_2$), Fe($H_2$), Ta($H_2$) and stainless steel (SS) such as 430 SS ($H_2$). The electrolyte may comprise a molten salt such as one of those of the disclosure such as LiOH-LiBr. The permeation rate may be high such as one corresponding to being within a range of about 1% to 50% of the discharge power. In an embodiment, the oxide surface layer of the H permeable material such as beta-Ti and V is removed by means such as etching such as argon gas ion etching and subsequent sputtered with of a thin layer of Pd (e.g. 2-3 microns).

The cell may be maintained under intermittent electrolysis conditions with hydrogen also supplied to the anode

by diffusion, flow, or permeation. The rate of supply is controlled to maintain excess electrical power generation by the CIHT cell while the hydrogen addition protects the anode from corrosion. The anode material such as the composition of the Mo alloy, permeable membrane thickness, cell temperature, and internal hydrogen pressure as well other parameters that effect the hydrogen permeation rate may be selected to achieve the desire hydrogen flow rate. The hydrogen flow rate that achieves the protection of the anode from corrosion may be low compared to that required to maintain the electrical power generated by the cell via a conventional hydrogen-oxygen to water fuel cell reaction. Furthermore, in an embodiment, the hydrogen supply may receive hydrogen that permeates in the reverse direction during the charging phase of the intermittent electrolysis. Thus, the anode gas supply system such as the manifold and gas anode may be made proportionately more compact. The supply of hydrogen to the cathode may be from the electrolysis or $H_2O$. The charge-discharge frequency of intermittent electrolysis of the CIHT cell may be a higher frequency with $H_2$ gas applied to the anode. The frequency may be in the range of 0.1 Hz to 10,000 Hz or another suitable range of the disclosure. In an embodiment, the $H_2$ and $O_2$ supplied to the cell provide at least some of the $H_2O$ inventory for the intermittent electrolysis. The electrolyte may comprise a compound such as an oxide such as $Li_2O$ or a hydroscopic compound of the disclosure such as at least one of $KMgCl_3$, $MgCl_2$, and $CaCl_2$ that reversibly binds $H_2O$ to maintain a desired electrolytic concentration. The gas pressure may be any desired to maintain at least one of the desired power output from each cell, $H_2$ permeation rate, $H_2$ protection of the anode, oxygen reduction rate at the cathode. At least one of the hydrogen and oxygen pressure may be in the range of at least one of about 0.01 atm to 1000 atm, 0.1 to 100 atm, and 1 to 10 atm.

In an embodiment, $H_2O$ vapor supplied to the periphery of the cells may diffuse into the electrolyte layer from the periphery and transport to the cathode. In an embodiment, $H_2O$ delivery to the cell such as the cathode may be achieved using a capillary system or radial gas channels with circumferential perforations to deliver $H_2O$ into the center of the cell relative to the periphery. In an embodiment, the cathode comprises radial gas channels with circumferential perforations and a surrounding external source of $O_2$ gas such as a surrounding atmosphere such as $O_2$ gas or air. In an embodiment, $H_2O$ may be supplied to the cathode by at least one of absorption by the electrolyte from periphery and through a standard MCFC-type gas cathode. The demands for $H_2O$ supply may be low based on $H_2O$ conservation during operation with some consumption providing up to 50 MJ/mole $H_2O$. In an embodiment, the consumed water produces hydrinos and $O_2$. Based on $H_2O$ decomposition and recombination reactions over the cell cycle with any net consumption producing up to 50 MJ/mole $H_2O$, the size of the $H_2O$ distribution system such as one of the disclosure such as a gas supply system such as a standard MCFC gas cathode may be relatively small compared to the gas cathode of a standard fuel cell such as one of a proton exchange membrane fuel cell (PEMFC) or molten carbonate fuel cell (MCFC). The $O_2$ pressure may be somewhat static since it is generated in situ. An initial inventory of $O_2$ may be relatively constant over time in the case that the source of ions of the ion current during discharge is predominantly from $H_2O$. In an embodiment, the mass balance predominantly comprises conversion of $H_2O$ to hydrinos and $O_2$, such that excess $O_2$ is removed and may be in connection with the $O_2$ inventory or an $O_2$ reservoir. Predominantly, $H_2O$ may be supplied to the cell and may constitute the majority of the mass flow into the cell with product oxygen and hydrinos flowing out. $H_2O$ may become part of the electrolyte by hydration and the electrolyte may serve as a reservoir of $H_2O$ by dehydration of hydrate $H_2O$ and also reaction such as 2LiOH to $Li_2O + H_2O$. Furthermore, the $H_2$ inventory of the permeable membrane may be regenerative based on in situ electrolysis of $H_2O$. In addition to electrolysis by applied power during the charge phase of the intermittent cycle, the $H_2O$ may serve as a source of H with the energy of $H_2O$ decomposition provided by the hydrino reaction. Exemplary reactions that ultimately form hydrino and oxygen from $H_2O$ are those of the disclosure. In an embodiment, the H inventory may be at least one of partially, substantially, and totally maintained by the decomposition of $H_2O$ by the hydrino reaction requiring less to no application of electrolysis charging. Thus, the $H_2$ inventory of a $H_2$ permeable electrode may be relatively constant over time. In an embodiment, the same applies in the case of a hydrided anode of the disclosure. At least one of the $H_2$ and $O_2$ pressure may be controlled by controlling the electrolysis wherein the pressure of at least one of $H_2$ and $O_2$ may be monitored by an electrode such as one based on the Nernst equation for the corresponding gas. The voltage may be relative to a suitable reference electrode to record each gas independently.

In an embodiment, the perimeter of the anode is sealed to at least one of oxygen and $H_2O$ diffusing from an ambient source. In an embodiment, the cathode is porous such that it supports transport such as gaseous transport of at least one of oxygen and $H_2O$. In an embodiment, the cathode comprises at least one layer. Such a compound cathode may comprise a layer that supports the transport of at least one of oxygen and $H_2O$. The transport may comprise gaseous diffusion. The diffusion may be from a circumferential source such as an ambient atmosphere of at least one of oxygen and $H_2O$. The composition of the atmosphere and pressure may be any desired such as those of the disclosure. In an embodiment, the $H_2O$ pressure of the cell is maintained at an elevated pressure such as one greater than atmospheric pressure. The $H_2O$ may be supplied to the cell using a pump against the internal pressure. Alternatively, an internal $H_2O$ reservoir may be filled with the cell at low temperature; where after, the cell temperature and reservoir temperature are raised to create the elevated $H_2O$ pressure. The CIHT cell housing may be pressure tight and may be capable of supporting pressures greater than ambient.

A repeating unit of a CIHT cell stack comprising a permeation anode 5 and a gas feed 6 is shown in FIGURE 3A. At least one of $H_2O$ and $O_2$ is input to the cathode that may comprise a porous or compound cathode. The compound cathode may comprise multiple layers such as a porous layer 2 for gas transport and a catalytic layer 3 such as NiO to reduce oxygen. In an embodiment, the cathode such as a compound cathode is porous to facilitate the transport of at least one of $H_2O$ and $O_2$. The cathode may further comprise a current collector 2 wherein juxtaposed cathodes are separated by an electrical insulator 1. The cell further comprises an electrolyte layer 4 that optionally comprises a separator such as a matrix such as MgO. In another embodiment, the permeation anode 5 and gas feed 6 are replaced by an anode 7 that may be hydrided and support electrochemical reactions from opposing sides for corresponding opposing cells as shown in FIGURE 3B.

In an embodiment, the compound cathode comprises a transport layer such as a gaseous diffusion layer and a catalytic layer to reduce at least one of $O_2$ and $H_2O$. The catalytic layer is in contact with the electrolyte and may further comprises a different material than the transport layer such as Pt doped NiO and other cathode materials of the disclosure. The transport layer may be more porous than the catalytic layer to support transport. The catalytic layer may have smaller pore sizes or less pores to prevent the electrolyte from excessively wicking into the cathode and flooding it. Due to the greater porosity of the transport layer relative to the catalytic layer, a pressure gradient exists from the transport to the catalytic layer. The pressure may contribute to the prevention of electrolyte flooding of the cathode. The external pressure of the atmosphere of the diffusing gas and the relative porosity of the different layers of the compound cathode may be adjusted to achieve a desired pressure gradient between the layers. The cathode layer may comprise support elements such as Ni, NiO, or MgO beads that prevent the electrode from excessive compression by mechanical pressures in the stack. In another embodiment, the electrolyte comprises a matrix that prevents the electrolyte from excessively wicking into the cathode. The pore size of the matrix may be adjusted to achieve the desired capillary forces to prevent the wicking into the cathode.

In an embodiment, the CIHT cell $H_2$ and $O_2$ inventory may be relatively static and each gas may be produced by external or internal electrolysis. $H_2$ and $O_2$ may be re-supplied by internal electrolysis with an initial inventory and supplemental gases supplied from an external source. In an embodiment, an oxygen inventory may be provided by an oxygen compound that can reversibly form and decompose to maintain the desired $O_2$ pressure at the cathode. Suitable exemplary compounds that are a source of oxygen are oxides, peroxides, superoxides, and oxyhydroxides of the disclosure. $H_2O$ may be provided as a gas or by dehydration of a compound with bound $H_2O$ such as a hydrate. The hydrate is selected to achieve the desired $H_2O$ pressure at the selected maintained temperature of the compound such as the cell temperature or gas supply system temperature. Since the anode $H_2$ and cathode $O_2$ and $H_2O$ flow demands may be relative low compared to those of a conventional fuel cell, the gas supply systems such as one of a gas cathode and one comprising a hydrogen supply manifold and channel to the hydrogen permeable membrane anode or $H_2$ sparging anode may be relatively small. In an embodiment, the hydrogen permeable anode becomes saturated with hydrogen such that the hydrogen pressure of the hydrogen supply remains constant or may be increase. The external source of hydrogen may be the decomposition of $H_2O$ with the energy provided by the hydrino reaction. Representative reactions are those of the disclosure. The hydride may be maintained by adjusting the intermittent electrolysis waveform and conditions such as the electrolysis waveform such as the charge voltage, charge duration, and current as well as those of the discharge cycle. The hydride state may be monitored by the electrode voltage that may be relative to a reference voltage. The voltage may be determined by the Nernst equation. In another embodiment, the anode such as a hydrogen permeable anode may be preconditioned to be in the hydrogen-saturated state such that an external hydrogen supply is not necessary. In this case, the cell stack may comprise a bipolar plate design such as one of the disclosure wherein the anode of a bipolar plate comprising an anode and cathode is pretreated to be hydrided. The pretreatment may be by hydrogen permeation. The pretreatment may be by CIHT cell operation with hydrogen permeation until the hydrogen flow is static. In an embodiment, the anode is pre-hydrided by in situ electrolysis of $H_2O$ or by external electrolysis of $H_2O$. The later may be performed in an aqueous alkaline electrolysis cell wherein the cathode is the CIHT anode. The counter electrode for the hydriding by external electrolysis may be Ni. The anode may also be hydrided by applying $H_2$ gas.

In an embodiment, the permeation anode may comprise a hydrogen-permeable membrane attached to a membrane of low hydrogen permeability. The lower permeable layer may serve as a current collector of a bipolar plate such that the permeable membrane faces the electrolyte and the lower permeable membrane contacts with the cathode of a contiguous cell of the stack to comprise a bipolar electrode.

In an embodiment, the back to back permeation anode of the disclosure may be replaced by a hydrided anode such as a hydrided tapecast Ni, NiCo such as Ni(about 95 at%)Co(about 5 at%), Ni(about 94 at%)Co(about 5 at%)Cu(about 1 at%) and Ni, Mo, or Mo alloy anode. The two faces of the hydrided anode may serve as anodes for back-to-back cells with corresponding cathodes. Hydrogen may be generated on both surfaces of the back-to-back anode by the back-to-back cells to maintain the hydride state of the anode. Thus, such an embodiment comprising a single hydrided anode may replace the permeable membrane anode having anode layers separated by an internal hydrogen reservoir wherein the external supply of hydrogen on the inside of later is replaced with hydrogen generated by electrolysis on the opposite surfaces of the former.

In an embodiment, the hydrogen permeation electrode such as the anode may comprise a composite of at least two layers of different materials such as materials having a different composition or different structure. Exemplary composite anodes comprise a hydrogen permeable layer such as a hydrogen permeable membrane such as a metal foil that serves as a substrate to support at least one other layer bound to it. The other layer may have high surface area such as a sputtered, metal sprayed, vapor deposited, tape cast and annealed layer. Other methods known in the Art such as those of the disclosure may be used to apply the other layer such as a metal or alloy layer such as a Mo or Mo alloy layer that may have high surface area. The outer layer may have a high catalysis rate to form hydrinos such as one comprising at least one of Ni, Co, Cu, NiCo, NiCoCu, Mo, and a Mo alloy such as those of the disclosure.

In another embodiment, the anode comprises a porous material such as a sintered or tape cast metal anode such as one comprising Ni, Mo, NiCo, a Mo alloy, and others of the disclosure wherein protection from corrosion is provided by sparing $H_2$. The hydrogen flow may be controlled such that excess electrical power gain is achieved. The hydrogen flow rate per geometric area of the $H_2$ bubbling or sparging electrode may be in the range of about 1 X $10^{-13}$ mole $s^{-1}$ $cm^{-2}$ to 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$, or 1 X $10^{-9}$ mole $s^{-1}$ $cm^{-2}$ to 1 X $10^{-8}$ mole $s^{-1}$ $cm^{-2}$. The hydrogen may be evenly supplied to the porous electrode by permeation through an underlying hydrogen permeable membrane. In another embodiment, the porous electrode may be cast onto of hydrogen diffuser such as a fine mesh screen coated with the porous electrode and sealed at the edges wherein hydrogen is supplied from a chamber underneath the mesh.

The application of $H_2O$ as at least one of a gas, vapor, or liquid allows for rapid supply to the cathode surface without the necessity of $H_2O$ being absorbed at the electrolyte edge with supply to the cathode provided by at least one of diffusion and migration in the electrolyte layer. In an embodiment, the mole% of the $O_2$ supplied to the cathode may be greater than that of air and may be in the range of 0.01% to 100%. The cathode oxygen reduction rate may be increased by using gas with a higher concentration of $O_2$ compared to air such that the cathode gas supply system such as the manifolds, lines, channels, and gas cathodes may be proportionately more compact. The supply of oxygen may be provided by the electrolysis of $H_2O$ wherein the electrolysis power may be provided by the CIHT cell. In this case, the system may comprise a hydrogen-oxygen separator. The cathode half-cell system may be made more compact such as a factor of five times as a result of the supply of up to pure $O_2$ to the cathode rather than air having 20% $O_2$. A further reduction in scale may be possible due to the lack of the otherwise necessity to remove $N_2$ of air as it is depleted of oxygen with an $O_2$ partial pressure drop. The cathode may comprise those of the disclosure such as NiO that may comprise oxidized Ni celment or Ni tape cast. The cathode may comprise a dopant such as at least one of Pt, Pd, Ir, Ru, Rh, Re, and other dimensionally stable anode materials (DSAMs) such as those used in chlor-alkali electrolysis. The DSAMs may be stable to forming a metal halide under CIHT cell operating conditions. The dopant may on the surface of the cathode and be in any desired at% such as in the range of 0.001 to 20 at%. The hydrogen permeation electrode may comprise at least one of Mo and a Mo alloy such as at least one of MoNi, MoCu, MoB, MoC, MoSi, MoCuB, MoNiB, MoSiB and others of the disclosure. In an embodiment, a hydrogen permeable membrane such a Ni is coated with a high surface area material such as tape cast Mo, Mo alloy, Ni celmet, Co, CoCu tapecast on Ni celmet, CoCu tape cast, Ni tape cast, or Ni-Co tape cast such as 95/5wt%. In an embodiment, the coating is achieved by cladding the tape cast material onto the H permeable membrane. The tape cast cladding onto the membrane may be achieved by compression of the components. In an embodiment, the support for tape casting anode materials such as Co is Co clement or carbon mesh.

In an embodiment, the electrolyte comprises a mixture of LiOH and LiBr, a mixture of LiOH and NaOH, or a mixture of LiOH, LiBr, and NaOH, and optionally a matrix such as MgO, and further comprises another salt that increases the oxygen reduction rate such as at least one of MOH and M'OH (M and M' may be chosen from the group of Na, K, Rb, and Cs). In an embodiment, an alkali cation that provides a higher oxygen reduction rate than an electrolyte comprising Li such as LiOH-LiBr is supplied as at least one of a salt such as MX (M may be chosen from the group of Na, K, Rb, and Cs; X = halide such as Br) and a matrix material such as at least one of $KAlO_2$, $NaAlO_2$, $Na_xNiO_2$ and $K_xNiO_2$. In an embodiment, at least one of MOH and M'OH comprises a layer near the positive electrode. The higher mobility of $Li^+$ may cause it to have a greater concentration near the negative electrode. In an embodiment, the at% of MOH and M'OH is adjusted to maximize the oxygen reduction rate while favoring reaction pathway to forming hydroxide ion versus other oxygen ions such as peroxide and superoxide. In an embodiment, at least one of oxygen ions peroxide, H peroxide ion, superoxide, and oxide ion are formed at the cathode side. The $H_2O$ of the electrolyte comprising LiOH may react with one or more of the oxygen ions such as peroxide or superoxide to form a least one of oxygen and $OH^-$. In an embodiment, the $H_2O$ pressure is controlled to achieve this reaction. In an embodiment, the system comprises a pressure vessel to maintain pressures higher than atmospheric. The pressure may be high to maintain at least one of liquid $H_2O$, high pressure $H_2O$ vapor, steam, and super-saturated steam. The pressure may be any desired such as in the range of at least one of about 1 atm to 500 amt, about 2 atm and 100 atm, and about 2 atm and 10 atm. In an embodiment, the cathode comprises a system such as a gas manifold and channels such as those of a bipolar plate shown in FIGURE 2 to apply gas such as air, Ar-$O_2$, or $O_2$ to the cathode active surface. The gas pressure may be above atmospheric.

The pressurized gas may blow out wicked electrolyte and increase the $O_2$ reduction rate by increasing the mass flow.

In an embodiment of a CIHT cell system, the anode comprises a hydrogen permeable membrane on two sides facing back to back to corresponding anode half-cells. The hydrogen permeation electrode may comprise at least one of Mo and a Mo alloy such as at least one of MoNi, MoCu, MoCo, MoB, MoC, MoSi, MoCuB, MoNiB, MoSiB, and others of the disclosure such as Co, CoCu, Ni, and NiCo. Each cell further comprises a cathode half-cell and a cathode. The cathode may comprise NiO or another of the disclosure. The cathode and anode half-cells may comprise a single electrolyte layer such as a mixed molten hydroxide-halide salt such as LiOH-LiBr and optionally a matrix such as MgO. The corresponding cathodes and anodes of at least two such cells are wired in series or in parallel as desired. In an embodiment, the cells of a stack of cells may each comprise such a two-sided anode. Alternatively, at least one cell may a bipolar plate. The system further comprises a gas supply to at least one of the cathode and anode of at least one cell. The system further comprises a hydrogen gas supply that may have a common feed to each double-sided anode. In an embodiment, the cathode is two-sided and back-to-back with each facing its corresponding cathode half-cell. In an embodiment, the back-to-back cathode may comprise an insulator that electrically separates the two sides. In an exemplary embodiment, an alkaline earth metal oxide such as MgO may serve as the electrical spacer between cathode plates. Each cathode may have a gas supply comprising at least one of a source of oxygen and $H_2O$. Each double-sided cathode may have a common gas supply. The supply may be such that each double sided cathodes remain electrically insulated from each other. The insulator may comprise beads such as MgO beads that allow $O_2$ to diffuse between the electrically separated layers. In an embodiment, contaminant gases in the supply may be removed with a getter. In an exemplary embodiment, at least one of oxygen and $H_2O$ are removed from the hydrogen gas supplied to the anode by a getter that reacts with the contaminant to form a nonvolatile compound. The getter may be a metal, metalloid, or other oxidizable material such as an alkali, alkaline earth, transition, inner transition, and earth metal, and Al, Ga, In, Sn, Pb, S, Te, Se, N, P, As, Sb, Bi, C, Si, Ge, and B, and other elements that form oxides or oxyanions. Each back-to back electrode may have an inlet and exit gas line. At least one of the inlet and exit gas lines may have a getter in line to remove contaminants. The gases may be recirculated from and to the electrode with flow through or over a getter to remove contaminants.

Due to a large difference in aqueous solubility of KOH versus LiOH, in an embodiment, the CIHT cell comprises two layers: one comprising predominantly KOH at the cathode and another comprising predominantly precipitated LiOH at the anode. The electrolyte may further comprise a halide such as LiBr such that a mixture with LiOH having a lower melting point is formed. The cell may be pressurized such that the melting point of the LiOH or LiOH mixture such as LiOH-LiBr is reached. An exemplary electrolyte is a eutectic mixture of LiOH-LiBr that melts at about 300 °C. The KOH has a high oxygen reduction rate, and the LiOH or LiOH-LiBr electrolyte is suitably non-corrosive such that the anode such as Ni, Mo, or Ni or Mo alloys are stable, especially with the application of hydrogen at the anode by means such as permeation or sparging. Thus, the two-layer cell is suitable for a high current with longevity. In order to maintain $H_2O$ in the electrolyte, the cell may be pressurized in a sealed vessel. In an exemplary embodiment, the cell temperature is 300°C and the pressure is about 85 atm. A suitable KOH-$H_2O$ mole ratio is in the range of about 50-50% to 99-1% such as exemplary 80-20 mole %. In an embodiment, the electrolyte further comprises a matrix such as those of the disclosure such as MgO. In an embodiment, an electrolyte comprising KOH further comprises MgO. The KOH-MgO ratio may be in the range of about 100 to 0.01, or in the range of about 2 to 0.2. In an embodiment, the electrolyte comprises two layers, an anode layer of LiOH or LiOH-LiBr with an immobilizing matrix such as $LiAlO_2$ or $AlO_2$ and a cathode layer comprising KOH. The cathode of the KOH cell may comprise four-electron reduction catalysts such as those of the present disclosure. The anode may comprise an alloy such as a Mo alloy such as MoNi alloy. The cathode may comprise a catalyst to deactivate peroxide ion such as Pt. The layer comprising KOH may comprise a hydroscopic compound to increase the water concentration to convert peroxide ion to hydroxide. Suitable hydroscopic compounds are those of the disclosure such as $MgBr_2$.

In an embodiment, the cathode comprises a compound or material to decompose oxygen radicals to less reactive species such as $OH^-$. The cathode may comprise a compound or material to absorb oxygen. The compound or material may comprise carbon or a Pt or Pd on a support such as carbon. $H_2O$ may be supplied to the cathode by sparging. $H_2O$ may react with active oxygen species such as $O_2$, oxygen radicals, or oxygen ions to at least one form less reactive species such as $OH^-$. $O_2$ may be sparged through the cathode. Both $H_2O$ and oxygen may be sparged through the cathode.

In an embodiment, $H_2O$ is applied as at least one of a gas, vapor, or liquid to the hydrogen sparging anode. The $H_2O$ may react with oxygen or oxygen radicals or ions to form $OH^-$ and may be protective to the anode, preventing corrosion.

In an embodiment, the aqueous electrolytic CIHT cell such as one comprising a KOH electrolyte may be maintained with a voltage sufficient to prevent the anode form corroding as give in the disclosure. Exemplary aqueous CIHT cell are [R-Ni, MoB, MoC, MoSi, MoNi, MoCo, or MoCu/KOH or $K_2CO_3$/ Ni, NiO, NiAg, Ag, steam carbon (SC), MnO2, $MnO_2$/C, $Mn_2O_3$/C, or MnOOH]. In an embodiment, the anode may comprise an oxide such as an oxide of Mo such as at least one of $MoO_2$ and $MoO_3$.

In an embodiment of an alkaline aqueous electrolytic cell, at least one of the pH of the electrolyte and the cell voltage are controlled to achieved stability of the anode. Suitable alkaline electrolytes are KOH, $K_2CO_3$, $K_2HPO_4$, $K_3PO_4$, and $K_2SO_4$ wherein another alkali or alkaline earth metal may replace K. In an embodiment, the pH may be maintained by an electrolyte comprising a buffer. Suitable exemplary buffers and the pH range are sodium carbonate/ sodium hydrogen carbonate (9.2 - 10.8), sodium tetraborate ($Na_2B_4O_7 \cdot 10H_2O$ or $Na_2[B_4O_5(OH)_4] \cdot 8H_2O$)/ sodium hydroxide (9.3 - 10.7), sodium bicarbonate / sodium hydroxide (9.60 - 11.0), sodium hydrogen orthophosphate / sodium hydroxide (11.0 - 11.9), potassium chloride/ sodium hydroxide (12.0 - 13.0). The stable voltage and pH may be determined using a Pourbaix diagram. In an embodiment, the pH may be basic and may be in the range of at least one of about 7.1 to 14, 7.1 to 13, 7.1 to 12, 7.1 to 11, 7.1 to 10, 7.1 to 9 and 7.1 to 8. The molarity may be any desire such as that which establishes the desired property such as pH or electrical conductivity. The molarity may be in the range of at least one of about 0.001 M to 30 M, 0.01 M to 20 M, and 0.1 M to 20 M. Suitable metals that are stable in alkaline electrolyte at negative potential are Ag, As, Au, Bi, Cd, Cu, Fe, Hg, Mo, Ni, Os, Pb, Pd, Pt, Rh, Ru, Sb, Sn, Tc, and Te and Co and alloys such as CoCu or CoNi. A corrosion product additive may be added to protect the anode. The additive may produce a common ion effect of the corrosion product. For example, at least one of a cobalt or copper compound such as a halide such as $CuBr_2$, or $CoBr_2$ may be added to a cell comprising a CoCu anode. The voltage and concentration for an additive to stabilize the solid phase anode metal or metal oxides as a passivated electrode may be determined from a Pourbaix potential-pH diagram. As an example, Mo or Co materials may be operated in the 0.9 to 1 V region at less than 0.1 V over potential in a suitable pH range such as less than about pH 11. The over potential increases with current; so, in an embodiment, high surface area materials are better due to lower current density and over potential.

In order to exploit the high oxygen reduction rate of an electrolyte comprising KOH and the lower corrosion of an electrolyte comprising LiOH, in an embodiment, the CIHT cell comprises a two-layer electrolyte with KOH at the cathode and LiOH, and optionally another salt such as LiBr, at the anode. The electrolyte layers may have different physical states. The cell may be operated at a lower limiting temperature wherein the top KOH layer is liquid and the bottom LiOH layer such as LiOH-LiBr is a solid or semisolid. In an embodiment, KOH may be wicked into the cathode, and the cell further comprises a LiOH-LiBr electrolyte at the anode. In an embodiment, the cell comprises a matrix and cathode with differential pore sizes that selectively creates the two layers by differences in capillary forces between the electrolytes that selects for the separation between the matrix and the cathode. In another embodiment, separate KOH and LiOH-LiBr flow streams are fed to the cell with KOH at cathode and LiOH-LiBr at anode. The electrolyte may further comprise a matrix such as MgO.

In an embodiment, the electrolyte may comprise an aqueous alkaline electrolyte such as KOH. The electrolyte may comprise more than one hydroxide such as LiOH and KOH and may further comprise another salt such as LiBr. At least two different hydroxides may be separated by a separator such as an $OH^-$ exchange membrane such as fumapem (fumatech Germany). One hydroxide such LiOH may be less corrosion. It may be localized to an anode compartment defined by the membrane. Another such as KOH may permit a high oxygen reduction rate. It may be localized at the corresponding cathode compartment. The cathode may comprise carbon such as at least one of steam carbon, or one of more of NiO, and Ag impregnated NiO. The anode may comprise at least one of Mo, Mo, alloy, Ni, transition metal, transition metal alloy such as CoCu, CoCu + another metal such as Mo. The anode may comprise a tape cast anode. The cathode may be supplied with $O_2$ or a source of $O_2$ such as air. The cathode may have a portion that is un-submerged in the electrolyte.

In an embodiment, the electrolyte may comprise a solid fuel such as $Cu(OH)_2$ + $CuBr_2$ that may comprise eutectic salt electrolyte. Since $Cu(OH)_2$ dehydrates to $H_2O$ + CuO at a temperature less than the melting point, an alkali hydroxide may be added. For example, KOH or LiOH is added to CuO or $Cu(OH)_2$ + $CuBr_2$ wherein KOH + CuO goes to $K_2CuO_2$ for example.

In an embodiment, the temperature of the CIHT cell comprising a molten salt electrolyte such as LiOH-LiBr, and optionally a matrix such as MgO is maintained at an elevated temperature by resistive heating. In an embodiment, the cell comprises a resistive heater. In an embodiment, the resistive heater comprises at least one heating element that is located axially central to the edge of the stack. In an embodiment, the heating element is substantially in the center of each electrode of the stack and penetrates the electrodes. The heating element may be nonconductive to prevent cells of the stack from shorting. The heating element may comprise a nonconductive coating such as a ceramic coating such as MgO. The power for the resistive heater may be supplied by the CIHT cell. In an embodiment, the temperature at the edge of each cell is maintained at a lower temperature than that at the center such that the electrolyte solidifies at the edge to provide a so-called wet seal. In an embodiment, the electrolyte may comprise a different composition at the edge of each cell from that inward from the edge. The edge electrolyte may have at least one of a higher melting point and a higher viscosity then that in the center such that a wet seal forms at the edge. The edge electrolyte may comprise a different molar ratio of at least one component of the electrolyte such as a salt and a matrix and may also comprise different or additional salts, matrices, as well as additives. The matrix that may differ at the edge may comprise an alkaline earth oxide.

In another embodiment, the electrolyte layer thickness is such that the electrolyte is maintained in place by

capillary forces with at least one of the electrodes and an optionally added matrix such as MgO. The separation of the electrodes may be maintained by an inert spacer material such as MgO such as MgO beads of the size corresponding to the desired electrode separation. The electrode separation may be in the range of at least about 1 $\mu$m to 1 cm, about 5 $\mu$m to 5 mm, and about 10 $\mu$m to 1 mm. In an embodiment, the matrix may comprise stratified layers of different matrix particle sizes. The stratification may permit cathode material such as NiO to be confined to the cathode region while avoiding active area blockage of the anode wherein the matrix is denser or less porous and less dense or more porous in the different regions such as at the cathode and anode regions, respectively. In another embodiment, the matrix is soluble in the electrolyte and the stratification may comprise different densities or viscosities.

A schematic drawing of a CIHT cell stack 200 with a central heater 201 is shown in FIGURE 4. The heater 201 having power leads 202 and 203 is central to the cells of the stack, each comprising a cathode 205, an anode 206, and an electrolyte 207 wherein the cathode and anode may comprise a bipolar plate as shown and may further comprise a conductive separator or bimetallic junction between the cathode and anode. The CIHT cell stack may further comprise two terminals such as the one shown (210), a casing 211, insulation layers such as 212-216, and an electrically insulating end cap 230.

The electrolyte may comprise a pellet. Alternatively, the electrolyte may be contained in a suitable structural element such as a nonconductive O-ring such as a MgO ring. In an embodiment, the MgO structural element is fashioned to a desired form such as that of an O-ring using Mg metal to form the ring and oxidizing it to MgO. The electrodes may be compressed on the top and bottom to sandwich the element. The electrolyte may be confined in the so formed the inter-electrode cavity. In an embodiment, Mg is replaced with another metal capable of being oxidized such as A1 or a rare earth metal. In an embodiment, the corresponding oxide is insoluble or has a low solubility in the electrolyte. In an alternative to the structural element, the electrolyte is held in place by a wet seal of electrolyte comprising un-melted electrolyte at the cell edges wherein an embodiment, the stack is heated from the center. The electrodes may be machined to make a small gap at the edge to facilitate the wet seal. At least one of the pore size of at least one of the electrolyte and the matrix may be adjusted and the ratio of the matrix may be adjusted to provide the desired wetting of the electrodes by controlling the capillary action. In an embodiment of the bipolar plate, the anode and cathode are separated by a separator that prevents electrolyte from causing an electrical short circuit between the two corresponding cells wherein the electrolyte may be wicked into at least one electrode. The separator may comprise a conductor such as a metallic or graphite sheet. The separator may also serve as a bimetallic junction.

In an embodiment, the metals of the electrodes of opposite sides of the bipolar plate are different such as Ni on one side and NiO on the other, wherein NiO may be on both sides with one side having a greater weight percentage. Alternatively, one side may be one metal and the other side another metal such as Ni versus 242 alloy or Mo. The different metals may alternate throughout the stack. In another embodiment, the dipolar plate may comprise an electrically conductive separator between the anode and cathode. The separator may comprise a different material such as a different metal than that of at least one of the cathode and anode. The separator and at least one electrode may comprise a bimetallic electrode. The bimetallic may comprise a bimetallic junction. The bimetallic may comprise at least one conductor such as a metal or alloy electroplated on at least one other conductor such as a second metal or alloy. At least one of the bimetallic electrode or junction may result in an intrinsic voltage that causes the hydrino reaction rate to increase. In an embodiment, the bimetallic comprises two conductors such as a metal such as Ni and an oxide such as the oxide of the metal that may further comprise a compound such as an alkali metal oxide. A suitable exemplary alkali metal oxide is lithiated nickel oxide. The increase may be due to a better energy match of the catalyst and H to permit a hydrino transition. In another embodiment, the electrolytes on opposite sides of the bipolar plate are different. The electrolyte difference may comprise at least one of a different composition having at least one different constituent and the concentrations of the same constituents of the electrolyte may be different. For example, the electrolyte may comprise a matrix such as MgO on one side and $LiAlO_2$ on the other. Alternatively, the electrolyte may comprise LiOH-LiBr on one side and LiOH-LiCl on the other. Additionally, one side may comprise some weight percentage of NaOH. In an embodiment, the difference between one side of the electrode and the other causes the chemical potential, Fermi level, or voltage of the electrode for each half-cell to differ from that of the respective electrolyte. In another embodiment, a separating medium or spacer such as a non-conducting material or insulator separates the opposite sides of the bipolar plate such that the chemical potential, Fermi level, or voltage of the side of the electrode contacting the electrolyte is different from that contacting the separating medium. In an embodiment, the difference in chemical potential, Fermi level, or voltage facilitates the catalysis of hydrogen to form hydrinos. In an embodiment, at least one of different electrode metals, bimetallic junctions, electrolytes, matrices, and conditions such as hydration and temperature are alternated throughout the stack. In an embodiment, the cathode is a different material such as a different metal than that of the anode. The different material of the cathode relative to that of the anode may replace the requirement for a bimetallic anode of the bipolar plate. In an embodiment, the bimetallic nature of the bipolar plate to distinguish the anode and cathode is satisfied by using a single layer anode with a different cathode material such as a different metal. Suitable exemplary cathodes comprise one of those of the disclosure.

In another embodiment, at least one electrode comprises multiple layers comprising at least two different

materials. The electrodes may comprise laminates of different materials. Inner layers may change the electrode potential of the outer layers in contact with the electrolyte or having an increased contact with the electrolyte. The outer layers may be selected to be resistant to corrosion. Suitable stable materials for outer layers are Ni, noble metals, and corrosion resistant alloys such as those of the disclosure. Suitable materials for the inner layer or layers to change the electrode potential are Mo and H242 as well as a transition metal such as V, Cr, Ti, Mn, Co, Cu, or Zn, an inner transition metal such as Zr, Ag, Cd, Hf, Ta, W, a rare earth metal such as La, or alloy such as $LaNi_5$, or other metal or metalloid or alloy such as Al, Sn, In, ad Pb, and other alloys such as MoCo, MoCu, MoMn, MoNi, and MoCr. The electrode may serve as the anode or cathode. Exemplary multi-layer, multi-metallic electrodes, or laminated electrodes that may serve as the anode are Ni/Mo/Ni pressed, Ni/H242/Ni pressed, and Ni/H242/Mo/Ni pressed. In an embodiment, the electrode may be a molten salt such as a mixture of hydroxide and halide salts such as alkali ones such as those of the disclosure such as LiOH-LiBr or an aqueous electrolyte such as a hydroxide or carbonate electrolyte or others of the disclosure.

In an embodiment of a laminated electrode, the metal or metals comprise at least one of a group having low water reactivity such as Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, and Zn. In an embodiment, the theoretical free energy of the reaction of the metal with $H_2O$ is about zero within the range of -500 to + 500 kJ/mole or preferably within the range of -100 to + 100 kJ/mole.

Structures, materials, and methods may be adapted from those of molten carbonate or alkaline fuel cells known to those skilled in the art. Exemplary suitable structures, materials, and methods follow. The separator or current collector may be Ni or Cu coated stainless steel such as 310S/316L. The current collector may be perforated. The coating and be about 50 micron, but other thickness are suitable such a 1 micron to 1 mm. Other exemplary suitable materials are iron-base alloys such as 304L, 309S, 310S, 314, 316L, 347, 405, 430, 446, 17-4PH 18-18$^+$, 18SR, A118-2, A126-1S, A129-4, A1439, Glass Seal 27, Ferralium 255, RA253mA, Nitronic 50, 20Cb3, 330, Crutemp-25, Crutemp-25 + La, Sanicro-33, 310 + Ce, IN800, IN840, A-286, and nickel, cobalt-base alloys such as IN600, IN601, IN671, IN690, IN706, IN718, IN825, IN925, MA956, RA333, Ni200, Ni201, Ni270, Haynes 230, Haynes 625, Haynes 188, Haynes 556, Nichrome, Monel 400, and aluminum-containing alloys such as GE-2541, FeCrAl + Hf, Haynes 214, FeCr alloy, IJR (406), 85H, Kanthal AF, and $Ni_3Al$. A suitable coating method is cladding, but other methods may be used such as electrolytic Ni plating such as from a sulfamate bath, or electroless Ni plating. At least one electrode may comprise one or more of these materials such as specially steels and alloys such as corrosion resistant alloys. The anode may be a hydrogen storage material such as those of the disclosure such as a mischmetal such as M1: La-rich mischmetal such as $M1Ni_{3.65}Al_{0.3}Mn_{0.3}$ or $M1(NiCoMnCu)_5$, Ni, R-Ni, R-Ni + about 8 wt% Vulcan XC-72, $LaNi_5$, Cu, or Ni-Al, Ni-Cr such as about 10% Cr, Ce-Ni-Cr such as about 3/90/7 wt%, Cu-Al, or Cu-Ni-Al alloy. The anode may be doped with oxides such as MnO, $CeO_2$, and $LiFeO_2$ or comprise these or other oxides. The anode may comprise a conductive oxide or a conductive oxide coat. The anode may comprise NiO or alkali ion-doped NiO such as lithiated NiO. The cathode may be NiO and may be doped with $LiFeO_2$, $Li_2MnO_3$, or $LiCoO_2$. At least one of the anode, cathode, and electrolyte may be doped with the oxides of the disclosure such as the component oxides of yttria-stabilized zirconia. The matrix may comprise an inert material such as a ceramic. The matrix material may comprise a compound comprising a species that may migrate to facilitate ion transport. Suitable exemplary matrix materials are oxyanion compounds such as aluminate, tungstate, zirconate, titanate, as well as others of the disclosure such as sulfate, phosphate, carbonate, nitrate, chromate, and manganate, oxides, nitrides, borides, chalcogenides, silicides, phosphides, and carbides. The matrix material may comprise metals, metal oxides, nonmetals, and nonmetal oxides. The oxides may comprise at least one of alkali, alkaline earth, transition, inner transition, and earth metals, and Al, Ga, In, Sn, Pb, S, Te, Se, N, P, As, Sb, Bi, C, Si, Ge, and B, and other elements that form oxides or oxyanions. The matrix may comprise at least one of an oxide such as one of an alkaline, alkaline earth, transition, inner transition, and rare earth metal, and Al, Ga, In, Sn, Pb, S, Te, Se, N, P, As, Sb, Bi, C, Si, Ge, and B, and other elements that form oxides, and one oxyanion and further comprise at least one cation such as alkaline, alkaline earth, transition, inner transition, and rare earth metal, and Al, Ga, In, Sn, and Pb cations. Suitable examples are $LiAlO_2$, MgO, $Li_2TiO_3$, or $SrTiO_3$. In an embodiment, the matrix compound may comprise an oxide of the anode materials and a compound of the electrolyte such as at least one of a cation and an oxide of the electrolyte. In an exemplary embodiment, the electrolyte comprises a hydroxide such as an alkali hydroxide such as MOH (M = alkali) such as LiOH that may form the corresponding oxide such as $M_2O$ such as $Li_2O$, and the electrolyte comprises an element, metal, alloy, or mixture such as Mo, Ti, Zr, Si, Al, Ni, Fe, Ta, V, B, Nb, Se, Te, W, Cr, Mn, Hf, Co, and M' (M'= alkaline earth) such a Mg that may form the corresponding oxide such as $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO, the matrix comprises an oxide of the cathode material and optionally an oxide of the electrolyte such as $Li_2O$ corresponding to the exemplary suitable matrices of $Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and M'O (M'= alkaline earth) such a MgO. The matrix may comprise an oxide of an element of the anode or an element of the same group. For example, with a Mo anode, the matrix of same element or group may be $Li_2MoO_4$, $MoO_2$, $Li_2WO_4$, $Li_2CrO_4$, and $Li_2Cr_2O_7$. The marix may provide support. The matrix may be paste-like. The particle size may be submicron,

but other sizes such as micron to millimeter are suitable in embodiments.

In an embodiment, the anode half-cell reaction is

$$OH^- + 2H \text{ to } H_2O + e^- + H(1/p) \qquad (54)$$

wherein the reaction of a first H with $OH^-$ to form $H_2O$ catalyst and $e^-$ is concerted with the $H_2O$ catalysis of a second H to hydrino. H that reacts with $OH^-$ may be from M-H wherein M is the anode material such as a metal. In an embodiment, the catalyst accepts 3X27.2 eV matching the potential energy of the formed $H_2O$ molecule as given by Eq. (43) and corresponding to m= 3 in Eq. (5) resulting in the formation of H(1/4). The continuous energy released as the electron of the second H transitions to the hydrino state as well as the energy released from the catalyst following acceptance from the second H may cause charging of the anode. The charging may comprise capacitive charging of the ions of the electrolyte or oxidation of at least one species of the electrolyte or electrodes. Thus, the energy released in the electrochemical reaction to form $H_2O$ catalyst and the concerted H catalysis reaction to form hydrinos powers the flow of current through the external circuit. The voltage may be that of the hydrogen and oxygen cell reaction since the electrolyte comprises $H_2O$ and species comprising oxidation and reduction products of hydrogen, oxygen, and water. The cell reactions may comprise at least one of those given by Eqs. (90-93). The ion path through the electrolyte to complete the circuit may comprise ions of the electrolyte such as at least one of $Li^+$, $OH^-$, oxide and peroxide ions, and $Br^-$ in the case of an electrolyte comprising LiOH-LiBr, or ions of the matrix. Thus, in an embodiment, the matrix serves as an ion conduction medium wherein the conduction may be provided by charge transfer or ion transport. In another embodiment, the matrix comprises at least one of a mixture of oxide or oxides, hydroxide or hydroxides, mixed metal oxidation states, electrolyte ions, and other ions. The ion conduction may be by ion hopping. The transport may involve charge transfer or ion transport of a species such as a negative ion such as one comprising at least one or oxygen and hydrogen. Suitable species are at least one of oxygen species chosen from $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$ and H species and hydrogen species chosen from $H_2$, H, $H^+$, $H_2O$, $H_3O^+$, OH, $OH^+$, $OH^-$, HOOH, and $OOH^-$. In an exemplary embodiment, the transported species is a more a reduced state species comprising oxygen such as $O^{2-}$ formed at the cathode formed from exemplary species $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O_2^-$, and $O_2^{2-}$. The more reduced species may be oxidized at the anode.

In an embodiment not having a matrix, the ion conduction may be through the electrolyte during cell discharge. The transported species may be provided, at least partially, external to the cell. The cell may be open such as open to atmosphere. In an exemplary embodiment, at least one of external oxygen and $H_2O$ is reduced at the cathode, and a reduced species such as the reduction product of at least one of external oxygen and $H_2O$ is oxidized at the anode. The transport may be driven by the energy due to the catalysis of H to hydrino states. The current due to the external oxidant such as at least one of external oxygen and $H_2O$ is controlled to control corrosion such as corrosion of the anode. In an embodiment, the anode is stable or corrosion resistant to the current carried by air-derived species such as oxygen species such as $OH^-$, HOOH, $OOH^-$, $O^-$, $O_2^-$, and $O_2^{2-}$. The corrosion resistant anode may be one of the disclosure. Alternatively, the cathode may comprise a stable species such as an oxide or sulfide such as NiO or MoS. In an embodiment, the cell voltage per cell during the intermittent electrolysis and discharge is maintained above the potential that prevents the anode from substantially oxidizing such as about 0.8 V in the case of a Ni anode.

From the perspective of thermodynamics, a species such as a negative ion may be ionized at the anode and the same species created by reduction at the discharge cathode with power dissipated in an external circuit when the ion or electron temperature at the anode is greater than that at the cathode. A non-hydrino example involving the temperature differential of the half-cells is the cell [Na (hot)/BASE/Na (cold)]. Exemplary ions in a LiOH-LiBr salt are $OH^-$ and $Br^-$ that may be oxidized to OH and Br, respectively, and reduced with electrons delivered to the cathode through the external circuit. Alternatively, species comprising at least one of O and H may carry the ion current. The hydrino reaction provides the energy equivalent to heat to generate the power delivered to the circuit. In an embodiment, the matrix serves as a separator to prevent the cathode and anode electrodes or half-cells from shorting. The prevented shorting may be in at least one of the thermodynamic and electrical sense. The matrix may separate the half-cell reactions to increase the rate, effectiveness, or extent of the hydrino reaction to create an electromotive force (EMF) at the anode relative to the cathode to drive current through the external circuit. In an embodiment, the separation of the anode and

cathode-half cell reactions causes a better match of the energy accepted from a second H by the catalyst $H_2O$ wherein the $H_2O$ formation occurs by the oxidation of $OH^-$ and reaction with a first H, and the oxidation reaction to form the catalyst is concerted with the catalysis reaction of a second H to form hydrinos as given by Eq. (54). In an embodiment, the matrix may bind $H_2O$ and also serve as a $H_2O$ source to the intermittent electrolysis reactions. The binding and supplying of $H_2O$ may be at an energy that increases the rate or extent of the hydrino formation reaction. The $H_2O$ binding energy may cause a better match of the energy transferred from H to the catalyst such as $H_2O$. An exemplary electrolyte comprising a matrix that serves as at least one of a dielectric, separator, or at least one of a $H_2O$ binder and reservoir is an alkali hydroxide-alkali halide mixture such as LiOH-LiBr and a matrix material of the disclosure that may have the components in any desired molar ratios. The wt%s of the alkali halide and matrix material may be similar. The electrolyte comprising a matrix may comprise a solid or semisolid at the operating temperature of the cell such as in the range of about 75°C to 700°C. An exemplary electrolyte is LiOH-LiBr-MgO having wt% in the range of about 10 wt%, 45 wt%, and 45 wt%, respectively, with each ± 1 to 30 wt%.

In an embodiment, the electrolyte comprises a hydroxide such as a molten or aqueous hydroxide and may additionally comprise a halide. The electrolyte may comprise a molten hydroxide-halide mixture such as one comprising at least one alkali metal cation such as Li. The electrolyte may comprise LiOH-LiBr and optionally a matrix such as MgO. The electrolyte may further comprise at least one species of a solid fuel reactant of the disclosure such as at least on of a hydroxide or halide of the group metals having low water reactivity such as Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, and Zn.

The electrode may be manufactured by methods such as tape casting, electrophoretic deposition, hot roll milling, or hot pressing. The wet sealing area of the bipolar plates may comprise aluminum or an aluminum alloy that may comprise a coating. Suitable aluminizing methods are painting, thermal spraying, vacuum deposition that may be followed with fusion heat treatment, and pack cementation. An exemplary resultant diffusion coating of stainless steel comprises MAl-$M_3$Al structure (M= iron, nickel, plus 5-15 mol % chromium). Alternatively, aluminum-containing alloy powders such as FeCrAlY, MAl, or $M_3$Al (M = Ni, Fe) may be thermally sprayed, in an exemplary embodiment.

In an embodiment, a tape cast electrode comprising a binder and the electrode material may be treated to release or decompose the binder to form the final electrode or as a step to form the final electrode. The treatment may comprise sintering. The treatment may occur in situ. The treatment may release $CO_2$. The $CO_2$ may form carbonate by reacting with the electrolyte such as a hydroxide. The reaction may be reversed by reaction with $H_2O$ according to the reaction of Eq. (60). The $CO_2$ may be removed. The removal by means such as pumping may contribute to driving the reaction of the conversion of carbonate to hydroxide to completion within a range of about 40 to 100% or 80 to 100%.

In an embodiment such as one wherein the hydrogen is provided by permeation or intermittent electrolysis, the cell comprises a matrix to hold the electrolyte. The matrix may comprise a compound that wicks the electrolyte or causes it to be more viscous such as an inert compound. Suitable exemplary matrix materials are at least one of asbestos, $Al_2O_3$, MgO or othe alkaline earth oxide, $Li_2ZrO_3$, $LiAlO_2$, $Li_2MoO_4$, $Li_2TiO_3$, or $SrTiO_3$. The electrolyte may be immobilized as a paste. The matrix to hold the electrolyte as a layer such as a thin layer comprises the steps of mixing the matrix material and at least one other material such as a binder, a particulate material, and a solvent that combusts to essentially completion when heated to high temperature and heating the mixture to form the matrix. Suitable compounds are poly (vinyl formal) (PVFO) and ethanol solvent and polyethylene glycol (PEG). An alkaline earth oxide solid matrix may be formed by pressing a mixture of MO and $M(OH)_2$ (M = at least one of Mg, Ca, Sr, and Ba) and optionally a combustible binder such as polyvinyl alcohol and heating in an oxygen atmosphere to burn off the binder such as heating in steps between 1000 °C and up to 2000 °C. The matrix may be sintered at high temperature. The solid matrix may be wetted with the electrolyte such as LiOH-LiBr by soaking it in the molten salt. The pore size and density of the matrix may be varied by varying the particle size and ratio of matrix material to the at least one other compound. In an embodiment, the electrolyte is added to the matrix material. The pore size and density may be controlled to adjust the capillary action of the matrix relative to the surface tension of the electrolyte such that the electrolyte is maintained substantially in a layer without excessive flooding of the cathode or anode. The matrix pore size may be in the range of about 10 nm to 10 mm, about 100 nm to 100 micrometers, or about 1 micrometer to 10 micrometers. The matrix may comprise a solid such as a ceramic. A suitable exemplary solid matrix is MgO, $ZrO_2$, or ytttria stabilized zirconium oxide. The matrix may be one of a solid oxide fuel cell that may conduct oxide ions such as yttria stabilized zirconia (YSZ) (often the 8% form Y8SZ), scandia stabilized zirconia (ScSZ) (usually 9 mol%Sc2O3 - 9ScSZ) and gadolinium doped ceria (GDC). The matrix may comprise a salt bridge that may conduct oxide ions. Typical examples of oxide conductors are yttria-stabilized zirconia (YSZ), gadolinia doped ceria (CGO), lanthanum gallate, and bismuth copper vanadium oxide such as $BiCuVO_x$). Some perovskite materials such as $La_{1-x}Sr_xCO_yO_{3-}$ also show mixed oxide and electron conductivity. The matrix may be impregnated with the electrolyte such as a eutectic salt electrolyte such as hydroxide such as an alkali hydroxide and may further comprise and alkali halide. A suitable exemplary electrolyte is LiOH-LiBr that may be impregnated in MgO solid matrix. The solid matrix may further comprise a particulate matrix such as particles of MgO or other matrix compounds of the disclosure. In an embodiment, the anode comprises an intermittent electrolysis electrode, or a hydrogen sparging or bubbling electrode such as a porous electrode such as a Ni mat electrode. In an embodiment, at least one

of the electrode and electrolyte resists electrolyte flooding. The electrolyte may comprise a matrix to stabilize the electrolyte. The anode may be a mat, tape cast powder such as Ni powder, or other anode material known in the art of molten alkali or carbonate fuel cells having a large pore size having capillary forces that are below the threshold for wicking the electrolyte wherein the electrolyte may comprise a matrix material such as MgO or $Li_2TiO_3$. The electrode may be periodically rinsed to remove flooding electrolyte. The operating conditions may be changed to prevent flooding. For example, the temperature may be adjusted to change the electrolyte viscosity, surface tension, and capillary action to prevent electrode flooding. The hydrogen flow that may be recirculated may be changed to prevent electrode flooding.

In an embodiment, at least one cell component layer such as one of the cathode, anode, and electrolyte are fabricated by tape casting. The tape casting system may comprise a tape casting table, a slurry box, and a doctor blade wherein the latter may further comprise a caliper to adjust the height and thereby the cast film thickness. The cell component layer may be cast on a backer film such as a plastic such as Mylar that may be removed following casting. The slurry may comprise the layer material and a suitable solvent. The cathode and anode slurry may comprise at least one of NiO and Ni, and Ni powders, respectively, suspended in a solvent of a binder such as an alcohol such as polyvinyl alcohol, cellulose, or hydroxypropyl methyl cellulose. A suitable solvent is $H_2O$ that may further comprise a dispersant such as low sulfur ammonium polyacrylate or polyacrylic solution. The tape cast film may be dried with fan or blower, for example. The dried film may then be pressed to compact the film or increase the film density. The pressing may be achieved with a pressing means such as a calender or a press. The pressing may be at high pressure such as about 0.01 to 200 tons per square inch, about 0.01 to 200 MPa, or about 0.5 to 50 MPa. Next, the film may be sintered. The cathode may be sintered in an atmosphere comprising oxygen such as air. The temperature range may be in the range of about 400 to 2000°C or 600 to 800°C. The anode may be sintered in a vacuum, an inert atmosphere, or $H_2$ atmosphere. The temperature range may be in the range of about 400 to 3000°C or 1000 to 2000°C.

The NiO cathode may be lithiated. The mole% Li of the cathode may be in the range of at least one of about 0.1% to 90%, 1% to 75%, and 5% to 50%. In an embodiment, the litiation increases the conductivity. The lithiation may en achieved by methods known to those skilled in the art such as the reaction of an added Li source such as $Li_2O$ or $Li_2CO_3$ to the film. The addition of the Li source may be performed by adding the source to the slurry before casting or after the casting. In an embodiment, the lithiation reaction is achieved at elevated temperature such as during the sintering stage. An exemplary lithiation reaction of $Li_2O$ with NiO when heated in air at an elevated temperature such as about 1200 °C is

$$(1/2)xLi_2O+(1-x)NiO+(1/4)xO_2 \rightarrow Li_x^{+}Ni_{1-2x}^{2+}Ni_x^{3+}O \qquad (55)$$

Exemplary lithiation reactions of $Li_2CO_3$ with NiO to form $Li_xNi_{1-x}O$ solid solution comprising a two step process are

$$(x/2)Li_2CO_{32} \rightarrow (x/2)Li_2O + (x/2)CO_2 \qquad (56)$$

$$(x/2)Li_2O + (1 - x)NiO \rightarrow Li_xNi_{1-x}O \qquad (57)$$

wherein carbonate decomposition occurs at a temperatures higher than about 640°C and the bulk diffusion of lithium oxide into nickel oxide occurs at a fast rate at temperatures higher than about 750°C. An exemplary lithiation reaction of $Li_2CO_3$ with Ni when heated in air at an elevated temperature such as in the range of about 500 to 700°C to form the Ni(Li)O solid solution is

$$(1-x)Ni + (x/2)Li_2CO_3 + (x/4)O_2 \rightarrow Li_xNi_{1-x}O + (x/2)CO_2 \qquad (58)$$

In an embodiment, at least one of the pressing pressure such as one in the range of about 0.01 to 200 MPa or about 0.5 to 50 MPa and the selection of starting materials for an electrode has an effect on its porosity and mean pore diameter. In an embodiment, the parameters that effect porosity and mean pore diameter of the electrode material such as the cathode material such as $Li_xNi_{1-x}O$ are selected such that the porosity is in the range of at least one of about 20 to 90%, 30 to 80%, and 40 to 80%. The parameters may be selected such that the mean pore diameter in micrometers is in the range of at least one of about 0.01 to 100, 0.1 to 50, and 0.1 to 15. In another embodiment, $Li_xNi_{1-x}O$ is formed by reacting nickel hydroxide and lithium hydroxide at elevated temperatures in an oxidizing atmosphere such as air at about 500 to 1000°C or about 700 °C for more than 10 minutes such as about 1 to 10 hours or about 2 hours.

In an embodiment, the anode comprises Ni plaque supported by Ni foam. The anode may be prepared by tape casting Ni plaque from slurry onto Ni foam support. The slurry preparation may comprise the steps of mixing water in excess with dispersant, settling of the powder, decantation of excess water, mixing with a binder or solution comprising a binder such as a cellulose solution that may be aqueous, degassing of the slurry and plaque formation. An exemplary 100 g slurry composition known in the art is about 35-45 g Ni + 35-45 g $H_2O$, 1-3 g cellulose + 10-20 g $H_2O$, and 1 g

dispersant. The tape casting method may comprise at least one of hand pasting, vertical tape casting, and horizontal tape casting. The material may then be dried and sintered thereafter. The drying may be at a temperature in the range of 25 to 150°C and the sintering may be in a non-oxidizing atmosphere such as vacuum or an inert gas or $H_2$ atmosphere. An exemplary sintering procedure in a 100% $H_2$ atmosphere is 1 to 60 minutes at a temperature in the range of about 800 to 1200 °C.

In an embodiment, the NiO cathode material is made conductive. The conductivity may be enhanced by lithiation or by addition of a conductive support such as carbon, carbide, or nitride, or other supports of the disclosure. The carbon may be non-reactive with the electrolyte or resistant to oxidation. Exemplary chemically resistant conductive carbons are nanotuubes and fullerenes.

In an embodiment, electrical contact is made between the cathode material such as an oxygen reduction reaction catalytic material such as NiO and a cathode current collector by a conductive medium such as a conductive adhesive, solder, or paste. Exemplary materials are low melting point metals or alloys such as Hg, Ga, Al, Sn, In, Zn, and Pb. For example, Zn melts at 419 °C and Sn melts at 232 °C, temperatures below the melting point of LiOH-LiBr electrolyte. The conductive medium may be applied on the back of the cathode. The current collector may contact the conductive medium. The current collector may be positioned on the conductive medium such that the latter is sandwiched between the cathode material and current collector.

In an embodiment, the reduction of $O_2$ proceeds through the peroxide pathway involving two-electrons. Suitable cathodes that favor the peroxide pathway are graphite and most other carbons, gold, oxide covered metals such as nickel or cobalt, some transition metal macrocycles, and transition metal oxides. Manganese oxide such as $MnO_2$ may serve as an $O_2$ reduction catalyst. Alternatively, oxygen may be reduced directly to $OH^-$ or $H_2O$ by four electrons. This pathway is predominant on noble metals such as platinum and platinum group metals, some transition metal oxides having the perovskite or pyrochlore structure, some transition metal macrocycles such as iron phthalocyanine, and silver. In an embodiment, the cathode is resistant to corrosion by an alkaline electrolyte such as aqueous or molten alkali hydroxide such as LiOH, NaOH, or KOH. Suitable cathodes comprise NiO.

The electrode may comprise a compound electrode for oxygen reduction and evolution. The latter may be used for regeneration. The electrode may be bifunctional capable of oxygen reduction and evolution wherein the activity is provided by corresponding separate catalyst layers, or the electrocatalyst may be bifunctional. The electrode and cell designs may be those known in the Art for metal-air batteries such as Fe or Zn-air batteries or a suitable modification thereof known by those skilled in the Art. A suitable electrode structure comprises a current collector, a gas diffusion layer that may comprise carbon and a binder, and an active layer that may be a bifunctional catalyst. Alternatively, the electrode may comprise the $O_2$ reduction layers on one side of the current collector and $O_2$ evolution layers on the other side. The former may comprise an outer gas diffusion layer in contact with the source of oxygen and a porous, hydrophobic catalyst layer in contact with the current collector; whereas, the latter may comprise a porous, hydrophilic catalyst layer in contact with the electrolyte on one side of the layer and the current collector on the other side.

Suitable perovskite-type oxides that may serve as catalysts to reduce oxygen from a source may have the general formula $ABO_3$, and such substituted perovskites can have the general formula $A_{1-x}A'_xB_{1-y}B'_yO_3$. A may be La, Nd; A' may be strontium, barium, calcium; and B may be nickel, cobalt, manganese, ruthenium. Other suitable catalysts for reducing oxygen at the cathode are a perovskite-type catalyst such as $La_{0.6}Ca_{0.4}CoO_3$ doped with metal oxide, $MNiO_2$ (M = alkali), $MM'O_2$ (M = alkali, M' = transition metal), $La_{1-x}Ca_xCoO_3$, $La_{1-x}Sr_xCoO_3$ ($0 \leq x \leq 0.5$), or $La_{0.8}Sr_{0.2}Co_{1-y}B_yO_3$ (B =Ni, Fe, Cu, or Cr; $0 \leq y \leq 0.3$), $La_{0.5}Sr_{0.5}CoO_3$,$LaNiO_3$, $LaFe_xNi_{1-x}O_3$, substituted $LaCoO_3$, $La_{1-x}Ca_xMO_3$, $La_{0.8}Ca_{0.2}MnO_3$, $La_{1-x}A'xCo_{1-y}B'_yO_3$ (A' = Ca; B' = Mn, Fe, Co, Ni, Cu), $La_{0.6}Ca_{0.4}Co_{0.8}Fe_{0.2}O_3$, $La_{1-x}A'_xFe_{1-y}B'_yO_3$ (A' = Sr, Ca, Ba, La; B' = Mn), $La_{0.8}Sr_{0.2}Fe_{1-y}Mn_yO_3$, and perovskite-type oxides based on Mn and some transition metal or lanthanoid, or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, organometallic compounds such as colbalt porphyrin, or pyrolyzed macrocycles with Co additives. Suitable pyrochlore-type oxides have the general formula $A_2B_2O_7$ or $A_2B_{2-x}A_xO_{7-y}$ (A = Pb/Bi, B = Ru/Ir) such as $Pb_2Ir_2O_{7-y}$, $PbBiRu_2O_{7-y}$, $Pb_2(Pb_xIr_{2-x})O_{7-\delta}$, and $Nd_3IrO_7$. Suitable spinels are nickel cobalt oxides, pure or lithium-doped cobalt oxide ($Co_3O_4$), cobaltite spinels of the type $M_xCO_{3-x}O_4$ (M = Co, Ni, Mn oxygen reduction) and (M = Co, Li, Ni, Cu, Mn oxygen evolution). The oxygen reduction catalyst may be nickel, R-Ni, silver, Ag-support such as $Ag\text{-}Al_2O_3$, noble metal such as Pt, Au, Ir, Rh, or Ru, nickel cobalt oxide such as $NiCo_2O_4$, and copper cobalt oxide such as $CuCo_2O_4$. The oxygen reduction or evolution catalyst may further comprise a conducting support such as carbon such as carbon black, graphitic carbon, Ketjen black, or graphitized Vulcan XC 72. Exemplary cells are [Zn, Sn, Co, Sb, Te, W, Mo, Pb, Ge /KOH (saturated aq)/air + carbon + $O_2$ reduction catalyst such as perovskite-type catalyst such as $La_{0.6}Ca_{0.4}CoO_3$ doped with metal oxide, $La_{1-x}Ca_xCoO_3$, $La_{1-x}Sr_xCoO_3$ ($0 \leq x \leq 0.5$), or $La_{0.8}Sr_{0.2}Co_{1-y}B_yO_3$ (B =Ni, Fe, Cu, or Cr; $0 \leq y \leq 0.3$), or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, or pyrolyzed macrocycles with Co additives]. In another embodiment, the cathode comprises a water reduction catalyst.

The cathode is capable of supporting the reduction of at least one of $H_2O$ and $O_2$. The cathode may comprise a high-surface area conductor such as carbon such as carbon black, activated carbon, and steam activated carbon. The

cathode may comprise a conductor having a low over potential for the reduction of at least one of $O_2$ or $H_2O$ or $H_2$ evolution such as Pt, Pd, Ir, Ru, Rh, Au, or these metals on a conducting support such as carbon or titanium as the cathode with $H_2O$ as the cathode half-cell reactant.

In an embodiment, the anion can serve as a source of oxygen at the cathode. Suitable anions are oxyanions such as $CO_3^{2-}$, $SO_4^{2-}$, and $PO_4^{3-}$. The anion such as $CO_3^{2-}$ may form a basic solution. An exemplary cathode reaction is Cathode

$$CO_3^{2-} + 4e^- + 3H_2O \text{ to } C + 6OH^- \quad (59)$$

The reaction may involve a reversible half-cell oxidation-reduction reaction such as

$$CO_3^{2-} + H_2O \text{ to } CO_2 + 2OH^- \quad (60)$$

The reduction of $H_2O$ to $OH^-$ + H may result in a cathode reaction to form hydrinos wherein $H_2O$ serves as the catalyst. In an embodiment, $CO_2$, $SO_2$, $PO_2$ and other similar reactants may be added to the cell as a source of oxygen.

The cell may comprise a stack of cells connected in series or in parallel that may have a reservoir to accommodate volume changes in the electrolyte. The cell may further comprise at least one of humidity and $CO_2$ management systems. The metal electrode may be sandwiched between to oxygen electrodes to double the surface area. Oxygen may diffuse from air through a porous Teflon-laminated air electrode comprising an oxygen diffusion electrode. In an embodiment, the electrons from the cathode react with oxygen at catalytic sites of a wetted part of the oxygen diffusion electrode to form reduced water and oxygen species. In an embodiment, the anode is submerged, and the cathode comprises an electrolyte wetted portion and a portion that is in direct contact with the $O_2$ source such as air or $O_2$. In an embodiment, the oxygen reduction current is increased by increasing the material exposed to air for a given electrolyte interface area by adding more air exposed cathode surface area. In an embodiment, the cathode is submerged and oxygen is provided by electrolysis. In an embodiment, the cathode is mostly submerged with a smaller surface area portion exposed to air to supplement that provided by electrolysis to optimize the efficiency of the cell to form hydrinos while avoiding excessive corrosion such as corrosion of the anode. In an embodiment, oxygen and an inert gas mixture are provided to the cell with added $H_2O$ vapor. The oxygen may be in the range of about 0.001 to 10 molar % or about 0.5 to 2 molar %. The oxygen may be in the range of about 1 to 10 molar % with $H_2O$ in the range of about range of about 31 Torr to 93 Torr. In embodiments of the CIHT cell supplied with $H_2O$, the $H_2O$ vapor is in the pressure range of at least one of about 0.001 Torr to 100 atm, about 0.001 Torr to 0.1 Torr, about 0.1 Torr to 1 Torr, about 1 Torr to 10 Torr, about 10 Torr to 100 Torr, about 100 Torr to 1000 Torr, and about 1000 Torr to 100 atm. The balance may be the inert gas such as nitrogen. In an embodiment, $O_2$ is about 5 molar %. In an embodiment, air is membrane or cryofiltered or processed to achieve the desired ratio of gases by means known to those skilled in the art. Oxygen from a source may be supplied by means such as sparging a gas comprising oxygen such as $O_2$ or air or by intermittent electrolysis. The intermittent electrolysis electrodes may be different materials such as different metals or different materials of the disclosure such different electrodes selected from the group of metals, carbides, borides, nitrides, and carbonitrile. In an embodiment wherein the cathode is submerged, oxygen is provided by a source such as the electrolyte wherein the $O_2$ partial pressure is increased by maintaining an elevated $O_2$ pressure over the electrolyte. The elevated pressure may be in the range of about 0.5 atm to 200 atm or about 1 atm to 10 atm. In an embodiment, the electrolyte is selected to have an increased solubility for oxygen. Alternatively, the cathode material is selected such that it has an affinity for oxygen.

In an embodiment, the anode is partially submerged wherein the discharge anode has at least a portion of its surface not submerged into the electrolyte. In an embodiment, at least one electrode is partially submerged. Each electrode is in contact with the electrolyte. In an embodiment, at least one electrode has only a portion of the electrode surface area in contact with the electrolyte. At least some the surface area is not directly in contact with the electrolyte. The non-contacting surface area may be exposed to the cell atmosphere or another component of the cell such as a plate separator or the opposing side of a bipolar plate wherein the electrode comprises a side of a bipolar plate. The condition of having an electrode portion not submerged in the electrolyte provides a different chemical potential, Fermi level, or voltage relative to being submerged or the submerged portion. The different chemical potential, Fermi level, or voltage may facilitate the hydrino reaction.

In an embodiment, the discharge cathode may have at least a portion of its surface not submerged into the electrolyte independently of the cell atmosphere or cathode gas. The cathode gas may at least one of supplied air, oxygen, and $H_2O$ and electrolysis-generated oxygen. The water may comprise at least one of hydrogen, deuterium, and tritium such as at least one of $H_2O$, HOD, $D_2O$, $T_2O$, DOT, and HOT. The cathode gas may be an inert gas such as $N_2$

or a noble gas such as Ar. In this case, the oxygen may be from electrolysis. The partial non-submerged cathode provides a different chemical potential, Fermi level, or voltage relative to a submerged discharge anode even if the two are the same material. The different chemical potential, Fermi level, or voltage facilitates the hydrino reaction. The electrolyte having a discharge cathode partially submerged in it may comprise a matrix such as MgO, $LiAlO_2$, $Li_2TiO_3$, $LiVO_3$, $TiO_2$, $CeO_2$ and others of the disclosure. The electrolyte comprising a matrix may be solid or semisolid at the operating temperature of the cell that may be at or above the melting point of the electrolyte. The electrolyte may comprise those of the disclosure such as a molten salt such as an alkaline salt or a eutectic salt or mixture such as a MOH-MX wherein M is alkali and X is halide. In an embodiment wherein at least one of hydrogen and oxygen may be generated at least partially by intermittent electrolysis, the hydrogen and oxygen are in about a stoichiometric ratio of $H_2O$. In embodiments, the ratio is about 2 part $H_2$ to 1 part $O_2$ within about $\pm$ 300%, within about $\pm$ 100%, within about $\pm$ 50%, within about $\pm$ 25%, or within about $\pm$ 10%. The balance of cell gas may comprise water vapor at a pressure that optimizes the power or achieves a desired power and may further comprise an inert gas such as a noble gas or $N_2$. The water vapor pressure may be maintained in the range of about 0.01 Torr to 10 atm. In another embodiment, the water vapor pressure is maintained in the range of about 31 Torr to 93 Torr. The total pressure may be any desired such as above or below atmospheric such as about 1 atm to 500 atm, about 1 atm to 100 atm or about 1 amt to 10 atm. In an embodiment, the cell comprises at least one channel or passage for $H_2O$ vapor to penetrate the cell stack from a source to contact at least the electrolyte. In an embodiment, $H_2O$ is supplied to the stack through a wick structure such as that of a heat pipe. The wick may comprise nonconductive material to avoid electrically shorting the electrodes. The wick material may comprise an oxide such as a metal oxide or other nonconductive compound. The oxide or other compound may be hydroscopic such as those of the disclosure. In another embodiment, $H_2O$ under pressure as gaseous $H_2O$ or liquid $H_2O$ may be injected through conduits or channels into the electrolyte layers. In an embodiment, the electrolyte layer comprises a wick or capillary structure to transport the $H_2O$ throughput the electrolyte layer of each cell of a stack. The structure may comprise a matrix embedded or mixed with the electrolyte having a porosity and pore size to achieve rapid transport within the layer to maintain the $H_2O$ concentration at an optimal level such as that equivalent to a partial pressure of $H_2O$ vapor in equilibrium with the electrolyte in the range of about 10 to 100 Torr.

In an embodiment, the reaction to form the catalyst comprises a reaction to form $H_2O$ that serves as the catalyst for another H. The energy may be released as heat or light or as electricity wherein the reactions comprise a half-cell reaction. In an embodiment wherein the reactants form $H_2O$ that serves as a catalyst, the reactants may comprise $OH^-$ that may be oxidized to $H_2O$. Exemplary reactions are given in the disclosure. The reaction may occur in the CIHT cell or the electrolysis cell. The catalyst reaction may be favored with $H_2O$ in a transition state to product. The cell further comprises a source of atomic H. The source of H may be from intermittent electrolysis of the electrolyte such as one comprising at least one of hydroxide and $H_2O$. The source may be a hydride, hydrogen gas, hydrogen produced by electrolysis, hydroxide, or other sources given in the disclosure. For example, the anode may comprise a metal such as Zn or Sn wherein the half-cell reaction comprises the oxidation of $OH^-$ to water and metal oxide. The reaction also forms atomic H in the presence of the forming $H_2O$ wherein $H_2O$ serves as a catalyst to form hydrinos. The anode may comprise a hydride such as $LaNi_5H_6$ wherein the half-cell reaction comprises the oxidation of $OH^-$ to $H_2O$ with H provided by the hydride. The oxidation reaction occurs in the presence of H from the H source such as a hydride that is catalyzed to hydrino by the formed $H_2O$. The anode may comprise a combination of a metal and a hydride wherein $OH^-$ is oxidized to $H_2O$ with the formation of a metal oxide or hydroxide, and H is provided by the hydride. The H is catalyzed to hydrino by the forming $H_2O$ serving as the catalyst. In another embodiment, an oxidant such as $CO_2$ or a reductant such as Zn or Al of R-Ni may react with $OH^-$ to form $H_2O$ and H as an intermediate wherein some of the H is catalyzed to hydrino by $H_2O$ during the reaction. In another embodiment, at least one of $H_2O$ and H may form by a reduction reaction of at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. The source of O may be from intermittent electrolysis of the electrolyte such as one comprising at least one of hydroxide and $H_2O$. In another embodiment, at least one of $H_2O$ and H may form by an oxidation reaction involving at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. The reaction may comprise one of those of the disclosure. The reaction may occur in the CIHT cell or electrolysis cell. The reactions may be those that occur in fuel cells such as proton exchange membrane, phosphoric acid, and solid oxide fuel cells. The reactions may occur at the CIHT cell anode. The reactions may occur at the CIHT cell cathode. Representative cathode reactions to form $H_2O$ catalyst and H or form intermediate species that may form $H_2O$ catalyst and H at one or both of the cathode

and anode (reverse reactions) that may occur in aqueous or molten media with dissolved $H_2O$ are

$$O_2 + 4H^+ + 4e^- \text{ to } 2H_2O \quad (61)$$

$$O_2 + 2H^+ + 2e^- \text{ to } H_2O_2 \quad (62)$$

$$O_2 + 2H_2O + 4e^- \text{ to } 4OH^- \quad (63)$$

$$O_2 + H^+ + e^- \text{ to } HO_2 \quad (64)$$

$$O_2 + H_2O + 2e^- \text{ to } HO_2^- + OH^- \quad (65)$$

$$O_2 + 2H_2O + 2e^- \text{ to } H_2O_2 + 2OH^- \quad (66)$$

$$O_2 + e^- \text{ to } O_2^- \quad (67)$$

$$HO_2^- + H_2O + 2e^- \text{ to } + 3OH^- \quad (68)$$

$$2HO_2^- \text{ to } 2OH^- + O_2 \quad (69)$$

$$H_2O_2 + 2H^+ + 2e^- \text{ to } 2H_2O \quad (70)$$

$$2H_2O_2 \text{ to } 2H_2O + O_2 \quad (71)$$

$$2H_2O + 2e\text{-} \text{ to } H2 + 2OH\text{-} \quad (72)$$

$$H_2O + HO_2^- \text{ to } H_2 + O_2 + OH^- \quad (73)$$

$$O_2 + 2OH^- \text{ to } 2HO_2^- \quad (74)$$

$$HO_2^- + H_2O \text{ to } H_2 + O_2 + OH^- \quad (75)$$

$$H_2O \text{ to } 2H_2 + O_2 \quad (76)$$

In another embodiment, the catalyst or source of catalyst such as $H_2O$ and $O_2^{2-}$ and $O_3^{2-}$ may be formed by a reaction of $OH^-$ with $O_2$. Exemplary reactions are

$$1/2O_2 + 2OH^- \text{ to } O_2^{2-} + H_2O \quad (77)$$

$$O_2 + 2OH^- \text{ to } O_3^{2-} + H_2O \quad (78)$$

$$3/2O_2 + 2OH^- \text{ to } 2O_2^- + H_2O \quad (79)$$

In an embodiment, the reduced oxygen species is a source of HO such as $OH^-$ that may be oxidized at the anode of the CIHT cell or produced chemically in the solid fuel reactions. The cell reactants such as the anode reactants of the CIHT cell further comprise $H_2$. The $H_2$ reacts with OH to form H and $H_2O$ in an active state for the $H_2O$ to serve as a catalyst to form hydrinos by reaction with the H. Alternatively, the reactants comprise a source of H such as a hydride or $H_2$ and a dissociator such that H reacts with OH to form the active $H_2O$ hydrino catalyst that further reacts with another H to form hydrinos.

In an embodiment, the cell comprises a molten salt electrolyte that comprises a hydroxide. The electrolyte may comprise a salt mixture. In an embodiment, the salt mixture may comprise a metal hydroxide and the same metal with another anion of the disclosure such as halide, nitrate, sulfate, carbonate, and phosphate. Suitable salt mixtures are $CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH. The mixture may be a eutectic mixture. The cell may be operated at a temperature of about that of the melting point of the eutectic mixture but may be operated at higher temperatures. The catalyst $H_2O$ may be formed by the oxidation of $OH^-$ at the anode and the reaction with H from a source. The source of H may be from intermittent electrolysis of the electrolyte such as one comprising at least one of hydroxide and $H_2O$. Another hydrogen source comprises $H_2$ gas permeated through a metal membrane such as Ni, V, Ti, Nb, Pd, PdAg, or Fe designated by Ni($H_2$), V($H_2$), Ti($H_2$), Nb($H_2$), Pd($H_2$), PdAg($H_2$), Fe($H_2$), or 430 SS($H_2$). Suitable hydrogen permeable electrodes for a alkaline electrolyte comprise Ni and alloys such as LaNi5, noble metals such as Pt, Pd, and Au, and nickel or noble metal coated hydrogen permeable metals such as V, Nb, Fe, Fe-Mo alloy, W, Mo, Rh, Zr, Be, Ta, Rh, Ti, Th, Pd, Pd-coated Ag, Pd-coated V, Pd-coated Ti, rare earths, other refractory metals, stainless steel (SS) such as 430 SS, and others such metals known to those skilled in the Art. An exemplary anode reaction is

Anode

$$1/2H_2 + OH^- \text{ to } H_2O + e^- \text{ or } H_2 + OH^- \text{ to } H_2O + e^- + H(1/p) \qquad (80)$$

In an embodiment, a source of at least one of oxygen and $H_2O$ is supplied to the cell and may be selectively supplied to the cathode. In an embodiment, $H_2$ may be selectively supplied to the anode such that the anode reaction is given by Eq. (80). In an embodiment, at least one of $O_2$ and $H_2O$ may be supplied to the cell. In an embodiment, $O_2$ or $H_2O$ may be added to the cathode half-cell such that the reactions are

Cathode

$$M^+ + e^- + H_2O \text{ to } MOH + 1/2H_2 \qquad (81)$$

$$M^+ + 2e^- + 1/2O_2 \text{ to } M_2O \qquad (82)$$

Then, $H_2O$ may be added such that the reaction is

$$M_2O + H_2O \text{ to } 2MOH \qquad (83)$$

In the case that $O_2$ is supplied, the overall balanced reaction may be combustion of $H_2$ that is regenerated by separate electrolysis of $H_2O$. In an embodiment, $H_2$ is supplied at the anode and $H_2O$ and optionally $O_2$ is supplied at the cathode. The $H_2$ may be selectively applied by permeation through a membrane and $H_2O$ may be selectively applied by bubbling steam. In an embodiment, a controlled $H_2O$ vapor pressure is maintained over the molten electrolyte. A $H_2O$ sensor may be used to monitor the vapor pressure and control the vapor pressure. The sensor may be an optical one such as an infrared emission spectroscopic sensor or those known in the art. The $H_2O$ vapor pressure may be supplied from a heated water reservoir carried by an inert carrier gas such as $N_2$ or Ar wherein the reservoir temperature and the flow rate determine the vapor pressure monitored by the sensor. The cell may run continuously by collecting steam and $H_2$ from the cell such as the unreacted supplies and the gases that form at the anode and cathode, respectively, separating the gases by means such as condensation of $H_2O$, and re-supplying the anode with the $H_2$ and the cathode with $H_2O$. In an embodiment, the water vapor is supplied by a water generator maintained in the temperature range of about 20-100 °C. In another embodiment, the temperature is maintained in the range of about 30 to 50 °C. The water vapor pressure may be maintained in the range of about 0.01 Torr to 10 atm. In another embodiment, the water vapor pressure is maintained in the range of about 31 Torr to 93 Torr.

The cells may further comprise a source of oxygen such as air or $O_2$ gas such as at the cathode. The cells may be regenerated by electrolysis, addition of $H_2$, or mechanically. In an embodiment, the reaction vessel may comprise a material resistant to corrosion by molten hydroxides such as nickel or Monel alloy. In an embodiment, at least one of

the cathode and anode is lithiated such as a lithiated Ni electrode such as Ni comprising LiNiO. In embodiments, the anode of molten salt or aqueous alkaline cells that are discharged continuously or intermittently with a waveform such as charging from a first time and discharging for a second time wherein the current may be maintained constant during at least one of the time periods, the anode may comprise a hydride such as nickel hydride, $LaNi_5H_6$, or $La_2CoNi_9H_6$.

Suitable molten hydroxide electrolytes that form peroxide ions such as $O_2^{2-}$ and $HOO^-$ at the cathode from the reduction of oxygen are LiOH and NaOH. Exemplary reactions to form a hydrino catalyst such as at least one of OH, $H_2O$, $O_2$, nH, and nO (n is an integer) are Cathode

$$O_2 + 2e^- \text{ to } O_2^{2-} \tag{84}$$

$$O_2 + H_2O + 2e^- \text{ to } HO_2^- + OH^- \tag{85}$$

Anode

$$H + HO_2^- \text{ to } H_2O + 1/2O_2 + e^- \tag{86}$$

$$H_2 + HO_2^- \text{ to } H_2O + OH + e^- \tag{87}$$

In an embodiment, the cell reactants comprise a source of peroxide or peroxide. Suitable peroxides are $Li_2O_2$ and $Na_2O_2$. The peroxide or peroxide ions may form a hydrino catalyst such as at least one of OH and $H_2O$. Exemplary reactions pathways are given by Eqs. (61-79) and (80-83). Suitable cells are [Ni($H_2$)/at least one of LiOH and NaOH and possibly another salt such as LiX or NaX (X = halide) and a peroxide or an alkali peroxide such as $Li_2O_2$ or $Na_2O_2$/Ni]. In an embodiment, the electrolyte comprises at least one of a mixture of hydroxides and other salts that favor the formation of one or more oxygen species by the reduction of oxygen. The electrolyte is selected to optimize the reduction of oxygen to the desired oxygen reduction products that further optimizes the dependent catalyst formation and reaction to form hydrinos. In an exemplary embodiment, one or more of NaOH or KOH is added to a eutectic mixture of LiOH-LiBr to optimize the electrical power from forming hydrinos. In another embodiment, $H_2O$ or a source of $H_2O$ is added to the cathode reactants to cause the conversion of higher oxides such as peroxide and superoxide to hydroxide. A suitable reaction is the reduction of $O_2$ and $H_2O$ to form $OH^-$ directly or through an intermediate species such as at least one of peroxide, superoxide, and oxide ions, and $HOO^-$, and HOOH.

In an embodiment, oxygen is reduced to a species at the cathode that serves as the catalyst or a species that serves as an intermediate that further reacts to form the catalyst. The species or a further reaction product may be at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. In another embodiment, the cathode reaction may be concerted with the anode reaction. The cathode reaction involving oxygen may form a species that causes an energy match between H and a catalyst both formed at the anode wherein the H may react to form hydrino. Exemplary species formed at the cathode are $O^-$, $O^{2-}$, $O_2^-$, $O_2^{2-}$, $OH^-$, $HOO^-$, H, $H_2$, O, OH, $H_2O$, $O_2$, $O_3$, and $O_3^-$. The anode reaction may comprise the oxidation of $HO^-$ to at least one of OH, $H_2O$, O, and $O_2$ wherein at least one of the OH, $H_2O$, O, and $O_2$ may serve as the catalyst. In an embodiment, the concerted reaction may comprise the anode reaction of $OH^-$ to at least one of OH and $H_2O$ (Eqs. (90) and (91)), and the cathode reaction may comprise the reduction of $O_2$ to $O_2^{2-}$ (Eq. (84)). A suitable electrolyte to preferentially form $O_2^{2-}$ comprises at least one of LiOH and NaOH. In an embodiment, $H_2O$ is further provided to react with at least one reduced oxygen species. At least one product may be $OH^-$. The source of at least one of oxygen and water may be air. The concentration of one or more of oxygen and $H_2O$ may be controlled to control at least one of the electrical and thermal power outputs from the formation of hydrinos. In an embodiment, the electrical power output of the cell is optimized. In an embodiment, $CO_2$ and CO are removed from the air before flowing into the cell. The removal may be achieved by using a scrubber known to those skilled in the Art. In an embodiment, a

hydroxide electrolyte comprises an additive such as an oxide to suppress carbonate formation from CO and $CO_2$. Suitable additives are high water concentration, oxides of Mg, Sb, and Si, and oxyanions such as pyrophosphate and persulfate. Specific examples are $SiO_2$, MgO, $Sb_2O_3$, $Na_2S_2O_8$, and $Na_4P_2O_7$. In an embodiment comprising a molten electrolyte such as a molten alkali hydroxide salt, carbonate may be removed by reaction with an active metal such as the alkali metal. In an embodiment comprising an intermittently charged and discharged cell, the cell is closed to air that avoids CO and $CO_2$. In an embodiment, the oxygen of at least one half-cell reaction is from electrolysis such as oxidation of at least one of $H_2O$ and $OH^-$.

In an embodiment, the molten hydroxide electrolyte and mixtures comprising a molten hydroxide further comprises an oxide such as an alkaline ($M_2O$) or an alkaline earth oxide (M'O). The concentration may be up to saturation. The oxide may react with the hydroxide or water to form an equilibrium concentration. Exemplary reactions are:

$$Li_2O \text{ to } H_2O \text{ to } 2LiOH \quad (88)$$

$$Li_2O + 2OH^- \text{ to } 2LiO^- + H_2O \quad (89)$$

The molten hydroxide electrolyte may further comprise an alkali metal (M). In an embodiment, the electrolyte comprises a molten hydroxide, optionally another salt, and at least one of M, MH, $M_2O$, $MO_2$, or $M_2O_2$ wherein M is a metal such as an alkali metal. In an embodiment, at least one of the oxide, $H_2O$, peroxide, and superoxide equilibriums are shifted.

In an embodiment, the energy of the cell reaction to form the catalyst such as at least one of $H_2O$, OH, $O_2$, nH, and nO (n = integer) is equivalent to that of the reaction occurring in vacuum. The reaction may occur in a gas or a condensed phase such as a liquid phase or a solid phase. The liquid may be an aqueous or molten salt medium such as an electrolyte. The reaction to form the catalyst may comprise a half-cell reaction. In an embodiment, the counter half-cell reaction to that which forms the catalyst may occur at voltage that is about 0 V relative to a standard hydrogen electrode (SHE). Suitable voltages are in the ranges of about -0.5V to +0.5V, -0.2V to +0.2V, and -0.1V to +0.1V relative to a SHE. The catalyst of the catalyst-forming half-cell reaction may be at least one of $H_2O$, OH, $O_2$, nH, and nO (n = integer). The catalyst forming reaction and the counter half-cell reaction may be
Anode:

$$OH^- + H_2 \text{ to } H_2O + e^- + H(1/p);\ H_2 + 2OH^- \text{ to } 2H_2O + 2e^-; \quad (90)$$

$$OH^- \text{ to } OH + e^-;\ OH \text{ to } O + H(1/p) \quad (91)$$

Cathode:

$$O_2 + 2H_2O + 4e^- \text{ to } 4OH^- \quad (92)$$

The overall reaction may be

$$2H_2 + 1/2O_2 \text{ to } H_2O + 2H(l/p) \quad (93)$$

wherein at least one of $H_2O$, OH, $O_2$, nH, and nO (n = integer) may serve as the catalyst. In the case of a molten hydroxide salt electrolyte, the water partial pressure supplied to the cell may be controlled to favor the $OH^-$ producing reaction over other $O_2$ and $H_2O$ reduction reactions such as those that form at least one of peroxide, superoxide, and oxide. In an embodiment, at least one of the temperature, $O_2$ pressure, $H_2O$ pressure, $H_2$ pressure, and $OH^-$ concentration are controlled to favor the catalyst-forming half-cell reaction and the counter reaction that results in the optimal formation of hydrinos. One or more of the corresponding reactions may be given by Eqs. (90-93). A suitable exemplary cell is [Ni/LiOH-LiBr/NiO] or a similar cell of the disclosure wherein $H_2O$ is supplied to the cell and H is generated by intermittent electriolysis.

In an embodiment, the hydrino reaction occurs at the cathode from nascent H formed during the reaction of a source of H such as $OH^-$, $OOH^-$, or $H_2O$. In an embodiment, nascent $H_2O$ formed during the cathode reaction serves as the catalyst. In an embodiment, hydrinos also form during a cathode reaction of the disclosure such as that of Eq. (92).

In an embodiment, the reaction that forms the $H_2O$ catalyst is about 1.2 volts thermodynamically corrected for the operating temperature. In an embodiment, the voltage of the half-cell reaction to form the catalyst relative to 25 °C and the SHE is about 1.2V. Suitable voltages are in the ranges of about 1.5V to 0.75V, 1.3V to 0.9V, and 1.25V to 1.1V relative to a SHE and 25 °C. The cell may be operated in the temperature range of about 200 °C to 1000 °C or in the range of about 250 °C to 600 °C. Suitable reactions are those that form $H_2O$ wherein $H_2O$ may serve as the catalyst as given by Eqs. (90) and (92) and Eqs. (121) and (122). Suitable electrolytes to achieve the desired voltages are a molten

alkaline or alkaline earth hydroxide that may further comprise another salt such as a halide. Suitable mixtures are eutectic salt mixtures such as an alkali metal hydroxide and halide such as LiOH-LiBr, NaOH-NaBr, and NaOH-NaI. An exemplary alkaline earth hydroxide is $Sr(OH)_2$. Hydrogen may be supplied to the anode by at least one of intermittent electrolysis, permeation, and by bubbling. Suitable acidic electrolytes are aqueous acid electrolytes such as aqueous $H_2SO_4$ or HX (X-halide) or an acidic ionic liquid.

In an alkaline aqueous cell embodiment, the catalyst forming reaction may be given by Eq. (90), and the counter half-cell reaction having a reduction potential relative to the SHE of about 0 V is at least one of

$$O_2 + H_2O + 2e^- \text{ to } HO_2^- + OH^- \quad (94)$$

$$O_2 + 2H_2O + 2e^- \text{ to } HOOH + 2OH^- \quad (95)$$

$$O_2 + e^- \text{ to } O_2^- \quad (96)$$

In an embodiment, the $O_2$ concentration or the cathode material may be altered to achieve a reaction with the desired potential. Suitable exemplary cells are [MH/KOH (aq sat)/SC, Pd, Pt, Au, Ag, or other oxygen reduction cathode + air] and similar cells of the disclosure wherein MH is a metal hydride such as $LaNi_5H_x$. Alternatively, the anode may be a conductor such as Ni, and H is generated by intermittent electrolysis.

In an embodiment, the Ni + $1/2O_2$ to NiO reaction has about the same voltage as the $H_2$ + $1/2O_2$ to $H_2O$ reaction that form hydrinos; so, the NiO reaction may support hydrino formation. The cell temperature may be in the range of 250 °C to 1000 °C. In other embodiments, the anode comprises a material such as a metal that forms a compound comprising oxygen such as at least one of an oxide, hydroxide, or oxyhydroxide such that the cell voltage is about that of the reaction of $H_2$ + $1/2O_2$ to $H_2O$ at cell operating temperature. The voltage may match to within about $\pm$ 0.001 to 0.5 V or about $\pm$ 0.01 to 0.2 V. Moreover, the LiOH is a source of $H_2O$ from 2LiOH to $Li_2O$ + $H_2O$ wherein the H may be converted to hydrinos. The dehydration of LiOH may be catalyzed by oxygen ions from the reduction of $O_2$ that ultimately reacts with the anode metal such as Ni to form an oxide such as NiO.

In an embodiment of an electrolytic cell comprising hydroxide electrolyte such as an aqueous or molten hydroxide or mixture such as an alkali hydroxide such as LiOH, $H_2$ is generated at the cathode, and $O_2$ is generated at the anode by electrolysis of $H_2O$. The hydroxide of the electrolyte may be formed by solution an aqueous base such as a carbonate such as $M_2CO_3$ (M= alkali). The cell may be operated at an elevated temperature such as in the range of about 25°C to 300 °C, but may be operated at higher temperatures. The cell may be pressurized to operate at temperature near boiling and above. In an embodiment, at least one of the reactions of the oxidation of $OH^-$ to $H_2O$ in the presence of H at the cathode and the reduction of at least one of $O_2$ and $H_2O$ to $OH^-$ at the anode occurs with the formation of hydrinos. In an embodiment, the oxygen formed at the anode is reduced with $H_2O$ to $OH^-$ at the anode, and the $H_2$ formed at the cathode reacts with $OH^-$ as it is oxidized to $H_2O$ at the cathode such that the $OH^-$ pathway occurs at the anode and cathode according to Eqs. (92) and (90), respectively. The catalyst may be $H_2O$ formed at the cathode that reacts with the H also formed at the cathode. The cathode may be a metal that forms a hydride such as a noble metal such as Pd, Pt, V, Ta, or Au, or a transition metal or alloy such as Ni or $LaNi_5$. The cathode may perform as a bifunctional electrode to reduce $H_2O$ to $H_2$ and oxidize $OH^-$ to $H_2O$ in the presence of H. The anode may comprise a conductor such as a metal such as a noble metal such as Pt, Pd, or Au, or a transition metal or alloy such as Ni or $LaNi_5$ that performs as a bifunctional electrode to oxidize the aqueous electrolyte to $O_2$ and reduce at least one of $O_2$ and $H_2O$ to $OH^-$. The morphology of the electrode may increase its surface area. Exemplary electrodes such as Ni are wire, sintered, sheet, or mat Ni. In an embodiment, the molten salt cell having an alkaline electrolyte such as one comprising at least one of hydroxide and carbonate comprises an anode that comprises at least one of nickel, nickel oxide, cobalt, cobalt oxide, and chromium-doped nickel, a cathode that may be nickel, NiO, cobalt, cobalt oxide, Ag, silver oxide such as $Ag_2O_2$, Ag-doped Ni, and lithiated nickel oxide, and may comprise an electrolyte support such as MgO, $Li_2TiO_3$, or $LiAlO_2$. An electrode such as the anode may comprise NiO and another compound that stabilizes NiO such as MgO or $Fe_2O_3$ that may form $Ni_{1-x}Mg_xO$ and $NiFe_2O_4$, respectively. In an embodiment, an electrode such as the anode such as NiO may stabilized by increasing the basicity by a source such as a source of $O^{2-}$. Suitable sources to increase the basicity of the electrolyte are MgO, CdO, ZnO, $Fe_2O_3$, NiO, $Li_2O$, $MoO_2$, $SiO_2$, $Al_2O_3$, $Cr_2O_3$, $TiO_2$, $ZrO_2$, $WO_2$, and similar oxides that serve as a source of $O^{2-}$. The another compound may be added to the electrode or may comprise an electrolyte additive or matrix. The hydrino reaction current contribution is in the direction opposite that of the electrolysis current and may result in additional heat production in the cell. In an embodiment, the current is reversed intermittently during change and discharge phases of a cycle. In another embodiment, at least one gas may crossover between half-cells such that at least one of reactions given by Eqs. (90) and (92) occur to form hydrinos. The electrode separation may be

minimal to facilitate gas crossover. The gases may crossover in the cell such that the $OH^-$ system given by Eq. (92) at least partially occurs at the cathode and the $OH^-$ system given by Eq. (90) at least partially occurs at the anode. The catalyst may be $H_2O$ formed at the anode from crossover H that reacts with the additional H that crosses over from the cathode to the anode. The anode may be a metal that forms a hydride such as a noble metal such as Pd, Pt, or Au, or a transition metal or alloy such as Ni or $LaNi_5$ that performs as a bifunctional electrode to oxidize the aqueous electrolyte to $O_2$ and oxidize $OH^-$ to $H_2O$ in the presence of crossover hydrogen. The cathode may be a metal that forms a hydride such as a noble metal such as Pd, Pt, or Au, or a transition metal or alloy such as Ni or $LaNi_5$. The cathode may perform as a bifunctional electrode to reduce $H_2O$ to $H_2$ and may additionally reduce at least one of crossover $O_2$ and $H_2O$ to $OH^-$. Thus, the cathode may comprise at least one of an oxygen and $H_2O$ reduction catalyst. At least one of electrical and thermal energy is released by the crossover reactions wherein the current has the same polarity as that of the electrolysis current, but the voltage is of the opposite polarity. Thus, in the case that constant current electrolysis is performed, in an embodiment, the cell voltage decreases and the cell temperature increases. An exemplary electrolysis cell is [Pt/LiOH 0.1M to saturated aq/Pd]. In other embodiments, both electrodes are Ni or one is Ni and the other a different material such as Pt, Pd, DSA material, other noble metal, carbon, Ag, a material of the disclosure, or a one or more of these materials or others of the disclosure on a support such as Pt/Ti and the electrolyte is aqueous (aq) KOH or $K_2CO_3$ in the concentration range of about 0.1M to saturated. Specific examples are [PtTi/$K_2CO_3$ or KOH 0.1M to saturated aq/Ni].

In an embodiment, the electrolyte comprises an aqueous solution. The solution may comprise a basic solution. The electrolyte may comprise an aqueous hydroxide or carbonate such as at least one of KOH and $K_2CO_3$. At least one electrode may be selected from the group having low water reactivity such as Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, and Zn.

In an embodiment, at least one electrode such as the anode comprises a hydroxide such as a transition or inner transition element or alkaline earth hydroxide such as $Ni(OH)_2$, $Co(OH)_2$, $Cu(OH)_2$, $Ca(OH)_2$, $Sr(OH)_2$, or In, Sn, Pb, As, Sb, or Bi hydroxide such as $Bi(OH)_3$. Exemplary cells are [$Ni(OH)_2$ Co/KOH (aq)/NiO], [$Ni(OH)_2$ Co Cu/KOH (aq)/NiO], [$Co(OH)_2$ Co/KOH (aq)/NiO], [$Co(OH)_2$ Co Cu /KOH (aq)/NiO], and [$Ca(OH)_2$ Co/KOH (aq)/NiO].

In an embodiment, the aqueous electrolyte may comprise a mixture of at least one hydroxide and at least one halide such as a mixture of alkali metal or alkaline earth hydroxides and halides such as aqueous LiOH-LiBr. An exemplary cell is aqueous CIHT cell [Ni or Pt/Ti/LiOH-LiBr (aq)/Ni].

In embodiments, the water added to the cell or aqueous solvent may comprise $H_2O$, $D_2O$, $T_2O$, or water mixtures and isotope mixtures. In an embodiment, the temperature is controlled to control the rate of the hydrino reaction and consequently the power of the CIHT cell. A suitable temperature range is about ambient to 100°C. The temperature may be maintained about >100°C by sealing the cell so that pressure is generated and boiling is suppressed.

In an embodiment such as at least one comprising a molten salt or aqueous electrolytic cell, the cell is charged at a constant voltage per cell that corresponds to the negative of the cell potential for the reaction of $H_2$ and $O_2$ to $H_2O$. The charging potential may comprise the $H_2O$ electrolysis potential having overpotential as well as thermodynamic voltage components. The cell may also be charged at a constant current, power, or load, or a variable voltage, current, power, or load. The cell may then be discharged at constant voltage, current, power, or load. The constant voltage may be achieved using a load that maintains the desired discharge voltage. In other embodiments, the discharge may be at a variable voltage, current, power, or load that may be controlled with at least one of a voltage, current, power, and load controller. The voltage and current parameters may comprise a ramp in either direction such as from a minimum to a maximum while charging and a maximum to a minimum while discharging, for example. In an embodiment, the discharge is under conditions that maximize the hydrino reaction rate by matching the half-cell reduction potentials to those that achieve the optimization. In an embodiment, the discharge is maintained at a constant voltage per cell that corresponds to cell potential for the reaction $H_2$ and $O_2$ to $H_2O$. The matching potential may comprise overpotential as well as thermodynamic voltage components. In other embodiments, at least one of the voltage and current is variable to achieve the discharge voltage that causes the hydrino catalyst reaction to occur at the maximum rate. The cell potential is the difference of the half-cell reduction potentials that may comprise overpotential as well as thermodynamic voltage components. The frequency and other charge-discharge parameters may be adjusted to maximize the hydrino catalysis reaction rate. In an embodiment, the waveform of the cycle is conditioned to match a suitable load or a load is matched to the waveform. In an embodiment, the charge-discharge frequency may be that of the standard such as that of the power grid. The frequency may be 50 Hz, or it may be 60 Hz. The waveform may be conditioned to alternating current such as alternating current at 60 Hz or 50 Hz. The frequency may involve reciprocal charging between two cells that are out of phase of the charge-discharge cycle such that one may charge another and vice versa. In another embodiment, the current may be rectified. The current may be supplied to a load during the discharge as direct current that may be about constant current. Multiple CIHT cells may be timed to provide constant current over durations longer than that of the cycle of any given individual cell.

In an embodiment, the cell generates at least one of hydrogen and oxygen from $H_2O$. In an embodiment, the $H_2$ and $O_2$ may be formed on the discharge anode and cathode, respectively, during intermittent electrolysis. Alternatively,

the gases are formed from $H_2O$ spontaneously that may be independent of electrolysis. The energy to drive the spontaneous production of at least one of $H_2$ and $O_2$ from $H_2O$ is the formation of hydrinos. At least one of the gases, $H_2$ and $O_2$, are reactants to form at least one of the catalyst and hydrinos. The mechanism may involve at least one of an electrochemical and an ionization reaction. The catalyst such as $H_2O$ may be formed during discharge that further reacts with H to form hydrinos. The reaction to form $H_2O$ during discharge may be reversible at any stage of the cell operation such that H is formed at the discharge anode directly and, optionally, independent of that formed by electrolysis. In addition or alternatively, to the electrolysis of $H_2O$ to $H_2$ and $O_2$ at the discharge anode and cathode, respectively, H formation may be spontaneous due to the energy that is released to form hydrinos wherein both reactions may occur simultaneously. In an embodiment, the cell voltage is such that the electrolysis of $H_2O$ occurs spontaneously with hydrino formation. The hydrino reaction may at least partially maintain or support the cell voltage that achieves at least one of propagation of the electrolysis of $H_2O$ and propagation of the hydrino formation reaction. In an embodiment, the cell voltage is about 0.8 ± 0.5V. The exemplary cell comprising [Ni/LiOH-LiBr with optional matrix such as MgO/Ni] and a supply of $H_2O$ may be operated in the temperature range of about 280-500 °C with a cell voltage of about 0.8 V ± 0.2V. The voltage may be assisted by at least one of intermittent electrolysis and spontaneous electrolysis with hydrino formation. An exemplary cell waveform of the intermittent electrolysis may comprise a step of charge to 0.8 V ± 0.2V and maintain that voltage for a set time as the cell discharges. The cell waveform may further discharge the cell under conditions such as at a constant current to a limiting voltage such as 0.6 V ± 0.2V or for a limiting time such as 4s ± 3s. The spontaneous electrolysis of $H_2O$ may have one or more intermediate steps that involve a reaction of at least one of the anode material, the electrolyte, and a solid, liquid, and gas in the cell. For example, $H_2O$ may react with the anode metal M to form MO and $H_2$. Exemplary solids, liquids, and gases are solid matrix such as MgO, $LiAlO_2$, $Li_2TiO_3$, $LiVO_3$, $CeO_2$, $TiO_2$, and others of the disclosure, $H_2O_2$, $O_2$, $CO_2$, $SO_2$, $N_2O$, NO, and $NO_2$. Alternatively, the electrolyte may be at least one of oxidized and reduced, and $H_2O$ is also a reactant. Exemplary spontaneous $H_2O$ electrolysis reactions are

Discharge Anode:

$$2OH^- \text{ to } 2H + O_2^- + e^- \quad (97)$$

$$2H \text{ to } 2H(1/p) \quad (98)$$

wherein $H_2O$ catalyst is formed by the reaction of Eq. (90), for example.

Discharge Cathode:

$$O_2^- + H_2O + e^- \text{ to } 1/2O_2 + 2OH^- \quad (99)$$

The overall reactions may be

$$H_2O \text{ to } 1/2O_2 \text{ and } 2H(1/p) \quad (100)$$

$$H_2O \text{ to } 1/2O_2 \text{ and } H_2 \quad (101)$$

Other exemplary spontaneous $H_2O$ electrolysis reactions are

Discharge Anode:

$$2OH^- \text{ to } H + HOO^- + e^- \quad (102)$$

$$H \text{ to } H(1/p) \quad (103)$$

wherein $H_2O$ catalyst is formed by the reaction of Eq. (90), for example.

Discharge Cathode:

$$HOO^- + 1/2H_2O + e^- \text{ to } 2OH^- + 1/4O_2 \quad (104)$$

The overall reaction may be given by Eqs. (100) and (101).

Discharge Anode:

$$3OH^- \text{ to } O_2 + H_2O + H + 3e^- \quad (105)$$

$$H \text{ to } H(1/p) \quad (106)$$

wherein $H_2O$ catalyst is also formed by the reaction of Eq. (90), for example.

Discharge Cathode:

$$3/4O_2 + 3/2H_2O + 3e^- \text{ to } 3OH^- \quad (107)$$

The overall reaction may be given by Eqs. (100) and (101). The hydrogen and oxygen of Eqs. (97), (99), (102), (104), and (105) may react to form $H_2O$ and $OH^-$ according to Eqs. (90) and (92), respectively. Other oxygen species such as oxide, peroxide, superoxide, and $HOO^-$ and reactions given in the disclosure such as (Eqs. (61-79)) may be involved in the spontaneous electrolysis of $H_2O$ to form a source of at least one of H, catalyst, and hydrinos. In an embodiment, H may be formed at the discharge anode and cathode wherein hydrinos are preferentially formed at one electrode such as the anode since the catalyst is formed there. An exemplary cell is one having a Ni discharge anode and a NiO discharge cathode wherein hydrinos are preferentially formed at the Ni electrode. In addition to the reactions supra, the reaction at the discharge cathode may be reduction of $H_2O$ to $OH^-$ and $H_2$, and the reaction at the anode may be the oxidation of $OH^-$ as given in the reactions above and may further comprise the reaction to form metal oxide or hydroxide of the anode. Alternatively, an oxide such as a metal oxide such as NiO may be reduced at the cathode. The reduction may also include other reactants such as $H_2O$. Exemplary reduction reactions are NiO to Ni and negative ions comprising oxygen such as oxide, peroxide, and superoxide and reduction of NiO and $H_2O$ to Ni and hydroxide. Additionally, in an embodiment, the catalyst such as $H_2O$ is formed at the discharge anode. The cell may be run in continuous discharge mode in an embodiment wherein the spontaneous generation of H and then hydrinos is sufficient to maintain a desired electrical output from the cell. $H_2O$ may be supplied to the cell to maintain the electrical output. Alternatively and in combination, the cell may be run with intermittent electrolysis according to systems and methods of the disclosure. Any excess hydrogen from intermittent or spontaneous electrolysis may be collected for another commercial use. In an embodiment, the excess current maintained by the energy from the hydrino reaction may be manifest as or propagate as the spontaneous electrolysis of water as exemplified by the reactions of Eqs. (97-107). In an embodiment, the hydrino reactions involving the conversion of $H_2O$ to hydrinos, electricity, and oxygen or compounds or species comprising oxygen may comprise hydrolysis reactions.

In an embodiment, the water vapor pressure is controlled to maintain spontaneous electrolysis reactions. The water vapor pressure or composition of the reaction mixture may be maintained to support the ions that maintain the spontaneous electrolysis such as at least one of $OH^-$, oxide, peroxide, superoxide, and $HOO^-$. Certain ions are preferentially maintained to favor the electrolysis of water, the formation of catalyst and H, and the formation of hydrinos. In the exemplary reactions of Eqs. (97-107), the water vapor pressure is maintain to support a steady state concentration of superoxide ion for the corresponding reaction pathway to form hydrinos. The water vapor pressure may be controlled using a water vapor or steam generator wherein the temperature of the water reservoir is maintained at the lowest temperature of the system. The system may comprise the water generator, the water vapor line to the cell, and the cell. The water vapor pressure in equilibrium or at steady state with the reactants may be in the range of about 1 microTorr to 100 atm, about 1 milliTorr to 1 atm, or about 1 Torr to 100 Torr.

In an embodiment, at least one anion of the electrolyte may be reversibly oxidized and reduced to carry at least some of the excess current powered by the energy from the hydrino reaction. The anion may comprise halide such as at least one of $I^-$ and $Br^-$. At least one of $I_2$ and $Br_2$ may form at the discharge anode, and at least one of $I^-$ or $Br^-$ may form at the discharge cathode. The electrolyte may comprise a molten salt that may comprise a mixture such as one of a hydroxide and a halide such as one comprising an alkali metal cation such as LiOH and at least one of LiI and LiBr. The electrolyte may further comprise a matrix such as MgO. The cell may be at least partially closed to retain the halogen gas such that it may undergo reduction. The cell may be further supplied with at least one of a source of oxygen such as $O_2$ and a source of hydrogen such as $H_2O$. The supply may be continuously or intermittently. The reaction of the electrolyte compound such as a halide with at least one of oxygen and $H_2O$ may have a voltage of about zero volts under the operating conditions of the cell. The voltage may be about zero volts in the range of at least one of $\pm$ 1 V, $\pm$ 0.5 V, $\pm$ 0.25 V, $\pm$ 0.1 V, and $\pm$ 0.05 V. The reaction to form halogen gas may be

$$2LiI + 1/2O2 \text{ to } Li_2O + I_2 \quad (108)$$

In another embodiment, the excess ion current powered by the energy from the hydrino reaction is carried by a chalcogenide such as oxide ions or sulfide ions as given in the disclosure.

In an embodiment, the cell is supplied with a source of oxygen such as $O_2$ gas. The oxygen may be substantially dry. The $H_2O$ content may be at least one of less than 10 mole %, 5 mole %, 3 mole %, 2 mole %, 1 mole %, 0.1 mole %, 0.01 mole %, 0.001 mole %, and 0.0001 mole %. The $O_2$ gas may be supplied with an inert gas such as noble gas

such as argon or nitrogen. The $O_2$ content may be at least one of in the range of about 0.01 to 99.9 mole %, about 0.1 to 80 mole %, about 1 to 60 mole %, about 1 to 50 mole %, about 1 to 30 mole %, and about 1 to 20 mole %. The source of H to form hydrinos may be from the electrolyte such as one comprising a hydroxide such as an alkali hydroxide such as LiOH. The electrolyte may become dehydrated during discharge. The dehydrated electrolyte may be rehydrated by supplying the cell with $H_2O$ from a source such as one of those of the disclosure. The rehydration may be performed continuously or in a batch process. The cell may be cooled to a lower temperature and supplied with $H_2O$ to rehydrate the electrolyte. The cell may then be raised in temperature to the operating temperature. The cell may be continuously discharged or charge and discharged intermittently. The waveform and other charge and discharge parameters may be those of the disclosure.

In an embodiment, the cell is supplied with a source of oxygen such as $O_2$ gas. The $O_2$ reactivity is highly dependent on the concentration. In an embodiment, the oxygen species formed by the cell reactions such as the cell electrolysis and discharge reactions such as the hydrino reaction and the corresponding concentrations are controlled by controlling the amount of oxygen supplied to the cell or formed in the cell. In an embodiment, the oxygen concentration is selected and controlled to propagate the hydrino reactions without damage to the anode. The $O_2$ content may be at least one of less than about 10 mole %, 5 mole %, 3 mole %, 2 mole %, 1 mole %, 0.1 mole %, 0.01 mole %, 0.001 mole %, and 0.0001 mole %.

The electrolyte may be a molten salt or an aqueous alkaline solution such as an aqueous hydroxide or carbonate electrolyte such as an alkali metal hydroxide or carbonate or mixtures thereof in any desired ratios. The electrolyte such as an aqueous electrolyte may comprise mixtures of $M_2CO_3$, MOH, $M_2SO_4$, $M_3PO_4$, $MNO_3$ (M = alkali). Exemplary electrolytes are KOH, $K_2CO_3$, NaOH, $Na_2CO_3$, LiOH, and $Li_2CO_3$ or mixtures thereof that may be in the concentration range of about 0.01 M to saturated. In a pulsed or intermittent applied voltage or current electrolysis embodiment, at least one of the cathode and anode may comprise a bifunctional electrode. The electrodes may comprise different materials to achieve the desired reactions. Each of the cathode and anode that may be selective for the desired oxidation or reduction reaction and may be one of or combinations of a transition metal or alloy such as Ni or $LaNi_5$, carbon, carbon-coated Ni, noble-metal doped carbon such as Pt/C or Pd/C or other metal-doped carbon such as Mo or Ni doped carbon, Pt-Ni alloy, Pt-coated Ni, Ag, Pb, and a noble metal or alloy such as Pt, Pd, or Au. Other stable conductors with the appropriate capability for oxidation and reduction are those known by those skilled in the art. The hydrogen electrode such as the negative electrode may comprise a hydrogen spillover catalyst such as Pt or Pd/C or other high surface area supports doped with a hydrogen dissociator. The hydrogen electrode may comprise a metal or an alloy that provides a low overpotetial for $H_2$ evolution such as an alloy of at least two of Ni, Fe, Co, and Mo such as $Ni_{35.63}Fe_{24.67}MO_{23.52}CO_{16.18}$ or similar ratios. The electrode may be a carbide, boride, or nitride such as ZrC or TiC; carbon black, AC, ZrC, TiC, TiN, $Ti_3SiC_2$, TiCN, SiC, $YC_2$, TaC, $Mo_2C$, WC, C, HfC, $Cr_3C_2$, ZrC, VC, NbC, $B_4C$, $CrB_2$, $ZrB_2$, $GdB_2$, $MgB_2$, and $TiB_2$ that may be doped with a conductor. The electrodes may comprise at least one of bifunctional and bimetallic cathodes and anodes. The hydrogen electrode or anode may comprise Ni such as Ni celmet, Ni fiber mat, Ni power, Mo, Mo gauze, Mo fiber mat, Mo powder or any combination thereof or other high surface area material. The electrode may be activated by the formation of at least one of an oxide coat and incorporation of a species from the electrolyte such as an alkali ion such as in the case of the formation of exemplary lithiated nickel oxide. The oxide coat may be formed by the operation of the electrode in at least one of a partial oxygen atmosphere and by exposure to a source of oxygen. The cell may be intermittently charged and discharged with an initial charge of oxygen that is depleted over time. The depletion may be with the flow of an inert gas such as a noble gas or $N_2$. The oxide coat may be formed by pretreatment of the electrode such as the anode in a suitable oxidizing solution. An exemplary suitable solution to form an oxide layer on Ni is an alkaline solution of peroxide such as 0.6 M $K_2CO_3$/3% $H_2O_2$. The activation may change the voltage of at least one half-cell reaction such that the reaction to form hydrinos becomes more favorable. The activation may comprise a voltage change of a half-cell reaction involving an electrolyte wherein the catalyst reaction to form hydrinos becomes favorable when in the absence of activation it is unfavorable. In an embodiment, the electrolyte is at least one of involved in a half-cell reaction of the cell and is a reactant to form at least one of the catalyst and H. The activation may involve conforming the energy of the catalyst during its formation from the electrolyte to match that required to accept energy from hydrogen to form hydrinos. Exemplary electrolytes are alkali hydroxides or mixtures of salts such as a mixture of a hydroxide and another salt such as a halide. Exemplary electrolyte mixtures of an activated cell may comprise LiOH-LiBr, NaOH-NaBr, KOH-KBr, and other combinations of hydroxides and halides such as the alkali ones. Other metals of the disclosure comprising an oxide coat formed to activate the electrode for forming hydrinos may serve as the hydrogen electrode or anode. In another embodiment, the electrolyte may be activated. The activation may be by exposure to oxygen or a source of oxygen. The activation may comprise the formation of oxygen species such as at least one of oxide, peroxide, and superoxide. The electrolyte may comprise a hydroxide such as an alkali hydroxide and may further comprise another salt such as a halide such as an alkali halide. An exemplary electrolyte that is activated by exposure to oxygen at elevated temperature such as in the range of about 100 °C to 1000 °C is KOH-KBr. The formation of oxygen species may change the basicity that favors the formation of hydrinos. In another embodiment, at least one of the half-cell reaction and voltage is changed by the activation to favor the formation of

hydrinos. In an embodiment, oxygen or a source of oxygen is added to the cell to cause the activation. The oxygen may be in trace amount such as in the range of 0.1 ppm to 10 vol% but sufficient to maintain an oxide coat on an electrode such as the anode to enhance the hydrino reaction. The mechanism of the enhancement may comprise at least one of the provision of atomic H and the conforming of the half-cell reaction voltage of at least one half cell to match one more favorable to permit H catalysis to form hydrinos. The oxygen may affect the half-cell voltages such as at least one of the $O_2$ reduction reaction such as the reaction of $O_2$ and $H_2O$ to $OH^-$ and that of the anode to form $H_2O$. The effect may be direct through the H and O chemistry or indirect by changing the electrode surface by means such as formation of an oxide coat. The oxide coat may effect the over potential of at least one half-cell reaction to cause the hydrino formation reaction to become more favorable.

In an embodiment, the discharge cathode is regenerated by reacting it with an oxidant such as oxygen supplied to the cathode. The regeneration may be performed intermittently when necessary. Suitable exemplary cathode materials are oxygen reduction catalysts such as NiO, Ag-doped NiO, Ag, AgO and others of the disclosure. The oxidant such as oxygen may be supplied to the cell. In that case, the discharge anode may be protected from oxidation by applying a sufficiently negative voltage to the anode to prevent it from oxidizing. The anode may be Ni or a Ni alloy such as Ni-Cr such as 98/2%. The sufficient voltage may be above that predicted by the Nernst example, such as above 0.863 V for a Ni anode, 1 atm $O_2$, and a cell temperature of 800 K. The oxidant such as oxygen may be removed by means such as pumping and the cell restored to normal operation.

In an embodiment, a source of oxygen such as $O_2$ gas is flowed into the cell. The oxygen may at least one of increase the cell discharge potential, increase the oxygen reduction rate, increase the cell current, and be at least partially consumed during discharge. The $O_2$ flow rate may be adjusted to maintain a pressure that supports a proper cell voltage that is sufficiently negative at the anode such that the anode is protected from at least one of oxidation and corrosion. A proper cell voltage may be one near, at, or above the voltage for the oxidation of the anode conductor such as a metal or alloy such as Ni with $O_2$ at the supplied pressure. The $O_2$ pressure may be monitored with a suitable oxygen sensor, and the flow rate adjusted to maintain the proper cell voltage. Alternatively, the charge and discharge parameters such as peak and minimum voltage, intermittent charge-discharge frequency, and charge and discharge currents may be adjusted in addition to or independently of adjusting the $O_2$ pressure to maintain an anode-protective voltage. In an embodiment, the cell volume may be limited such that an $O_2$ inventory may be substantially consumed during discharge. The $O_2$ inventory may be replenished during the charge or another phase of the cell cycle. In an embodiment, the limited cell volume is such that the $O_2$ pressure drops to a level such that the Nernst equation voltage is below the cell discharge voltage. The $O_2$ may diffuse into the limited volume during charging through a controlled valve. The $O_2$ partial pressure may be monitored using a sensor such as a mass spectrometer.

In an embodiment, at least one of the anode and cathode materials may be different between at least two different bipolar plates of a stack of cells. The different materials cause a difference in cell voltage. The difference in cell voltage of one cell relative to the at least one different cell having the different bipolar plate may protect at least one cell electrode from corroding. The different materials may be alternated throughout the stack to prevent electrode corrosion of at least one of the anode and cathode. The alternating anode materials may comprise different anodes comprising Mo and Mo alloys such as at least one of MoNi, MoCu, MoB, MoC, MoSi and others of the disclosure.

Exemplary electrodes are an anode comprising one of Ni, Ni-Al, or Ni-Cr alloy such as about 10% Cr and a cathode comprising at least one of NiO, Ni, Co, CoO, Ag, and Cu. The Ag cathode may be Ag particles dispersed on carbon. Optimal loading is in the range of about 20 to 30 wt%. The anode may comprise a metal that forms an oxide wherein the free energy of formation per at least one of metal atom or oxygen atom is about the same as that of the formation of $H_2O$ from $H_2$ and $O_2$. The energies may match within about 10% to 300% or about 10% to 100% or about 10% to 50%. Exemplary metals are Ni, Mo, Cd, Sn, W, and Pb. Other suitable anode metals or alloys thereof are at least one selected from the group of Cu, Ni, CuNi, NiMo, CuMo, Pb, Sb, Bi, Co, Cd, Ge, Au, Ir, Fe, Hg, Mo, Os, Pd, Re, Rh, Ru, Se, Ag, Tc, Te, Tl, and Sn. In an embodiment, both the cathode and anode are substantially submerged such that most if not all of the oxygen consumed during discharge is generated during electrolysis of an intermittent electrolysis cell. Exemplary cells are [at least one of Cu, Ni, Pb, Sb, Bi, Co, Cd, Ge, Au, Ir, Fe, Hg, Mo, Os, Pd, Re, Rh, Ru, Se, Ag, Tc, Te, Tl, or Sn /LiOH-LiBr/Ni/NiO intermittent electrolysis]. In an embodiment, at least one electrode such as the anode may be magnetized. The magnetized electrode may comprise a ferromagnetic metal such as Ni, Fe, Co, or alloys. In an embodiment, the anode may comprise layers of different materials such as conductors such as metals. The anode may comprise a bimetallic or multi-metallic electrode. One layer may establish an optimal voltage to provide a favorable energy for the hydrino reaction to propagate, and the other may carry the current. Exemplary materials to form a bimetallic electrode such as an anode are at least two of Ni, Mo, and H242 alloy. The cathode may also comprise multiple layers such as a multi-metallic such as a bimetallic electrode such as one comprised of Ni and Ag or other combinations of cathode materials of the disclosure.

The cathode may comprise an oxygen reduction electrode such as manganese oxide such as $MnO_2/C$, $Mn_2O_3/C$, or MnOOH. Other suitable $O_2$ reduction cathodes are at least one of Pt/C or Pt alloy/C such as PtRu/C, $La_{0.5}Sr_{0.5}CoO_3/C$, CoTPP/C, $La_{0.6}Ca_{0.4}CoO_3/C$, Pt/CNT/C, $Pr_{0.8}Ca_{0.2}MnO_3$, CoTMPP/C, $LaMnO_3/C$, and $MnCo_2O_4/C$. Since the discharge

anode also serves as the electrolysis cathode during the intermittent cycle, in addition to conventional electrodes, different discharge anode materials may be used than in conventional alkaline fuel cells. Candidates are other transition metals such as Ti and V, inner transition metals and alloys such as Nb and Hg and amalgams such as AgHg, rare earths and alloys such as $LaNi_5$, and Group III, IV, V, and VI metals or metalloids and alloys. In an embodiment, the discharge anode comprises a material that forms a stable hydride. Suitable anode materials comprise a porous material such as a powder. The powder may comprise stabilizers or inhibitors to loss of activity. The loss of activity may be from loss of surface area by mechanisms such as sintering. Suitable stabilizers or inhibitors are alloys such as Ni-Cr alloy such as about 2 to 10 wt% Cr, and zirconia such a 20 wt% $ZrO_2$ added to porous Ni or Co, for example. Further suitable anode materials comprise $LiFe_5O_8$, $LaCrO_3$, MnO, and Nb or Ta doped $TiO_2$, Ni or Cu plated ceramics such as $LiAlO_2$ or $Al_2O_3$ and $SrTiO_3$. Suitable cathode materials comprise NiO, CoO, $MNiO_2$, $M_2NiO_2$, $MCoO_2$, $M_2CoO_2$, $MFeO_2$, $M_2FeO_2$, $Li_2MnO_3$, Mg-$Li_2MnO_3$, Mn-$LiFeO_2$, $LaMnO_3$, $SrTiO_3$, $LiCrO_2$, $LiAlO_2$, $LaNiO_3$, $LaCoO_3$, Zr-ZnO, $MM'O_2$, $M_2M'O_2$, $MM'O_x$, $M_2M'O_x$ (x = integer, M = alkali, M' = transition metal or other metal such as Al), and $M_2M'O_x$ doped with magnesium such as $LiFe_{1-y}Mg_yO$ (y > 0.03). In an embodiment, the electrode porosity is in the range of about 20 to 95% or about 50 to 75%. The pore diameter may be in the range of about 1 to 50 $\mu$m or about 3 to 10 $\mu$m.

Suitable oxygen reduction reaction (ORR) catalysts of electrodes such as cathodes comprise at least one of Ni, Ni-Al alloy such as about 5-15 at% Al, $Ni_3Al$, and Ni-Nb alloy, $MnO_2$, Ag, mixed valence $CoO_x$-$MnO_x$, metal tetra-methoxylphenyl porphyrine such as (CoTMPP, FeTMPP-Cl/C), metal nitride, and mixed oxides of transition metals such a spinels, perovskites, and pyrochlores such as $A_2B_2O_6O'$. In an embodiment, exemplary ORR catalysts are based on individual oxides or mixtures or have a spinel, perovskite, or pyrochlore structure such as NiO, NiO/Ni, NiO + at least one of Dy (e.g. about 1-10 wt%), $Co_3O_4$, $La_2O_3$, MgO, and $Fe_2O_3$, lithiated NiO, Ni on a support such as PTFE, $MnO_2$, Ag, $Co_3O_4$, $La_2O_3$, $LaNiO_3$, spinels $AB_2O_4$ such as A = Mn, B = Co, $NiCo_2O_4$, $LaMnO_3$, and $LaNiO_3$. At least one of the anode and cathode may be lithiated NiO wherein the designation of a Ni electrode in the disclosure may comprise at least partially NiO and optionally partially lithiated NiO $(Li_x^{+}Ni_{1-2x}^{2+}Ni_x^{3+}O \ \ x< 0.5)$ or lithium doped NiO as well as Ni. The electrode such as an ORR cathode may comprise Co-phthalocyanines and similar compounds such as Co-C-N, and Fe-C-N, Pt or other noble metals or alloys such as Pt with Fe, Co, or Ni, Pd, Pd alloys such as Pd-Fe, Pd-Co, Pd-Co-Au, and $Pd_3Fe$/C nanoparticles, Ru, or ruthenium compounds such as crystalline Chevrel-phase chalcogenides (e.g. $M_6X_8$ wherein M = high valent transition metal and X = S, Se, Te; $(Mo, Ru)_6Se_8$), nanostructured Ru and Ru-Se clusters, Ru-N chelate compounds, Ru selenides such as $Mo_4Ru_2Se_8$, and $Ru_xSe_y$, carbon, and doped carbon nanotubes and graphene such as N-doped carbon nanotubes. The electrodes may further comprise carbon black, binding agents, current collectors, and Teflon membranes. The sol-gel and reverse micelle methods may be used to form a uniform, high-surface area distribution of catalyst on carbon. The cell may further comprise a separator that may be selective for ion exchange. The ion may be hydroxide ion of an alkaline cell. In a suitable exemplary embodiment, the membrane may comprise poly(arylene ether sulfone) containing pendant quaternary guanidinium groups.

The electrode may comprise a compound electrode for oxygen reduction and evolution. The latter may be used in an intermittent electrolysis cell for example. The electrode may be bifunctional capable of oxygen reduction and evolution wherein the activity is provided by corresponding separate catalyst layers, or the electrocatalyst may be bifunctional. The electrode and cell designs may be those known in the Art for metal-air batteries such as Fe or Zn-air batteries or a suitable modification thereof known by those skilled in the Art. A suitable electrode structure comprises a current collector, a gas diffusion layer that may comprise carbon and a binder, and an active layer that may be a bifunctional catalyst. Alternatively, the electrode may comprise the $O_2$ reduction layers on one side of the current collector and $O_2$ evolution layers on the other side. The former may comprise an outer gas diffusion layer in contact with the source of oxygen and a porous, hydrophobic catalyst layer in contact with the current collector; whereas, the latter may comprise a porous, hydrophilic catalyst layer in contact with the electrolyte on one side of the layer and the current collector on the other side. A bifunctional air electrode may comprise $La_{1-x}A_xFe_{1-y}MnO_3$ (A = Sr or Ca), $La_{0.6}Ca_{0.4}Co_{0.8}B_{0.2}O_3$ (B = Mn, Fe, Co, Ni, or Cu), $La_{0.6}Ca_{0.4}CoO_{3-}$, and $La_{0.7}Ca_{0.3}CoO_{3-}$. Further exemplary OR-catalysts and bifunctional-catalyst cathodes are $PdO_2/PdO_3$, a carbide such as a mixture of TaC + WC + $W_2C$ + TiC, Co/Ce-coated Ni, $MnO_2$ + C + PTFE; Mn isopropoxide + activated C + 12% PTFE; 5% $MnO_2$ +75% C (mixture of 30% EC-600JD and 70% AB-50) + 20% PTFE; 5% $MnO_2$ ($Mn^{3+}/Mn^{4+}$) + 70% C (60% PWA + 40% carbon black) (PTFE-Teflon 30B); GDL: 30% EC-600JD + 70% AB-50; $MnO_2$ + C (activated carbon + BP2000) + PTFE; Particle size distribution $MnO_2$-20-26 $\mu$m 30% $MnO_2$ + 20% active carbon + 20% carbon black + 30% PTFE; 20% $MnO_2$ + 66% C + 14% PTFE; Catalyst layer: 20% $MnO_2$ + 70% active carbon + 10% PTFE; GDL: 15% carbon black + 85% PTFE; 11% gamma $MnO_2$ + 41% C (BP2000) + 48% PTFE; $MnO_2$ cathode + PTFE + 2-20% absorbent material such as the gelling material used in the anode; $MnO_2$; Ag/CNC; Ag on Ni foam; $AgW_2C$/C; $AgMnO_4$ + 5-10% $MnO_2$ + C + PTFE; Raney silver catalyst + PTFE=5:1 (wt.%) (24 mg $cm^{-2}$); $Ag_2O$ + 10% $LaNiO_3$; 5% Ag + 15% BP2000 + 10% Daxad + 60% Teflon RPM T-30; 50% (20% CoTMPP/C) + 50% (15% $CoO_x$+ 5% $MnO_x$/C); 2.5% $MnO_x$ + 7.5% $CoO_x$/C; 4% CoTMPP + 15% BP2000 +

60% Teflon RTM T-30; $MnO_2$ and/or $AgNO_3$ (Pt, $Co_3O_4$); 10% CoTMPP/C + Nafion + FEP + FEP-coated PTFE fibers; CoTMPP + $MnO_x$/C; 60% $Mn_4N$/C + PTFE; $NiCo_2O_4$ spinel; $Mn_xCo_{3-x}O_4$ + PTFE (0< $x$ < 1) spinel; Perovskites; $LaMnO_3$; $LaCoO_3$; $LaNiO_3$; $LaCrO_3$; $LaFeO_3$; $La_{0.8}Sr_{0.2}FeO_3$; $La_{0.6}Sr_{0.4}Fe_{0.6}Co_{0.4}O_3$; $La_{0.6}Sr_{0.4}Fe_{0.6}Mn_{0.4}O_3$;$LaNiO_3$; $LaCoSrO_3$; $Pb_2M_{2-x}Pb_xO_{7-y}$; Ni, Co, Fe hydroxide + carbon black + PTFE; Ag + Pt + $MnO_2$ + C + PTFE 10% Pt/C; iron-air fuel cell (similar to ZAFC) with alkaline electrolyte: $CuSO_4$, $NiWO_4$, WC + 20% Co; $WS_2$ + WC or WC + 1-20% Co; WS + C + PTFE; WC + Ag + C PTFE (FEP); 30 parts Ag + 30 parts WC (coated with 12% Co) + 32 parts PTFE + 90 parts carbon black; 3% (5-10%) Ag (ORR) + ~[7% (10%-15% $FeWO_4$) + 7% (10%-15%) WC + ~12% (10%-15%) Co (OER) + ~54% C] + ~22% PTFE, Ag loading-2 mg $cm^{-2}$; [ORR-Ag] + [OER-$CoWO_4$ + WC + $WS_2$ + NiS + 10-15% Co] + PTFE; ORR catalyst [(0.3-2%) CoTMMP + (4-10%) $LaNi_{1-x}Co_x$ + (1-4%) Ag + (18-32%) $Co_xO_y$ + OER catalyst (1-20%) WC + (1-20%) Co + (1-7%) $FeWO_4$ + (1-7%) NiS] + AB-50 + PTFE; catalyst layer: 63.5% XC500 + 15% PTFE + 13% $MnSO_4$ + 8.5% $La_2O_3$; 15% PTFE + 69% XC500 + 8% $MnO_2$ + 8% $La_2O_3$; 58% XC500 + 15% PTFE + 19% $AgNO_3$ + 8% $MnSO_4$; GDL: 65% C + 35% PTFE; OER electrode 30% Ag + 70% $LaNiO_3$; $La_{1-x}A_xFe_{1-y}Mn_yO_3$ (A=Sr, Ca); $La_{0.6}Ca_{0.4}Co_{0.8}Fe_{0.2}O_3$, and other similar embodiments having these or similar compositions of matter and ratios of the compositions of matter that are known to those skilled in the art. In another embodiment, the cathode may comprise an oxide, hydroxide, or oxyhydroxide that may further comprise the metal of the anode. In suitable examples, the cathode comprises an oxyhydroxide of Mo, W, Hf, or Ta, and the corresponding anode comprises the metal or an alloy of the metal Mo, W, Hf, or Ta, respectively.

An electrode such as the anode may comprise Ni mat, foil, powder, or wire alone or doped with another metal such as at least one of a noble metal, transition metal, inner transition metal such as Mo, rare earth metal, and Group III, IV, V, or VI metal such as Pt, Ru, Rh, Pd, Ag, La, Hf, Hf alloy such as Hf and at least one of Zr, Fe, Ti, Nb, Ta, Ni, and W, Re, Ir, Au, Co, Mn, Cu Zn, Al, Sn, Pb, Bi, and Te. The anode may comprise at least one of a metal, a metal alloy, a mixture of metals, and a compound that may comprise at least one metal. The mixture may comprise domains of the individual metals that may further comprise grain boundaries at the intersections of different metallic domains. The domains may also comprise alloys of the metals. The domains may also comprise at least one compound that may comprise at least one metal. The domains may be in electrical contact with each other. In an embodiment, the size of the domains is optimized to maximize the hydrino reaction rate. The optimization may also comprise forming an anode that is resistant to corrosion. In an embodiment, the size of the domains in minimized. In an embodiment, the domain size is such that the radius is in the range of at least one of about 1 nm to 1 cm, about 10 nm to 5 mm, about 100 nm to 1 mm, about 100 nm to 500 $\mu$m, and about 1 $\mu$m to 50 $\mu$m.

The mixture may comprise at least one of: (i) at least one metal, (ii) at least one alloy, each comprising at least two metals, and (iii) at least one compound wherein each may comprise at least one metal. The metal component of one or more of the metal, alloy, and compound may be in common or different. Exemplary alloys, mixtures, and compounds may be selected from the group of Mo and at least one other element comprising a conductor or forms a conducting alloy with Mo such as MoB, MoN, MoSi, MoP, MoC, and Mo and at least one transition metal such as MoNi, MoCu, and MoCo, NiBi, NiCd, NiNb, NiCr, NiCo, NiCu, MoNi, HfNi, TaNi, WNi, VNi, ZrNi, CdNi, NbNi, and TiNi, Sn or a Sn alloy or mixture such as SnAg, SnAl, SnAs, SnAu, SnBa, SnBe, SnBi, SnCa, SnCd, SnCd, SnCe, SnCo, SnCr, SnCu, SnFe, SnGa, SnGe, SnHf, SnHg, SnIn, SnK, SnLa, SnLi, SnMg, SnMn, SnNa, SnNb, SnNd, SnNi, SnP, SnPb, SnPd, SnPr, SnPt, SnS, SnSb, SnSe, SnSi, SnSr, SnTe, SnTi, SnU, SnV, SnYb, SnZn, and SnZr, Al or an alloy or mixture such as AlAs, AlAu, AlB, AlBa, AlBe, AlBi, AlCa, AlCd, AlCe, AlCo, AlCr, AlCs, AlCu, AlDy, AlEr, AlFe, AlGa, AlGd, AlGe, AlHf, AlHg, AlHo, AlIn, AlK, AlLa, AlLi, AlMg, AlMn, AlMo, AlNa, AlNb, AlNd, AlNi, AlPb, AlPd, AlPr, AlPt, AlPu, AlRe, AlRu, AlSb, AlSc, AlSe, AlSi, AlSm, AlSn, AlSr, AlTa, AlTe, AlTh, AlTi, AlTiMo, AlTl, AlU, AlV, AlW, AlY, AlYb, AlZn, and AlZr, Hf or an alloy or mixture such as Hf and at least one of Zr, Fe, Ti, Nb, Ta, Ni, and W such as HfAl, HfB, HfBe, HfC, HfCo, HfCr, HfCu, HfFe, HfGe, HfIr, HfMn, HfMo, HfNb, HfNi, HfO, HfRe, HfSn, HfTa, HfTh, HfTi, HfU, HfW, HfZr, and HfIn, Mo, a Mo alloy, Mo mixture, or compound such as $MoSi_2$, TZM (Mo (~99%), Ti (~0.5%), Zr (~0.08%)), MoB, MoAl, MoGa, MoIn, MoC, MoSi, MoGe, MoSn, MoPb, MoN, MoP, MoAs, MoSb, MoBi, MoS, MoSe, MoTe, MoCu, MoCo, MoCr, MoFe, MoGe, MoHf, MoIr, MoOs, MoNb, MoNi, MoPd, MoPt, MoRe, MoRh, MoRu, MoS, MoSi, MoTa, MoTh, MoTi, MoU, MoV, MoW, molybdenum nitride, NiCrMoTaNb, and MoY, Cr, Cr alloy, Cr mixture, W, W alloy or mixture such as WA1, WB, WC, WCo, WCr, WFe, WHf, WMo, WNb, WNi, WOs, WPb, WPd, WPt, WRe, WRh, WSi, WTa, WTi, WV, and WZr, Ta, and Ta alloy or mixture such as TaAl, TaB, TaC, TaCo, TaCr, TaFe, TaHf, TaMo, TaNb, TaNi, TaPd, and TaRh, a vanadium alloy or mixture such as VB, VCu, VFe, VGa, VLa, VMn, VMo, VNb, VNi, VPd, VPt, VRe, VRh, VSi, VTa, VTi, VU, VW, VY, and VZr, an alloy or mixture of a metal that forms an unstable oxide at the cell temperature such as a Ag or Hg alloy or mixture such as AgMo, AgNi, HgMo, HgNi, or AgHg. Further exemplary alloys or mixtures are MoTiAl, MoVAl, NiZrMo, NiMgMo, NiAlMo, NiCuMo, NiMoSi, NiCrSi, Inconel alloys such as 625 (21% Cr, 9% Mo, 4% Nb-Ni alloy), Inconel 622, C-276, and 686, Hastelloy alloys, Hastelloy C22, Ni-Cr-Mo-W alloys, 56[a]Ni-22Cr-13Mo-3W-3Fe-2.5*Co-0.50*Mn-0.35*V-0.08*Si-0.010*C ("As Balance *Maximum), carbon steel, alloy 20, 242 or 556 (e.g. Hayes Int.), Mg alloys or mixtures such as MgMo, MgAg, MgAl, MgBi, MgCd, MgAlCo, MgCu, MgFe, MgGa, MgGd, MgHg, MgIn, MgLa, MgMn, MgNi, MgPb, MgPr, MgSb, MgSc, MgSi, MgTi, MgY, MgZn, and MgZr, TiAl, $Cu_6Co_4$, BMo alloys or mixtures, Ca alloys or mixtures, La alloys or mixtures such as LaTiAl, MoAg alloys or mixtures; MoSi and MoCr alloys

or mixtures; SnZrMo, CrNiMo, MnNiMo, MoTi, MoPb, TaC alloys or mixtures, MoS alloys or mixtures, alloys or mixtures comprising at least one of Ti, Nb, Fe, Mo, and TZM. The electrode such as the anode may comprise carbon or an alloy or mixture such as CoC, CrC, CuC, FeC, GeC, HfC, IrC, LaC, LiC, MnC, MoC, NbC, NiC, ReC, SiC, TaC, TiC, VC, WC, YC, and ZrC. Additional exemplary alloys or mixtures are MoMn, MoSi-transition metal such as, MoCuSi, MoCoSi, and MoNiSi, MoSiC, transition metal-SiC, YSiC, LaSiC, ZrSiC, HfSiC, NbSiC, TaSiC, WSiC, MoNiC, NiMoFe, MoCoC, MoCuC, LaNiC, MoHfNi, NiZrHf, MoTiNi, TiNbMo, CoCuC, CoCuSi, NiZrTa, NiMoTa, NiMoW, NiMoNb, CrMoW, VNbTa, TiZrHf, LaNiMo, LaNiHf, LaNiTa, LaNiMo, LaNiW, LaNiNb, LaNiCr, LaNiV, LaNiTi, LaNiZr, LaNiSc, LaNiY, NiZrW, NiZrNb, transition metal-Zr-Mo such as MoTiZr, MoSi, MoC, Ni-TZM, MoZrNi, $LaNi_5Mo$, $LaNi_5Hf$, $LaNi_5Ta$, $LaNi_5Mo$, $LaNi_5W$, $LaNi_5Nb$, $LaNi_5Cr$, $LaNi_5V$, $LaNi_5Ti$, $LaNi_5Zr$, $LaNi_5Sc$, $LaNi_5Y$, and $LaNi_5C$. The ratios may be any desired such as about 50-50 wt% for bimetallics and 33-33-33 wt% for trimetallics. In an embodiment comprising Mo, Mo is the majority in at% relative to any other component. At least one electrode such as the anode may comprise a molybdenum alloy comprising molybdenum and at least one of coper, nickel, silicon, boron, and carbon such as a molybdenum boride such as $Mo_2B_5$, a molybdenum silicide such as $MoSi_2$, a molybdenum silicoboride such as $Mo_5SiB_2$, a molybdenum borocarbide such as $MoBi_4C$, and a molybdenum silicon carbide such as MoSiC. In an embodiment, the anode alloy comprises a primary metal favorable for the formation of hydrinos and at least one other conductor. For example, the anode may comprise Mo and at least one other element comprising a conductor or one that forms a conducting alloy. Exemplary alloys are MoB, MoN, MoSi, MoP, MoC, and MoSiB. The ratios of the conductors may be any desired. The compound may comprise a chalcogenide such as a metal chalcogenide such as an oxide, sulfide, selenide, or telluride. The alloy may comprise a chalcogenide such as a metal-S alloy such as MoS. The compound may further comprise at least one of a hydroxide and an oxyhydroxide. Exemplary compounds comprising at least one of an oxide, oxyhydroxide, and hydroxide are those of Mo, W, and transition metals such as at least one of Ni, Fe, Cu, and Co. Exemplary cells are [NiMo, MoCo, MoCu, MoSi, MoC, Ni-TZM, MoZrNi, RuMo, RhMo, OsMo/LiOH-LiBr-MgO/NiO or $Co_2O_3$-CuO-NiO intermittent electrolysis + O2]. An exemplary cell comprising R-Ni discharge anode is [R-Ni/$K_2CO_3$ 0.6 M aq/Nafion or Celgard/carbon or Ni intermittent electrolysis]. In other embodiments, the electrode metal or alloy may comprise a layer or coating that may be deposited by electrolysis such as by electroplating or by vapor or plasma deposition such as the methods of the disclosure.

In an embodiment, the anode may comprise a conductor such as a metal that forms a protective oxide coat to prevent further oxidation. The oxide coat may be stable to at least one of $O_2$ and $H_2O$. The coat may be stable in an alkaline electrolyte such as those of the disclosure such as a molten salt mixture such as one of a hydroxide and a halide such as those of alkali metals such as LiOH-LiBr that may further comprise a matrix material such as MgO. The cell may be operated in a direct discharge mode or intermittently charged such that the charge time is less than the discharge time. The cell may be operated such that the amount of H formed by electrolysis during charging is less than that which causes detrimental degradation of the oxide coat. Exemplary anode metals that form a protective oxide coat are transition and inner transition metals and alloys such as Cr, V, Ti, Mo, TZM, Hf, and Ta. The source of hydrogen may be from dehydration of a hydroxide electrolyte such as LiOH wherein the corresponding reaction to provide $H_2O$ as a source of H is 2LiOH to $Li_2O$ + $H_2O$. The cell may be run under intermittent charge-discharge or continuous discharge conditions without $H_2O$ being supplied wherein the electrolyte may be rehydrated in a batch manner. At least one operating parameter such as the temperature of the cell may be changed before and after the rehydration step. For example, the cell temperature may be lowered, $H_2O$ may be supplied, and then the cell temperature may be restored to the initial operating temperature. In an embodiment, a source of oxygen such as $O_2$ may be supplied to the cell. Exemplary cells having H from LiOH dehydration that may be operated under intermittent charge-discharge or continuous discharge conditions are [Ni-Mo or Co-Ni/LiOH-LiBr-MgO/NiO dry air] and [Ni/LiOH-LiBr-MgO/NiO dry air]. Alternatively, H may be from supplied $H_2O$ as exemplified by the cell [Ni/LiOH-LiBr-MgO/NiO H2O-argon].

In an embodiment, the electrolyte is selected such that the anode such as those of the disclosure such as Ni and Mo is stable to corrosion at the operating parameters of the cell such as temperature that may also selected to maintain the stability of the anode. Exemplary electrolytes are one of the group of LiOH-Li2SO4, LiOH-Li2SO4-MgO, LiOH-Li3PO4, LiOH-Li3PO4-MgO, LiOH-Li2SeO4, LiOH-Li2SeO4-MgO, LiOH-Li3PO4-MX, LiOH-Li3PO4-MX-MgO, LiOH-Li2SeO4-MX, LiOH-Li2SeO4-MX-MgO (M = alkali, X = halide), LiOH-LiI, LiOH-LiI-MgO, LiOH-LiI-LiBr, LiOH-LiI-LiBr-MgO, LiOH-LiCl-LiBr, LiOH-LiCl-LiBr-MgO, M(OH)2-MX2, M(OH)2-MX2-MgO, M(OH)2, M(OH)2-MgO (M= alkaline earth). Exemplary cells that may be operated in the temperature range of about 290 to 500 °C are [Mo/LiOH-LiSO4/NiO Ar-1.5% O2 + H2O], [Mo/LiOH-Li2SO4/NiO Ar-1.5% O2], [Mo/LiOH-Li2SO4-MgO/NiO Ar-1.5% O2 + H2O], [Mo/LiOH-LiSO4-MgO/NiO Ar-1.5% O2], [Mo/LiOH-LiI/NiO Ar-1.5% O2 + H2O], [Mo/LiOH-LiI/NiO Ar-1.5% O2], [Mo/LiOH-LiI-MgO/NiO Ar-1.5% O2 + H2O], [Mo/LiOH-LiI-MgO/NiO Ar-1.5% O2], [Mo/LiOH-LiI-LiBr/NiO Ar-1.5% O2 + H2O], [Mo/LiOH-LiI-LiBr/NiO Ar-1.5% O2], [Mo/LiOH-LiI-LiBr-MgO/NiO Ar-1.5% O2 + H2O], [Mo/LiOH-LiI-LiBr-MgO/NiO Ar-1.5% O2], [Mo/LiOH-LiCl-LiBr/NiO Ar-1.5% O2 + H2O], [Mo/LiOH-LiCl-LiBr/NiO Ar-1.5% O2], [Mo/LiOH-LiCl-LiBr-MgO/NiO Ar-1.5% O2 + H2O], [Mo/LiOH-LiCl-LiBr-MgO/NiO Ar-1.5% O2], [Mo/M(OH)2-MX2/NiO Ar-1.5% O2 + H2O], [Mo/M(OH)2-MX2/NiO Ar-1.5% O2], [Mo/M(OH)2-MX2-MgO/NiO Ar-1.5% O2 + H2O], [Mo/M(OH)2-MX2-MgO/NiO Ar-1.5% O2], [Mo/M(OH)2/NiO Ar-1.5% O2 + H2O], [Mo/M(OH)2/NiO Ar-1.5% O2], [Mo/M(OH)2-MgO/NiO Ar-1.5% O2 +

H2O], and [Mo/M(OH)2-MgO/NiO Ar-1.5% O2] wherein M = alkaline earth or other suitable cation. In cell embodiment having no $H_2O$, the electrolyte may be re-hydrated intermittently.

In the case that the electrode material is soluble in the electrolyte, a corrosion inhibitor may be added. The inhibitor may comprise a compound such as an oxyanion or a halide comprising the metal of the anode such as Mo, W, Hf, Ta, and a transition metal such a Ti. For example, a Mo anode with an electrolyte comprising LiOH may become oxidized to form $MoO_2$, $Li_2MoO_3$, or $Li_2MoO_4$ that is soluble in alkaline. This product may be allowed to reach saturation or added to the electrolyte to achieve saturation to inhibit corrosion. In an embodiment, the concentration of $Li_2MoO_3$ or $Li_2MoO_4$ is about 0.1 to 10 wt% or about 0.5 to 3 wt%. Alternatively, an additive further inhibits corrosion such as lithium borate, lithium silicate, MgO, $MoX_n$ (X = halide, n = integer) such as $MoBr_2$ or $MoBr_3$, $MoS_2$, $MoSe_2$, $MoTe_2$, $Bi_3M'Mo_2O_{12}$ wherein M' may comprise a transition metal such as Fe or Sc, $M'MoO_4$ wherein M' may comprise an alkaline earth or transition metal such as Mg, Ca, Sr, Ba, Mn, Fe, Co, Cu, and Zn, or $M'_2MoO_4$ wherein M' is an alkali metal. $M'MoO_4$ or $M'_2MoO_4$ may further serve as a source of catalyst with the formation of $M(OH)_2$ or M'OH, respectively, wherein $OH^-$ may react with H to form catalyst $H_2O$. The additive may comprise a polyanion such as one of W or Mo such as a polytungstate or polymolybdate ion or compound. In an embodiment, at least one of the anode, cathode, or an electrolyte component may comprise a W or Mo bronze. The bronze may comprise $M_xWO_3$ or $M_xMoO_3$ (x<1) wherein M is a metal cation such as an alkali or alkaline earth metal such as Li. The bronze may comprise a high surface area material. The bronze may be formed by tape casting. The tape casing may be on a substrate such as metal foam such as Ni, Mo, or W metal foam such as Ni celmet. The tape cast reactants to form the bronze may be heated. The heating may in a reducing atmosphere or comprise a reductive heating reaction such as those known in the art. In an exemplary method W bonze is formed by reducing a mixture of $Li_2WO_4$ and $WO_3$ with $H_2$ at red heat. Alternatively, tungsten bronze may be formed by a number of reductive techniques such as heating normal tungstates with tungsten metal. Mo bronze may be formed similarly by substituting Mo for W and other methods known by those skilled in the art. Exemplary cells are [molybdenum or tungsten bronze/LiOH-LiBr MgO spacer/NiO + O2 + H2O], [Mo-molybdenum bronze/LiOH-LiBr MgO spacer/NiO + O2 + H2O], and [W-tungsten bronze/LiOH-LiBr MgO spacer/NiO + O2 + H2O]. In an embodiment, the additive may shift the potential of the Nernst equation to favor the formation of water rather than the oxidation of the anode metal. In another embodiment, $MoO_2$, $Li_2MoO_3$, or $Li_2MoO_4$ additive comprises a matrix material wherein an electrode such as the anode may comprise a metal or conductor other than Mo. An exemplary cell is [Ni/LiOH-LiBr + $MoO_2$, $Li_2MoO_3$, or $Li_2MoO_4$/Ni + air; intermittent electrolysis]. In an embodiment, the cathode may comprise a compound comprising the metal of the anode such as Mo. An exemplary cell is [Mo/LiOH-LiBr /$Mo_6Se_8$ or molybdenum oxyhydroxide intermittent electrolysis]. In an embodiment, the cathode and anode may comprise a source of the same metal, alloy, or element that may migrate from one electrode to the other. The anode and cathode may be reverse periodically during intermittent charge discharge such that the discharge anode becomes the discharge cathode periodically. Exemplary migrating metals, alloys, or elements are Cd, Ni, CdNi, Mo, and MoNi. Since Mo dissolves in base and Ni does not, an exemplary embodiment having a Mo matrix such as a $Li_2MoO_4$ matrix with Ni anode is [Ni/LiOH-LiBr ($Li_2MoO_4$ matrix)/Ni-NiO both electrodes submerged intermittent electrolysis]. In an embodiment, a compound that forms a stable alloy at the anode may be added to the electrolyte. One example is a soluble Ni compound such as $NiBr_2$ that forms a stable MoNi alloy with a Mo anode in a cell comprising a Mo anode such as [Mo/LiOH-LiBr $NiBr_2$/Ni-NiO intermittent electrolysis].

In an embodiment, an oxidized discharge anode may be regenerated by applying a negative potential to reduce the discharge anode. Electrolysis may be performed at a higher negative voltage than typical to cause the regeneration. Thus, the discharge anode is made an electrolysis cathode for the regeneration step. Hydrogen may be generated during this step to also contribute to the reduction of excess oxide so that the anode may be restored to a functional state. The magnitude of the applied cell voltage may be in the range of about 0.5 V to 5 V or about 1 V to 2 V, or about 1 V to 1.5 V. In an exemplary embodiment, a cell such as [Mo/LiOH-LiBr-$Li_2MoO_4$/NiO air] comprises a Mo anode wherein Mo is electroplated onto the anode by at least intermittently applying a voltage sufficient to cause the electroplating to occur. In an embodiment, the cell charge and discharge voltage range during intermittent electrolysis is selected and controlled to prevent the anode from corroding at an undesirable rate. The voltage may be determined using the Nernst equation for corrosion reactions wherein the voltage may be maintained above a voltage at which the rate of corrosion reactions are appreciable. In an embodiment, the negative lead is attached to the electrolyte face of the anode to maintain the negative potential at the anode electrolyte interface.

In an embodiment, the corrosion of at least one electrode is reduced or prevented by controlling at least one of the corresponding half-cell and cell potential. The intermittent charge and discharge and discharge waveform may be controlled to reduce or prevent oxidation of the electrode such as the anode. The waveform may adjusted based on at least one of the electrode and electrolyte composition and the concentrations or pressures of species supplied to the cell or generated in the cell such as $O_2$ and $H_2O$. In an embodiment, the reaction product of at least one electrode with at cell species such as least one of oxygen and the electrolyte is added as an additive to suppress the electrode corrosion reaction. The suppression may be by reducing the Nernst voltage to be less in magnitude than the corresponding half-cell or cell voltage. Exemplary anode components and the corresponding additives are Mo or Mo alloy and $MoO_2$, $MoO_3$, or $Li_2MoO_4$, Ti or Al such as an alloy such as AlTi and $TiO_2$, $Li_2TiO_3$, $Al_2O_3$ or $LiAlO_2$, carbon or a carbide such as $Mo_2C$

and $Li_2CO_3$, a boride such as MoB and $B_2O_3$ or $Li_2B_4O_7$, a silicide such as $MoSi_2$ and $SiO_2$ or $Li_2SiO_3$. The corrosion may be further suppressed by controlling at least one of the oxygen and $H_2O$ pressure, and cell temperature, and by addition of a gas such as $CO_2$ or $N_2$ in the case of an anode comprising a carbide or nitride, respectively. The cell temperature may be controlled to optimize the cell kinetics and at least one of the half-cell and cell voltages. The cell temperature may be reduced to control corrosion. The temperature may be reduced by the selection of an electrolyte with a lower melting point. For example, the melting point of a LiOH-LiBr electrolyte may be reduced by adding some NaOH, KOH, or RbOH. The alternative hydroxide will also increase the oxygen reduction rate.

In an embodiment, a corrosion inhibitor may be added to the cell. In an embodiment, the product of the anode oxidation reaction is added to the electrolyte. The product may change the Nernst potential to suppress the corrosion wherein the waveform may be adjusted to match the potential change to facilitate the suppression of corrosion. In an embodiment, the waveform may be controlled to electroplate the corrosion product during the intermittent charge phase. The waveform may be controlled to optimize the net electrical energy balance considering an input energy to electrolysis of the corrosion product. The waveform may be optimized relative to the concentration of the corrosion product added or generated insitu. The waveform may comprise optimal time intervals and voltages to electroplate out each constituent anode metal ion from the electrolyte to the anode. The waveform and additive concentrations may be adjusted to take advantage of voltage and kinetic parameters of plating additives or products to maintain a desire electrode alloy composition. In an embodiment having an anode that oxidize to produce more than one metal ion, the metal ion ratios of the electrolyte are controlled to maintain one that gives at least one of the highest net power and the most energy efficiency with a corresponding waveform. A corresponding desired waveform and electrolyte composition comprising additives may be determined by cyclic voltametry.

In an embodiment, the electrolyte may comprise a halide compound of the anode. The cation of the compound may provide a common ion effect to suppress the corrosion of the anode. An exemplary anode is a transition element such as Ni or Co and the halide compound may be $NiBr_2$ or $CoBr_2$, respectively. The electrolyte may be aqueous or a molten salt such as those of the disclosure. In an exemplary embodiment, the compound that provides the common ion or reacts to form a common having a common ion is at least one of $Li_2SO_4$ and $Li_2PO_4$ and $CoSO_4$ and $CoPO_4$. The matrix may comprise a common ion of the anode corrosion product such as an oxide ion. The oxide may comprise those of the disclosure. In an exemplary embodiment, MgO provides a common $O^{2-}$ ion to suppress corrosion of the anode such as the corrosion of a transition element anode to the oxide such as Co or Ni to CoO or NiO, respectively. In another embodiment, the matrix comprises a compound comprising an oxide of the anode and another compound such as at least one matrix compound of the disclosure. Exemplary compounds are cobalt magnesium oxide that may serve as the matrix and may prevent formation of cobalt oxide from a cobalt anode. This matrix may provide common ions of Co and $O^{2-}$ to prevent corrosion of anode. In another embodiment Ni or Cu replaces Co. The anode may comprise NiCo. In an embodiment, the source of the common ion oxide is at least one of CuO, CrO4, ZnO, MgO, CaO, $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $P_2O_3$, $P_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, and $CrO_3$. In an embodiment, the source of a common ion prevents the formation of at least one of CoO, NiO, and $MoO_2$. The matrix such as at least one of those of the disclosure may be soluble in the electrolyte such that it does not precipitate on at least one electrode.

In an embodiment, the anode comprises Mo or a Mo alloy such as Mo-transition metals such as TZM, H242, MoNi, MoCo, MoCu, MoFe, FeMoCo, MoV, MoCr, MoMn, MoW, and MoM1M2 wherein M1 and M2 are transition metals. Other Mo alloys comprising additional transition metals or other metals and compounds comprise other anode embodiments. In an embodiment, the cell voltage per cell during the intermittent electrolysis and discharge is maintained above the potential that prevents the anode from substantially oxidizing. In an embodiment, the cell voltage is maintained in a range that prevents the anode from forming at least one of an oxide and a compound comprising at least one element of the electrolyte. In a CIHT cell embodiment comprising an anode comprising Mo or a Mo alloy, the voltage range is maintained to prevent formation of at least one of $MoO_2$, $MoO_3$, $Li_2MoO_3$, and $Li_2MoO_4$, and other Mo oxides or compounds. The voltage may be determined using the Nernst equation for corrosion reactions wherein the voltage may be maintained above a voltage at which the rate of corrosion reactions are appreciable. In exemplary embodiments, the lower voltage limit is about that for the formation of the oxide or an oxide compound wherein the standard potentials at 800 K for the formation directly or as the corresponding sum of reactions are about $E^0$ within +/- 0.5V, +/-0.25 V, or +/-0.1 V:

$$Mo + O_2 \text{ to } MoO_2 \ (E^0 = 1.14V) \quad (109)$$

$$Mo + 2H_2O \text{ to } MoO_2 + 2H_2 \ (E^0 = 0.086V) \quad (110)$$

$$Mo + 1.5O_2 \text{ to } MoO_3 \ (E^0 = 0.936V) \quad (111)$$

$$Mo + 3H_2O \text{ to } MoO_3 + 3H_2 \ (E^0 = -0.12V) \quad (112)$$

$$2LiOH + Li_2O \text{ to } H_2O \ (E^0 = -0.13\ 3V) \quad (113)$$

$$4LiOH + Mo \text{ to } MoO_2 + 2Li_2O + 2H_2 \ (E^0 = -0.047V) \quad (114)$$

$$2LiOH + Mo + O_2 \text{ to } MoO_3 + Li_2O + H_2 \ (E^0 = 0.81V) \quad (115)$$

$$2LiOH + Mo + 1.5O_2 \text{ to } MoO_3 + Li_2O + H_2O \ (E^0 = 0.89V) \quad (116)$$

The standard voltages may be altered according to the Nernst equation for the corresponding reaction(s) by changing the reactant and product concentrations and operating temperature as known by those skilled in the art. For example, the lower limit voltage to reduce corrosion such as at least one of $E^0$ of Eqs. (109-116) may be reduced by addition of at least one of $MoO_2$, $MoO_3$, $Li_2MoO_3$, $Li_2MoO_4$, $Li_2O$, and $H_2$, and by reduction of $O_2$. The voltage limit for the reduction of $MoO_2$ may be reduced by increasing the temperature wherein an exemplary cell temperature is above 300 C. An exemplary intermittent charge-discharge range at about 800K with the appropriate reactant and product concentrations maintained to avoid corrosion according to the Nernst equation are at least one of in the range of about 0.5V to 2V, about 0.6V to 1.5V, about 0.7V to 1.3V, about 0.8V to 1.2V, about 0.8V to 1.1V, about 0.9V to 1.1V, about 0.8V to IV, and about 0.5V to 2V, about 0.5V to 1.5V, about 0.5V to 1.3V, about 0.5V to 1.2V, about 0.5V to 1.1V, about 0.5V to 1.1V, about 0.5V to IV, about 0.6V to 2V, about 0.6V to 1.5V, about 0.6V to 1.3V, about 0.6V to 1.2V, about 0.6V to 1.1V, about 0.6V to 1.1V, about 0.6V to IV, about 0.7V to 2V, about 0.7V to 1.5V, about 0.7V to 1.3V, about 0.7V to 1.2V, about 0.7V to 1.1V, about 0.7V to 1.1V, about 0.7V to IV, about 0.8V to 2V, about 0.8V to 1.5V, about 0.8V to 1.3V, about 0.8V to 1.2V, about 0.8V to 1.1V, about 0.8V to 1.1V, about 0.8V to IV, about 0.9V to 2V, about 0.9V to 1.5V, about 0.9V to 1.3V, about 0.9V to 1.2V, about 0.9V to 1.1V, about 0.9V to 1.1V, about 0.9V to IV, about IV to 2V, about IV to 1.5V, about IV to 1.3V, about IV to 1.2V, about IV to 1.1V, about 1.1V to 2V, about 1.1V to 1.5V, about 1.1V to 1.3V, and about 1.1V to 1.2V. The voltage range would change at a different operating temperature. For example, from the standard reduction potentials (M. S. Antleman, F. J. Harris, Encyclopedia of Chemical electrode Potentials, Plenum Press, NY, (1982)) for the half-cell reactions at STP, the voltage to reduce molybdate ion to Mo is 1.45 V:

$$MoO_4^{2-} + H_2O + 6e^- \text{ to } 8\ OH^- + Mo \ (E^0 = -1.05V) \quad (117)$$

$$2H_2O + O_2 + 4e^- \text{ to } 4OH \ (E^0 = 0.41V) \quad (118)$$

In an embodiment, the cathode material and the concentration or pressure of the cathode half-cell reactants and products such as $O_2$, $H_2O$, and hydroxide are controlled to achieve a cathode half-cell voltage that with the anode half-cell reaction and voltage provides a cell voltage that at least reduces the corrosion of the anode. The cathode material may be Ni or NiO and may further comprise oxides of other metals such those of Cr, Mn, Co, Fe, V, and Ag as well as other transition metals, rare earth metals, inner transition metals, and metalloids to control the cathode half-cell voltage. Additionally, at least one of the degree of alkali ion doping such as lithiation, oxidation, and surface area may be controlled to control the cathode voltage contribution.

In an embodiment, the voltage for the oxidation reaction of the anode material and that of hydrogen are essentially the same. An exemplary anode material is Mo for which $E_0$ to form Mo oxide is about 1.1 V at 800K, a match to $E_0$ of the reaction of hydrogen and oxygen to $H_2O$ at 800K. The match may be within +/- 30%, +/- 20%, +/- 10%, +/- 5%, or +/-1%. The match may be controlled by changing the concentration of at least one of the reactants and products and the temperature according to the Nernst equation. The match may be further controlled by doping the metal of the anode with at least one other metal. The doping may comprise an alloy. Exemplary alloys are Mo alloys such as MoNi, MoCo, MoCu, MoFe, CoMoFe, TZM, and H242. The alloy may comprise Mo or Mo and at least one other element such as at least one transition metal such as Fe and Co and further comprise at least one of sulfur and oxygen. In an embodiment, each component of the alloy may have the voltage that matches that of hydrogen oxidation. An exemplary material is an anode comprising Mo and Fe such as MoFe alloy or mixture wherein $E_0$ to form $MoO_2$ and $Fe_2O_3$ are both about 1.1 V at 800K. In an embodiment, the match of voltages of electrode oxidation and hydrogen oxidation regards an aqueous cell. The cell may have an operating temperature below 100°C. An exemplary electrode for the hydrino reaction is a nickel electrode such as a Ni cathode of an aqueous electrolysis cell or an anode of a CIHT cell since the voltage for nickel oxidation at 298K is about 1.1 V, being about the same voltage as $H_2$ combustion at 298K.

In an embodiment, the cell is operated at a voltage or within a voltage range that avoids the reduction of a protective oxide coat such as that of a Mo electrode such as that of the anode. In another embodiment, the voltage is maintained within a range that controls a desired oxide thickness. The voltage range is maintained by controlling the charge and discharge waveform. The voltage may be further maintained above that at which excessive corrosion occurs. An excessively thick oxide coat may form at a voltage below the desired lower limit. In exemplary embodiments, the upper limit is about that of the formation of the oxide or an oxide compound wherein the standard potentials at 800 K

for the formation directly or as the corresponding sum of reactions are about $E^0$ within +/- 0.5V, 0.25 V, or 0.1 V of the reactions of Eqs. (109-116). The standard voltages may be altered according to the Nernst equation for the corresponding reaction(s) by changing the reactant and product concentrations and operating temperature as known by those skilled in the art. An exemplary intermittent charge-discharge range with the appropriate reactant and product concentrations maintained to avoid corrosion according to the Nernst equation are at least one of in the range of about 0.2V to 1.3V, about 0.2V to IV, about 0.2V to 0.9V, about 0.2V to 0.8V, about 0.2V to 0.75V, about 0.2V to 0.7V, about 0.4V to IV, about 0.5V to IV, about 0.6V to IV, about 0.7V to IV, about 0.8V to IV, about 0.4V to 0.9V, about 0.5V to 0.9V, about 0.6V to 0.9V, about 0.7V to 0.9V, about 0.8V to 0.9V, about 0.4V to 0.8V, about 0.5V to 0.8V, about 0.6V to 0.8V, and about 0.7V to 0.8V.

In an embodiment, at least one electrode such as the anode may be protected from corrosion. The corrosion-protected electrode such as the anode may comprise an alloy such as an alloy of Ni such as NiCr or Mo such as MoNi or MoC. The cell may comprise a catalyst to convert a reactive oxygen reduction product such as peroxide or ions thereof or superoxide to hydroxide to protect at least one electrode such as the anode from corrosion. A suitable catalyst is a noble metal such as Pt or Pd that may be on a support such as $Al_2O_3$ or carbon. Other suitable catalysts are Co or Fe species. Alternatively, $H_2O$ addition may be used to convert the peroxide or superoxide to hydroxide. The Mo anode may be embedded in the catalyst or supported catalyst to form hydroxide such as $Pt/Al_2O_3$.

Anode corrosion by peroxide and other reactive oxygen species may be avoided by using a corrosion resistant alloy such as one comprising Ni such as NiMo. Peroxide corrosion can also be prevented by using a submerged cathode or otherwise limiting the $O_2$ pressure with a controlled gas atmosphere or a solid electrolyte layer serving as an air diffusion barrier. In an embodiment wherein $O_2$ in the cell atmosphere is limited or excluded, the cathode is not submerged. The kinetics may be maintained by using an electrolyte salt mixture that has the appropriate oxygen reduction rate considering the oxygen reduction rate trend LiOH~NaOH<<KOH. The rate may also be controlled with temperature wherein the rate is reduced with lower temperature and vice versa. The peroxide concentration can be reduced by using a cathode comprising an oxygen reduction catalyst that favors the $OH^-$, four-electron reduction, pathway over the peroxide, two-electron reduction, pathway. The former is favored with a higher $H_2O$ pressure since water is a reactant. Also, water reacts with peroxide ions and deactivates them by conversion to $OH^-$. Additionally, a peroxide to hydroxide conversion catalyst could be used at the anode or cathode to protect the anode from peroxide corrosion. Pt such as $Pt/Al_2O_3$ or an Fe species such as an iron halide or a Co species such as cobalt perovskites may serve as the conversion catalyst. The anode may also be protected by providing a species to react with reactive oxygen intermediates or by chemically protecting the anode. For example, a reductive reactant such as additional hydrogen may be provided at the anode by means such as application of a $H_2$ atmosphere or by hydrogen permeation. An additive such as $MoO_2$ that reacts with peroxide to form $MoO_4^{2-}$ for example or $CO_2$ that reacts to $CO_3^{2-}$ and $1/2O_2$ are other exemplary reactants. Suppression of anode metal corrosion may be achieved by amalgamating the metal with Hg such as up to 50%. An exemplary amalgam anode is AgHg.

In an embodiment, a corrodible anode such as Mo or TZM is coated with a protective layer such as one of $MoS_2$, $MoSe_2$, or Teflon. In another embodiment, the charge voltage of the intermittent electrolysis cycle is high enough to cause some metal dissolved in the electrolyte from the anode or added to the electrolyte as a compound such as a salt to be electroplated onto the anode. In the case that the anode comprises Mo or a Mo alloy such as MoNi or MoCu, the added salt may be a molybdate compound such as $Li_2MoO_3$ or $Li_2MoO_4$. Compounds of the anode metals may be added to the cell. For example, oxides of the metals of the anode may be added and electroplated onto the anode. The oxides for replating may also be from corrosion of the anode. The electrolyte may comprise a molten eutectic salt that may comprise a hydroxide. The electrolyte may comprise a molten eutectic salt such as an alkali halide salt mixture to which a hydroxide is added. An exemplary electrolyte is LiCl-KCl or LiCl-KCl-LiF to which LiOH is added. The LiOH may be a minority species. The additive may be $Li_2MoO_3$ or $Li_2MoO_4$. The mole% may be any desired or in the range of about 0.1 to 20 mole% or about 1 to 3 mole %. The electrode may be Mo or another metal such as Ni onto which Mo is electroplated. The cell voltage may be in the range of about 0.7 V to 3V. The cell voltage may be higher than 0.8V to re-electroplate the Mo. The cell voltage may be the range of about 0.9 to 2 V or about greater than 1.14 V. In an embodiment, the electrolysis may be performed at multiple voltages such as a first to electroplate the anode metal and a second to generate hydrogen. In an embodiment, the anode metal forms a soluble compound or complex such as a hydroxide ion complex. The metal may be electroplated onto the anode during the electrolysis phase of the intermittent cycle. Suitable complexes are $Zn(OH)_4^{2-}$, $Sn(OH)_4^{2-}$, $Sn(OH)_6^{2-}$, $Pb(OH)_4^{2-}$, $Cr(OH)_4^-$, $Al(OH)_4^-$, and $Sb(OH)_4^-$ wherein the discharge anode comprises the corresponding metal. Suitable exemplary metals to be replated from the electrolyte are Cu, Ni, NiCu, Pb, Sb, Bi, Co, Cd, Ge, Au, Ir, Fe, Hg, Mo, Os, Pd, Re, Rh, Ru, Se, Ag, Te, Tl, and Sn.

Water soluble $MoO_4^{2-}$ forms upon reaction of Mo with oxygen and water. In an embodiment such as one comprising an aqueous or molten salt electrolyte, at least one of the source of oxygen and $H_2O$ are controlled to suppress

the formation of Mo oxides such as $MoO_4^{2-}$. The source of oxygen may be hydroxide ion wherein the activity may be controlled by providing a reactant that competes for the hydroxide ion in the formation of an alternative product. The reactant may be a metal ion such as at least one of Zn, Sn, Pb, Cr, Al, and Sb. The reactant may be a compound such as a hydroxide. The hydroxide may form a complex ion such as a hydroxide complex ion. In an exemplary embodiment, the effective $OH^-$ concentration or activity may be changed by adding a metal hydroxide such as $Zn(OH)_2$ that forms a complex such as $Zn(OH)_4^{2-}$. Suitable complexes are $Zn(OH)_4^{2-}$, $Sn(OH)_4^{2-}$, $Sn(OH)_6^{2-}$, $Pb(OH)_4^{2-}$, $Cr(OH)_4^-$, $Al(OH)_4^-$, and $Sb(OH)_4^-$. The stability of the ion complex may at least one of thermodynamically or kinetically suppress the formation of a Mo oxide or compound comprising Mo such a $Li_2MoO_4$. Suitable complex ion hydroxides are $Li_2Zn(OH)_4$, $Na_2Zn(OH)_4$, $Li_2Sn(OH)_4$, $Na_2Sn(OH)_4$, $Li_2Pb(OH)_4$, $Na_2Pb(OH)_4$, $LiSb(OH)_4$, $NaSb(OH)_4$, $LiAl(OH)_4$, $NaAl(OH)_4$, $LiCr(OH)_4$, $NaCr(OH)_4$, $Li_2Sn(OH)_6$, and $Na_2Sn(OH)_6$. Additional exemplary suitable hydroxides are at least one from $Co(OH)_2$, $Zn(OH)_2$, $Ni(OH)_2$, other transition metal hydroxides, $Cd(OH)_2$, $Sn(OH)_2$, and $Pb(OH)$.

The reactive $H_2O$ concentration or activity may be controlled by adding a reactant that binds $H_2O$ such as a hydroscopic compound such as at least one of $KMgCl_3$, $MgCl_2$, and $CaCl_2$. In an embodiment, a component of the electrolyte such as an alkali halide binds $H_2O$. An exemplary hydroscopic species that may serve as an electrolyte salt is LiBr.

In an embodiment, the anode is protected from corrosion with a hydrogen atmosphere. The hydrogen may be provided by applying hydrogen gas or by hydrogen permeation through a membrane that may at least partially comprise the anode. Hydrogen protection may also be provided by concentration of the hydrogen formed in situ such as by intermittent electrolysis. The anode comprises at least one type of H binding center such as metal centers and at least one support wherein the support permits the mobility of hydrogen generated on the corresponding center surface to move to and preferentially bind to the centers to increase the effective H atom concentration on those centers. Suitable exemplary centers are metals such as anode metals and alloys of the disclosure such as Mo, Ni, Pd, and Pt, and suitable exemplary supports are those of the disclosure such as carbon, carbides, nitrides, and borides. Exemplary cell are [carbon, Ni carbon, Mo carbon, NiMo carbon, PtC, PdC/LiOH-LiBr/steam carbon (SC), NiO, PtNiO, or AgNiO; air cathode or submerged cathode]. The cell may comprise an electrolyte matrix material such as $Li_2MoO_4$ or a membrane spacer such as Teflon. Exemplary cells are [carbon powder such as graphite, AC, carbon black, glassy carbon, Vulcan XC-72 + Mo or Ni powder/ LiOH-LiBr/steam carbon] and [carbon powder + Mo powder/$Li_2MoO_4$ + LiOH-LiBr/NiO].

In an embodiment, the electrolyte comprises a hydroscopic compound such as a salt that absorbs $H_2O$ from a source such as the atmosphere. The compound may maintain a hydrated state to serve as the electrolyte of a CIHT cell. The hydrated electrolyte may be ionic conductive at a temperature below that of the melting point of the dry salt such as a eutectic mixture such as LiOH-LiBr. The electrolyte may comprise a mixture of salts to maintain a slurry such as a mixture of $Li_2CO_3$, $Li_2O$, LiOH, and LiBr. Other hydroscopic additives may be added such as those of the disclosure such as $KMgCl_3$, $MgCl_2$, $CaCl_2$, and KOH. The hydrated compound may serve as the electrolyte for the interment electrolysis cell. Alternatively, the hydrogen electrode may comprise a hydrogen-sparging electrode. The cell may be run at low temperature such as in the temperature range to room temperature to the melting point of the non-hydrated electrolyte.

Oxygen may be formed at the anode and hydrogen at cathode during electrolysis. $O_2$ may be provided by sparging from a source such as $O_2$ gas or air. During the electrolysis-off or discharge phase, $O_2$ and $H_2O$ may undergo reduction at the electrolysis anode to form $OH^-$ (Eq. (92)) and $OH^-$ may be oxidized and reacted with H to form $H_2O$ that may serve as a catalyst to form hydrinos at the electrolysis cathode (Eq. (90). Thus, the cell may maintain a constant polarity during charge and discharge with the polarity of the current reversing during each phase of the cycle. The output may be power or waveform conditioned. In another embodiment, the reaction given by Eq. (90) occurs reversibly at both electrodes except that the hydrino product is irreversible. (The designation of the intermittent charge-discharge cells as given in the disclosure is in discharge-mode such as [discharge anode/electrolyte/discharge cathode]. In an embodiment this designation corresponds to [negative electrode/electrolyte/positive electrode], but the polarity may be reversed in other embodiments. The current may reverse intermittently during discharge and charge phases of the intermittent electrolysis cycle.) An exemplary cell is [Pt/LiOH 0.1M to saturated aq/Pd + air intermittent charge-discharge]. In other embodiments, both electrodes are Ni or one is Ni and the other a different material such as Pt, Pd, DSA material, other noble metal, carbon, Ag, a material of the disclosure, or a one or more of these materials or others of the disclosure on a support such as Pt/Ti and the electrolyte is aqueous (aq) KOH or $K_2CO_3$ in the concentration range of about 0.1M to saturated. Specific examples are [PtTi/$K_2CO_3$ or KOH 0.1M to saturated aq/Ni + air intermittent charge-discharge]. In an embodiment, the aqueous electrolysis may be performed at constant cell voltage such as about 1 to 1.6V or about 1.4 V for a first period of time such as about 1 to 10 s or 2 s, and the discharge may be performed at constant current such as about 0.01 to 10 $mA/cm^2$ or 0.2 $mA/cm^2$ for a second period of time such as about 1 to 100 s or about 10 s. In an embodiment, such as one comprising an alkaline electrolyte, having at least one long duration charge or discharge

period such as >5 s, the discharge anode comprises a material that forms a hydride during the electrolysis cycle such as $LaNi_5H_6$ or Pd.

In an embodiment, the discharge cathode may comprise others of the disclosure such as at least one of a hydrate, an oxide, a peroxide, a superoxide, an oxyhydroxide, and a hydroxide. The cathode may be a metal oxide that is insoluble in the electrolyte such as a molten salt electrolyte. Suitable exemplary metal oxides are NiO, CoO, $PbO_2$, $Ag_2O_2$, AgO, $RuO_2$, $MnO_2$, $MNiO_2$, $M_2NiO_2$, $MCoO_2$, $M_2CoO_2$, $LiFeO_2$, $MFeO_2$, $M_2FeO_2$, $Li_2MnO_3$, $MTiO_3$, $M_2TiO_3$, $LiTiO_3$, $M_3TaO_4$, $M_2WO_4$, $K_2WO_4$, $Li_3TaO_4$, $M_3VO_4$, $Li_3VO_4$, Mg-$Li_2MnO_3$, Mn-$LiFeO_2$, $LaMnO_3$, $SrTiO_3$, $LiCrO_2$, $LiAlO_2$, $LaNiO_3$, $LaCoO_3$, ZnO, MgO, $M_2SnO_3$, $Li_2SnO_3$, Zr-ZnO, MM'$O_2$, $M_2$M'$O_2$, MM'$O_x$, $M_2$M'$O_x$ (x = integer, M = alkali, M' = transition metal or other metal such as Al), $M_2$M'$O_x$ doped with magnesium such as $LiFe_{1-y}Mg_yO$ (y > 0.03), doped n-type perovskites and related compounds such as $CaTiO_3$ and $SrTiO_3$ doped with $Nb^{5+}$ and $PbZrO_3$ doped with $Nb^{5+}$ or $Ta^{5+}$, barium ferrites, yttrium iron garnets, p-type perovskites such as lanthanum-Group VIII compounds, metals or compounds of Ni, Cu, Co, Mn, Cr, Zn, Zr, Y, Al, U, Ti, and Fe, and those of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Cathode materials such as MM'$O_2$, $M_2$M'$O_2$ may form in situ from M' in the presence of an oxidizing environment such as an air or $O_2$ atmosphere and an electrolyte comprising M such as LiOH, NaOH, or KOH. Suitable exemplary metal oxyhydroxides are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. Suitable exemplary hydroxides are those of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. An exemplary discharge cathode reaction involving an oxyhydroxide is given by Eq. (119). The cathode may be recharged during the electrolysis phase of the intermittent electrolysis. The cell may comprise an intermittent electrolysis cell, permeation cell, electrochemical discharge cell with chemical or electrolytic regeneration, a hydrogen-sparging cell, or combinations thereof. In an embodiment, the permeation cell may be intermittently discharged.

Cathode

$$CoOOH + e^- \text{ to } CoO + OH^- \qquad (119)$$

In another embodiment, the gases may crossover from at least one of the anode to cathode, and vice versa. Then, during discharge at least one of the half-cell reactions may be switched such the $O_2$ (Eq. (92) reduction occurs at the electrolysis cathode and $OH^-$ oxidation and reaction with H (Eq. (90) occurs at the electrolysis anode. Then, the current polarity remains constant, but the voltage polarity of the electrodes switches or its magnitude in the same direction changes with the phase of the cycle. The electrode spacing may be minimized to facilitate the gas crossover. The electrodes may be separated by a membrane such as a porous olefin membrane such as a Celgard or base-compatible Nafion membrane. The circuit between the electrodes may comprise a diode to maintain the constant polarity of the current. In embodiments, the power from forming hydrinos manifests as at least one of excess electrical and thermal power over the dissipated electrolysis power.

The hydrino catalyst $H_2O$ having accepted 81.6 eV from H may decompose into $H_2$ and $1/2O_2$; consequently, a component of $H_2O$ electrolysis may occur even when the electrolysis voltage or current is absent. This may be observed as a Faradaic efficiency greater than 100% and may be a source of $H_2$ and $O_2$ gases. Each of $O_2$ and $H_2$ may react at the corresponding electrolysis source electrode or at the corresponding counter electrode following crossover. During the discharge phase of the intermittent discharge, the hydrino supporting reactions of oxygen and hydrogen may be given by (Eq. (92)) and (Eq. (90)), respectively. In other embodiments, other catalysts of the cell or formed during operation of the cell may cause the electrolysis of water due to the ionization of the catalyst and energy release during the catalysis reaction to form hydrinos.

In an embodiment, the electrolysis cathode of the intermittently charged and discharged cell may develop a thick non-conductive oxide coat. An exemplary coat on a Ni electrode is NiO. In an embodiment, the coat may be reduced by applying a suitable reduction cell voltage such as in the range of about 1 V to 1.5V, in the case of NiO. The reduction may be applied to the discharge anode. The electrolysis may be maintained at constant voltage or a suitable voltage for a suitable time to adequately reduce the oxide coat such that the electrode conductivity is substantially restored. Then, the charge-discharge cycle may be reapplied. In a high discharge current embodiment, the formation of an oxide coating on the discharge anode is avoided by charging at a peak limiting voltage that may be a constant voltage. The current may be limited during charging. In an embodiment wherein at least the charging voltage and current are limited, the charging may be at constant power. The discharge may be at a constant current, load, power, or voltage. In an embodiment, the cell such as [Ni/LiOH-LiBr/Ni air, intermittently charge discharge] is charged in the cell voltage rage of about 0.8 to 1.2 V such as constant 0.9V. Alternatively, the charging may be at a limiting or peak constant power in the range of about 0.1 to 100 mW $cm^{-2}$. The exemplary discharge current density may be in the range of about 0.001 to 1000 mA $cm^{-2}$, 0.1 to 100 mA $cm^{-2}$, and 1 to 10 mA $cm^{-2}$. In an embodiment, the electrolysis cathode and anode are interchanged to reduce any excessive oxide coat. The exchange may be intermittent. The period may be different from

that of the intermittent charge-discharge cycle of intermittent electrolysis. In an embodiment, both electrodes may be capable of hydrogen sparging wherein the hydrogen is alternately supplied to one and then the other to reduce any excess oxide coat that forms during its operation as an oxygen electrode. In an embodiment of a cell such as [Ni/LiOH-LiBr/Ni + air intermittent; charge-discharge] an oxide coat such as a NiO coat is removed mechanically or chemically by means known in the art. The removal may be periodically with the electrode reused. In another embodiment, hydrogen is applied to a chamber of a hydrogen permeable electrode such as the anode. The cell temperature may below that at which a significant permeation rate occurs relative to the power generated by the cell. However, the low flow or presence of hydrogen at the anode due to permeation may protect the electrode from oxidation such as oxidation to form NiO. In another embodiment, an electrode of the intermittent electrolysis cell is capable of and is operated as a hydrogen permeation electrode wherein hydrogen is provided to the cell by permeation from a source such as hydrogen gas; then, the electrode is switched to the electrolysis mode. In an embodiment, the switched electrode serves as the electrolysis cathode and discharge anode. The pretreatment may condition the electrode to perform as desired in the intermittent electrolysis mode. In an embodiment, intermittent electrolysis is performed as hydrogen is simultaneously supplied to an electrode such as the discharge anode by means such as permeation or sparging. Alternatively, an atmosphere comprising $H_2$ may be provided to the cell. The selectivity of the desired hydrogen reaction and counter electrode reaction such as those of the disclosure may be achieved via the selectivity of the corresponding electrodes. For example, the selectivity of the cathodic oxygen reduction reaction and anodic hydrogen reaction with $OH^-$ to form $H_2O$ catalyst are made selective by the corresponding selectivity of the cathode and anode, respectively. The hydrogen supplied to the anode may be protective since the reaction

$$NiO + H_2 \text{ to } Ni + H_2O \qquad (120)$$

is favorable. In another embodiment, the duty cycle for electrolysis is increased such that sufficient hydrogen is generated to protect the discharge anode from corrosion. The parameters are selected to achieve energy gain such as electrical energy gain while generating enough hydrogen to be protection against corrosion. The cell temperature may also be controlled to ameliorate corrosion while controlling the hydrogen supplied by means such as permeation and electrolysis. A discharge cathode that is resistant to corrosion may be selected that is appropriate for the operating conditions of the cell. For a temperature less than about 350 to 450 °C, the cathode may comprise Ni. For higher temperatures, a suitable stable cathode may be used such as one comprising an oxide such as a NiO or CoO or supported Ag such as Ag-$Al_2O_3$.

In an embodiment, the hydrogen supplied by permeation functions to at least one of change the voltage of the cell and control the permeation rate by a feedback mechanism that may be based on the effect of the permeation rate on the cell voltage. In an embodiment, the cell voltage is adjusted by adjusting the hydrogen permeation rate. The permeation rate may be adjusted by means such as at least one of controlling the cell temperature, the hydrogen pressure gradient across the hydrogen permeable membrane, the membrane thickness, the membrane material, and by adjusting the cell voltage. In an embodiment, means to adjust the cell voltage in addition to controlling the permeation rate comprise controlling the discharge and optionally charge parameters such as load and applied voltage and current characteristics and parameters wherein the latter may regard an intermittent electrolysis embodiment. In an embodiment, the cell voltage is maintained in the range of about 0.5 to 1.5V or about 0.8 to 1.2 V. The voltage range is controlled to optimize the yield of hydrogen formed during the electrolysis phase of the intermittent electrolysis of such an embodiment. In another embodiment, the permeation rate is controlled by controlling the load. In an embodiment, the permeation rate increases with decreasing resistance of the load. In an embodiment, the permeation rate increases with the discharge current. The permeation rate may be adjusted to optimize the power gain from forming hydrinos relative to the power to form $H_2$ from $H_2O$.

In an embodiment, a protective thin-layer NiO coat is applied by annealing a Ni electrode in an oxidizing environment such as an oxygen atmosphere. The thickness of the coating is controlled to one that gives stability to an alkaline electrolyte while maintaining high ionic conductivity. In an embodiment, a species is added to the electrolyte to stabilize the electrodes such as the anode. The additive may form a more stable Ni compound such as $NiF_2$ or $NiSO_4$. In another embodiment, the species may comprise a metal form a more stable Ni alloy or an oxide additive such as CeO impregnated in the NiO. The wt% of cerium oxide may be in the range of about 0.1 to 5% or 0.3 to 1%. In another embodiment, a species is added such as $V_2O_5$ to enhance the production of $H_2$ at the electrolysis cathode wherein the electrolysis may be intermittent and the electrolyte may be a molten salt or aqueous. The additive may be an oxide, hydroxide, or oxyhydroxide such as those of the disclosure such as $Fe_2O_3$, or FeOOH. Other suitable exemplary additives are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. The additive may at least one of enhance the power and protect the electrode such as the anode. For example, the additive such as MgO or $Fe_2O_3$ that may form $Ni_{1-x}Mg_xO$ and $NiFe_2O_4$, respectively, may stabilize NiO of the electrode such as the anode.

In an embodiment, the discharge cathode comprises an oxygen reduction catalyst of the disclosure such as

Ni comprising a large surface area such as mesh further comprising at least one of $Mn_xO_y$ (x and y are integers), NiO, CoO, Ag, Pt, Pd, Au, other noble metal, and $MNiO_2$ (M = alkali). Other suitable oxygen reduction electrodes are alkaline earth ruthenates, lithium doped lanthanum nickelate, Ni-Co spinel, Pb-Ru pyrochlore, Na-Pt bronze, and Ag/AgHg. Additional cathode materials comprise at least one of $MNiO_2$, $M_2NiO_2$, $MCoO_2$, $M_2CoO_2$, $LiFeO_2$, $MFeO_2$, $M_2FeO_2$, $Li_2MnO_3$, $MTiO_3$, $M_2TiO_3$, $LiTiO_3$, $M_3TaO_4$, $M_2WO_4$, $K_2WO_4$, $Li_3TaO_4$, $M_3VO_4$, $Li_3VO_4$, Mg-$Li_2MnO_3$, Mn-$LiFeO_2$, $LaMnO_3$, $SrTiO_3$, $LiCrO_2$, $LiAlO_2$, $LaNiO_3$, $LaCoO_3$, ZnO, MgO, $M_2SnO_3$, $Li_2SnO_3$, Zr-ZnO, $MM'O_2$, $M_2M'O_2$, $MM'O_x$, $M_2M'O_x$ (x = integer, M = alkali, M' = transition metal or other metal such as Al), $M_2M'O_x$ doped with magnesium such as $LiFe_{1-y}Mg_yO$ (y > 0.03), doped n-type perovskites and related compounds such as $CaTiO_3$ and $SrTiO_3$ doped with $Nb^{5+}$ and $PbZrO_3$ doped with $Nb^{5+}$ or $Ta^{5+}$, barium ferrites, yttrium iron garnets, p-type perovskites such as lanthanum-Group VIII compounds, metals or compounds of Ni, Cu, Co, Mn, Cr, Zn, Zr, Y, Al, U, Ti, and Fe. The cathode may comprise a dopant of a porous material such as Ni that may comprise nano-particles. The dopant may be an oxygen reduction catalyst of the disclosure. The cathode may comprise NiO that may be stabilized. A suitable method of stabilization is encapsulation with a material such as a stable metal such as cobalt. Thus, the oxygen reduction catalyst may comprise cobalt encapsulated NiO. The oxygen reduction cathode may undergo thermal, chemical, or electrochemical conditioning such as oxidation by chemical or thermal methods or anodization or cathodization before it serves as a cathode. The conditioning may be in situ. The cathode may be operated at high current that is then reduced wherein the former step conditions the cathode. The electrode such as the cathode may comprise a conductive matrix or surface coating such as carbon, carbide, nitride, carbonitride, nitrile, or boride or comprise these materials. In an embodiment, the electrolysis anode comprises a catalyst such as gold-palladium nanoparticles that forms a reactive oxygen species such as $HOO^-$ or HOOH or a compound comprising oxygen such as PdO, AgO, $Ag_2O$, $Ag_2O_3$, or HgO that undergoes reduction at a higher rate than $O_2$ during the discharge phase when the electrode serves as the discharge cathode. The compound may comprise an oxide of a metal that forms reversibly during charge and discharge to provide oxygen to the non-electrolysis discharge phase of the intermittent cycle. The compound may have a free energy of formation less than that of $H_2O$. The discharge reaction may be given by Eq. (68). The leads such as the cathode lead may be a material that is stable to the electrolyte such as an alkaline electrolyte and air or $O_2$. A suitable lead is a noble metal wire such as a gold wire that may be spot welded to the cathode. In an embodiment comprising a molten electrolyte comprising KOH such as [Ni, Mo, or Ni or Mo alloy and optionally H by means such as permeation or sparging /KOH or KOH-KBr, /NiO], the lead wire comprises Au or Ni. In an embodiment, the electrolyte such as a molten or aqueous electrolyte such a molten or aqueous hydroxide or mixtures comprises added $H_2O$ that increases the diffusion of oxygen ions formed at the cathode to increase the oxygen reduction rate. The cell may be pressurized to operate at temperature near boiling and above. Hydrogen and oxygen may be generated in situ by electrolysis. At least one of $H_2O$, oxygen, and hydrogen may also be added to the cell under pressure. The cell pressure may be in the range of about subatmospheric to 500 atm or about 2 to 100 atm. In another embodiment, the diffusion rate of oxygen ions formed at the cathode is increased in a molten electrolyte such as one comprising an oxyanion such as a alkaline electrolyte such as one comprising a hydroxide by using at least one other salt to comprise a mixture that facilitates the higher mobility of oxygen ions. In an embodiment, the electrolyte comprises a mixture of metal ions and anions such as at least one of alkali, alkaline earth, and other metal ions such as transition, inner transition, rare earth, and Group III, IV, V, and VI metal ions. The anion comprises at least one of hydroxide, sulfate, carbonate, nitrate, phosphate, halide, and other ions of the disclosure. In an embodiment, the oxygen ion mobility is increased with elevated $H_2O$ content in the electrolyte. In an embodiment, suitable electrolytes are hydroscopic. Suitable hydroscopic salts are lithium bromide, calcium chloride, magnesium chloride, zinc chloride, potassium carbonate, potassium phosphate, carnallite such as $KMgCl_3 \cdot 6(H_2O)$, ferric ammonium citrate, potassium hydroxide and sodium hydroxide. In acidic aqueous embodiments, hydroscopic electrolytes comprise concentrated sulfuric and phosphoric acids.

In other embodiments, the electrodes comprise a conductor that is sufficiently stable to the electrolyte and operating conditions of the cell. Suitable electrodes for the alkaline cell are Ni. Other conducting metals, alloys, compounds, or elements may be used with alkaline, acidic, or about neutral electrolytes that are either aqueous or molten salts such as at least one of C, Al, Ga, In, Ge, Sn, Pb, As, Sb, Te, and alkali, alkaline earth, transition, inner transition, and rare earth metals. Supported metals and materials are also suitable such as dimensionally stable anodes and Pt/Ti, Ag-$Al_2O_3$, NiO-$SiO_2$-$Al_2O_3$, and Pt, Pd, or other metal or noble metal supported on a matrix such as $Al_2O_3$, C, or zeolite. Materials that ordinarily may form a nonconductive oxide coat by reaction with the electrolyte or air may be suitable under the operating conditions of the cell such as under intermittent electrolysis conditions wherein the electrode may be periodically reduced. An exemplary electrode is Zr that is periodically the electrolysis cathode and discharge anode. The electrode material may be a nonconductor doped with a conductor. Other elements or compounds such as carbon, carbide, boride, nitride, carbonitrile such as TiCN, or nitrile may comprise the electrodes such as the anode. Suitable exemplary materials are carbon black, AC, ZrC, TiC, $Ti_3SiC_2$, TiCN, TiN, SiC, $YC_2$, TaC, $Mo_2C$, WC, C, HfC, $Cr_3C_2$, ZrC, VC, NbC, $B_4C$, $CrB_2$, $ZrB_2$, $GdB_2$, $MgB_2$, and $TiB_2$. The material may comprise a powder.

In addition to the formation of $H_2(1/4)$ as a product of $H_2O$ catalyst, a reaction mixture comprising an alkaline solution having a source of $OH^-$ such as a molten or aqueous hydroxide electrolyte may also form at least one other

hydrino product such as molecular hydrino $H_2(1/2)$. The catalyst may comprise O or H wherein each have a potential energy of 27.2 eV that permits them to serve as a catalysts by accepting about 27.2 eV from atomic H to form H(1/2) that may further react to form $H_2(1/2)$ and $H^-(1/2)$. Additionally, OH may serve as a catalyst since the potential energy of OH is 40.9 eV. OH may be formed from $OH^-$ by oxidation at the anode. Exemplary cells to form $H_2(1/4)$ and $H_2(1/2)$ by $H_2O$ and OH serving as catalysts of H to the corresponding hydrino states are [Mo/LiOH-LiBr/NiO intermittent electrolysis] and [Ni/LiOH-LiBr/NiO intermittent electrolysis]. The hydrino products may be identified by Raman of the electrolyte or anode gas.

In an embodiment, the catalyst forming reaction may be given by

$$O_2 + 5H^+ + 5e^- \text{ to } 2H_2O + H(1/p) \quad (121)$$

The counter half-cell reaction may be

$$H_2 \text{ to } 2H^+ + 2e^- \quad (122)$$

The overall reaction may be

$$3/2H_2 + 1/2O_2 \text{ to } H_2O + H(1/p) \quad (123)$$

wherein at least one of $H_2O$, OH, $O_2$, nH, and nO (n = integer) may serve as the catalyst. Hydrogen may be generated at the cathode by reduction of $H^+$ wherein some of the hydrogen reacts with the catalyst to form hydrinos. Alternatively, excess hydrogen may be supplied to the cathode such that it reacts with the catalyst to form hydrinos. In an embodiment, at least one of the temperature, $O_2$ pressure, $H_2O$ pressure, $H_2$ pressure, and $H^+$ concentration are controlled to favor the catalyst-forming half-cell reaction and the counter reaction that results in the optimal formation of hydrinos. In an embodiment, the cathode half-cell potential relative to the SHE at 25 °C is about 1.23V within about $\pm$ 0.5V. In an embodiment, the anode half-cell potential relative to the SHE is about 0V within about $\pm$ 0.5V. Suitable exemplary half-cell reactions are given by Eqs. (121) and (122), respectively. The overall reaction to form hydrinos may be given by Eq. (123). Suitable exemplary cells are [Pt/C + $H_2$/Nafion/Pt/C + air + H source such as $H_2$ or a hydride or other H storage material of the disclosure] and [Pt/C + $H_2$/$H_2SO_4$/Pt/C + air + H source such as $H_2$ or a hydride or other H storage material of the disclosure] a separator such as Nafion may be used with an acidic electrolyte such as aqueous $H_2SO_4$. The hydrogen source may be the intermittent electrolysis of the electrolysis comprising a source of H such as $H_2O$.

The cell comprising a proton conducting or acidic molten or acidic aqueous electrolyte to maintain the reaction given by Eq. (123) may comprise an intermittent or pulsed electrolysis cell. Reactions such as those given by Eqs. (121) and (122) may occur reversibly on the corresponding electrode or on the corresponding counter electrode following gas crossover.

In an embodiment, the electrolyte may comprise an acidic aqueous solution. The charging phase of the intermittent or pulsed cycle may comprise the electrolysis of $H_2O$ to $H_2$ and $O_2$. The electrolysis cathode and anode reactions may comprise the reverse of Eqs. (122) and (121), respectively, except that the hydrino formation is irreversible. The cathode discharge half-cell reaction may comprise the reduction of at least one of oxygen, $H^+$, and $H_2O$. The reduction may be given by Eq. (121). The cathode products during discharge may be H and $H_2O$. The $H_2O$ may serve as a catalyst to form hydrinos. The overpotential for the reduction reaction may cause the half-cell voltage to be about 1.23 V relative to the SHE and 25 °C. The anode discharge half-cell reaction may comprise the oxidation of $H_2$ to form $H^+$ (Eq. (122)). In an embodiment, the reduction potential for the oxidation of $H_2$ to $H^+$ in aqueous acidic solution (Eq. (122)) is about 0 V relative to the SHE and 25 °C. The overpotential for oxidation on the electrode is about 0V such that the oxidation half-cell reaction occurs at about 0 V.

In other embodiments, the catalyst may comprise a species that accepts m27.2 eV from atomic hydrogen such as those of the disclosure wherein the catalyst may be a half-cell species or formed during the electrolysis or discharge phases. Hydrinos are formed during at least one of the charge and discharge phases. Regarding the discharge phase, the half-cell potential of the reduction reaction may be about 1.23 V or be in the range of about 0.6 to 1.4 V relative to the SHE and 25 °C, and the half-cell potential of the oxidation reaction may be about 0 V or be in the range of about -0.5 to +0.5V relative to the SHE. The cell potential between the electrolysis cathode and anode during the electrolysis-off or discharge phase may be about 1.2 V or be in the range of about 0.3 to 2 V relative to the SHE and 25 °C. In embodiments having an elevated temperature, these room temperature ranges are thermodynamically corrected for the operating temperature.

$H^+$ and $O_2$ may be formed at the anode and hydrogen at cathode during electrolysis. During the electrolysis-off or discharge phase, $H_2$ may be oxidized to $H^+$ (Eq. (122) at the electrolysis cathode, and $H^+$ and $O_2$ may undergo reduction at the electrolysis anode to form H and $H_2O$ (Eq. (121)) wherein the latter may serve as a catalyst to form hydrinos at the electrolysis anode. Thus, the cell may maintain a constant polarity during charge and discharge with the

polarity of the current reversing during each phase of the cycle. The output may be power or waveform conditioned. In another embodiment, the reaction given by Eq. (122) occurs reversibly at both electrodes except that the hydrino product is irreversible. Exemplary cells are [PtTi/$H_2SO_4$ or $H_3PO_4$ (aq)/Pt, intermittent electrolysis] and [Pb/$H_2SO_4$ (aq)/Pb or PbO intermittent electrolysis]. The acid may be in any desired concentration such as about 0.1 M to saturated. Exemplary concentrations are 14.7 M $H_3PO_4$ and 5M $H_2SO_4$.

In another embodiment, the gases may crossover from at least one of the anode to cathode, and vice versa. Then, during discharge at least one of the half-cell reactions may be switched such the $O_2$ (Eq. (121) reduction occurs at the electrolysis cathode and $H_2$ oxidation (Eq. (122) occurs at the electrolysis anode. Then, the current polarity remains constant, but the voltage polarity of the electrodes switches with the phase of the cycle. The electrode spacing may be minimized to facilitate the gas crossover. The electrodes may be separated by a membrane such as a proton-exchange membrane such as a Nafion membrane. The circuit between the electrodes may comprise a diode to maintain the constant polarity of the current. In embodiments, the power from forming hydrinos manifests as at least one of excess electrical and thermal power over the dissipated electrolysis power.

In an embodiment of an aqueous intermittent electrolysis cell, $H^+$ and oxygen may be formed at the electrolysis anode, and $OH^-$ and $H_2$ may be formed at the electrolysis cathode as given by exemplary reactions:

Electrolysis Anode

$$H_2O \text{ to } 1/2O_2 + 2H^+ + 2e^- \qquad (124)$$

Electrolysis Cathode

$$2H_2O + 2e^- \text{ to } H_2 \text{ to } 2OH^- \qquad (125)$$

The solution reaction may be

$$2H^+ + 2OH^- \text{ to } 2H_2O \qquad (126)$$

The overall reaction may be

$$H_2O \text{ to } H_2 + 1/2O_2 \qquad (127)$$

During the discharge phase, hydrinos may be formed wherein at least one of $H_2O$, OH, $O_2$, nH, and nO (n = integer) may serve as the catalyst. Exemplary reactions to form $H_2O$, that may serve as the catalyst, and hydrinos are Cathode

$$1/2O_2 + 3H^+ + 3e^- \text{ to } H_2O + H(1/p) \qquad (128)$$

Anode

$$H_2 + OH^- \text{ to } H_2O + e^- + H(1/p) \qquad (129)$$

The solution reaction may be

$$3H^+ + 3OH^- \text{ to } 3H_2O \qquad (130)$$

The overall reaction may be

$$3H_2 + 1/2O_2 \text{ to } H_2O + 4H(1/p) \qquad (131)$$

The electrolytic solution may be about neutral pH. Suitable electrolytes that are about neutral are metal salts of strong acids such as aqueous nitrates, sulfates, halides, perchlorates, periodates, chromates, and others of the disclosure. The cation may be ammonium or a metal or such as alkali, alkaline earth, transition, inner transition, rare earth, and Groups III, IV, V, and VI metals. The concentration may be any desired which is soluble such as 0.01M to saturated.

The intermittent waveform may be that which optimizes the output electricity relative to the input electricity. The frequency of the intermittent electrolysis may be in the range of about 0.001 Hz to 10 MHz, about 0.01 Hz to 100 kHz, or about 0.01 Hz to 10 kHz. The electrolysis voltage per cell may be in the range of about 0.1 V to 100 V, about 0.3 V

to 5 V, about 0.5 V to 2 V, or about 0.5 V to 1.5 V. The electrolysis current per electrode area active to form hydrinos maybe in the range of about 1 microamp $cm^{-2}$ to 10 A $cm^{-2}$, about 0.1 milliamp $cm^{-2}$ to 5 A $cm^{-2}$, and about 1 milliamp $cm^{-2}$ to 1 A $cm^{-2}$. The electrolysis power per electrode area active to form hydrinos maybe in the range of about 1 microW $cm^{-2}$ to 10 W $cm^{-2}$, about 0.1 milliW $cm^{-2}$ to 5 W $cm^{-2}$, and about 1 milliW $cm^{-2}$ to 1 W $cm^{-2}$. The intermittent waveform may be at constant current, power, or voltage for at least one of changing and discharging. In an exemplary embodiment, the constant current per electrode area active to form hydrinos may be in the range of about 1 microamp $cm^{-2}$ to 1 A $cm^{-2}$; the constant power per electrode area active to form hydrinos may be in the range of about 1 milliW $cm^{-2}$ to 1 W $cm^{-2}$; the constant electrolysis voltage per cell may be in the range of about 1 V to 20 V, and the constant discharge voltage per cell may be in the range of about of about 0.1 V to 20 V. The electrolysis time interval may be in the range of about $10^{-4}$ s to 10,000 s, $10^{-3}$ s to 1000 s, or $10^{-2}$ s to 100 s, or $10^{-1}$ s to 10 s. The discharge time interval may be in the range of about $10^{-4}$ s to 10,000 s, $10^{-3}$ s to 1000 s, or $10^{-2}$ s to 100 s, or $10^{-1}$ s to 10 s. The discharge may be at constant or variable current, voltage, and power that may be in the same ranges as those of the electrolysis. The discharge resistance may be constant or variable. It may be in the range of about 1 milliohm to 100 Mohm, about 1 ohm to 1 Mohm, and 10 ohm to 1 kohm. In an embodiment, at least one of the discharge current, voltage, power, or time interval is larger than that of the electrolysis phase to give rise to at least one of power or energy gain over the cycle.

In an embodiment, at least one of the charge and discharge times is less than the diffusion time of a species from one electrode to the other. In an embodiment, the species may be an active oxygen species such as at least one of peroxide, a peroxide ion, superoxide, HOOH, $HOO^-$, O, $O_2^{2-}$, and $O^{2-}$. In an embodiment, at least one of the charge and discharge times is less than about 100 s, 10 s, 1 s, 0.1 s, 0.01 s, 0.001 s, 0.0001 s, 0.01 ms, 1 microsecond, or 0.1 microsecond. In an embodiment, the frequency of the charge-discharge cycle is higher than that which will permit active species formed at the discharge cathode to migrate and diffuse to the discharge anode. The charge-discharge time may be less that 1 s, for example, such that the migration of an active oxygen species such as peroxide ion is prohibited from reaching and reacting with the anode such as a Mo or Mo alloy anode or others of the disclosure. Here, at least one of the electrolytic electric field and the current that causes the ions to migrate is switching direction faster than the migration time to the anode. The discharge cathode that forms reactive oxygen species during charging may destroy them during discharging such that they are prohibited from diffusing to and corroding the discharge anode. In an embodiment, an exemplary intermittent charge-discharge circuit may be that of Gamry Instruments such as that of Model EIS300 or a modification thereof known by those skilled in the art.

In an embodiment, at least one of the intermittent charge or discharge voltage, current, power, and load may be constant or variable. The parameters may be controlled to achieve electrical power or energy gain. The electrolysis voltage per cell may be at or slightly above the threshold for current flow such as in the range of about 0 to 0.5V above the threshold. A suitable electrolysis voltage per cell range is about 0.25V to 2V or 0.25V to 1.7V. The discharge voltage per cell may be in a range that maintains a current of opposite polarity to that of the electrolysis current. The discharge voltage per cell may be in the range of about 0.01V to the maximum electrolysis voltage. A suitable discharge voltage range per cell is about 0.01V to 2V or 0.01V to 1.7V. Regarding the electrode area active to form hydrinos, the discharge current may be in the range of about 1 microamp $cm^{-2}$ to 1 A $cm^{-2}$, 0.01 mA $cm^{-2}$ to 20 mA $cm^{-2}$, or 0.01 mA $cm^{-2}$ to 10 mA $cm^{-2}$. The discharge load may be in the range of about 1 microohm to 1 megaohms. A suitable load may maintain the current in the range of about 1 microamp $cm^{-2}$ to 1 A $cm^{-2}$, 0.01 mA $cm^{-2}$ to 20 mA $cm^{-2}$, or 0.01 mA $cm^{-2}$ to 10 mA $cm^{-2}$. The conductivity of a suitable load per electrode area active to form hydrinos is in the range of about $10^{-5}$ to 1000 $ohm^{-1}$ $cm^{-2}$, $10^{-4}$ to 100 $ohm^{-1}$ $cm^{-2}$, $10^{-3}$ to 10 $ohm^{-1}$ $cm^{-2}$, or $10^{-2}$ to 1 $ohm^{-1}$ $cm^{-2}$. The power may be determined by at least one of the suitable voltage, current, and resistance. A suitable power density per electrode area active to form hydrinos is in the range of about 1 microW $cm^{-2}$ to 1 W $cm^{-2}$, 0.01 mW $cm^{-2}$ to 20 mW $cm^{-2}$, or 0.01 mW $cm^{-2}$ to 10 mW $cm^{-2}$. In an embodiment, an exemplary intermittent charge-discharge circuit may be that of Arbin Instruments such as that of Model BT2000 or a modification thereof known by those skilled in the art.

In an embodiment of a molten electrolyte, the cell temperature is maintained at least the melting point of the electrolyte and higher. The electrolyte may be a molten hydroxide that may be a mixture with at least one other compound such as a salt such as a halide salt. Exemplary suitable hydroxide mixture electrolytes are LiOH-LiBr, LiOH-LiX, LiOH-NaOH, LiOH-LiBr-NaOH, NaOH-NaBr, NaOH-NaI, NaOH-NaX, KOH-KX (X = halide). The salt may be a eutectic mixture. The temperature above the melting point may be in the range of about 0 to 1500 °C higher, 0 to 1000 °C higher, 0 to 500 °C higher, 0 to 250 °C higher, or 0 to 100 °C higher. The cell temperature may be controlled during cell operation to control the rate of the hydrino reaction. The reaction rate may be controlled by adjusting at least one of the half-cell reaction voltages that are temperature and reactant composition dependent. In an embodiment, the temperature and the reactant composition such as the pressure of at least one of $H_2O$, $O_2$, and $H_2$ can be controlled to adjust the half-cell voltage to control the rate of the hydrino reaction. In an embodiment, comprising a hydrogen permeable membrane, the temperature of the cell is maintained at an elevated temperature that achieves a desired permeation rate. The membrane material, thickness, and hydrogen pressure are also selected to achieve the desired permeation rate. In an embodiment, the cell temperature is in the range of about 25 to 2000 °C, 100 to 1000 °C, 200 to 750 °C, or 250 to 500 °C. If the cell comprises a permeation membrane and a molten salt electrolyte, the cell temperature is maintained above

the melting point of the electrolyte and at the level that achieves the desired permeation rate. Thus, in an embodiment, the cell temperature is maintained at least the melting point of the salt and higher. The temperature above the melting point may be in the range of about 0 to 1500 °C higher, 0 to 1000 °C higher, 0 to 500 °C higher, 0 to 250 °C higher, or 0 to 100 °C higher. The membrane thickness may be in the range of about 0.0001 to 0.25 cm, 0.001 to 0.1 cm, or 0.005 to 0.05 cm. The hydrogen pressure may be maintained in the range of about 1 Torr to 500 atm, 10 Torr to 100 atm, or 100 Torr to 5 atm. The hydrogen permeation rate may be in the range of about 1 X $10^{-13}$ mole $s^{-1}$ $cm^{-2}$ to 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$, or 1 X $10^{-9}$ mole $s^{-1}$ $cm^{-2}$ to 1 X $10^{-8}$ mole $s^{-1}$ $cm^{-2}$. The cell temperature of an intermittent electrolysis cell or a cell comprising a hydrogen sparging or bubbling electrode is maintained above the melting point of the electrolyte. In an exemplary cell comprising the electrolyte LiOH-LiBr having a eutectic mixture of about (43%-57%) such as the cell [Ni/LiOH-LiBr/Ni + air; intermittent electrolysis] or [Ni($H_2$)/LiOH-LiBr/Ni + air] wherein the hydrogen electrode (designated Ni($H_2$)) comprises an $H_2$ sparging or bubbling electrode, the eutectic electrolyte melting point is about 265 °C. The cell may be maintained at this temperature and above. The hydrogen flow rate per geometric area of the $H_2$ bubbling or sparging electrode may be in the range of about 1 X $10^{-13}$ mole $s^{-1}$ $cm^{-2}$ to 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$, or 1 X $10^{-9}$ mole $s^{-1}$ $cm^{-2}$ to 1 X $10^{-8}$ mole $s^{-1}$ $cm^{-2}$. In an embodiment, the rate of reaction at the counter electrode matches or exceeds that at the electrode at which hydrogen reacts. In an embodiment, the reduction rate of at least one of $H_2O$ and $O_2$ is sufficient to maintain the reaction rate of H or $H_2$. The counter electrode has a surface area and a material sufficient to support the sufficient rate.

The electrodes and electrolyte system may be in a vessel closed to atmosphere. In the case of intermittent electrolytic cell comprising a molten hydroxide salt electrolyte, the water partial pressure supplied to the cell may be controlled to favor the $OH^-$ producing reaction over other $O_2$ and $H_2O$ reduction reactions such as those that form at least one of peroxide, superoxide, and oxide. In an embodiment, at least one of the temperature, $O_2$ pressure, $H_2O$ pressure, $H_2$ pressure, and $OH^-$ concentration are controlled to favor the catalyst-forming half-cell reaction and the counter reaction that results in the optimal formation of hydrinos. One or more of the corresponding reactions may be given by Eqs. (90-93). The cell may be closed to air. In an embodiment, the oxygen of at least one half-cell reaction is from electrolysis such as oxidation of at least one of $H_2O$ and $OH^-$. Suitable exemplary cells that undergo intermittent or pulsed electrolysis are [Ni($H_2$)/LiOH-LiBr/Ni], [Ni($H_2$)/NaOH-NaBr/Ni], [Ni($H_2$)/NaOH-NaI/Ni], [Ni($H_2$)/Sr(OH)$_2$/Ni], and similar cells of the disclosure wherein some $H_2O$ is present and intermittent electrolysis may be the source of hydrogen in replacement of or in addition to H permeation. $H_2O$ may be added back to replace any consumed to form hydrinos. Excess oxygen may also be removed. The water vapor pressure may be controlled by a generator connected to the cell. The $H_2O$ vapor generator may have a temperature lower than that of the cell temperature to control the $H_2O$ vapor pressure. In an embodiment, the water vapor generator may comprise an atomizer or nebulizer such as an ultrasonic one. The $H_2O$ vapor may be delivered by a flow such as that of an inert gas such as a noble gas or $N_2$. The flow may comprise a carrier gas. The $H_2O$ may be delivered by entrainment in the carrier gas. The carrier gas may be bubbled through a $H_2O$ column to cause the carrier gas to contain $H_2O$ vapor. The carrier gas composition, the $H_2O$ column height, the column temperature, the gas pressure, the gas entrance size, the presence of a diffuser and the number and size of any orifices are adjusted to achieve the desired degree of saturation of the carrier gas with $H_2O$ and the $H_2O$ flow rate into the cell. The gas may be recirculated. Alternatively, the $H_2O$ mass balance may be controlled to achieve the desired $H_2O$ wt% of the electrolyte or half-cell reactants. In an embodiment, loss of electrolyte by means such as volatilization of hydroxides such a LiOH can be decreased by lowering the cell temperature, maintaining an elevated cell pressure, and running the cell at least partially closed wherein the gases may be supplied by intermittent electrolysis and by lines with selective directional flow. The water vapor generator or water mass balance may also control at least one of the water content and pressure of a closed intermittent electrolytic cell having an acidic electrolyte. Exemplary reactions involving $H_2O$ are given by Eqs. (121-123).

In an embodiment, the source of $H_2O$ to the cell may be the dehydration of the electrolyte such as a hydroxide. An exemplary reaction of an alkali hydroxide such as LiOH is

$$2LiOH \text{ to } Li_2O + H_2O \qquad (132)$$

The dehydration reaction may occur even if it is endergonic with energy supplied by at least one of intermittent electrolysis, the hydrino formation reaction, and heat. In an embodiment the CIHT or electrolytic cell anode comprises a material such as a metal such as Mo or a Mo alloy such as Haynes 242, MoNi, MoCu, or MoCo that has an exergonic reaction with $H_2O$. The cell source of $H_2O$ may be the dehydration reaction that is endergonic in its overall reaction with the anode. An exemplary reaction is the reaction of the LiOH electrolyte with Mo to form Mo oxide, $Li_2O$, and hydrogen. Then, the cell may be run for a suitable duration to form energy without significant degradation of the anode. The conditions of the cell such as the operating temperature may be changed such that the electrolyte could be regenerated without substantial reaction with the anode. For example, the cell temperature could be lowered and $H_2O$ added to the

electrolyte to rehydrate it. The regenerated cell may then be operated further at the typical operating conditions.

In an embodiment, the electrolyte comprises a hydroxide such as an alkali hydroxide such as LiOH and further comprises the dehydrated form such as the oxide as a mixture wherein the concentration of the dehydrated form such as $Li_2O$ is within a range such that the anode is stabilized from oxidation. In an embodiment, the anode such as a Mo anode reacts with the hydrated form such as LiOH and is stable in the presence of the dehydrated form such as $Li_2O$. The concentration range of the two forms is such that the oxidation potential provides stability to the anode to oxidation. The concentration range further provides that excess energy is formed during the operation of the cell wherein the source of H may be from intermittent electrolysis. In an embodiment, the electrolyte may become further dehydrated during operation. The electrolyte may be rehydrated continuously or periodically or intermittently. In the latter case, the $H_2O$ addition may occur at a lower temperature than the operating temperature to prevent the anode such as a Mo anode from oxidizing during hydration. Once rehydrated the cell may be heated and operated at a standard higher operating temperature. The electrolyte may further comprise a mixture of a hydroxide, the dehydrated form, and at least one other salt such as a halide such as an alkali halide such as LiBr.

In an embodiment, the cells of the intermittent electrolytic cell are arranged in a stack. Each cell may comprise a molten electrolyte such as a molten hydroxide and optionally at least one other salt or a molten aqueous electrolyte such as an aqueous alkaline electrolyte. The cathode of each cell may comprise an air or oxygen electrode. In embodiments, the source of oxygen of the cell is at least one of air, external oxygen, and electrolytically generated oxygen. In an embodiment, the cathode may comprise at least a portion that is exposed to a source of oxygen such as air or $O_2$ gas. The exposed portion may extend out from the cell stack and electrolyte to allow $O_2$ or reduced $O_2$ to flow into the electrolyte at the cathode-electrolyte interface. In another embodiment, the cell may be closed and the hydrogen and oxygen may be generated electrolytically. The system may comprise a heater to maintain the stack at a desired elevated temperature. The temperature may be at about or greater then the melting point of the molten electrolyte. In an embodiment, the cell comprises a jelly-roll or Swiss role design. In an embodiment, a separator or spacer and electrolyte are applied between electrodes that may comprise sheets that are rolled up. The jelly-roll or Swiss role cell may be closed. The cell may be rolled tightly with the oxygen provided by electrolysis. In an embodiment, the oxygen reduction electrode such as the cathode may be fully submerged in the electrolyte. The intermittent electrolysis electrodes that supply the hydrogen and oxygen may be different materials such as different metals or different materials of the disclosure such different electrodes selected from the group of metals, carbon, carbides, borides, nitrides, and carbonitrile. The cathode material may absorb oxygen during electrolysis and release it during the discharge phase of the intermittent cycle.

In an embodiment, the voltage of the half-cell reaction to form the catalyst relative to 25°C and the SHE is about 1.2V. Suitable voltages are in the ranges of about 1.5V to 0.75V, 1.3V to 0.9V, and 1.25V to 1.1V relative to a SHE and 25 °C. Suitable reactions are those that form $H_2O$ such as those given by Eqs. (90) and (121). In an embodiment, the cell theoretical voltage is about 0 V. The cell reactions may comprise water reduction to $OH^-$ and $H_2$ at the cathode and the reaction of $OH^-$ and $1/2H_2$ to $H_2O$ at the anode. In an embodiment, a cell reaction having a theoretical cell voltage of about 0V occurs with at least one other having a having a theoretical cell voltage of about greater than 0 V. In an exemplary embodiment, cell reactions may comprise water reduction to $OH^-$ and $H_2$ at the cathode and the reaction of $OH^-$ and $1/2H_2$ to $H_2O$ at the anode having a theoretical cell voltage of about 0 V, and also a net cell reaction to form water (Eq. (93)) having a theoretical cell voltage is greater that 0V.

In another embodiment, the surface area of at least one electrode is increased by applying a coating such as a metal black coating applied by vapor deposition techniques such as continuous vapor deposition (CVD), sputtering, plasma deposition, atomic layer deposition (ALD), physical vapor deposition (PVD) such as plasma spray, cathodic arc deposition, electron beam physical vapor deposition, evaporative deposition, pulsed laser deposition, and sputter deposition, chemical vapor deposition (CVD), metalorganic vapor phase epitaxy (MOVDE), and metalorganic chemical vapor deposition (MOCVD). Other suitable methods comprise spraying, paint brushing, Mayer rod application, screen printing, spin coating, wet laying, and tape casting. In other embodiments, the electrolyte layer may be applied by these or other methods known in the art.

In an embodiment, an oxygen species such as at least one of $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$ may undergo an oxidative reaction with a H species such as at least one of $H_2$, H, $H^+$, $H_2O$, $H_3O^+$, OH, $OH^+$, $OH^-$, HOOH, and $OOH^-$ to form at least one of OH and $H_2O$ that serves as the catalyst to form hydrinos. The source of the H species may be at least one of a compound such as a hydride such as $LaNi_5H_6$, hydroxide, or oxyhydroxide compound, $H_2$ or a source of $H_2$, a hydrogen permeable membrane such as $Ni(H_2)$, $V(H_2)$, $Ti(H_2)$, $Fe(H_2)$, or $Nb(H_2)$, and from intermittent electrolysis of the electrolyte. The O species may be provided by a reduction reaction of $H_2O$ or $O_2$ at the cathode. The source of oxygen may be and from intermittent electrolysis of the electrolyte. The source of $O_2$ of the O species may be from air. Alternatively, the O species may be supplied to the cell.

Suitable sources of the O species such as $OH^-$, HOOH, $OOH^-$, $O^-$, $O^{2-}$, $O_2^-$, and $O_2^{2-}$ are oxides, peroxides such as those of alkali metals, superoxides such as those of alkali and alkaline earth metals, hydroxides, and oxyhydroxides such as those of the disclosure. Exemplary oxides are those of transition metals such as NiO and CoO and Sn such as SnO, alkali metals such as $Li_2O$, $Na_2O$, and $K_2O$, and alkaline earth metal such as MgO, CaO, SrO, and BaO. The source oxide such as NiO or CoO may be added to a molten salt electrolyte. Further exemplary oxides are one from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. Exemplary cells are [$Ni(H_2)$, $V(H_2)$, $Ti(H_2)$, $Fe(H_2)$, or $Nb(H_2)$ or a hydride such as $LaNi_5H_6$/eutectic salt electrolyte comprising an alkali hydroxide such as LiOH-NaOH, LiOH-LiX, NaOH-NaX (X = halide or nitrate) or LiOH-$Li_2X$ or NaOH-$Na_2X$ (X = sulfate or carbonate) and $Li_2O$, $Na_2O$, $K_2O$, MgO, CaO, SrO, or BaO, or an oxide of, Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, or W, a peroxide such as those of alkali metals, or a superoxide such as those of alkali and alkaline earth metals/Ni or other metal that may be the same as that of the anode]. In other embodiments, the H permeable electrode comprises an intermittent electrolysis electrode that serves as the anode during discharge.

In an embodiment, $OH^-$ may be oxidized and reacted with H at the anode to form $H_2O$ that may serve as the catalyst for H to form hydrinos. The H may be from a source such as a hydride such as $LaNi_5H_6$ or $H_2$ that may permeate through a membrane such as Ni, Ti, V, Nb, Pd, PdAg, or Fe from a hydrogen source such as a tank or supply 640 flowed through a line 642 and a regulator 644 (FIGURE 5). The source may be an aqueous electrolysis cell 640 with a $H_2$ and $O_2$ separator to supply substantially pure $H_2$. $H_2O$ may be reduced to $H_2$ and $OH^-$ at the cathode. The formation of $H_2$ may be by intermittent electrolysis of the electrolyte such as a molten electrolyte. In an embodiment shown in FIGURE 5, the CIHT cell comprises $H_2O$ and $H_2$ collection and recycling systems. The CIHT 650 cell comprises a vessel 651, a cathode 652, an anode 653, a load 654, an electrolyte 655, and a system 657 to collect $H_2O$ vapor from the CIHT cell such as that formed at the anode. The $H_2O$ collection system comprises a first chamber 658 connected to the cell to receive $H_2O$ vapor through a vapor passage 659 from the cell to the $H_2O$ collection chamber 658. The collection system comprises at least one of an $H_2O$ absorber and a $H_2O$ condensor 660. The collected water may be returned to the CIHT cell as $H_2O$ vapor or liquid water through a passage 661 assisted by pump 663 or by the pressure created by heating the collected water with heater 665. The flow of water and the pressure of any vapor may be controlled in the chamber by valves 666, 667, and 668, monitored by a gauge 669. The water may be returned to the cathode 652 which may be porous to the returned $H_2O$. The CIHT cell further comprises a system 671 to collect $H_2$ from the CIHT cell. The $H_2$ collection system comprises a second chamber 672 containing a $H_2$ getter 673 wherein un-reacted $H_2$ from the anode source and $H_2$ formed at the cathode may be collected by the $H_2$ getter. The $H_2$ having water at least partially removed by the $H_2O$ collection system flows from the first chamber to the second through gas passage 675. In an embodiment, a $H_2$ selective membrane exists between the chambers to prevent $H_2O$ from entering the second chamber and reacting with the getter. The getter may comprise a transition metal, alkali metal, alkaline earth metal, inner transition metal, rare earth metal, combinations of metals, alloys, and hydrogen storage materials such as those of the disclosure. The collected $H_2$ may be returned to the CIHT cell through a passage 676 assisted by pump 678 or by the pressure created by heating the getter or collected $H_2$ with heater 680. The flow of $H_2$ and the pressure may be controlled in the chamber by valves 681 and 682, monitored by a gauge 684. The getter may collect hydrogen with the value 681 open and valve 682 closed to the cell wherein the heater maintains it at one temperature suitable for reabsorbing $H_2$. Then, the value 681 may be closed and the temperature increased to a temperature that causes the hydrogen to be release to a desired pressure measured with gauge 684. Valve 682 may be opened to allow the pressurized hydrogen to flow to the cell. The flow may be to the anode 653 comprising a $H_2$ permeable wall. Valve 682 may be closed, the heater 680 reduced in temperature, and the valve 681 opened to collect $H_2$ with the getter 673 in a repeated cycle. In an embodiment, the power to the heater, valves, and gauges may be provided by the CIHT cell. In an embodiment, the temperature difference between the collection systems and cells may be used to achieve the desired pressures when introducing $H_2$ or $H_2O$ into the cell. For example, $H_2$ may be at a first temperature and pressure in a sealed chamber that is immersed in the hot salt to achieve a second higher pressure at the higher salt temperature. In an embodiment, the CIHT cell comprises a plurality of hydrogen permeable anodes that may be supplied hydrogen through a common gas manifold.

In another embodiment of the system shown in FIGURE 5, an $O_2$ source is supplied at the cathode 652 such as at least one of air, $O_2$, oxide, $H_2O$, HOOH, hydroxide, and oxyhydroxide. The source of oxygen may also be supplied to the cell through selective valve or membrane 646 that may be a plurality wherein the membrane is $O_2$ permeable such as a Teflon membrane. Then, system 657 comprises a separator of $H_2$ and other cell gases such as at least one of nitrogen, water vapor, and oxygen wherein system 671 collects the unused hydrogen and returns it to the cell such as through the $H_2$ permeable anode 653. The system 657 may condense water. System 667 may in addition or optionally comprise a selective $H_2$ permeable membrane and valve 668 that may be at the outlet of system 657 that retains $O_2$, $N_2$, and possibly water and permits $H_2$ to selectively pass to system 671. In an embodiment, the vapor pressure of water is controlled at one or more of the cathode 651 and the cell to control the cell power output.

In an embodiment, the $H_2$ permeable electrode is replaced with a $H_2$ bubbling anode 653. $H_2$ may be recycled without removing $H_2O$ using at least one pump such as 678. If oxygen is supplied to the cell such as through selective valve or membrane 646 or at the $O_2$ porous cathode 652, then it may be removed from the $H_2$ by system 657. An exemplary porous electrode to supply at least one of $H_2$, $H_2O$, air, and $O_2$ by sparging comprises a tightly bound assembly of a Ni porous body (Celmet #6, Sumitomo Electric Industries, Ltd.) within an outer alumina tube. If air is supplied to the cell than $N_2$ is optionally removed from the recirculated $H_2$ gas. Any $H_2$ consumed to form hydrinos or lost from the system may be replaced. The $H_2$ may be replaced from the electrolysis of $H_2O$. The power for the electrolysis may be from the CIHT cell.

The hydrogen permeation rate or flow rate for the permeation and bubbling anodes, respectively, is controlled to optimize the power gain due to the hydrino reaction relative to the conventional reaction of hydrogen and oxygen form to water. Considering the active surface area such as that defined by the physical dimensions of the external surface exposed to the electrolyte, suitable flow rates are in the ranges of about $10^{-12}$ to $10^{-2}$ moles $cm^{-2}$ $s^{-1}$, about $10^{-11}$ to $10^{-6}$ moles $cm^{-2}$ $s^{-1}$, about $10^{-10}$ to $10^{-7}$ moles $cm^{-2}$ $s^{-1}$, and about $10^{-9}$ to $10^{-8}$ moles $cm^{-2}$ $s^{-1}$. The cathode reduction rate of at least one of $O_2$, $H_2O$, and mixtures of $O_2$ and $H_2O$ such as in air may be any desirable rate to maintain the cell reaction of a given hydrogen permeation or flow rate at the anode. Suitable reduction rates expressed as a current per effective surface are in the ranges of about 0.001 to 1000 mA $cm^{-2}$, about 0.1 to 100 mA $cm^{-2}$, and about 0.5 to 10 mA $cm^{-2}$. In an embodiment, the cathode gas may comprise a mixture of $O_2$, $H_2O$, and $N_2$. The mole fractions may be any desired. Suitable mole fractions are about those of air ($O_2$ ~20%, $N_2$ ~80, $H_2O$ ~0.5-3%), but any given component may be changed by to be in the range of about 0.1 to 99 mole %. In other embodiments, the $O_2/N_2/H_2O$ mole %s are in the range of about 1 to 99%, 1 to 99%, and 0.0001 to 99%, respectively, the total comprising about 100%. Other gases such as Ar of air may be present as well. In an embodiment, $CO_2$ is scrubbed from the gas entering the cell.

In an embodiment, at least one of nH, O, nO, OH, and $H_2O$ (n = integer) may serve as the catalyst. H may react with a source of oxygen to form at least one of OH and $H_2O$. The source of oxygen may be an oxyanion. The electrolyte may comprise a compound comprising the oxyanion. Exemplary suitable oxyanions are at least one of hydroxide, carbonate, nitrate, sulfate, phosphate, chromate, dichromate, perchlorate, and periodate. In general, exemplary suitable compounds that serve as sources of oxygen alone or in combination are $MNO_3$, MNO, $MNO_2$, MOH, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, $MZnO_n$, (M is alkali or ammonium and n=1, 2,3, or 4; M may also be another cation such as an alkaline earth, transition, inner transition, or rare earth metal cation, or a Group 13 to 16 cation), and an organic basic salt such as M acetate or M carboxylate. The reaction to form at least one of OH and $H_2O$ as the catalyst to from hydrinos may occur as an oxidation reaction of the oxyanion. The reaction may further involve the reaction with H. The reactions may occur at the anode. The formation of at least one of the catalyst OH and $H_2O$ in the presence of H results in the catalysis of the H to hydrino by the catalyst. Exemplary general reactions wherein E designates an element or compound are

Anode

$$OH^- + H \text{ to } H_2O + e^- \qquad (133)$$

$$EO_x^{n-} + 2H \text{ to } H_2O + EO_{x-1}^{(n-m)-} + me^- \qquad (134)$$

$$EH_yO_x^{n-} + H \text{ to } H_2O + EH_{y-1}O_{x-1}^{(n-m)-} + me^- \qquad (134)$$

Cathode

$$EO_{x-1}^{(n-m)-} + me^- + 1/2O_2 \text{ to } EO_x^{n-} \qquad (136)$$

$$EH_{y-1}O_{x-1}^{(n-m)-} + (m+1)e^- + H_2O + 1/2O_2 + EH_yO_x^{n-} + OH^- \qquad (137)$$

$$O_2 + 2H_2O + 4e^- \text{ to } 4OH^- \qquad (138)$$

In a specific example, suitable reactions to from the catalyst $H_2O$ wherein $CO_3^{2-}$ serves as the source of oxygen are Anode

$$CO_3^{2-} + 2H \text{ to } H_2O + CO_2 + 2e^- \quad (139)$$

Cathode

$$CO_2 + 1/2O_2 + 2e^- \text{ to } CO_3^{2-} \quad (140)$$

Alternatively, hydrogen may react with the anode that may comprise a metal M' such as Ni or Co to form the corresponding hydride that further reacts by a mechanism such as Anode

$$2M + H_2 \text{ to } 2MH \quad (141)$$

$$MH + CO_3^{2-} \text{ to } OH^- + CO_2 + e^- \quad (142)$$

$$2MH + OH^- \text{ to } 2M + H_2O + e^- + H(1/p) \quad (143)$$

$$MH + 1/2H_2 + OH^- \text{ to } M + H_2O + e^- + H(1/p) \quad (144)$$

Similar reactions may occur for other oxyanions. In other embodiments, another oxyanion and the corresponding oxidized species such as a gas replaces $CO_3^{2-}$ and $CO_2$, respectively. Exemplary anions and gases or compounds are $SO_4^{2-}$, $NO_3^-$, and $PO_4^{3-}$ and $SO_2$, $NO_2$, and $P_2O_5$, respectively. The cell may be supplied with the product gas or compound such as $CO_2$, $SO_2$, or $NO_2$. Alternatively, the gas or compound such as $CO_2$ $SO_2$, or $NO_2$ may be recycled in the cell. The cell may comprise a means such as a semipermeable membrane to retain the gas or compound while maintaining an open cell such as one open to air and optionally at least one of added $O_2$ and $H_2O$. The cell may also comprise lines that supply these gases such as $O_2$ and $H_2O$. The lines may have valves that maintain a directional flow to prevent the escape of the oxyanion oxidation product. In an embodiment, the oxidation product is an element or compound such as S or P. The product may undergo reduction to form the corresponding compound such a sulfide of phosphide. Alternatively, the product reacts with oxygen supplied to the cell to form an oxyanion such as the original reactant oxyanion such as $SO_4^{2-}$ or $PO_4^{3-}$. The cell may be closed or semi-closed in the case of intermittent electrolysis wherein the oxygen and hydrogen are generated in situ. Then, make up gases may be added periodically to maintain the electrolyte and source of hydrogen to form hydrinos. Gases such as $CO_2$, $SO_2$, or $NO_2$ may be recycled internally.

In another embodiment to form hydrinos for at least one of production of lower-energy hydrogen species and compounds and production of energy, the reaction mixture comprises a source of atomic hydrogen and a source of catalyst comprising at least one of H and O such those of the disclosure such as $H_2O$ catalyst. The atomic hydrogen may be formed from $H_2$ gas by dissociation. The hydrogen dissociator may be one of those of the disclosure such as R-Ni or a noble metal or transition metal on a support such as Ni or Pt or Pd on carbon or $Al_2O_3$. Alternatively, the atomic H may be from H permeation through a membrane such as those of the disclosure. In an embodiment, the cell comprises a membrane such as a ceramic membrane to allow $H_2$ to diffuse through selectively while preventing diffusion of another species such as $H_2O$ diffusion.

The electrolyte may comprise an aqueous solution or a molten salt. The electrolyte such as at least one of hydroxide, carbonate, nitrate, sulfate, phosphate, chromate, dichromate, perchlorate, and periodate, and mixtures may comprise a eutectic mixture such as at least one of the eutectic salt mixtures of TABLE 4, at least one of further mixtures of the disclosure, or a mixture known in the art. The cell may comprise a source of hydrogen, water, and oxygen. The water may comprise at least one of hydrogen, deuterium, and tritium such as at least one of $H_2O$, HOD, $D_2O$, $T_2O$, DOT, and HOT. Exemplary eutectic salt mixtures are at least two of alkali halide, carbonate, nitrate, sulfate, and hydroxide. The molten electrolyte may further comprise a source of $H_2O$ that may be that absorbed from the atmosphere or supplied

as liquid water or vapor to the cell. The cell may comprise an open cell. Oxygen may be from the atmosphere, supplied as a gas, or from the intermittent electrolysis of $H_2O$. The source of hydrogen may be supplied as a gas by means such as permeation, sparging or bubbling, or by intermittent electrolysis of a source of hydrogen such as electrolysis of an electrolyte comprising some $H_2O$. In an embodiment, the cell operating temperature is below that which would cause corrosion such as corrosion of the electrodes or the vessel. Exemplary cells are [Ni($H_2$)/aqueous or eutectic salt electrolyte of one or more of $MNO_3$, MNO, $MNO_2$, MOH, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, $MZnO_n$, (M is alkali or ammonium and n=1, 2,3, or 4)/Ni + air] wherein the hydrogen electrode may be a permeation, sparging, or intermittent electrolysis electrode. Additional examples are [Ni/LiOH-$Li_2SO_4$/Ni + air intermittent charge-discharge], [Ni/LiOH-$Li_2SO_4$ (aq)/Ni + air intermittent charge-discharge], [Ni or PtTi/$NH_4OH$ (aq)/Ni or PtTi + air intermittent charge-discharge], [Ni/Sr$(OH)_2$ or Ba$(OH)_2$ (aq)/Ni + air intermittent charge-discharge], [PtTi or Ni/$K_2CO_3$ (aq)/Ni or PtTi + air intermittent charge-discharge], and [PtTi or Pd/LiOH (aq)/Pd or PtTi+ air intermittent charge-discharge].

In a CIHT cell embodiment that produces at least one of thermal and electrical energy by forming hydrinos, the H reaction is regenerative, except that a portion of the H inventory is converted to hydrino upon each cycle of a repeated reaction. Exemplary reactions of hydrogen and carbonate from an electrolyte such as $K_2CO_3$ that may be a hydrated molten or aqueous electrolyte are

$$CO_3^{2-} + H_2O \text{ to } 2OH^- + CO_2 \tag{145}$$

Anode

$$OH^- + 1/2H_2 \text{ to } H_2O + e^- \tag{146}$$

Cathode

$$CO_2 + H_2O + 2e^- \text{ to } CO_3^{2-} + H_2 \tag{147}$$

The anode reaction may also be given by Eq. (139) involving the oxidation of $CO_3^{2-}$ to $H_2O$ to serve as the catalyst. Net, some of the H is converted to H(1/p) wherein at least one of nH, O, nO, OH, and $H_2O$ (n = integer) may serve as the catalyst. The source of hydrogen may be at least one of permeation, sparging or bubbling, and intermittent electrolysis. The reaction may occur in a concerted manner in the absence of electrodes such a in a thermal power-generating embodiment. A specific thermal embodiment comprises a hydrogen pressurized chamber and a hydrogen permeable membrane that supplies hydrogen by permeation to a second reaction chamber that contains a carbonate such as an alkaline carbonate such as $K_2CO_3$.

In an embodiment, the CIHT cell comprises a cogeneration system wherein electricity and thermal energy are generated for a load. At least one of the electrical and thermal loads may be at least one of internal and external. For example, at least part of the thermal or electrical energy generated by forming hydrinos may maintain the cell temperature such as that of a molten salt of a CIHT cell comprising a molten salt electrolyte or molten reactants. The electrical energy may at least partially supply the electrolysis power to regenerate the initial cell reactants from the products. In an embodiment, the electrolyte such as the aqueous or molten salt electrolyte may be pumped through or over a heat exchanger that removes heat and transfers it ultimately to a load.

In certain embodiments, the power, chemical, battery and fuel cell systems disclosed herein that regenerate the reactants and maintain the reaction to form lower-energy hydrogen can be closed except that only hydrogen consumed in forming hydrinos need be replaced wherein the consumed hydrogen fuel may be obtained from the electrolysis of water. The fuel cell may be used for broad applications such as electric power generation such as utility power, cogeneration, motive power, marine power, and aviation. In the latter case, the CIHT cell may charge a battery as power storage for an electric vehicle.

The power may be controlled by controlling the cathode and anode half-cell reactants and reaction conditions. Suitable controlled parameters are the hydrogen pressure and operating temperature. The fuel cell may be a member of a plurality of cells comprising a stack. The fuel cell members may be stacked and may be interconnected in series by an interconnect at each junction. The interconnect may be metallic or ceramic. Suitable interconnects are electrically conducting metals, ceramics, and metal-ceramic composites.

In an embodiment, the cell is periodically reversed in polarity with an optional applied voltage to cause at least one of oxidation-reduction reaction products and hydrino products to be removed to eliminate product inhibition. The products may also be removed by physical and thermal methods such as ultrasound and heating, respectively. In an embodiment, the electrolyte may be removed, processed by means such as heating to remove hydrino, and replaced. The electrolyte such as a molten salt or aqueous one may be flowed, and treatment may occur under batch or flow conditions.

In an embodiment, the cell comprises a monitoring and control system that may be used to restrict unauthorized or unlicensed activity. The system may comprise a monitor capable of sending data remotely. The system may be capable of telemetry. The system may be capable of being disabled. The system may be capable of being disabled remotely.

XI. Chemical Reactor

The present disclosure is also directed to other reactors for producing increased binding energy hydrogen species and compounds of the present disclosure, such as dihydrino molecules and hydrino hydride compounds. Further products of the catalysis are power and optionally plasma and light depending on the cell type. Such a reactor is hereinafter referred to as a "hydrogen reactor" or "hydrogen cell." The hydrogen reactor comprises a cell for making hydrinos. The cell for making hydrinos may take the form of a chemical reactor or gas fuel cell such as a gas discharge cell, a plasma torch cell, or microwave power cell, and an electrochemical cell. Exemplary embodiments of the cell for making hydrinos may take the form of a liquid-fuel cell, a solid-fuel cell, a heterogeneous-fuel cell, and a CIHT cell. Each of these cells comprises: (i) a source of atomic hydrogen; (ii) at least one catalyst chosen from a solid catalyst, a molten catalyst, a liquid catalyst, a gaseous catalyst, or mixtures thereof for making hydrinos; and (iii) a vessel for reacting hydrogen and the catalyst for making hydrinos. As used herein and as contemplated by the present disclosure, the term "hydrogen," unless specified otherwise, includes not only proteum ($^1H$), but also deuterium ($^2H$) and tritium ($^3H$). In the case of the use of deuterium as a reactant of the hydrino reaction, relatively trace amounts of tritium or helium products of the heterogeneous fuels and solid fuels are expected. Exemplary chemical reaction mixtures and reactors may comprise CIHT cell or thermal cell embodiments of the disclosure. Additional exemplary embodiments are given in this Chemical Reactor section. Examples of reaction mixtures having $H_2O$ as catalyst formed during the reaction of the mixture are given in the disclosure. Other catalysts such as those given in TABLES 1 and 3 may serve to form increased binding energy hydrogen species and compounds. An exemplary M-H type catalyst of TABLE 3A is NaH. The reactions and conditions may be adjusted from these exemplary cases in the parameters such as the reactants, reactant wt%'s, $H_2$ pressure, and reaction temperature. Suitable reactants, conditions, and parameter ranges are those of the disclosure. In an embodiment, these reaction mixtures further comprise a source of oxygen such as oxidation products of the stainless steel reactor that react with $H_2$ and other reactants present to form $H_2O$ catalyst and hydrinos that gives rise to an upfield matrix shift such as that of any hydroxides formed during the reactions.

In an embodiment, a solid fuel reaction forms $H_2O$ and H as products or intermediate reaction products. The $H_2O$ may serve as a catalyst to form hydrinos. The reactants comprise at least one oxidant and one reductant, and the reaction comprises at least one oxidation-reduction reaction. The reductant may comprise a metal such as an alkali metal. The reaction mixture may further comprise a source of hydrogen, and a source of $H_2O$, and may optionally comprise a support such as carbon, carbide, boride, nitride, carbonitrile such as TiCN, or nitrile. The support may comprise a metal powder. In an embodiment, a hydrogen support comprises Mo or a Mo alloy such as those of the disclosure such as MoNi, MoCu, and MoCo. In an embodiment, oxidation of the support is avoided by methods such as selecting the other components of the reactantion mixture that do not oxidize the support, selecting a non-oxidizing reaction temperature and conditions, and maintaining a reducing atmosphere such as a $H_2$ atmosphere as known by one skilled in the art. The source of H may be selected from the group of alkali, alkaline earth, transition, inner transition, rare earth hydrides, and hydrides of the disclosure. The source of hydrogen may be hydrogen gas that may further comprise a dissociator such as those of the disclosure such as a noble metal on a support such as carbon or alumina and others of the disclosure. The source of water may comprise a compound that dehydrates such as a hydroxide or a hydroxide complex such as those of Al, Zn, Sn, Cr, Sb, and Pb. The source of water may comprise a source of hydrogen and a source of oxygen. The oxygen source may comprise a compound comprising oxygen. Exemplary compounds or molecules are $O_2$, alkali or alkali earth oxide, peroxide, or superoxide, $TeO_2$, $SeO_2$, $PO_2$, $P_2O_5$, $SO_2$, $SO_3$, $M_2SO_4$, $MHSO_4$, $CO_2$, $M_2S_2O_8$, $MMnO_4$, $M_2Mn_2O_4$, $M_xH_yPO_4$ (x, y = integer), $POBr_2$, $MClO_4$, $MNO_3$, NO, $N_2O$, $NO_2$, $N_2O_3$, $Cl_2O_7$, and $O_2$ (M = alkali; and alkali earth or other cation may substitute for M). Other exemplary reactants comprise reagents selected from the group of Li, LiH, $LiNO_3$, LiNO, $LiNO_2$, $Li_3N$, $Li_2NH$, $LiNH_2$, LiX, NH3, $LiBH_4$, $LiAlH_4$, $Li_3AlH_6$, LiOH, $Li_2S$, LiHS, LiFeSi, $Li_2CO_3$, $LiHCO_3$, $Li_2SO_4$, $LiHSO_4$, $Li_3PO_4$, $Li_2HPO_4$, $LiH_2PO_4$, $Li_2MoO_4$, $LiNbO_3$, $Li_2B_4O_7$ (lithium tetraborate), $LiBO_2$, $Li_2WO_4$, $LiAlCl_4$, $LiGaCl_4$, $Li_2CrO_4$, $Li_2Cr_2O_7$, $Li_2TiO_3$, $LiZrO_3$, $LiAlO_2$, $LiCoO_2$, $LiGaO_2$, $Li_2GeO_3$, $LiMn_2O_4$, $Li_4SiO_4$, $Li_2SiO_3$, $LiTaO_3$, $LiCuCl_4$, $LiPdCl_4$, $LiVO_3$, $LiIO_3$, $LiFeO_2$, $LiIO_4$, $LiClO_4$, $LiScO_n$, $LiTiO_n$, $LiVO_n$, $LiCrO_n$, $LiCr_2O_n$, $LiMn_2O_n$, $LiFeO_n$, $LiCoO_n$, $LiNiO_n$, $LiNi_2O_n$, $LiCuO_n$, and $LiZnO_n$, where n=1, 2,3, or 4, an

oxyanion, an oxyanion of a strong acid, an oxidant, a molecular oxidant such as $V_2O_3$, $I_2O_5$, $MnO_2$, $Re_2O_7$, $CrO_3$, $RuO_2$, AgO, PdO, $PdO_2$, PtO, $PtO_2$, and $NH_4X$ wherein X is a nitrate or other suitable anion given in the CRC, and a reductant. Another alkali metal or other cation may substitute for Li. Additional sources of oxygen may be selected from the group of $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, and $MZnO_n$, where M is alkali and n=1, 2,3, or 4, an oxyanion, an oxyanion of a strong acid, an oxidant, a molecular oxidant such as $V_2O_3$, $I_2O_5$, $MnO_2$, $Re_2O_7$, $CrO_3$, $RuO_2$, AgO, PdO, $PdO_2$, PtO, $PtO_2$, $I_2O_4$, $I_2O_5$, $I_2O_9$, $SO_2$, $SO_3$, $CO_2$, $N_2O$, NO, $NO_2$, $N_2O_3$, $N_2O_4$, $N_2O_5$, $Cl_2O$, $ClO_2$, $Cl_2O_3$, $Cl_2O_6$, $Cl_2O_7$, $PO_2$, $P_2O_3$, and $P_2O_5$. The reactants may be in any desired ratio that forms hydrinos. An exemplary reaction mixture is 0.33 g of LiH, 1.7 g of $LiNO_3$ and the mixture of 1 g of $MgH_2$ and 4 g of activated C powder. Another exemplary reaction mixture is that of gun powder such as $KNO_3$ (75 wt%), softwood charcoal (that may comprise about the formulation $C_7H_4O$) (15 wt%), and S (10 wt%); $KNO_3$ (70.5 wt%) and softwood charcoal (29.5 wt%) or these ratios within the range of about $\pm$ 1-30 wt%. The source of hydrogen may be charcoal comprising about the formulation $C_7H_4O$.

The reactants and regeneration reaction and systems may comprise those of the disclosure or in my prior US Patent Applications such as Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; Electrochemical Hydrogen Catalyst Power System, PCT/US11/28889, filed PCT 3/17/2011; and $H_2O$-Based Electrochemical Hydrogen-Catalyst Power System, PCT/US12/31369 filed 3/30/2012 ("Mills Prior Applications") herein incorporated by reference in their entirety.

Reactants to form $H_2O$ catalyst may comprise a source of O such as an O species and a source of H. The source of the O species may comprise at least one of $O_2$, air, and a compound or admixture of compounds comprising O. The compound comprising oxygen may comprise an oxidant. The compound comprising oxygen may comprise at least one of an oxide, oxyhydroxide, hydroxide, peroxide, and a superoxide. Suitable exemplary metal oxides are alkali oxides such as $Li_2O$, $Na_2O$, and $K_2O$, alkaline earth oxides such as MgO, CaO, SrO, and BaO, transition oxides such as NiO, $Ni_2O_3$, FeO, $Fe_2O_3$, and CoO, and inner transition and rare earth metals oxides, and those of other metals and metalloids such as those of Al, Ga, In, Si, Ge, Sn, Pb, As, Sb, Bi, Se, and Te, and mixtures of these and other elements comprising oxygen. The oxides may comprise a oxide anion such as those of the disclosure such as a metal oxide anion and a cation such as an alkali, alkaline earth, transition, inner transition and rare earth metal cation, and those of other metals and metalloids such as those of Al, Ga, In, Si, Ge, Sn, Pb, As, Sb, Bi, Se, and Te such as $MM'_{2x}O_{3x+1}$ or $MM'_{2x}O_4$ (M = alkaline earth, M' = transition metal such as Fe or Ni or Mn, x = integer) and $M_2M'_{2x}O_{3x+1}$ or $M_2M'_{2x}O_4$ (M = alkali, M' = transition metal such as Fe or Ni or Mn, x = integer). Suitable exemplary metal oxyhydroxides are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. Suitable exemplary hydroxides are those of metals such as alkali, alkaline earth, transition, inner transition, and rare earth metals and those of other metals and metalloids such as such as Al, Ga, In, Si, Ge, Sn, Pb, As, Sb, Bi, Se, and Te, and mixtures. Suitable complex ion hydroxides are $Li_2Zn(OH)_4$, $Na_2Zn(OH)_4$, $Li_2Sn(OH)_4$, $Na_2Sn(OH)_4$, $Li_2Pb(OH)_4$, $Na_2Pb(OH)_4$, $LiSb(OH)_4$, $NaSb(OH)_4$, $LiAl(OH)_4$, $NaAl(OH)_4$, $LiCr(OH)_4$, $NaCr(OH)_4$, $Li_2Sn(OH)_6$, and $Na_2Sn(OH)_6$. Additional exemplary suitable hydroxides are at least one from $Co(OH)_2$, $Zn(OH)_2$, $Ni(OH)_2$, other transition metal hydroxides, $Cd(OH)_2$, $Sn(OH)_2$, and Pb(OH). Suitable exemplary peroxides are $H_2O_2$, those of organic compounds, and those of metals such as $M_2O_2$ where M is an alkali metal such as $Li_2O_2$, $Na_2O_2$, $K_2O_2$, other ionic peroxides such as those of alkaline earth peroxides such as Ca, Sr, or Ba peroxides, those of other electropositive metals such as those of lanthanides, and covalent metal peroxides such as those of Zn, Cd, and Hg. Suitable exemplary superoxides are those of metals $MO_2$ where M is an alkali metal such as $NaO_2$, $KO_2$, $RbO_2$, and $CsO_2$, and alkaline earth metal superoxides.

The reaction mixture may comprise a hydroxide such as those of alkaline, alkaline earth, transition, inner transition, and rare earth metals, and Al, Ga, In, Sn, Pb, and other elements that form hydroxides and a source of oxygen such as a compound comprising at least one an oxyanion such as a carbonate such as one comprising alkaline, alkaline earth, transition, inner transition, and rare earth metals, and Al, Ga, In, Sn, Pb, and others of the disclosure. Other suitable compounds comprising oxygen are at least one of oxyanion compound of the group of aluminate, tungstate, zirconate, titanate, sulfate, phosphate, carbonate, nitrate, chromate, dichromate, and manganate, oxide, oxyhydroxide, peroxide, superoxide, silicate, titanate, tungstate, and others of the disclosure. An exemplary reaction of a hydroxide and a carbonate is given by

$$Ca(OH)_2 + Li_2CO_3 \text{ to } CaO + H_2O + Li_2O + CO_2 \qquad (148)$$

In other embodiments, the oxygen source is gaseous or readily forms a gas such as $NO_2$, NO, $N_2O$, $CO_2$, $P_2O_3$, $P_2O_5$, and $SO_2$. The reduced oxide product from the formation of $H_2O$ catalyst such as C, N, $NH_3$, P, or S may be converted back to the oxide again by combustion with oxygen or a source thereof as given in Mills Prior Applications. The cell may produce excess heat that may be used for heating applications, or the heat may be converted to electricity

by means such as a Rankine or Brayton system. Alternatively, the cell may be used to synthesize lower-energy hydrogen species such as molecular hydrino and hydrino hydride ions and corresponding compounds.

In an embodiment, the reaction mixture to form hydrinos for at least one of production of lower-energy hydrogen species and compounds and production of energy comprises a source of atomic hydrogen and a source of catalyst comprising at least one of H and O such those of the disclosure such as $H_2O$ catalyst. The reaction mixture may further comprise an acid such as $H_2SO_3$, $H_2SO_4$, $H_2CO_3$, $HNO_2$, $HNO_3$, $HClO_4$, $H_3PO_3$, and $H_3PO_4$ or a source of an acid such as an acid anhydride or anhydrous acid. The latter may comprise at least one of the group of $SO_2$, $SO_3$, $CO_2$, $NO_2$, $N_2O_3$, $N_2O_5$, $Cl_2O_7$, $PO_2$, $P_2O_3$, and $P_2O_5$. The reaction mixture may comprise at least one of a base and a basic anhydride such as $M_2O$ (M= alkali), M'O (M' = alkaline earth), ZnO or other transition metal oxide, CdO, CoO, SnO, AgO, HgO, or $Al_2O_3$. Further exemplary anhydrides comprise metals that are stable to $H_2O$ such as Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb. The anhydride may be an alkali metal or alkaline earth metal oxide, and the hydrated compound may comprise a hydroxide. The reaction mixture may comprise an oxyhydroxide such as FeOOH, NiOOH, or CoOOH. The reaction mixture may comprise at least one of a source of $H_2O$ and $H_2O$. The $H_2O$ may be formed reversibly by hydration and dehydration reactions in the presence of atomic hydrogen. Exemplary reactions to form $H_2O$ catalyst are

$$Mg(OH)_2 \text{ to } MgO + H_2O \quad (149)$$

$$2LiOH \text{ to } Li_2O + H_2O \quad (150)$$

$$H_2CO_3 \text{ to } CO_2 + H_2O \quad (151)$$

$$2FeOOH \text{ to } Fe_2O_3 + H_2O \quad (152)$$

In an embodiment, $H_2O$ catalyst is formed by dehydration of at least one compound comprising phosphate such as salts of phosphate, hydrogen phosphate, and dihydrogen phosphate such as those of cations such as cations comprising metals such as alkali, alkaline earth, transition, inner transition, and rare earth metals, and those of other metals and metalloids such as those of Al, Ga, In, Si, Ge, Sn, Pb, As, Sb, Bi, Se, and Te, and mixtures to form a condensed phosphate such as at least one of polyphosphates such as $[P_nO_{3n+1}]^{(n+2)-}$, long chain metaphosphates such as $[(PO_3)_n]^{n-}$, cyclic metaphosphates such as $[(PO_3)_n]^{n-}$ with $n \geq 3$, and ultraphosphates such as $P_4O_{10}$. Exemplary reactions are

$$(n\text{-}2)NaH_2PO_4 + 2Na_2HPO_4 \xrightarrow{heat} Na_{n+2}P_nO_{3n+1}\,(\text{polyphosphate}) + (n\text{-}1)H_2O \quad (153)$$

$$nNaH_2PO_4 \xrightarrow{heat} (NaPO_3)_n\,(\text{metaphosphate}) + nH_2O \quad (154)$$

The reactants of the dehydration reaction may comprise R-Ni that may comprise at least one of $Al(OH)_3$, and $Al_2O_3$. The reactants may further comprise a metal M such as those of the disclosure such as an alkali metal, a metal hydride MH, a metal hydroxide such as those of the disclosure such as an alkali hydroxide and a source of hydrogen such as $H_2$ as well as intrinsic hydrogen. Exemplary reactions are

$$2Al(OH)_3 + \text{ to } Al_2O_3 + 3H_2O \quad (155)$$

$$Al_2O_3 + 2NaOH \text{ to } 2NaAlO_2 + H_2O \quad (156)$$

$$3MH + Al(OH)_3 + \text{ to } M_3Al + 3H_2O \quad (157)$$

$$MoCu + 2MOH + 4O_2 \text{ to } M_2MoO_4 + CuO + H_2O \; (M = Li, Na, K, Rb, Cs) \quad (158)$$

The reaction product may comprise an alloy. The R-Ni may be regenerated by rehydration. The reaction mixture and dehydration reaction to form $H_2O$ catalyst may comprise and involve an oxyhydroxide such as those of the disclosure as given in the exemplary reaction:

$$3Co(OH)_2 \text{ to } 2CoOOH + Co + 2H_2O \quad (159)$$

The atomic hydrogen may be formed from $H_2$ gas by dissociation. The hydrogen dissociator may be one of those of the

disclosure such as R-Ni or a noble metal or transition metal on a support such as Ni or Pt or Pd on carbon or $Al_2O_3$. Alternatively, the atomic H may be from H permeation through a membrane such as those of the disclosure. In an embodiment, the cell comprises a membrane such as a ceramic membrane to allow $H_2$ to diffuse through selectively while preventing $H_2O$ diffusion. In an embodiment, at least one of $H_2$ and atomic H are supplied to the cell by electrolysis of an electrolyte comprising a source of hydrogen such as an aqueous or molten electrolyte comprising $H_2O$. In an embodiment, $H_2O$ catalyst is formed reversibly by dehydration of an acid or base to the anhydride form. In an embodiment, the reaction to form the catalyst $H_2O$ and hydrinos is propagated by changing at least one of the cell pH or activity, temperature, and pressure wherein the pressure may be changed by changing the temperature. The activity of a species such as the acid, base, or anhydride may be changed by adding a salt as known by those skilled in the art. In an embodiment, the reaction mixture may comprise a material such as carbon that may absorb or be a source of a gas such as $H_2$ or acid anhydride gas to the reaction to form hydrinos. The reactants may be in any desired concentrations and ratios. The reaction mixture may be molten or comprise an aqueous slurry.

In another embodiment, the source of the $H_2O$ catalyst is the reaction between an acid and a base such as the reaction between at least one of a hydrohalic acid, sulfuric, nitric, and nitrous, and a base. Other suitable acid reactants are aqueous solutions of $H_2SO_4$, HCl, HX (X-halide), $H_3PO_4$, $HClO_4$, $HNO_3$, HNO, $HNO_2$, $H_2S$, $H_2CO_3$, $H_2MoO_4$, $HNbO_3$, $H_2B_4O_7$ (M tetraborate), $HBO_2$, $H_2WO_4$, $H_2CrO_4$, $H_2Cr_2O_7$, $H_2TiO_3$, $HZrO_3$, $MAlO_2$, $HMn_2O_4$, $HIO_3$, $HIO_4$, $HClO_4$, or an organic acidic such as formic or acetic acid. Suitable exemplary bases are a hydroxide, oxyhydroxide, or oxide comprising an alkali, alkaline earth, transition, inner transition, or rare earth metal, or Al, Ga, In, Sn, or Pb.

In an embodiment, the reactants may comprise an acid or base that reacts with base or acid anhydride, respectively, to form $H_2O$ catalyst and the compound of the cation of the base and the anion of the acid anhydride or the cation of the basic anhydride and the anion of the acid, respectively. The exemplary reaction of the acidic anhydride $SiO_2$ with the base NaOH is

$$4NaOH + SiO_2 \text{ to } Na_4SiO_4 + 2H_2O \quad (160)$$

wherein the dehydration reaction of the corresponding acid is

$$H_4SiO_4 \text{ to } 2H_2O + SiO_2 \quad (161)$$

Other suitable exemplary anhydrides may comprise an element, metal, alloy, or mixture such as one from the group of Mo, Ti, Zr, Si, Al, Ni, Fe, Ta, V, B, Nb, Se, Te, W, Cr, Mn, Hf, Co, and Mg. The corresponding oxide may comprise at least one of $MoO_2$, $TiO_2$, $ZrO_2$, $SiO_2$, $Al_2O_3$, NiO, $Ni_2O_3$, FeO, $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO. In an exemplary embodiment, the base comprises a hydroxide such as an alkali hydroxide such as MOH (M = alkali) such as LiOH that may form the corresponding basic oxide such as $M_2O$ such as $Li_2O$, and H2O. The basic oxide may react with the anhydride oxide to form a product oxide. In an exemplary reaction of LiOH with the anhydride oxide with the release of $H_2O$, the product oxide compound may comprise $Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2SeO_3$, $Li_3PO_4$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and MgO. Other suitable exemplary oxides are at least one of the group of $As_2O_3$, $As_2O_5$, $Sb_2O_3$, $Sb_2O_4$, $Sb_2O_5$, $Bi_2O_3$, $SO_2$, $SO_3$, $CO_2$, $NO_2$, $N_2O_3$, $N_2O_5$, $Cl_2O_7$, $PO_2$, $P_2O_3$, and $P_2O_5$, and other similar oxides known to those skilled in the art. Another example is given by Eq. (152). Suitable reactions of metal oxides are

$$2LiOH + NiO \text{ to } Li_2NiO_2 + H_2O \quad (162)$$

$$3LiOH + NiO \text{ to } LiNiO_2 + H_2O + Li_2O + 1/2H_2 \quad (163)$$

$$4LiOH + Ni_2O_3 \text{ to } 2Li_2NiO_2 + 2H_2O + 1/2O_2 \quad (164)$$

$$2LiOH + Ni_2O_3 \text{ to } 2LiNiO_2 + H_2O \quad (165)$$

Other transition metals such as Fe, Cr, and Ti, inner transition, and rare earth metals and other metals or metalloids such as Al, Ga, In, Si, Ge, Sn, Pb, As, Sb, Bi, Se, and Te may substitute for Ni, and other alkali metal such as Li, Na, Rb, and Cs may substitute for K. In an embodiment, the oxide may comprise Mo wherein during the reaction to form $H_2O$, nascent $H_2O$ catalyst and H may form that further react to form hydrinos. Exemplary solid fuel reactions and possible oxidation reduction pathways are

$$3MoO_2 + 4LiOH \rightarrow 2Li_2AloO_4 + Mo + 2H_2O \quad (166)$$

$$2MoO_2 + 4LiOH \rightarrow 2Li_2MoO_4 + 2H_2 \quad (167)$$

$$O^{2-} \rightarrow 1/2O_2 + 2e^- \quad (168)$$

$$2H_2O + 2e^- \rightarrow 2OH^- + H_2 \quad (169)$$

$$2H_2O + 2e^- \rightarrow 2OH^- + H + H(1/4) \quad (170)$$

$$Mo^{4+} + 4e^- \rightarrow Mo \quad (171)$$

The reaction may further comprise a source of hydrogen such as hydrogen gas and a dissociator such as $Pd/Al_2O_3$. The hydrogen may be any of proteium, deuterium, or tritium or combinations thereof. The reaction to form $H_2O$ catalyst may comprise the reaction of two hydroxides to form water. The cations of the hydroxides may have different oxidation states such as those of the reaction of an alkali metal hydroxide with a transition metal or alkaline earth hydroxide. The reaction mixture and reaction may further comprise and involve $H_2$ from a source as given in the exemplary reaction:

$$LiOH + 2Co(OH)_2 + 1/2H_2 \text{ to } LiCoO_2 + 3H_2O + Co \quad (172)$$

The reaction mixture and reaction may further comprise and involve a metal M such as an alkali or an alkaline earth metal as given in the exemplary reaction:

$$M + LiOH + Co(OH)_2 \text{ to } LiCoO_2 + H_2O + MH \quad (173)$$

In an embodiment, the reaction mixture comprises a metal oxide and a hydroxide that may serve as a source of H and optionally another source of H wherein the metal such as Fe of the metal oxide can have multiple oxidation states such that it undergoes an oxidation-reduction reaction during the reaction to form $H_2O$ to serve as the catalyst to react with H to form hydrinos. An example is FeO wherein $Fe^{2+}$ can undergo oxidation to $Fe^{3+}$ during the reaction to form the catalyst. An exemplary reaction is

$$FeO + 3LiOH \text{ to } H_2O + LiFeO_2 + H(1/p) + Li_2O \quad (174)$$

In an embodiment, at least one reactant such as a metal oxide, hydroxide, or oxyhydroxide serves as an oxidant wherein the metal atom such as Fe, Ni, Mo, or Mn may be in an oxidation state that is higher than another possible oxidation state. The reaction to form the catalyst and hydrinos may cause the atom to undergo a reduction to at least one lower oxidation state. Exemplary reactions of metal oxides, hydroxides, and oxyhydroxides to form $H_2O$ catalyst are

$$2KOH + NiO \text{ to } K_2NiO_2 + H_2O \quad (175)$$

$$3KOH + NiO \text{ to } KNiO_2 + H_2O + K_2O + 1/2H_2 \quad (176)$$

$$2KOH + Ni_2O_3 \text{ to } 2KNiO_2 + H_2O \quad (177)$$

$$4KOH + Ni_2O_3 \text{ to } 2K_2NiO_2 + 2H_2O + 1/2O_2 \quad (178)$$

$$2KOH + Ni(OH)_2 \text{ to } K_2NiO_2 + 2H_2O \quad (179)$$

$$2LiOH + MoO_3 \text{ to } Li_2MoO_4 + H_2O \quad (180)$$

$$3KOH + Ni(OH)_2 \text{ to } KNiO_2 + 2H_2O + K_2O + 1/2H_2 \quad (181)$$

$$2KOH + 2NiOOH \text{ to } K_2NiO_2 + 2H_2O + NiO + 1/2O_2 \quad (182)$$

$$KOH + NiOOH \text{ to } KNiO_2 + H_2O \quad (183)$$

$$2NaOH + Fe_2O_3 \text{ to } 2NaFeO_2 + H_2O \quad (184)$$

Other transition such as Ni, Fe, Cr, and Ti, inner transition, and rare earth metals and other metals or metalloids such as Al, Ga, In, Si, Ge, Sn, Pb, As, Sb, Bi, Se, and Te may substitute for Ni or Fe, and other alkali metal such as Li, Na, K, Rb, and Cs may substitute for K or Na. In an embodiment, the reaction mixture comprises at least one of an oxide and a hydroxide of metals that are stable to $H_2O$ such as Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, and In. Additionally, the reaction mixture comprises a source of hydrogen such as $H_2$ gas and optionally a dissociator such as a noble metal on a support.

The exemplary reaction of the basic anhydride NiO with acid HCl is

$$2HCl + NiO \text{ to } H_2O + NiCl_2 \qquad (185)$$

wherein the dehydration reaction of the corresponding base is

$$Ni(OH)_2 \text{ to } H_2O + NiO \qquad (186)$$

The reactants may comprise at least one of a Lewis acid or base and a Bronsted-Lowry acid or base. The reaction mixture and reaction may further comprise and involve a compound comprising oxygen wherein the acid reacts with the compound comprising oxygen to form water as given in the exemplary reaction:

$$2HX + POX_3 \text{ to } H_2O + PX_5 \qquad (187)$$

(X = halide). Similar compounds as $POX_3$ are suitable such as those with P replaced by S. Other suitable exemplary anhydrides may comprise an oxide of an element, metal, alloy, or mixture that is soluble in acid such as an a hydroxide, oxyhydroxide, or oxide comprising an alkali, alkaline earth, transition, inner transition, or rare earth metal, or Al, Ga, In, Sn, or Pb such as one from the group of Mo, Ti, Zr, Si, Al, Ni, Fe, Ta, V, B, Nb, Se, Te, W, Cr, Mn, Hf, Co, and Mg. The corresponding oxide may comprise $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO. Other suitable exemplary oxides are of those of the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb. In an exemplary embodiment, the acid comprises a hydrohalic acid and the product is $H_2O$ and the metal halide of the oxide. The reaction mixture further comprises a source of hydrogen such as $H_2$ gas and a dissociator such as Pt/C wherein the H and $H_2O$ catalyst react to form hydrinos.

In an embodiment, the solid fuel comprises a $H_2$ source such as a permeation membrane or $H_2$ gas and a dissociator such as Pt/C and a source of $H_2O$ catalyst comprising an oxide or hydroxide that is reduced to $H_2O$. The metal of the oxide or hydroxide may form metal hydride that serves as a source of H. Exemplary reactions of an alkali hydroxide and oxide such as LiOH and $Li_2O$ are

$$LiOH + H_2 \text{ to } H_2O + LiH \qquad (188)$$

$$Li_2O + H_2 \text{ to } LiOH + LiH \qquad (189)$$

The reaction mixture may comprise oxides or hydroxides of metals that undergo hydrogen reduction to $H_2O$ such as those of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb and a source of hydrogen such as $H_2$ gas and a dissociator such as Pt/C.

In another embodiment, the reaction mixture comprises a $H_2$ source such as $H_2$ gas and a dissociator such as Pt/C and a peroxide compound such as $H_2O_2$ that decomposes to $H_2O$ catalyst and other products comprising oxygen such as $O_2$. Some of the $H_2$ and decomposition product such as $O_2$ may react to also form $H_2O$ catalyst.

In an embodiment, the reaction to form $H_2O$ as the catalyst comprises an organic dehydration reaction such as that of an alcohol such as a polyalcohol such as a sugar to an aldehyde and $H_2O$. In an embodiment, the dehydration reaction involves the release of $H_2O$ from a terminal alcohol to form an aldehyde. The terminal alcohol may comprise a sugar or a derivative thereof that releases $H_2O$ that may serve as a catalyst. Suitable exemplary alcohols are meso-erythritol, galactitol or dulcitol, and polyvinyl alcohol (PVA). An exemplary reaction mixture comprises a sugar + hydrogen dissociator such as $Pd/Al_2O_3 + H_2$. Alternatively, the reaction comprises a dehydration of a metal salt such as one having at least one water of hydration. In an embodiment, the dehydration comprises the loss of $H_2O$ to serve as the catalyst from hydrates such as aquo ions and salt hydrates such as $BaI_2$ $2H_2O$ and $EuBr_2nH_2O$.

In an embodiment, the reaction to form $H_2O$ catalyst comprises the hydrogen reduction of a compound comprising oxygen such as CO, an oxyanion such as $MNO_3$ (M = alkali), a metal oxide such as NiO, $Ni_2O_3$, $Fe_2O_3$, or SnO, a hydroxide such as $Co(OH)_2$, oxyyhydroxides such as FeOOH, CoOOH, and NiOOH, and compounds, oxyanions, oxides, hydroxides, oxyhydroxides, peroxides, superoxides, and other compositions of matter comprising oxygen such

as those of the disclosure that are hydrogen reducible to $H_2O$. Exemplary compounds comprising oxygen or an oxyanion are $SOCl_2$, $Na_2S_2O_3$, $NaMnO_4$, $POBr_3$, $K_2S_2O_8$, CO, $CO_2$, NO, $NO_2$, $P_2O_5$, $N_2O_5$, $N_2O$, $SO_2$, $I_2O_5$, $NaClO_2$, NaClO, $K_2SO_4$, and $KHSO_4$. The source of hydrogen for hydrogen reduction may be at least one of $H_2$ gas and a hydride such as a metal hydride such as those of the disclosure. The reaction mixture may further comprise a reductant that may form a compound or ion comprising oxygen. The cation of the oxyanion may form a product compound comprising another anion such as a halide, other chalcogenide, phosphide, other oxyanion, nitride, silicide, arsenide, or other anion of the disclosure. Exemplary reactions are

$$4NaNO_3(c) + 5MgH_2(c) \text{ to } 5MgO(c) + 4NaOH(c) + 3H_2O(1) + 2N_2(g) \quad (190)$$

$$P_2O_5(c) + 6NaH(c) \text{ to } 2Na_3PO_4(c) + 3H_2O(g) \quad (191)$$

$$NaClO_4(c) + 2MgH_2(c) \text{ to } 2MgO(c) + NaCl(c) + 2H_2O(1) \quad (192)$$

$$KHSO_4 + 4H_2 \text{ to } KHS + 4H_2O \quad (193)$$

$$K_2SO_4 + 4H_2 \text{ to } 2KOH + 2H_2O + H_2S \quad (194)$$

$$LiNO_3 + 4H_2 \text{ to } LiNH_2 + 3H_2O \quad (195)$$

$$GeO_2 + 2H_2 \text{ to } Ge + 2H_2O \quad (196)$$

$$CO_2 + H_2 \text{ to } C + 2H_2O \quad (197)$$

$$PbO_2 + 2H_2 \text{ to } 2H_2O + Pb \quad (198)$$

$$V_2O_5 + 5H_2 \text{ to } 2V + 5H_2O \quad (199)$$

$$Co(OH)_2 + H_2 \text{ to } Co + 2H_2O \quad (200)$$

$$Fe_2O_3 + 3H_2 \text{ to } 2Fe + 3H_2O \quad (201)$$

$$3Fe_2O_3 + H_2 \text{ to } 2Fe_3O_4 + H_2O \text{ ( } \quad 202)$$

$$Fe_2O_3 + H_2 \text{ to } 2FeO + H_2O \quad (203)$$

$$Ni_2O_3 + 3H_2 \text{ to } 2Ni + 3H_2O \quad (204)$$

$$3Ni_2O_3 + H_2 \text{ to } 2Ni_3O_4 + H_2O \quad (205)$$

$$Ni_2O_3 + H_2 \text{ to } 2NiO + H_2O \quad (206)$$

$$3FeOOH + 1/2H_2 \text{ to } Fe_3O_4 + 2H_2O \quad (207)$$

$$3NiOOH + 1/2H_2 \text{ to } Ni_3O_4 + 2H_2O \quad (208)$$

$$3CoOOH + 1/2H_2 \text{ to } Co_3O_4 + 2H_2O \quad (209)$$

$$FeOOH + 1/2H_2 \text{ to } FeO + H_2O \quad (210)$$

$$NiOOH + 1/2H_2 \text{ to } NiO + H_2O \quad (211)$$

$$CoOOH + 1/2H_2 \text{ to } CoO + H_2O \quad (212)$$

$$SnO + H_2 \text{ to } Sn + H_2O \quad (213)$$

The reaction mixture may comprise a source of an anion or an anion and a source of oxygen or oxygen such as a compound comprising oxygen wherein the reaction to form $H_2O$ catalyst comprises an anion-oxygen exchange

reaction with optionally $H_2$ from a source reacting with the oxygen to form $H_2O$. Exemplary reactions are

$$2NaOH + H_2 + S \text{ to } Na_2S + 2H_2O \quad (214)$$

$$2NaOH + H_2 + Te \text{ to } Na_2Te + 2H_2O \quad (215)$$

$$2NaOH + H_2 + Se \text{ to } Na_2Se + 2H_2O \quad (216)$$

$$LiOH + NH_3 \text{ to } LiNH_2 + H_2O \quad (217)$$

In another embodiment of a solid fuel or CIHT cell reaction mixture, the hydrino reaction comprises an exchange reaction between chalcogenides such as one between reactants comprising O and S. An exemplary chalcogenide reactant such as tetrahedral ammonium tetrathiomolybdate contains the ($[MOS_4]^{2-}$) anion. An exemplary reaction to form nascent $H_2O$ catalyst and optionally nascent H comprises the reaction of molybdate $[MoO_4]^{2-}$ with hydrogen sulfide in the presence of ammonia:

$$[NH_4]_2[MoO_4] + 4H_2S \text{ to } [NH_4]_2[M_OS_4] + 4H_2O \quad (218)$$

In an embodiment, the reaction mixture comprises a source of hydrogen, a compound comprising oxygen, and at least one element capable of forming an alloy with at least one other element of the reaction mixture. The reaction to form $H_2O$ catalyst may comprise an exchange reaction of oxygen of the compound comprising oxygen and an element capable of forming an alloy with the cation of the oxygen compound wherein the oxygen reacts with hydrogen from the source to form $H_2O$. Exemplary reactions are

$$NaOH + 1/2H_2 + Pd \text{ to } NaPb + H_2O \quad (219)$$

$$NaOH + 1/2H_2 + Bi \text{ to } NaBi + H_2O \quad (220)$$

$$NaOH + 1/2H_2 + 2Cd \text{ to } Cd_2Na + H_2O \quad (221)$$

$$NaOH + 1/2H_2 + 4Ga \text{ to } Ga_4Na + H_2O \quad (222)$$

$$NaOH + 1/2H_2 + Sn \text{ to } NaSn + H_2O \quad (223)$$

$$NaAlH_4 + Al(OH)_3 + 5Ni \text{ to } NaAlO_2 + Ni_5Al + H_2O + 5/2H_2 \quad (224)$$

In an embodiment, the reaction mixture comprises a compound comprising oxygen such as an oxyhydroxide and a reductant such as a metal that forms an oxide. The reaction to form $H_2O$ catalyst may comprise the reaction of an oxyhydroxide with a metal to from a metal oxide and $H_2O$. Exemplary reactions are

$$2MnOOH + Sn \text{ to } 2MnO + SnO + H_2O \quad (225)$$

$$4MnOOH + Sn \text{ to } 4MnO + SnO_2 + 2H_2O \quad (226)$$

$$2MnOOH + Zn \text{ to } 2MnO + ZnO + H_2O \quad (227)$$

In an embodiment, the reaction mixture comprises a compound comprising oxygen such as a hydroxide, a source of hydrogen, and at least one other compound comprising a different anion such as halide or another element. The reaction to form $H_2O$ catalyst may comprise the reaction of the hydroxide with the other compound or element wherein the anion or element is exchanged with hydroxide to from another compound of the anion or element, and $H_2O$ is formed with the reaction of hydroxide with $H_2$. The anion may comprise halide. Exemplary reactions are

$$2NaOH + NiCl_2 + H_2 \text{ to } 2NaCl + 2H_2O + Ni \quad (228)$$

$$2NaOH + I_2 + H_2 \text{ to } 2NaI + 2H_2O \quad (229)$$

$$2NaOH + XeF_2 + H_2 \text{ to } 2NaF + 2H_2O + Xe \quad (230)$$

$BiX_3$ (X=halide) + $4Bi(OH)_3$ to $3BiOX + Bi_2O_3 + 6H_2O$ (231)

The hydroxide and halide compounds may be selected such that the reaction to form $H_2O$ and another halide is thermally reversible. In an embodiment, the general exchange reaction is

$NaOH + 1/2H_2 + 1/yM_xCl_y = NaCl + 6H_2O + x/yM$ (232)

wherein exemplary compounds $M_xCl_y$ are $AlCl_3$, $BeCl_2$, HfCl4, $KAgCl_2$, $MnCl_2$, $NaAlCl_4$, $ScCl_3$, $TiCl_2$, $TiCl_3$, $UCl_3$, $UCl_4$, $ZrCl_4$, $EuCl_3$, $GdCl_3$, $MgCl_2$, $NdCl_3$, and $YCl_3$. At an elevated temperature the reaction of Eq. (232) such as in the range of about 100 °C to 2000 °C has at least one of an enthalpy and free energy of about 0 kJ and is reversible. The reversible temperature is calculated from the corresponding thermodynamic parameters of each reaction. Representative are temperature ranges are NaCl-$ScCl_3$ at about 800-900K, NaCl-$TiCl_2$ at about 300-400K, NaCl-$UCl_3$ at about 600-800K, NaCl-$UCl_4$ at about 250-300K, NaCl-$ZrC1_4$ at about 250-300K, NaCl-$MgCl_2$ at about 900-1300K, NaCl-$EuCl_3$ at about 900-1000K, NaCl-$NdCl_3$ at about >1000K, and NaCl-$YCl_3$ at about >1000K.

In an embodiment, the reaction mixture comprises an oxide such as a metal oxide such a alkali, alkaline earth, transition, inner transition, and rare earth metal oxides and those of other metals and metalloids such as those of Al, Ga, In, Si, Ge, Sn, Pb, As, Sb, Bi, Se, and Te, a peroxide such as $M_2O_2$ where M is an alkali metal such as $Li_2O_2$, $Na_2O_2$, and $K_2O_2$, and a superoxide such as $MO_2$ where M is an alkali metal such as $NaO_2$, $KO_2$, $RbO_2$, and $CsO_2$, and alkaline earth metal superoxides, and a source of hydrogen. The ionic peroxides may further comprise those of Ca, Sr, or Ba. The reaction to form $H_2O$ catalyst may comprise the hydrogen reduction of the oxide, peroxide, or superoxide to form $H_2O$. Exemplary reactions are

$Na_2O + 2H_2$ to $2NaH + H_2O$ (233)

$Li_2O_2 + H_2$ to $Li_2O + H_2O$ (234)

$KO_2 + 3/2H_2$ to $KOH + H_2O$ (235)

In an embodiment, the reaction mixture comprises a source of hydrogen such as at least one of $H_2$, a hydride such as at least one of an alkali, alkaline earth, transition, inner transition, and rare earth metal hydride and those of the disclosure and a source of hydrogen or other compound comprising combustible hydrogen such as a metal amide, and a source of oxygen such as $O_2$. The reaction to form $H_2O$ catalyst may comprise the oxidation of $H_2$, a hydride, or hydrogen compound such as metal amide to form $H_2O$. Exemplary reactions are

$2NaH + O_2$ to $Na_2O + H_2O$ (236)

$H_2 + 1/2O_2$ to $H_2O$ (237)

$LiNH_2 + 2O_2$ to $LiNO_3 + H_2O$ (238)

$2LiNH_2 + 3/2O_2$ to $2LiOH + H_2O + N_2$ (239)

In an embodiment, the reaction mixture comprises a source of hydrogen and a source of oxygen. The reaction to form $H_2O$ catalyst may comprise the decomposition of at least one of source of hydrogen and the source of oxygen to form $H_2O$. Exemplary reactions are

$NH_4NO_3$ to $N_2O + 2H_2O$ (240)

$NH_4NO_3$ to $N_2 + 1/2O_2 + 2H_2O$ (241)

$H_2O_2$ to $1/2O_2 + H_2O$ (242)

$H_2O_2 + H_2$ to $2H_2O$ (243)

The reaction mixtures disclosed herein this Chemical Reactor section further comprise a source of hydrogen to form hydrinos. The source may be a source of atomic hydrogen such as a hydrogen dissociator and $H_2$ gas or a metal hydride such as the dissociators and metal hydrides of the disclosure. The source of hydrogen to provide atomic hydrogen may be a compound comprising hydrogen such as a hydroxide or oxyhydroxide. The H that reacts to form hydrinos may

be nascent H formed by reaction of one or more reactants wherein at least one comprises a source of hydrogen such as the reaction of a hydroxide and an oxide. The reaction may also form $H_2O$ catalyst. The oxide and hydroxide may comprise the same compound. For example, an oxyhydroxide such as FeOOH could dehydrate to provide $H_2O$ catalyst and also provide nascent H for a hydrino reaction during dehydration:

$$4FeOOH \text{ to } H_2O + Fe_2O_3 + 2FeO + O_2 + 2H(1/4) \quad (244)$$

wherein nascent H formed during the reaction reacts to hydrino. Other exemplary reactions are those of a hydroxide and an oxyhydroxide or an oxide such as NaOH + FeOOH or $Fe_2O_3$ to form an alkali metal oxide such as $NaFeO_2$ + $H_2O$ wherein nascent H formed during the reaction may form hydrino wherein $H_2O$ serves as the catalyst. Hydroxide ion is both reduced and oxidized in forming $H_2O$ and oxide ion. Oxide ion may react with $H_2O$ to form $OH^-$. The same pathway may be obtained with a hydroxide-halide exchange reaction such as the following

$$2M(OH)_2+2M'X_2 \rightarrow H_2O+2MX_2+2M'O+1/2O_2+2H(1/4) \quad (245)$$

wherein exemplary M and M' metals are alkaline earth and transition metals, respectively, such as $Cu(OH)_2$ + $CuBr_2$, or $Co(OH)_2$ + $CuBr_2$. In an embodiment, excess bulk $H_2O$ is removed from the reaction mixture so that it does not inhibit the formation and function of nascent HOH hydrino catalyst. In an embodiment, the reactions may be dried before reaction. At least one of $H_2O$ and $H_2$ may be added to regenerate the reactants, and excess of bulk $H_2O$ may be removed before the reaction is repeated. In an embodiment, M and M' may be selected from the group of alkali, alkaline earth, transition, inner transition, and rare earth metals, Al, Ga, In, Si, Ge, Sn, Pb, Group 13, 14, 15, and 16 elements, and other cations of hydroxides or halides such as those of the disclosure. An exemplary reaction to form at least one of HOH catalyst, nascent H, and hydrino is

$$4MOH + 4M'X \rightarrow H_2O + 2M'_2O + M_2O + 2MX + X_2 + 2H(1/4) \quad (246)$$

In an embodiment, the reaction mixture comprises at least one of a hydroxide and a halide compound such as those of the disclosure. In an embodiment, the halide may serve to facilitate at least one of the formation and maintenance of at least one of nascent HOH catalyst and H. In an embodiment, the mixture may serve to lower the melting point of the reaction mixture.

An acid-base reaction is another approach to $H_2O$ catalyst. Thus, the thermal chemical reaction is similar to the electrochemical reaction to form hydrinos. Exemplary halides and hydroxides mixtures are those of Bi, Cd, Cu, Co, Mo, and Cd and mixtures of hydroxides and halides of metals having low water reactivity of the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, and Zn. In an embodiment, the reaction mixture further comprises $H_2O$ that may serves as a source of at least one of H and catalyst such as nascent $H_2O$. The water may be in the form of a hydrate that decomposes or otherwise reacts during the reaction.

In an embodiment, the solid fuel comprises a reaction mixture of $H_2O$ and an inorganic compound that forms nascent H and nascent $H_2O$. The inorganic compound may comprise a halide such as a metal halide that reacts with the $H_2O$. The reaction product may be at least one of a hydroxide, oxyhydroxide, oxide, oxyhalide, hydroxyhalide, and hydrate. Other products may comprise anions comprising oxygen and halogen such as $XO^-$, $XO_2^-$, $XO_3^-$, and $XO_4^-$ (X = halogen). The product may also be at least one of a reduced cation and a halogen gas. The halide may be a metal halide such as one of an alkaline, alkaline earth, transition, inner transition, and rare earth metal, and Al, Ga, In, Sn, Pb, S, Te, Se, N, P, As, Sb, Bi, C, Si, Ge, and B, and other elements that form halides. The metal or element may additionally be one that forms at least one of a hydroxide, oxyhydroxide, oxide, oxyhalide, hydroxyhalide, hydrate, and one that forms a compound having an anion comprising oxygen and halogen such as $XO^-$, $XO_2^-$, $XO_3^-$, and $XO_4^-$ (X = halogen). Suitable exemplary metals and elements are at least one of an alkaline, alkaline earth, transition, inner transition, and rare earth metal, and Al, Ga, In, Sn, Pb, S, Te, Se, N, P, As, Sb, Bi, C, Si, Ge, and B. An exemplary reaction is

$$5MX_2 + 7H_2O \text{ to } MXOH + M(OH)_2 + MO + M_2O_3 + 11H(1/4) + 9/2X_2 \quad (247)$$

wherein M is a metal such as a transition metal such as Cu ad X is halogen such as Cl.

The reaction mixture may further comprise a support such as an electrically conductive, high surface area support. Suitable exemplary supports are those of the disclosure such as a metal powder such as Ni or R-Ni, metal screen such as Ni, carbon, carbides such as TiC and WC, and borides. The support may comprise a dissociator such as Pd/C or Pd/C. The reactants may be in any desired molar ratio. In an embodiment, the stoichiometry is such to favor reaction completion to form $H_2O$ catalyst and to provide H to form hydrinos. The reaction temperature may be in any desired range such as in the range of about ambient to 1500 °C. The pressure range may be any desired such as in the range of about 0.01 Torr to 500 atm. The reactions are at least one of regenerative an reversible by the methods disclosed herein and in my prior US Patent Applications such as Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; Electrochemical Hydrogen Catalyst Power System, PCT/US11/28889, filed PCT 3/17/2011; and and $H_2O$-Based Electrochemical Hydrogen-Catalyst Power System, PCT/US12/31369 filed 3/30/2012; herein incorporated by reference in their entirety. Reactions that form $H_2O$ may be reversible by changing the reaction conditions such as temperature and pressure to allow the reverse reaction that consumes $H_2O$ to occur as known by those skilled in the art. For example, the $H_2O$ pressure may be increased in the backward reaction to reform the reactants from the products by rehydration. In other cases, the hydrogen-reduced product may be regenerated by oxidation such as by reaction with at least one of oxygen and $H_2O$. In an embodiment, a reverse reaction product may be removed from the reaction such that the reverse or regeneration reaction proceeds. The reverse reaction may become favorable even in the absence of being favorable based on equilibrium thermodynamics by removing at least one reverse reaction product. In an exemplary embodiment, the regenerated reactant (reverse or regeneration reaction product) comprises a hydroxide such as an alkali hydroxide. The hydroxide may be removed by methods such as solvation or sublimation. In the latter case, alkali hydroxide sublime unchanged at a temperature in the range of about 350-400 °C. The reactions may be maintained in the power plants systems of my prior US Patent Applications. Thermal energy from a cell producing power may provide heat to at least one other cell undergoing regeneration as disclosed previously. Alternatively, the equilibrium of the reactions to form $H_2O$ catalyst and the reverse regeneration reaction can be shifted by changing the temperature of the water wall of the system design having a temperature gradient due to coolant at selected region of the cell as previously disclosed.

In an embodiment, the regeneration reaction of a hydroxide and halide compound mixture such as $Cu(OH)_2$ + $CuBr_2$ may by addition of at least one $H_2$ and $H_2O$. Products such as Halides and oxides may be separated by sublimation of the halide. In an embodiment, $H_2O$ may be added to the reaction mixture under heating conditions to cause the hydroxde and halde such as $CuBr_2$ and $Cu(OH)_2$ to form from the reaction products. In an embodiment, the regeneration may be achieved by the step of thermal cycling. In an embodiment, the halide such as $CuBr_2$ is $H_2O$ soluble whereas the hydroxide such as $Cu(OH)_2$ is insoluble. The regenerated compounds may be separated by filtering or precipitation. The chemicals may be dried with wherein the thermal energy may be from the reaction. Heat may be recuperated from the driven off water vapor. The recuperation may be by a heat exchanger or by using the steam directly for heating or to generate electricity using a turbine and generator for example. In an embodiment, the regeneration of $Cu(OH)_2$ from CuO is achieved by using a $H_2O$ splitting catalyst. Suitable catalysts are noble metals on a support such as $Pt/Al_2O_3$, and $CuAlO_2$ formed by sintering CuO and $Al_2O_3$, cobalt-phosphate, cobalt borate, cobalt methyl borate, nickel borate, $RuO_2$, $LaMnO_3$, $SrTiO_3$, $TiO_2$, and $WO_3$. An exemplary method to form an $H_2O$-splitting catalyst is the controlled electrolysis of $Co^{2+}$ and $Ni^{2+}$ solution in about 0.1 M potassium phosphate borate electrolyte, pH 9.2, at a potential of 0.92 and 1.15 V (vs., the normal hydrogen electrode), respectively. Exemplary, thermally reversible solid fuel cycles are

T 100 $2CuBr_2 + Ca(OH)_2 \rightarrow 2CuO + 2CaBr_2 + H_2O$ (248)

T 730 $CaBr_2 + 2H_2O \rightarrow Ca(OH)_2 + 2HBr$ (249)

T 100 $CuO + 2HBr \rightarrow CuBr_2 + H_2O$ (250)

T 100 $2CuBr_2 + Cu(OH)_2 \rightarrow 2CuO + 2CaBr_2 + H_2O$ (251)

T 730 $CuBr_2 + 2H_2O \rightarrow Cu(OH)_2 + 2HBr$ (252)

T 100 $CuO + 2HBr \rightarrow CuBr_2 + H_2O$ (253)

In an embodiment, the reaction mixture of a solid fuel having at least one of $H_2$ as a reactant and $H_2O$ as a product and one or more of $H_2$ or $H_2O$ as at least one of a reactant and a product is selected such that the maximum theoretical free energy of the any conventional reaction is about zero within the range of -500 to + 500 kJ/mole of the limiting reagent or preferably within the range of -100 to + 100 kJ/mole of the limiting reagent. A mixture of reactants and products may be maintained at one or more of about the optimum temperature at which the free energy is about zero and about the optimum temperature at which the reaction is reversible to obtain regeneration or steady power for at least a duration longer than reaction time in the absence of maintaining the mixture and temperature. The temperature

may be within a range of about +/- 500 °C or about +/- 100°C of the optimum. Exemplary mixtures and reaction temperatures are a stoichiometric mixture of Fe, $Fe_2O_3$, $H_2$ and $H_2O$ at 800 K and a stoichiometric Sn, SnO, $H_2$ and $H_2O$ at 800 K.

In an embodiment, the product of at least one of the chemical and CIHT cell reactions to form hydrinos is a compound comprising hydrino or lower-energy hydrogen species such as $H_2(1/p)$ complexed with an inorganic compound. The compound may comprise an oxyanion compound such as an alkali or alkaline earth carbonate or hydroxide or other such compounds of the disclosure. In an embodiment, the product comprises at least one of $M_2CO_3 \cdot H_2$ (1/4) and $MOH \cdot H_2(1/4)$ (M= alkali or other cation of the disclosure) complex. The product may be identified by ToF-SIMS as a series of ions in the positive spectrum comprising $M\left(M_2CO_3 \cdot H_2\left(1/4\right)\right)_n^+)$ and $M\left(KOH \cdot H_2\left(1/4\right)\right)_n^+$, respectively, wherein n is an integer and an integer and integer p > 1 may be substituted for 4. In an embodiment, a compound comprising silicon and oxygen such as $SiO_2$ or quartz may serve as a getter for $H_2(1/4)$. The getter for $H_2(1/4)$ may comprise a transition metal, alkali metal, alkaline earth metal, inner transition metal, rare earth metal, combinations of metals, alloys such as a Mo alloy such as MoCu, and hydrogen storage materials such as those of the disclosure.

The compounds of the present invention are preferably greater than 0.1 atomic percent pure. More preferably, the compounds are greater than 1 atomic percent pure. Even more preferably, the compounds are greater than 10 atomic percent pure. Most preferably, the compounds are greater than 50 atomic percent pure. In another embodiment, the compounds are greater than 90 atomic percent pure. In another embodiment, the compounds are greater than 95 atomic percent pure.

Applications of the compounds include use in batteries, fuel cells, cutting materials, light weight high strength structural materials and synthetic fibers, cathodes for thermionic generators, photoluminescent compounds, corrosion resistant coatings, heat resistant coatings, phosphors for lighting, optical coatings, optical filters, extreme ultraviolet laser media, fiber optic cables, magnets and magnetic computer storage media, and etching agents, masking agents, dopants in semiconductor fabrication, fuels, explosives, and propellants. Increased binding energy hydrogen compounds are useful in chemical synthetic processing methods and refining methods. The increased binding energy hydrogen ion has application as the negative ion of the electrolyte of a high voltage electrolytic cell.

In an embodiment, hydrinos are formed by heating a source of catalyst and a source of hydrogen such as a solid fuel of the disclosure. The heating may be at least one of thermal heating and percussion heating. Experimentally, Raman spectroscopy confirms that hydrinos are formed by ball milling a solid fuel such as a mixture of a hydroxide and a halide such as a mixture comprising alkali metals such as Li. For example, an inverse Raman effect peak is observed from ball milled LiOH + LiI and LiOH + LiF at 2308 $cm^{-1}$. Thus, a suitable exemplary mixture is LiOH + LiI or LiF. In an embodiment, at least one of thermal and percussion heating is achieved by an explosion. In this case, an additional energetic reaction is provided by forming hydrinos.

In an embodiment, $H_2(1/p)$ may serve as a MRI paramagnetic contrast agent since the 1 quantum number is nonzero.

The nonzeo 1 quantum number allowing the rotational selection rule of the magnitude of $\Delta J = +1$ is permissive of a $H_2(1/p)$ molecular laser.

In an embodiment, since $H_2(1/p)$ is paramagnetic, it has a higher liquefaction temperature than H2. Bulk hydrino gas may be collected by cryo-separation methods.

## XII. Experimental

### A. Exemplary CIHT Cell Test Results

Molten-salt CIHT cells, each comprising an anode, a eutectic molten salt electrolyte, and a cathode contained in an inert alumina crucible were assembled in atmosphere and were heated in a closed vessel supplied with $H_2O$ by bubbling argon carrier gas through a $H_2O$ reservoir or by using a water generator that was maintained in the exemplary temperature range of 30 to 50 °C (31 Torr to 93 Torr $H_2O$). The electrolyte comprised a molten salt such as LiOH-LiBr and optionally a matrix such as MgO. The cell was operated under intermittent electrolysis wherein hydrogen was formed at the discharge anode and oxygen at the discharge cathode from $H_2O$. During discharge, the reactions and the current were reversed to form nascent $H_2O$ catalyst and hydrinos to give rise to excess current and energy such that a net excess electrical energy balance was achieved. In another variant, this cell type was operated partially open to air. Another type comprised an aqueous electrolyte such as saturated KOH, and different cathodes and anodes that were operated under intermittent electrolysis conditions open to air. The results from exemplary cells designated [anode/electrolyte/cathode] such as [Ni/LiOH-LiBr-MgO/NiO (closed or air)], and [[Co powder carbon black/KOH (saturated aq)/Ni (air)] are given as below.

50813SCS4-528 - Hypr cell - Co TCA - 1+1(SKO) cathode w/~0.1g steam activated carbon powder
Hypr cell - CNi6/lithiated NiO cathode w/SAC powder
Co TCA/LiOH+LiBr+MgO/ 1 layer of CNi6 (China)/1 layer of lithiated NiO (042513MC181) w/~0.1g steam-activated carbon powder- horizontally banded
Anode: Co TCA (050213MC188) 2.0" OD, placed top and bottom over 1.5" Ni permeation disk on 0.01"SS tube (13.953g)
Cathode: 1 layer of CNi6 (China) cellmet/1 layer of lithiated NiO (042513MC181) w/~0.1g steam-activated carbon powder (SAC)- horizontally banded
7.5g LiOH + 37.5g LiBr + 12g MgO w/2-1/16" ceramic spacers
Cumul Net Gain @ 0.6V-T 1.88 X
Cumulative Net E @ 0.6V-T 4.20 Whr
Cumul Discharge E @ 0.6V-T 8.98 Whr
H2 Perm Theo to 0.6V-T: 1.61 Whr
H2 Rate Av to 0.6V-T: 2.90 nmol/cm2/s
Net Gain - H2 Theo @ 0.6V-T: 2.6 Whr
Cell Power @ 0.6V Base: 119.3 mW
Average IR to 0.6V-T 88.1 mOhms
Area Current Density (anode): 9.9 mA/cm^2
Area Current Density (cathode): 9.9 mA/cm^2
Vol Current Density (anode) 30.8 mA/cm^3
Vol Current Density (cathode): 9.9 mA/cm^3
Location: MSTAT -10
OCV: 1.0105 V
Cell Duration to 0.6V-T: 116.8 hrs
Full Cell Duration: 119.9 hrs
Cell Type: Permeation
Atm Type: Air 20.9 % O2
Flow Rate N/A N/A
Humidification: NA RT °C
Getter: NA @ Top HandM
Program Charge: 0.2s 200 mA
Program Discharge: 0.4s /0.6V 200 mA
Heat (IB, OB, OM/Taken): 407 4/8/2013
Ended Date / Reason: on floor 0.6V 4/13/2013
Cell Modifiers: HT TC
Gain @ 0.6V floor(116.84hrs) = 1.878x, net energy= 4.199Whr
H2 perm. theo@ 116.84hrs = 1.61Whr, rate= 2.9 nmol/cm2/s

Cell [082212JT1-43] Stats at 156.5 hrs
Latest Instantaneous Gain: 1.80 X
Latest Cumul Net Gain: 1.80 X
Latest Cumul Discharge E: 10.328 Whr
Latest Cumulative Charge E: 5.739 Whr
Latest Cumulative Net E: 4.588 Whr
Cell Average Power: 102.7 mW
Cell Power at end: 96.6 mW
Cell Continuous Power: 30 mW
Area Pwr Density (anode): 5.75 mW/cm^2
Location: BLPB-11
Voltage range at 72 hours:1.09-1.04 V, steady for 156.5 hrs
Latest Runtime: 156.5 hrs
Cell Type: $H_2$ PSparge, 800 Torr 0.015" thick Ni TTC(Ni 255 Powder) disc membrane with Ni seam weld to matching piece; with center welded 1/8" stainless steel gas line; net top disc surface area about 19 $cm^2$
$H_2$ Permeation Rate: 4.4 X $10^{-9}$ moles $H_2/cm^2/s$
Atm Type: Air 20.9 % O2
Humidification: none
Program Charge: 2s, 100 mA

Program Discharge: 4s, 100ma
Program Stop when voltage reaches .90V

121912JG1-1337: Cu-Co (TCA, H2 perm)/LiBr-LiOH/Li2O-NiO (air)
Anode: 3" dia Cu-Co TCA (3 pieces) cladded with 2" dia Ni (0.01") perm disc
Cathode: Li2O-NiO, 3" dia x 1.5"H jelly roll.
Electrolyte: 50g LiOH, 250g LiBr
Cell Temp: 420C, H2: 945 Torr
Charge/Discharge: 0.2s/0.4s, 600mA, lower voltage limit: 0.65V
gain=1.58

121812JH-505: Cu-Co (TCA)/LiBr-LiOH-MgO/NiO (air)
Anode: 1.5" dia Cu-Co TCA (2 pieces)
Cathode: NiO, 1.5" dia x 1.5"H jelly roll.
Electrolyte: 15g LiOH, 75g LiBr
Cell Temp: 420C
Charge/Discharge: 0.2s/0.4s, 600mA, lower voltage limit: 0.70V
gain=1.78

102212GC1-1267# (permeation cell, High frequency, cylinder cathode) (B-3#) Tape casting (84% Co + 16% Cu tape casted in supporter Ni celmet CN6C) cladding Ni mesh protected by wielded Ni disk / LiOH-LiBr / NiO cylinder (Open to air) Charge 60 mA for 0.2 s; discharge 60 mA for 0.4 s till V > = 0.7 V; A: Tape casting Ni mesh-Ni disk (d: 1.5', 23.97 g total); C: NiO cylinder (d: 2.0'; h: 2.7'); Electrolyte: 20 g LiOH + 100 g LiBr; T set = 445 °C, T real 420 °C
Note: initial OCV was 1.0189 V. Power density 4.52 mW/cm^2.
Anode 072612TCA, 3 pieces cladding, 10.51 g, total 23.97 g. H2 initial pressure 805.4 Torr. (10/25/2012): 2d + 13h; V-base = 0.875 V; Instantaneous gain: 1.89x; Internal resistance: 173 m ohm; Net: 0.98 Wh.
(10/26/2012): 3d + 5h; V-base = 0.874 V; Instantaneous gain: 1.89x; Internal resistance: 173 m ohm. Net: 1.24 Wh.
Terminated and collected sample after four days. Total energy: 2.64 Wh / 1.40 Wh = 1.89x.
23.96 g left, lose 0.01 g (formed NiO, energy: 0.0083 Wh); H2 energy contribution was 0.64 Wh from permeation rate calculation; extra energy = 1.24 Wh - 0.64 Wh - 0.0083 Wh = 0.59 Wh. No visible corrosion.

102212GC2-1268# (permeation cell, High frequency, cylinder cathode) (B-5#) Tape casting (84% Co + 16% Cu tape casted in supporter Ni celmet CN6C) cladding Ni mesh protected by wielded Ni disk / LiOH-LiBr-MgO / NiO cylinder (Open to air) Charge 60 mA for 0.2 s; discharge 60 mA for 0.4 s till V > = 0.7 V; A: Tape casting Ni mesh-Ni disk (d: 1.5', 25.34 g total); C: NiO cylinder (d: 2.0'; h: 2.7'); Electrolyte: 20 g LiOH + 100 g LiBr + 35 g MgO; T set = 480 °C, T real 420 °C
Note: initial OCV was 0.981 V. Power density 4.47 mW/cm^2.
Anode 072612TCA, 3 pieces cladding, 10.40 g, total 25.34 g. H2 initial pressure 806.4 Torr. (10/25/2012): 2d + 13h; V-base = 0.823 V; Instantaneous gain: 1.90x; Internal resistance: 160 m ohm; Net: 0.93 Wh.
(10/26/2012): 3d + 5h; V-base = 0.821 V; Instantaneous gain: 1.89x; Internal resistance: 160 m ohm. Net: 1.18 Wh. Terminated and collected sample after four days. Total energy: 2.51 Wh / 1.33 Wh = 1.89x. 25.58 g left, increased 0.24 g due to residual insoluble MgO; H2 energy contribution was 0.53 Wh from permeation rate calculation; extra energy = 1.18 Wh - 0.53 Wh = 0.65 Wh. No visible corrosion.

090712GC2-1224# (permeation cell, cylinder cathode, H2 pressure: 900 Torr) (B-19#) Wielded Ni disk / LiOH-LiBr / NiO cylinder (Open to air) Charge 50 mA for 0.2 s; discharge 50 mA for 0.4 s till V > = 0.7 V; A: wielded Ni disk (d: 1.75', 33.76 g total); C: NiO cylinder (d: 2.25'; h: 3'); Electrolyte: 20 g LiOH + 100 g LiBr; T set = 480 °C, T real 430 °C. Initial OCV was 1.092 V. Power density 3.20 mW/cm^2. Current changed to 100 mA. (9/18/2012): 8d + 21h; V-base = 0.796 V; Instantaneous gain: 1.57x; Internal resistance: 358 m ohm; Net energy: 4.16 Wh. (9/19/2012): 9d + 17h; V-base = 0.741 V; Instantaneous gain: 1.53x; Internal resistance: 320 m ohm; Net energy: 4.54 Wh. Stopped, weighed, and resumed at same operating parameters and performance: Total energy: 12.36 Wh (discharge) / 7.51 Wh (charge energy) = 1.65x. Weight: 33.76 g (before); 33.68 g (after). The results of cell 1224 show that a Ni permeation anode can be stabilized by $H_2$ permeation at about 1.25 E-8 moles/s cm2 (2.5 mW/cm$^2$).
092412SCS1-118 Test re-welded (Spot to TIG) Mo plate @ 80 mA/cm^2
Mo(100) w/re-welded Ni/ LiOH+LiBr/NiO
Anode: Mo (100) w/re-welded Ni 1 cm2 square (2.457g)
Cathode: Ni6-NiO Roll 2" tall x 1.5" OD (27.353g)
15 LiOH+ 75g LiBrwith ~2mm ring spacer

Location: Arbin3 -1
OCV: 1.1047 V
Program Charge: 1s 80 mA
Program Discharge: 2s /0.7V 80 mA

092412SCS3-120 Test alloy made in the HTTB MoNi 50:50 @ 40 mA/cm^2
MoNi(50-50) HTTB/ LiOH+LiBr/NiO
Anode: MoNi(50-50) HTTB 1 cm2 square (2.724g)
Cathode: Ni6-NiO Roll 2" tall x 1.5" OD (32.602g)
15 LiOH+ 75g LiBr with ~2mm ring spacer
OCV: 996 mV
Program Charge: 1s 25 mA
Program Discharge: 2s /0.8V 25 mA

Cell Name: 082812JT1-45 (Regenerated by electroplating Mo). Anode: Two pieces of commercial .02" thick MoCu 5/5 at.% foil (Ametek) 1.5" in diameter were welded together using a .02" thick Ni shim having a 1" ID. The top MoCu foil had a .25" diameter hole in the center which a .25" OD 8" tall Ni tube was welded. Cathode: 5mm thick oxidized Ni Celmet jelly roll 1.5" diameter and 2" tall with a .468" hole at the center. Electrolyte: 15g of LiOH and 75g of LiBr were weighed and placed in an alumina crucible, then heated to 430°C. Assembly: Anode was leak checked down to 0.2 torr using the hydrogen permeation set-up. Following the leak check the anode was closed off to remain under vacuum while the hydrogen supply tank was refilled with hydrogen to 998.1 torr. The anode was then filled and the pressure recorded as 971.2 torr. The anode was then place into the electrolyte and allowed to rest during which the pressure in the tank increased slightly to 973.1 torr. This was the starting value for the pressure of the cell. These three pressures and the calculated volume of the entire assembly were/are used to generate calculations for the amount of hydrogen moving through the anode diaphragm.

Testing: The cell was initially tested as shown in the table below:

| Schedule Type | Current (mA) | V Range | Power (mW) |
|---|---|---|---|
| Start cell | 50 | | |
| .2/.4 s wave form overnight | 50 | .97-1.05 | 9.739380027 |
| 1/2 s wave form | 50 | .97-1.07 | 8.665770006 |
| 2/4 s wave form | 50 | .98-1.07 | 9.147375413 |
| 4/8 s wave form | 50 | .94-1.06 | 9.930217731 |
| 8/16 s wave form | 50 | .96-1.13 | 9.235660367 |
| 8/16 s wave form | 50 | .96-1.13 | 7.574133052 |
| .2/.4 s wave | 50 | .98-1.02 | 8.735350286 |
| .2/.4 s wave | 100 | .86-.94 | 10.61981618 |
| .2/.4 s wave | 100 | .86-.94 | 9.447974398 |
| 1/2 s wave form | 100 | .82-.95 | 10.73913996 |
| 2/4 s wave form | 100 | .8-.96 | 9.967456047 |
| 4/8 s wave form | 100 | .77-.97 | 9.636824934 |
| .2/.4 s wave | 150 | .785-.916 | 11.35858601 |
| .2/.4 s wave | 150 | .7-.91 | 9.821537121 |
| .2/.4 s wave | 50 | .84-.88 | 3.724325199 |
| V window .85-1.0 V | 50 | .85-1.0 | -0.458776059 |
| V window .88-.93 V | 50 | .88-.93 | -0.181787636 |

To this point the cell had a net energy of 3.11Wh. As a result of poor gain we added 0.5g $MoO_2$ to regenerate the cell. To do so, the cell was momentarily removed from the electrolyte bath while the $MoO_2$ was poured into the electrolyte. The cell assembly was then place back into the bath and a test schedule applied 1.2V to the cell. An initial current of ~300mA was required, but asymptotically fell to 58mA over which the entire duration lasted 6 hours. Following the $MoO_2$ treatment, a schedule of .2/.4s 50mA was applied. The day and voltage range are shown below:

| Days | V Range |
|---|---|
| 0 | .9-.96 |
| 1 | .9-.96 |
| 2 | .84-.91 |
| 3 | .84-.915 |
| 4 | .85-.89 |
| 7 | .85-.89 |

On the 7th day the cell had a new net of 2.46Wh and the average power from hydrogen was 1.96mW. The cell was operating between 0.824-0.867V at 50mA running a .2/.4s wave form and obtained a net of .36Wh over the course of 36 hours. As 28th day the hydrogen pressure has leveled off and the cell no longer required external $H_2$.

092412GC1-1241# (permeation cell, High frequency, cylinder cathode) (B-8#) Wielded Mo-Mo disk / LiOH-LiBr-MgO / NiO cylinder (Open to air) Charge 50 mA for 0.2 s; discharge 50 mA for 0.4 s till V > = 0.7 V; A: wielded Mo-Mo disk (d: 1.5 cm, 9.67 g total); C: NiO cylinder (d: 2.25'; h: 3'); Electrolyte: 20 g LiOH + 100 g LiBr + 35 g MgO; T set = 490 °C, T real 420 °C

| Test time/ current (mA) | Discharge power density (mW/cm2) | Discharge voltage (V) | 12 h Differential charge energy (Wh) | 12 h Differential discharge energy (Wh) | Instantaneous gain | Internal resistance (mohm) |
|---|---|---|---|---|---|---|
| 2.5 h / 50 | 24.4 | 0.858 | 0.0385 | 0.0716 | 1.86x | 202 |
| Note: initial OCV was 1.0255 V. Power density 24.4 mW/cm^2. | | | | | | |

091912GC2-1238# (High frequency, small square anode, cylinder cathode) (A-15#) Mo-Cu foil square / LiOH-LiBr / NiO cylinder (Open to air) Charge 80 mA for 0.2 s; discharge 80 mA for 0.4 s till V > = 0.7 V; A: Mo-Cu (50:50; 1 cm ^2, 2.39 g including wire); C: NiO cylinder (d: 1.5'; h: 2'); Electrolyte: 20 g LiOH + 100 g LiBr; T set = 485 °C, T real 420 °C Note: initial OCV was 0.896 V. Power density 60.0 mW/cm^2. (9/20/2012): 22h; V-base = 0.699 V; Instantaneous gain: 1.63x; Internal resistance: 323 m ohm. (9/21/2012): 1d + 14h; V-base = 0.698 V; Instantaneous gain: 1.46x; Internal resistance: 316 m ohm.

091712GC2-1234# (H2 permeation cell-anode coated with Ni-Co tape cast, High frequency, cylinder cathode) (B-12#) Ni disk (090512TCA) / LiOH-LiBr / NiO cylinder (Open to air) Charge 50 mA for 0.2 s; discharge 50 mA for 0.4 s till V > = 0.7 V; A: Ni permeation electrode with Ni mesh fastened on the outer surface and coated with tape cast (95% Ni + 5% Co coated, d: 1.5', 31.60 g total); C: NiO cylinder (d: 2.25'; h: 3'); Electrolyte: 20 g LiOH + 100 g LiBr; T set = 450 °C, T real 420 °C

Note: initial OCV was 1.10 V. Power density 4.08 mW/cm^2. Compared with permeation cell: 090712GC2-1224#. (9/20/2012): 2d + 13h; V-base = 0.934 V; Instantaneous gain: 1.92x; Internal resistance: 57 m ohm; Net energy: 0.90 Wh. (9/21/2012): 3d + 5h; V-base = 0.994 V; Instantaneous gain: 1.91x; Internal resistance: 128m ohm; Net energy: 1.15 Wh. Changed current to 100 mA.

Cell [082212JT1-43] Stats at 72 hrs
Latest Instantaneous Gain: 1.82 X
Latest Cumul Net Gain: 1.82 X
Latest Cumul Discharge E: 1.9850 Whr
Latest Cumulative Charge E: 1.0907 Whr
Latest Cumulative Net E: 0.8943 Whr
Cell Power: 48.95 mW
Area Pwr Density (anode): 16.3 mW/cm^2
Location: Arbin16 -7
Voltage range at 72 hours: 1.09-0.97 V, steady for 72 hrs
Latest Runtime: 72 hrs
Cell Type: $H_2$ Permeation, 785 Torr 0.02" thick MoCu (50:50) (Commercial material from Ametek) disc membrane with Ni seam weld to matching piece; with center welded 1/4" stainless steel gas line; net top disc surface area about 3 $cm^2$
$H_2$ Permeation Rate: 2.5 X $10^{-8}$ moles $H_2$/s (~4 mW maxiumum therortical to form $H_2O$)
Atm Type: Air 20.9 % O2

Humidification: DI H2O RT °C
Program Charge: 0.2s, 50 mA
Program Discharge: 0.4s or until 0.7V, 50 mA

Cell [082412JT1-44] Stats at 1 day
Latest Instantaneous Gain: 1.83 X
Latest Cumul Net Gain: 1.83 X
Latest Cumul Discharge E: 1.3935 Whr
Latest Cumulative Charge E: 0.7604 Whr
Latest Cumulative Net E: 0.6331 Whr
Cell Power: 92.3 mW
Area Pwr Density (anode): 30.7 mW/cm^2
Location: Arbin16 -8
Voltage range at 1 day: 0.957-0.889 V, essentially steady for 24 hrs
Latest Runtime: 1 day
Cell Type: $H_2$ Permeation, 785 Torr 0.02" thick MoCu (50:50) (Commercial material from Ametek) disc membrane with Ni seam weld to matching piece; with center welded 1/4" stainless steel gas line; net top disc surface area about 3 $cm^2$
$H_2$ Permeation Rate: 3 X $10^{-8}$ moles $H_2$/S (~5 mW maxiumum therortical to form $H_2O$)
Atm Type: Air 20.9 % O2
Humidification: DI H2O RT °C
Program Charge: 0.2s, 100 mA
Program Discharge: 0.4s or until 0.7V, 100 mA

071812GC2-1141# (High power density, cylinder cathode) (A-21#)
Mo-C (50:50) alloy chunk / LiOH-LiBr / NiO cylinder (Open to air)
Charge 80 mA for 2s; discharge 80 mA for 4s till V > = 0.6 V; A: Mo-Ni-C (d: 1.0 cm, 3.27 g including wire); C: NiO cylinder (d: 1.5'; h: 2'); Electrolyte: 20 g LiOH + 100 g LiBr; T set = 520 °C, T real 450 °C; Note: initial OCV was 1.134 V. Anode: Mo-C alloy. (7/25/2012):
6d + 12h; Total: 6.4736 Wh / 3.7698 Wh = 1.72x. Net energy: 2.7038 Wh.
072612GC1-1158# (High power density, cylinder cathode) (A-10#)
Mo-Si (60:40) alloy/ LiOH-LiBr / NiO cylinder (Open to air)
Charge 50 mA for 2s; discharge 50 mA for 4s till V > = 0.6 V; A: Mo-Si (d: 1.0 cm, 2.25 g including wire); C: NiO cylinder (d: 1.5'; h: 2'); Electrolyte: 20 g LiOH + 100 g LiBr; T set = 460 °C, T real 430 °C. Note: initial OCV was 1.14 V. (8/03/2012): 6d + 2h; V-base = 0.600 V; Instantaneous gain: 1.47x; Internal resistance: 738 m ohm. Total energy: 3.87 Wh / 2.42 Wh = 1.60x. net energy: 1.45 Wh.

072412GC1-1151# (High power density, cylinder cathode) (A-14#) Mo-B (50:50) alloy / LiOH-LiBr / NiO cylinder (Open to air) Charge 50 mA for 2s; discharge 50 mA for 4s till V > = 0.6 V; A: Mo-B (d: 0.8 cm, 1.64 g including wire); C: NiO cylinder (d: 1.5'; h: 2'); Electrolyte: 20 g LiOH + 100 g LiBr; T set = 500 °C, T real 450 °C. Note: initial OCV was 1.39 V. Very small anode, higher power density(108.8 mW/cm^2). (7/26/2012): 2d + 3h; V-base = 1.021 V; Instantaneous gain: 1.87x; Internal resistance: 279 m ohm. (7/27/2012): 3d + 1h; V-base = 1.001 V; Instantaneous gain: 1.88x; IR: 740 m ohm. Stopped due to power outage: Discharge energy 4.14 Wh, Charge energy 2.24 Wh, Net energy 1.9 Wh, Gain 1.85X

070612JL1-41 Flange Cell:
MoNi 50-50/ LiOH+LiBr/NiO
Anode: MoNi 50-50 approx. 5mm x 3/8" OD (3.681g, w/ 5.75" Ni wire)
Cathode: CNi6-NiO Roll 2" tall x 1.5" OD (~20g w/ Ni wire)
15g LiOH + 75g LiBr
Latest Cumulative Net Gain: 1.8 X
Latest Cumulative Net Energy: 2.749 Whr
Latest Cumulative Discharge E: 6.259 Whr
Cell Power: 47.95 mW
Area Power Density (anode): 67.30mW/cm^2
Area Power Density (cathode): 4.21 mW/cm^2
Vol Power Density (anode): 134.60 mW/cm^3
Vol Power Density (cathode): 0.83 mW/cm^3

Location: Arbin16 -11
OCV: 1.218mV
Latest Runtime: 6:01:23 day:hr:min
Flow (Dry air): 1 bubble/8s
Exit Line Bubbling: Yes
DI H2O Temp: RT °C (~6" dist)
Getter: KOH:KCl#1 @ Top BallM
Program Current: 80 mA
Program Charge: 2 s
Program Discharge: 4 s
Heat Profile (IB, OB, OM/Taken): 460/NA/NA 7/6/2012
- ~3 Whr net.

071612SCS2-16 Flange cell:
MoCu (50-50)/ LiOH+LiBr / NiO
Anode: MoCu 50-50 ~0.4" OD circle (2.991g, w/ Ni wire)
Cathode: Ni6-NiO Roll 2" tall x 1.5" OD (30.046g w/ Ni wire)
15g LiOH + 75g LiBr (Validation); 5mm ring spacer
Latest Cumul Net Gain: 1.8 X
Latest Cumulative Net E: 0.906 Whr
Latest Cumul Discharge E: 1.992Whr (T: 1.4)
Net E vs. 100% MA Batt: 62.58% (MoCu)
Gross E vs. 100% MA Batt: 137.68 % (MoCu)
Cell Power: 74 mW
Area Pwr Density (anode): 42.04mW/cm^2
Area Pwr Density (cathode): 4.67 mW/cm^2
Vol Pwr Density (anode): 210.19 mW/cm^3
Vol Pwr Density (cathode): 0.92 mW/cm^3
Location: MSTAT -9
OCV: 1.018V
Latest Runtime: 2:00:00 day:hr:min
Gas Type: 2%O2:Ar
Flow: 1 bubble/5.5s
Exit Line Bubbling: Yes
DI H20 Temp: RT °C (~6" dist)
Getter: KOH#8 @ Top BallM
Program Charge: 2s 80 mA
Program Discharge: 4s 80 mA
Heat (IB, OB, OM/Taken): 405/NA/NA 7/16/2012
Flow was 3.5 SCCM at 2% O2:Ar corresponding to a theoretical maximum electrical power of 14.8 mW based on air-metal reaction; whereas, the observed power was greater, 74 mW.

072612JH138-120mA: NiCo (tapecast) / LiBr-LiOH /NiO (air)
Anode: NiCo tapecast (95-5 at%, 1.5" x 1.5", 2.5mm thick, 16.92g, 062212TCA); Cathode: jelly roll of NiOx (1.5" OD, 2"H, 43.0g, 071112TCC); Electrolyte: 15g LiOH-75g LiBr; Cell Temp: ~430C (furnace 495C).
Charge 120 mA 2s; discharge 120 mA till V > = 0.6 V otherwise discharge 4s;
(to repeat 071712JH130-100mA, with higher discharge current)
1D, gain=1.85
The cell performance was interrupted by heater electric power outage. It was powered back later.
3D, gain=1.8
6D, gain=1.82
11D, gain=1.71
Accumulated Net Energy: 6.218 Wh

070612JL1-41 Flange Cell:
MoNi 50-50/ LiOH+LiBr/NiO
Anode: MoNi 50-50 approx. 5mm x 3/8" OD (3.681g, w/ 5.75" Ni wire)
Cathode: CNi6-NiO Roll 2" tall x 1.5" OD (~20g w/ Ni wire)

15g LiOH + 75g LiBr
Latest Cumulative Net Gain: 1.8 X
Latest Cumulative Net Energy: 2.749 Whr
Latest Cumulative Discharge E: 6.259 Whr
Cell Power: 47.95 mW
Area Power Density (anode): 67.30 mW/cm^2
Area Power Density (cathode): 4.21 mW/cm^2
OCV: 1.218 mV
Latest Runtime: 6:01:23 day:hr:min
Flow (Dry air): 1 bubble/8s
DI H2O Temp: RT °C (~6" dist)
Program Current: 80 mA
Program Charge: 2 s
Program Discharge: 4 s
Heat Profile 460°C

070512YA1-2 Open cell:
CuMo 50-50/ LiOH+LiBr/NiO
Anode: Cu Mo 50-50 approx. 5mm x 3/8" OD (4.86g, w/ 7" Ni wire)
Cathode: CNi6-NiO Roll 2" tall x 1.5" OD (23.99g w/ 6" Ni wire)
15g LiOH + 75g LiBr
Latest Cumulative Net Gain: 1.7 X
Latest Cumulative Net Energy: 2.274 Whr
Latest Cumulative Discharge E: 5.340 Whr
Cell Power: 37.33 mW
Area Power Density (anode): 52.39 mW/cm^2
Area Power Density (cathode): 3.27 mW/cm^2
OCV: 1.08 V
Latest Runtime: 5:01:24 day:hr:min
Open to air NA bubble/s
Program Current: 80 mA
Program Charge Time: 2 s
Program Discharge Time: 4 s
Heat Profile 405°C

070612SCS1-7; Open air cell
CuMo (20/80)/ LiOH+LiBr / NiO
Anode: CuMo (20/80) ~0.4" OD circle (3.631g, w/Ni wire)
Cathode: Ni6-NiO Roll 2" tall x 1.5" OD (25.468g w/ Ni wire)
15g LiOH + 75g LiBr; 5mm ring spacer
Latest Instantaneous Gain: 1.8 X
Latest Cumulative Net Gain: 1.8 X
Latest Cumulative Net Energy: 1.813 Whr
Latest Cumulative Discharge E: 4.089 Whr
Cell Power: 50.31 mW
Area Power Density (anode): 62.05 mW/cm^2
Area Power Density (cathode): 4.41 mW/cm^2
OCV: 1.033 V
Latest Runtime: 2:20:01 day:hr:min
Flow (2% O2:Ar): 1 no bubbler
DI H2O Temp: RT °C (~6" dist)
Program Current: 80 mA
Program Charge Time: 2 s
Program Discharge Time: 4 s
Heat Profile 420°C

071012GC3-1123# (High power density, cylinder cathode) (A-16#) Mo-Ni alloy/ LiOH-LiBr / NiO cylinder (Open to air) Charge 80 mA for 2s; discharge 80 mA for 4s till V > = 0.7 V;

A: Mo-Ni (d: 1.2 cm, 50:50, 3.58 g including wire); C: NiO cylinder (d: 1.5'; h: 2'); Electrolyte: 20 g LiOH + 100 g LiBr; T = 440 °C
Note: initial OCV was 1.15 V.
(7/11/2012): 1d; V-base = 0.898 V; Instantaneous gain: 1.85x; Internal resistance: 306 m ohm.
(7/12/2012): 2d + 2h; V-base = 0.843 V; Instantaneous gain: 1.84x; Internal resistance: 308 m ohm.

070912GC1-1118# (High power density, cylinder cathode) (B-13#) Mo-Cu alloy-sintered mixture/LiOH-LiBr / NiO cylinder (Open to air) Charge 80 mA till V = 1.0 V; discharge 80 mA till V > = 0.8 V otherwise discharge 4s; A: Mo-Cu (d: 1.2 cm, 50:50, 3.60 g including wire); C: NiO cylinder (d: 1.5'; h: 2'); Electrolyte: 20 g LiOH + 100 g LiBr; T = 440 °C
Note: initial OCV was 1.0733 V. Keep going.
(7/11/2012): 2d; V-base = 0.866 V; Instantaneous gain: 1.47x.
(7/12/2012): 3d; V-base = 0.862 V; Instantaneous gain: 1.30x.

071012GC1-1121# (High power density, cylinder cathode) (A-21#) Mo-Co alloy/ LiOH-LiBr / NiO cylinder (Open to air) Charge 80 mA for 2s; discharge 80 mA for 4s till V > = 0.7 V; A: Mo-Co (d: 1.2 cm, 80:20, 3.09 g including wire); C: NiO cylinder (d: 1.5'; h: 2'); Electrolyte: 20 g LiOH + 100 g LiBr; T = 430 °C
Note: initial OCV was 1.20 V.
(7/11/2012): 1d + 2h; V-base = 0.783 V; Instantaneous gain: 1.68x; Internal resistance: 736 m ohm.
(7/12/2012): 2d + 3h; V-base = 0.747 V; Instantaneous gain: 1.67x; Internal resistance: 738 m ohm.

070512GC2-1113# (Medium power density, cylinder cathode) (A-10#) Mo-Co (1:1)/ LiOH-LiBr-MgO / NiO cylinder. (Wet Ar + 1.5% O2) Charge 20 mA till V = 1.0 V; discharge 20 mA till V > = 0.8 V otherwise discharge 4s; A: Mo-Co alloy (d: 0.9 cm, 2.97 g including wire); C: NiO cylinder (d: 1.5'; h: 2'); Electrolyte: 12 g LiOH + 60 g LiBr + 21 g MgO; T = 420 °C
Note: initial OCV was 1.0983 V.
(7/11/2012): 5d + 5h; V-base = 0.865 V; Instantaneous gain: 1.20x.
(7/12/2012): 6d + 4h; V-base = 0.866 V; Instantaneous gain: 1.19x.

032012
1. High T molten electrolyte-Closed SS cell with Ar flow through water bubbler - 10 W scale-up

- 032012GZC1-1023: Mo/210g LiOH + 1.05kg LiBr + 420g MgO in one layer/NiO (10 layers)
- Anode: Mo foil; Cathode: preoxidized CNi6C
- Tset=420C, Treal=420C.
- charge to 8V, discharge for 4s if V>6V

Results:

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 1500 | 15.56 | 7.120 | 10680.00 | 1.28 | 3.90E+00 | 169.54 | 43.45 |
| 1800 | 23.59 | 6.53 | 11754.00 | 1.41 | 1.79E+01 | 254.63 | 14.23 |
| 1400 | 46.66 | 6.86 | 9604.00 | 1.15 | 27.11 | 459.66 | 16.96 |
| 1500 | 63.29 | 6.68 | 10020.00 | 1.20 | 51.84 | 608.05 | 11.73 |
| 1500 | 134.84 | 6.67 | 10005.00 | 1.20 | 187.63 | 1200.28 | 6.40 |
| 1600 | 156.33 | 6.32 | 10112.00 | 1.22 | 244.42 | 1363.03 | 5.58 |
| 1700 | 177.94 | 6.000 | 10200.00 | 1.23 | 327.45 | 1514.59 | 4.63 |
| 1700 | 200.83 | 6.000 | 10200.00 | 1.23 | 439.01 | 1662.73 | 3.79 |
| 1700 | 220.55 | 6 | 10200 | 1.23 | 541.8 | 1786.27 | 3.30 |
| 1700 | 287.63 | 6 | 10200 | 1.23 | 829.85 | 2262.15 | 2.73 |
| 1700 | 310.24 | 6 | 10200 | 1.23 | 947.99 | 2405 | 2.54 |

(continued)

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 1700 | 332.32 | 6 | 10200 | 1.23 | 1074.62 | 2536.03 | 2.36 |

010412XY2-1344 Flange closed, paste electrolyte Ni/LiOH-LiBr-MgO/NiO. (Validation cell for Henry)

- Anode: Porous Ni C6NC (OD 1.5", 11cm2, 5.0751g, incl. wire), submersed into electrolyte.
- Cathode: Pre-oxidized porous Ni C6NC (1.5*1.5"), on top of electrolyte.
- Electrolyte: 15.0g LiOH + 75.0g LiBr + 30.0g MgO.

Temperature 450 C

Flow through Ar (Pre-humidified)

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V | 5mA till V=0.6V, or 4s if V>0.6V in 4s | 1h | 0.27 | 0.0000021 | 0.0045 | 214285.7 |
| | | 18h | | 0.0008413 | 0.0734 | 8724.5 |
| | | 1d11h | | 0.0008730 | 0.1433 | 16414.6 |
| | | 4d11h | | 0.0013 | 0.4279 | 32915.3 |
| | | 5d8h | | 0.0016 | 0.4977 | 31106.6 |
| | | 6d7h | | 0.0023 | 0.5812 | 25269.5 |
| | | 7d6h | | 0.0034 | 0.6674 | 19629.4 |
| | | 8d4h | | 0.0037 | 0.7559 | 20429.7 |
| | | 11d5h | | 0.0062 | 1.0277 | 16575.8 |
| | | 12d7h | | 0.0081 | 1.1000 | 13580.2 |
| | | 13d0h | | 0.0103 | 1.1821 | 11476.6 |
| | | 13d22h | | 0.0137 | 1.2641 | 9227.0 |
| | | 14d23h | | 0.0209 | 1.3391 | 6407.1 |
| | | 17d22h | | 0.0793 | 1.5946 | 2010.8 |
| | | 18d18h | | 0.0794 | 1.6700 | 2223.1 |
| | | 19d18h | | 0.0794 | 1.7652 | 2203.7 |
| | | 20d15h | | 0.0795 | 1.8565 | 2335.2 |
| | | 21d14h | | 0.0795 | 1.9508 | 2453.8 |
| | | 24d17h | | 0.0796 | 2.2517 | 2828.8 |
| | | 25d12h | | 0.0796 | 2.3271 | 2923.5 |
| | | 26d12h | | 0.0797 | 2.4194 | 3035.6 |
| | | 27d12h | | 0.0797 | 2.5122 | 3152.1 |
| | | 28d12h | | 0.0798 | 2.6048 | 3264.2 |
| | | 31d13h | | 0.0799 | 2.8826 | 3607.8 |
| | | 32d12h | | 0.0799 | 2.9703 | 3717.5 |
| | | 33d12h | | 0.0800 | 3.0609 | 3826.1 |
| | | 34d12h | | 0.0800 | 3.1532 | 3941.5 |
| | | 35d0h | | 0.0801 | 3.1913 | 3984.1 |
| | | 38d0h | | 0.0865 | 3.4533 | 3992.3 |
| | | 39d0h | | 0.0877 | 3.5433 | 4040.3 |
| | | 40d0h | | 0.0877 | 3.6339 | 4143.6 |
| | | 41d0h | | 0.0878 | 3.7253 | 4242.9 |
| | | 41d23h | | 0.0878 | 3.8115 | 4341.1 |
| | | 44d23h | | 0.0879 | 4.0834 | 4645.5 |
| | | 45d23h | | 0.0905 | 4.1706 | 4608.4 |

(continued)

| Charge I, T | Discharge I, T | Time | Power density, mW/cm2 | Charge energy, Wh | Discharge energy, Wh | Energy gain, % |
|---|---|---|---|---|---|---|
| | | 46d23h | | 0.0914 | 4.2601 | 4660.9 |
| | | 47d23h | | 0.0918 | 4.3487 | 4737.1 |
| | | 48d23h | | 0.0919 | 4.4391 | 4830.4 |
| | | 51d23h | | 0.1163 | 4.6845 | 4027.9 |
| | | 52d23h | | 0.1238 | 4.7654 | 3849.3 |
| | | 53d23h | | 0.1288 | 4.8496 | 3765.2 |
| | | 54d23h | | 0.1308 | 4.9374 | 3774.8 |
| | | 55d23h | | 0.1343 | 5.0240 | 3740.9 |
| | | 58d23h | | 0.1770 | 5.2516 | 2967.0 |
| | | 59d23h | | 0.2201 | 5.2998 | 2407.9 |
| | | 61d1h (stopped) | | 0.2688 | 5.3491 | 1990.0 |

B. Water-Flow. Batch Calorimetry

The energy and power balance of the catalyst reaction mixtures listed on the righthand side of each entry in TABLE 5 was obtained using cylindrical stainless steel reactors of approximately 43 $cm^3$ volume (1" inside diameter (ID), 5" length, and 0.060" wall thickness having an internal thermocouple well) and a water flow calorimeter comprising a vacuum chamber containing each cell and an external water coolant coil that collected 99+% of the energy released in the cell to achieved an error < $\pm$1%. The energy recovery was determined by integrating the total output power $P_T$ over time. The power was given by

$$P_T = \dot{m} C_p \Delta T \qquad (254)$$

where $\dot{m}$ was the mass flow rate, $C_p$ was the specific heat of water, and $\Delta T$ was the absolute change in temperature between the inlet and outlet. The reaction was initiated by applying precision power to external heaters. Specially, 200 W of power was supplied to the heater. During this heating period, the reagents reached a hydrino reaction threshold temperature wherein the onset of reaction was typically confirmed by a rapid rise in cell temperature. Once the cell temperature reached about 400-500 °C the input power was set to zero. After 18 minutes, the program directed the power to zero. To increase the rate of heat transfer to the coolant, the chamber was re-pressurized with 1000 Torr of helium, and the maximum change in water temperature (outlet minus inlet) was approximately 1.2 °C. The assembly was allowed to fully reach equilibrium over a 24-hour period as confirmed by the observation of full equilibrium in the flow thermistors.

In each test, the energy input and energy output were calculated by integration of the corresponding power. The thermal energy in the coolant flow in each time increment was calculated using Eq. (245) by multiplying volume flow rate of water by the water density at 19 °C (0.998 kg/liter), the specific heat of water (4.181 kJ/kg °C), the corrected temperature difference, and the time interval. Values were summed over the entire experiment to obtain the total energy output. The total energy from the cell $E_T$ must equal the energy input $E_{in}$ and any net energy $E_{net}$. Thus, the net energy was given by

$$E_{net} = E_T - E_{in}. \qquad (255)$$

From the energy balance, any excess heat $E_{ex}$ was determined relative to the maximum theoretical $E_{mt}$ by

$$E_{ex} = E_{net} - E_{mt}. \qquad (256)$$

The calibration test results demonstrated a heat coupling of better than 98% of the resistive input to the output coolant, and zero excess heat controls demonstrated that the with calibration correction applied, the calorimeter was accurate to within less than 1% error. The results are given as follows where Tmax is the maximum cell temperature,

Ein is the input energy, and dE is the measured output energy in excess of the input energy. All theoretical energies are negative when exothermic. Positive output values represent more output than input energy. Reactions wherein products of a prior reaction were run as indicated comprised tests of regeneration.

TABLE 5. Exemplary Calorimetry Test Results.

| Sample ID | Cell No. | Chemicals | Tmax, C | $E_{in}$, kJ | DE, kJ | $E_{Theoretical}$, kJ | Energy Gain, DE/(-$E_{theoretical}$) |
|---|---|---|---|---|---|---|---|
| 030212JHWF2 | 376 | 12.2g Sr(OH)2 + 13.0g CoCl2 + 100 psi H2 (net 6 psi) | 662 | 216.9 | 42.6 | -10.3 | 4.1 |
| 032612JHWF4 | 475 | 9.8g Cu(OH)2 + 37.3.0g SnI2 + 1atm Ar | 507 | 217 | 13.4 | -4.1 | 3.3 |
| 032712JHWF1 | 479 | 14.6g Cu(OH)2 + 15.0g InCl3 +1atm Ar | 568 | 217 | 16.4 | -0.6 | 27.3 |
| 033012JHWF4 | 502 | 11.1g Ca(OH)2 + 24.7g CeCl3 +1atm Ar | 564 | 218 | 10.2 | -3.1 | 3.3 |
| 040212JHWF1 | 505 | 13.9g Co(OH)2 + 37.9g CeBr3 +latm Ar | 489 | 216.9 | 9.5 | 0.7 | inf |
| 040212JHWF2 | 506 | 13.9g Ni(OH)2 + 37.9g CeBr3 +1atm Ar | 517 | 216.9 | 11.2 | 0.5 | inf |
| 040312JHWF1 | 510 | 9.3g Co(OH)2 + 13.5g CuCl2 + 1atm Ar | 554 | 219 | 7.8 | -0.3 | 26.0 |
| 040312JHWF4 | 512 | 9.3g Co(OH)2 + 23.3g CuBr2 + 1atm Ar | 596 | 217 | 15 | 1.1 | inf |
| 040312JHWF5 | 513 | 9.3gNi(OH)2 + 23.3g CuBr2 +1atm Ar | 626 | 218 | 17.3 | 0.9 | inf |
| 040412JHWF1 | 514 | 9.8gCu(OH)2 + 13.4g CuCl2 + 1 atm Ar | 513 | 219.1 | 7.1 | 0 | inf |
| 040412JHWF2 | 515 | 9.8gCu(OH)2 + 22.3g CuBr2 + 1 atm Ar | 630 | 217.1 | 18.5 | 0 | inf |
| 040512JHWF1 | 518 | 9.8g Cu(OH)2 + 21.6g FeBr2 + 104 psi H2 (net 6 psi) | 569 | 216.9 | 13 | -4.3 | 3.0 |
| 040512JHWF3 | 519 | 9.8g Cu(OH)2 + 21.9g NiBr2 + 104 psi H2 (net 6 psi) | 502 | 218 | 8.2 | -3.7 | 2.2 |
| 040512JHWF4 | 520 | 9.8g Cu(OH)2 + 21.9g CoBr2 + 104 psi H2 (net 6 psi) | 571 | 218 | 16.9 | -3.8 | 4.4 |
| 040512JHWF5 | 521 | 9.8g Cu(OH)2 + 13.0g NiCl2 + 104 psi H2 (net 6 psi) | 590 | 218 | 10.4 | -3 | 3.5 |
| 040512JHWF6 | 522 | 9.8g Cu(OH)2 + 13.0g CoCl2 + 104 psi H2 (net 6 psi) | 530 | 218.1 | 8.5 | -3 | 2.8 |
| 040612JHWF4 | 525 | 9.3g Co(OH)2 + 23.3g CuBr2 + 104 psi H2 (net 6 psi) | 583 | 218 | 15.4 | -1.9 | 8.1 |
| 040612JHWF5 | 526 | 9.3gNi(OH)2 + 23.3g CuBr2 + 104 psi H2 (net 6 psi) | 615 | 217.5 | 13.2 | -2 | 6.6 |
| 040912JHWF4 | 530 | 9.3g Co(OH)2 + 23.3g CuBr2 + 1atm Ar | 615 | 218 | 15.5 | -0.2 | 77.5 |
| 040912JHWF5 | 531 | 9.3gNi(OH)2 + 23.3g CuBr2 +1atm Ar | 599 | 218.1 | 13.9 | -0.9 | 15.4 |

(continued)

| Sample ID | Cell No. | Chemicals | Tmax, C | $E_{in}$, kJ | DE, kJ | $E_{Theoretical}$, kJ | Energy Gain, DE/(-$E_{theoretical}$) |
|---|---|---|---|---|---|---|---|
| 040912JHWF8 | 532 | 9.8gCu(OH)2 + 23.3g CuBr2 + 1 atm Ar | 672 | 218.1 | 21.6 | -1.3 | 16.6 |
| 041012JHWF1 | 533 | 9.8g Cu(OH)2 + 13.4g CuCl2 + 1 atm Ar | 533 | 217.3 | 14.5 | -1.3 | 11.2 |
| 041112JHWF5 | 544 | 9.8gCu(OH)2 + 13.4g CuCl2 + 104 psi H2 (net 6 psi) | 553 | 217.1 | 16.9 | -3.7 | 4.6 |
| 041112JHWF6 | 545 | 9.8gCu(OH)2 + 22.3g CuBr2 + 104 psi H2 (net 6 psi) | 588 | 218.1 | 18.4 | -3.7 | 5.0 |
| 041212JHWF6 | 552 | 9.8g Cu(OH)2 + 21.6g FeBr2 + 1atm Ar | 580 | 217.1 | 13.1 | -1.6 | 8.2 |
| 041212JHWF8 | 553 | 9.8g Cu(OH)2 + 21.9g NiBr2 + 1atm Ar | 621 | 217.1 | 15.4 | -0.9 | 17.1 |
| 041712JHWF8 | 573 | 20.0g Cu(OH)2 + 26.8g CuCl2 + 1 atm Ar (2x) | 516 | 218.1 | 12 | -2.6 | 4.6 |
| 041912JHWF1 | 580 | 1/2 of 041712JHWF8 (20.0g Cu(OH)2 + 26.8g CuCl2) + 2.0g Pd/C + 104 psi H2 | 582 | 218.9 | 7.1 | -2.7 | 2.6 |
| 041912JHWF4 | 582 | 9.3gNi(OH)2 + 19.0g SnCl2 + 1 atm Ar | 640 | 218 | 14.5 | -3.7 | 3.9 |
| 041912JHWF5 | 583 | 9.3g Ni(OH)2 + 27.9g SnBr2 + 1 atm Ar | 597 | 218.1 | 9.3 | -3 | 3.1 |
| 042012JHWF5 | 589 | 9.8gCu(OH)2 + 13.4g CuCl2 + 2.0g Pd/C + 104 psi H2 | 645 | 218 | 14.6 | -6.9 | 2.1 |
| 042312JHWF3 | 594 | 20.0g Cu(OH)2 + 26.8g CuCl2 + 1 atm Ar (2x) | 462 | 218.1 | 14.3 | -2.6 | 5.5 |
| 042312JHWF8 | 598 | 13.9gNi(OH)2 + 22.1g InCl3 + 1 atm Ar | 602 | 217.1 | 11.5 | -4.7 | 2.4 |
| 042612JHWF1 | 611 | 1/2 of 042312JHWF3 (20.0g Cu(OH)2 + 26.8g CuCl2) + 0.9g H2O | 510 | 217.3 | 10.6 | -0.3 | 35.3 |
| 042612JHWF2 | 612 | 1/2 of 042312JHWF3 (20.0g Cu(OH)2 + 26.8g CuCl2) + 1.8g H2O | 551 | 217.4 | 8.4 | -0.7 | 12.0 |
| 050412JHWF4 | 638 | 7.5g CoO + 1.8g Pd/C+ 104 psi H2 (6 psi, 1.1 L) | 628.5 | 218 | 6.3 | -0.9 | 7.0 |
| 051412JHWF3 | 649 | 13.5g SnO + 9.8g Cu(OH)2 + 104 psi H2 (6 psi, 1.1 L) | 630 | 218.1 | 14.6 | -3.4 | 4.3 |
| 051512JHWF4 | 654 | 16.0g Fe2O3 + 9.8g Cu(OH)2 + 104 psi H2 (6 psi, 1.1 L) | 550 | 217 | 8.7 | -3.4 | 2.6 |
| 051812JHWF4 | 659 | 20gCu(OH)2 + 46.5g CuBr2 + 1 atm Ar (x2) | 651 | 217.2 | 39 | -2.7 | 14.4 |
| 052112JHWF1 | 660 | 13.5g SnO + 9.8g Cu(OH)2 + 1 atm Ar | 661 | 219 | 12.7 | 0.7 | inf |

(continued)

| Sample ID | Cell No. | Chemicals | Tmax, C | $E_{in}$, kJ | DE, kJ | $E_{Theoretical}$, kJ | Energy Gain, DE/(-$E_{theoretical}$) |
|---|---|---|---|---|---|---|---|
| 052912JHWF1 | 670 | 31.5g BiCl3 + 9.8g Cu(OH)2 + 1atm Ar | 603 | 219 | 22.8 | -1.5 | 15.2 |
| 053012JHWF1 | 674 | 9.8gCu(OH)2 + 23.2g CuBr2 + 2g Activated Carbon (AC) + 1 atm Ar | 624 | 217 | 19.9 | -1.3 | 15.3 |
| 060112JHWF1 | 678 | 26.0g Bi(OH)3 + 20.2g CuCl2 + 1atm Ar | 531 | 219 | 9.9 | -1.3 | 7.6 |
| 060112JHWF4 | 680 | 26.0g Bi(OH)3 + 19.5g CoCl2 + 1atm Ar | 591 | 218 | 15.1 | -0.9 | 16.8 |
| 060112JHWF5 | 681 | 26.0g Bi(OH)3 + 19.5g NiCl2 + 1atm Ar | 582 | 218.1 | 5.9 | -0.5 | 11.8 |
| 060412JHWF1 | 682 | 17.3g Bi(OH)3 + 21.9g NiBr2 + 1atm Ar | 653 | 217 | 25.4 | -2.9 | 8.8 |
| 060412JHWF2 | 683 | 17.3g Bi(OH)3 + 21.9g CoBr2 + 1atm Ar | 683 | 219 | 10.5 | -2.1 | 5.0 |
| 060412JHWF4 | 684 | 17.3g Bi(OH)3 + 9.9g CuCl + 1atm Ar | 638 | 218 | 8.9 | -2.3 | 3.9 |
| 060412JHWF5 | 685 | 17.3g Bi(OH)3 + 14.3g CuBr + 1atm Ar | 641 | 217.1 | 7.7 | 2.3 | -3.3 |
| 060512JHWF1 | 686 | 14.6g Cd(OH)2 + 23.3g CuBr2 + 1atm Ar | 547 | 217 | 14.6 | -6.4 | 2.3 |
| 060512JHWF2 | 687 | 14.6g Cd(OH)2 + 13.0g CoCl2 + 1atm Ar | 583 | 217 | 9.1 | -5.8 | 1.6 |
| 060512JHWF4 | 688 | 14.6g Cd(OH)2 + 13.0g NiCl2 + 1atm Ar | 575 | 217.1 | 10.8 | -5.5 | 2.0 |
| 060512JHWF5 | 689 | 14.6g Cd(OH)2 + 21.9g CoBr2 + 1atm Ar | 591 | 218 | 16.3 | -7.4 | 2.2 |
| 060612JHWF1 | 690 | 21.0g BiCl3 + 9.3g Co(OH)2 + 1atm Ar | 553 | 219.3 | 9.9 | -1.6 | 6.2 |
| 060612JHWF2 | 691 | 21.0g BiCl3 + 9.3g Ni(OH)2 + 1 atm Ar | 586 | 217.4 | 8.2 | -1.9 | 4.3 |
| 060612JHWF4 | 692 | 21.0g BiCl3 + 5.8g Mg(OH)2 + 1 atm Ar | 601 | 217 | 5.4 | 1.9 | inf |
| 060612JHWF5 | 693 | 29.9g BiBr3 + 9.8g Cu(OH)2 + 1atm Ar | 611 | 218.2 | 23.5 | -1.3 | 18.1 |
| 060712JHWF1 | 694 | 29.9g BiBr3 + 9.3g Co(OH)2 + 1atm Ar | 544 | 217.4 | 14.9 | -0.2 | 74.5 |
| 060712JHWF2 | 695 | 29.9g BiBr3 + 9.3g Ni(OH)2 + 1 atm Ar | 592 | 217.4 | 10.1 | -0.9 | 11.2 |
| 061112JHWF1 | 702 | 26.0g Bi(OH)3 + 19.5g CoCl2 + 2.0g AC + 1atm Ar | 613 | 217.3 | 19.9 | -0.9 | 22.1 |
| 061112JHWF2 | 703 | 9.3g Co(OH)2 + 23.3g CuBr2 + 2.0g AC + 1 atm Ar | 589 | 217.3 | 12.4 | -0.2 | 62.0 |

(continued)

| Sample ID | Cell No. | Chemicals | Tmax, C | $E_{in}$, kJ | DE, kJ | $E_{Theoretical}$, kJ | Energy Gain, DE/(-$E_{theoretical}$) |
|---|---|---|---|---|---|---|---|
| 061112JHWF3 | 704 | 13.5g SnO + 9.8g Cu(OH)2 + 2.0g AC + 1 atm Ar | 662 | 218.3 | 14.2 | 0.7 | inf |
| 061112JHWF4 | 705 | 10.4g BiBr3 + 9.3g Co(OH)2 + 2.0g AC + 1atm Ar | 571 | 218.1 | 6.4 | -0.1 | 64.0 |
| 062512JHWF1 | 706 | 29.9g BiBr3 + 9.8g Cu(OH)2 + 2.0g Activated Carbon + 1atm Ar | 592 | 217.1 | 14.3 | -1.3 | 11.0 |
| 062512JHWF5 | 709 | 31.5g BiCl3 + 9.8g Cu(OH)2 + 2.0g Activated Carbon + 1atm Ar | 631 | 217.1 | 15.5 | -1.5 | 10.3 |
| 092612JHWF1 | 755 | 9.3g Co(OH)2 + 23.3g CuBr2 + 100 psi H2 | 350 | 109.6 | -9.3 | -1.9 | 4.9 |
| 112112JHWF3 | 839 | 21.0g BiCl3 + 9.3g Co(OH)2 + 1atm Ar | 609.5 | 218 | -10.9 | -1.6 | 6.8 |
| 112612JHWF2 | 841 | 26.0g Bi(OH)3 + 19.5g CoCl2 + 2.0g AC + 1atm Ar | 373 | 107.6 | -11.8 | -3.4 | 3.5 |
| 112612JHWF3 | 842 | 9.3g Co(OH)2 + 23.3g CuBr2 + 2.0g AC + 1 atm Ar | 357 | 109 | -9.1 | -0.2 | 45.5 |
| 112712JHWF2 | 844 | 9.3g Co(OH)2 + 23.3g CuBr2 + 1 atm Ar | 382 | 109.5 | -12.6 | -0.2 | 63.0 |
| 112812JHWF3 | 848 | 18.6g Co(OH)2 + 46.6g CuBr2 + 1 atm Ar | 324 | 109 | -15.5 | -0.4 | 38.8 |
| 121212JHWF3 | 878 | 7.4g Ca(OH)2 + 23.3g CuBr2 + 2.5g Pt/Al2O3 + 1mL H2O + 1 atm Ar. | 494 | 181 | -9.6 | -1.9 | 5.1 |
| 122712JHWF2 | 879 | 7.4g Ca(OH)2 + 23.3g CuBr2 + 1 atm Ar | 593 | 242.1 | -12.8 | -1.9 | 6.7 |
| 010913JHWF3 | 880 | 11.1g Ca(OH)2 + 35.0g CuBr2 + 1 mL H2O + 1 atm Ar | 717 | 423.8 | -22.8 | -2.96 | 7.7 |
| 011013JHWF3 | 881 | 11.1g Ca(OH)2 + 35.0g CuBr2 + 1 atm Ar | 294 | 151.3 | -6.5 | -2.96 | 2.2 |
| 011713JHWF3 | 882 | 11.1g Ca(OH)2 + 35.0g CuBr2 + 1 mL H2O + 1 atm Ar | 314 | 151.3 | -15.5 | -2.96 | 5.2 |
| 011813JHWF3 | 883 | 26.0g Bi(OH)3 + 19.5g CoCl2 + 1atm Ar | 364 | 182.5 | -8.2 | -0.86 | 9.5 |

C. Differential Scanning Calorimetry (DSC)

Solid fuels were tested for excess energy over the maximum theoretical using a differential scanning calorimeter with representative results shown in TABLE 6.

TABLE 6. Exemplary DSC Test Results.

| Date | Chemical | Heating (J/g) | Cooling (J/g) | Exp. Total (J/g) | Theo Energy (J/g) | Energy Gain |
|---|---|---|---|---|---|---|
| 9/26/2012 | 21.1mg (Co(OH)2 + CuBr2; 1:1) | -266.6 | 0 | -266.6 | -4.90 | 54.41 |
| 9/26/2012 | 21.3mg (Co(OH)2 + CuBr2; 1:1) | -336.9 | 0 | -336.9 | -4.90 | 68.76 |
| 9/27/2012 | 21.9mg (Co(OH)2 + CuBr2; 1:1) | -307.7 | 0 | -307.7 | -4.90 | 62.80 |
| 9/27/2012 | 25.4mg (Co(OH)2 + CuBr2; 1:1) | -326.8 | 0 | -326.8 | -4.90 | 66.69 |

D. Spectroscopic Identification of Molecular Hydrino

Classical physical laws predict that atomic hydrogen may undergo a catalytic reaction with certain species, including itself and nascent $H_2O$, that can accept energy in integer multiples of the potential energy of atomic hydrogen, $m \cdot 27.2$ eV, wherein $m$ is an integer. The predicted reaction involves a resonant, nonradiative energy transfer from otherwise stable atomic hydrogen to the catalyst capable of accepting the energy. The product is H(1/$p$), fractional Rydberg states of atomic hydrogen called "hydrino atoms," wherein $n$ = 1/2, 1/3, 1/4,..., 1/$p$ ($p \leq 137$ is an integer) replaces the well-known parameter $n$ = integer in the Rydberg equation for hydrogen excited states. Each hydrino state also comprises an electron, a proton, and a photon, but the field contribution from the photon increases the binding rather than decreasing it corresponding to energy desorption rather than absorption. Regarding excited and hydrino states, the relationship between the electric field equation and the "trapped photon" source charge-density function is given by Maxwell's equation in two dimensions:

$$\mathbf{n} \bullet (\mathbf{E}_1 - \mathbf{E}_2) = \frac{\sigma}{\varepsilon_0} \quad (257)$$

The photon standing electromagnetic wave is phase matched to with the electron:

$$\mathbf{E}_{r\,photon\ n,\ell,m} = \frac{e(na_H)^\ell}{4\pi\varepsilon_0} \frac{1}{r^{(\ell+2)}} \begin{bmatrix} -Y_0^0(\theta,\phi) \\ +\frac{1}{n}\left[ Y_0^0(\theta,\phi) + \mathrm{Re}\left\{ Y_\ell^m(\theta,\phi) e^{im\omega_n t} \right\} \right] \end{bmatrix} \delta(r - r_n) \quad (258)$$

wherein the quantum numbers are

$$n = 1,2,3,4,\ldots \ \ or \ \ n = 1, 1/2, 1/3, 1/4, \ldots 1/p\,;\ \ell = 0,1,2,\ldots,n-1 \ or \ p-1$$
$$m = -\ell, -\ell+1, \ldots, 0, \ldots, +\ell \quad (259)$$

The total radial electric field at the electron is the sum of the contributions of the proton and photon:

$$\mathbf{E}_{rtotal} = \frac{e}{4\pi\varepsilon_0 r^2} + \frac{e(na_H)^\ell}{4\pi\varepsilon_0} \frac{1}{r^{(\ell+2)}} \begin{bmatrix} -Y_0^0(\theta,\phi) \\ +\frac{1}{n}\left[ Y_0^0(\theta,\phi) + \mathrm{Re}\left\{ Y_\ell^m(\theta,\phi) e^{im\omega_n t} \right\} \right] \end{bmatrix} \delta(r - r_n) \quad (260)$$

For $r=na_H$ and $m=0$, the total radial electric field is

$$\mathbf{E}_{rtotal} = \frac{1}{n}\frac{e}{4\pi\varepsilon_0 (na_H)^2} \quad (261)$$

Since atomic and molecular hydrinos, like the corresponding excited states have $\ell$ quantum states, unique spectral characteristics such as orbital-nuclear splitting, excited-state-type ro-vibrational selection rules, and magnetic interactions are anticipated that depart from the characteristics of unexcited, ordinary atomic and molecular hydrogen.

Continuum radiation in the 10 to 30 nm region that matched predicted transitions of H to hydrino states, were observed only arising from pulsed pinched hydrogen discharges with metal oxides that are thermodynamically favorable to undergo H reduction to form HOH catalyst; whereas, those that are unfavorable did not show any continuum even though the low-melting point metals tested are very favorable to forming metal ion plasmas with strong short-wavelength continua in more powerful plasma sources [R. L. Mills, R. Booker, Y. Lu, "Soft X-ray continuum radiation from low-energy pinch discharges of hydrogen," submitted; R. L. Mills, Y. Lu, "Time-resolved hydrino continuum transitions with cutoffs at 22.8 nm and 10.1 nm," Eur. Phys. J. D, Vol. 64, (2011), pp. 63, DOI: 10.1140/epjd/e2011-20246-5; R. L. Mills, Y. Lu, "Hydrino continuum transitions with cutoffs at 22.8 nm and 10.1 nm," Int. J. Hydrogen Energy, Vol. 35, (2010), pp. 8446-8456, doi: 10.1016/j.ijhydene.2010.05.098]. Similarly, in hydrogen-helium microwave plasma, H undergoing catalysis with H (m=1) as the catalyst gives rise to a concerted energy exchange of the total energy of 40.8 eV with the excitation of the He ($1s^2$) to He ($1s^1 2p^1$) transition (58.5 nm, 21.21 eV) yielding broad continuum emission with $\lambda \leq 63.3$ *nm* ($\geq$ 19.59 eV). In independent replication experiments, broad 63.3 nm emission of this nature and the continuum radiation have been observed in helium-hydrogen microwave plasmas and in hydrogen pinch plasmas, respectively [A. F. H. van Gessel, Masters Thesis: EUV spectroscopy of hydrogen plasmas, April (2009), Eindhoven University of Technology, Department of Applied Physics, Group of Elementary Processes in Gas Discharges, EPG 09-02, pp. 61-70].

Extraordinary fast H formed by the mechanism involving recombination of fast ionized H that served as a hydrino catalyst and resonant kinetic energy transfer during the energy decay step of the $H^*\left[\frac{a_H}{m+1}\right]$ intermediate was also confirmed [K. Akhtar, J. Scharer, R. L. Mills, "Substantial Doppler broadening of atomic-hydrogen lines in DC and capacitively coupled RF plasmas," J. Phys. D, Applied Physics, Vol. 42, (2009), 42 135207 (2009) doi:10.1088/0022-3727/42/13/135207]. The discovery of high-energy continuum radiation from hydrogen as it forms a more stable form has astrophysical implications such as hydrino being a candidate for the identity of dark matter and the corresponding emission being the source of high-energy celestial and stellar continuum radiation [R. L. Mills, Y. Lu, "Hydrino continuum transitions with cutoffs at 22.8 nm and 10.1 nm," Int. J. Hydrogen Energy, 35 (2010), pp. 8446-8456, doi: 10.1016/j.ijhydene.2010.05.098]. By recent astrophysical measurements and mapping, dark matter comprises 98% of the mass of the universe and is ubiquitous. Furthermore, dark matter is shown to be intragalactic by the reformation of massive gravitation bodies from galaxy collision debris wherein the mechanics of those bodies requires massive amounts on non-visible gravitational matter [F. Bournaud, P. A. Duc, E. Brinks, M. Boquien, P. Amram, U. Lisenfeld, B. Koribalski, F. Walter, V. Charmandaris, "Missing mass in collisional debris from galaxies," Science, Vol. 316, (2007), pp. 1166-1169; B. G. Elmegreen, "Dark matter in galactic collisional debris," Science, Vol. 316, (2007), pp. 32-33], and it is has been shown to be collisional [M. J. Jee, A. Mahdavi, H. Hoekstra, A. Babul, J. J. Dalcanton, P. Carroll, P. Capak, "A study of the dark core in A520 with the Hubble Space Telescope: The mystery deepens," Astrophysical J., Vol. 747, No. 96, (2012), pp. 96-103]. Thus, dark matter would be anticipated to be ubiquitous on Earth as confirmed by the analysis of compounds found to serve as getters for the collection and analytical identification of hydrinos presented herein.

Other observations that confirm the energetics of the hydrino reaction are the formation of hydrogen plasma by heating, its anomalous afterglow duration [H. Conrads, R. L. Mills, Th. Wrubel, "Emission in the Deep Vacuum Ultraviolet from a Plasma Formed by Incandescently Heating Hydrogen Gas with Trace Amounts of Potassium Carbonate," Plasma Sources Science and Technology, Vol. 12, (2003), pp. 389-395], and the inversion of H lines [R. L. Mills, P. C. Ray, R. M. Mayo, M. Nansteel, B. Dhandapani, J. Phillips, "Spectroscopic Study of Unique Line Broadening and Inversion in Low Pressure Microwave Generated Water Plasmas," J. Plasma Physics, Vol. 71, Part 6, (2005), 877-888; R. L. Mills, P. Ray, R. M. Mayo, "CW HI Laser Based on a Stationary Inverted Lyman Population Formed from Incandescently Heated Hydrogen Gas with Certain Group I Catalysts," IEEE Transactions on Plasma Science, Vol. 31, No. 2, (2003), pp. 236-247].

A system of the present invention is directed to a hydrino fuel cell called a CIHT (Catalyst-Induced-Hydrino-Transition) cell that generates an electromotive force (EMF) from the catalytic reaction of hydrogen to lower energy (hydrino) states providing direct conversion of the energy released from the hydrino reaction into electricity. Each CIHT cell comprises a cathode compartment comprising a cathode, an anode compartment comprising an anode, and an

electrolyte that also serves as a source of reactants to form hydrinos. Due to oxidation-reduction half cell reactions, a hydrino-producing reaction mixture is constituted with the migration of electrons through an external circuit and ion mass transport through a separate internal path through the electrolyte to complete an electrical circuit. In one type of electrolytically regenerative CIHT cell, atomic hydrogen and oxygen are intermittently formed by electrolysis of $H_2O$ in the cell, and the hydrogen catalyst and subsequently hydrinos are formed by a reaction of the reaction mixture during cell discharge with a net gain of electrical output. An exemplary CIHT comprised a nickel mat or Mo anode, nickel oxide cathode, and the molten eutectic salt electrolyte LiOH-LiBr with MgO matrix. The cell ran off of water supplied as vapor to the cell or extracted from air. The cell was operated under intermittent electrolysis and discharge. Hydrogen and oxygen were generated during the electrolysis phase at the negative and positive electrodes, respectively, and served as the sources of H and $H_2O$ catalyst. CIHT cells were validated by six independent expert scientists or teams to produce as high as 1000 times more electricity out than that required to electrolyze $H_2O$ as the source of hydrogen to form hydrinos. These cells and other scale-up cells served as electrode and electrolyte samples for analytical analysis for the production of the theoretically predicted molecular hydrino product $H_2(1/4)$.

CIHT cells having a molten LiOH-LiBr-MgO electrolyte and a single electrode set or a stack of CIHT cells having bipolar plate electrodes served as a source of molecular hydrino for analytical tests such as magic angle spinning $^1H$ nuclear magnetic resonance spectroscopy (MAS $^1H$ NMR), electron-beam excitation emission spectroscopy, Raman spectroscopy, Fourier transform infrared (FTIR) spectroscopy, and X-ray photoelectron spectroscopy (XPS). The single-cell cathode and anode comprised NiO and Ni celmet or Mo, respectively. The bipolar electrodes each comprised a NiO cathode attached to a separator plate of a different metal than that of the anode. Exemplary separator plate-anode metal pairs were 214 alloy-Ni, Ni-Mo, Hastelloy alloys-Mo, and Mo-Ni celmet. The cells were sealed in a vacuum chamber and were closed except for the flow of $H_2O$ vapor entrained in argon gas or from a $H_2O$ vapor generator. The electrical performance of cells comprising a stack of n-cells was similar to that of the corresponding single cell except that the cell voltage was n-times that of the single cell. The molecular hydrino samples comprised electrolyte, chemical products, and inorganic compound getters such as KCl, KOH, and KCl-KOH mixture placed in the sealed container of closed CIHT cells wherein hydrinos generated during operation were trapped in the matrix of the compound that thereby served as a molecular hydrino getter. Starting materials not exposed to a hydrino source served as controls.

MAS $^1H$ NMR, ToF-SIMS, ESI-ToFMS, electron-beam excitation emission spectroscopy, Raman spectroscopy, photoluminescence emission spectroscopy, FTIR, and XPS analysis were performed on samples of reaction products comprising CIHT electrolyte, CIHT electrodes, solid fuels products, and inorganic compound getters such as KCl, KOH, and KCl-KOH mixture placed in the sealed container of closed CIHT cells or thermal reactors. The characteristics of molecular hydrino match those of dark matter, and dark matter ($H_2(1/p)$) is anticipated to present in certain materials capable of entrapping it. Consistent with expectations, KCl getter contained same naturally abundant $H_2(1/4)$ that was greatly increased with exposure to a source of $H_2(1/4)$.

MAS NMR of molecular hydrino trapped in protic matrix represents a means to exploit the unique characteristics of molecular hydrino for its identification via its interaction with the matrix. A unique consideration regarding the NMR spectrum is the possible molecular hydrino quantum states. Similar to $H_2$ exited states, molecular hydrinos $H_2(1/p)$ have states with $\ell = 0,1,2,...,p-1$. Even the $\ell = 0$ quantum state has a relatively large quadrupole moment, and additionally, the corresponding orbital angular momentum of $\ell \neq 0$ states gives rise to a magnetic moment [Mills GUTCP] that could cause an upfield matrix shift. This effect is especially favored when the matrix comprises an exchangeable H such as a matrix having waters of hydration or an alkaline hydroxide solid matrix wherein a local interaction with $H_2(1/p)$ influences a larger population due to rapid exchange. CIHT cell getters such as those comprising KOH-KCl and KCl + K wherein K reacted with $H_2O$ during the hydrino reaction to form KOH showed a shift of the MAS NMR active component of the matrix (KOH) from +4.4 ppm to about -4 to -5 ppm after exposure to the atmosphere inside of the sealed CIHT cell. KCl + K and other getters in solid fuels reactors also showed the upfield shifted NMR effect. For example, the MAS NMR spectrum of the initial KOH-KCl (1:1) getter, the same KOH-KCl (1:1) getter from the scale-up 5 W stack of 10 CIHT cells comprising [Mo/LiOH-LiBr-MgO/NiO] that output 1029 Wh at 137% gain, and the K + KCl getter from the solid fuel reaction of FeOOH showed that the known downfield peak of OH matrix shifted from about +4 ppm to the upfield region of about -4 ppm. Molecular hydrino produced by the CIHT cell and solid fuels shifted the matrix from positive to significantly upfield. The different $\ell$ quantum numbers possible for the p = 4 state can give rise to different upfield matrix shifts consistent with observations of multiple such peaks in the region of -4 ppm. The MAS NMR peak of KOH matrix upfield shifted by forming a complex with molecular hydrino can be sharp when the upfield shifted hydroxide ion ($OH^-$) acts as a free rotor, consistent with prior observations. The direct observation of the extraordinary NMR shift of $H_2(1/4)$ may be possible by e-beam or laser heating of the solid getter matrix to convert it from the para to NMR active ortho form to be recorded before essentially 100% re-conversion. MASNMR is necessary to overcome the lack of molecular rotation at ambient temperature [Mills GUTCP]; otherwise, field inhomogeneities could not be averaged out, and the peak would be unobservably broadened [Mills GUTCP].

Additional evidence supports the hydrino-based shift mechanism. The ro-vibrational spectrum of $H_2(1/4)$ was observed by electron-beam excitation emission spectroscopy of samples having the upfield shifted MAS NMR spectral

peaks. Furthermore, positive ion ToF-SIMS spectra showed multimer clusters of matrix compounds with di-hydrogen as part of the structure, M:$H_2$ (M = KOH or $K_2CO_3$). Specifically, the positive ion spectra of prior hydrino reaction products comprising KOH and $K_2CO_3$ [R. L. Mills, E. Dayalan, P. Ray, B. Dhandapani, J. He, "Highly stable novel inorganic hydrides from aqueous electrolysis and plasma electrolysis," Electrochimica Acta, Vol. 47, No. 24, (2002), pp. 3909-3926; R. L. Mills, B. Dhandapani, M. Nansteel, J. He, T. Shannon, A. Echezuria, "Synthesis and characterization of novel hydride compounds," Int. J. of Hydrogen Energy, Vol. 26, No. 4, (2001), pp. 339-367] or having these compounds as getters in CIHT cells showed $K^+(H_2{:}KOH)_n$ and $K^+(H_2{:}K_2CO_3)_n$ consistent with $H_2(1/p)$ as a complex in the structure. A typical result is that of the positive ToF-SIMS spectrum of $K_2CO_3$-KCl (30:70 wt%) getter from the scale-up 5 W stack of 10 CIHT cells comprising [Mo/LiOH-LiBr-MgO/NiO] that output 1029 Wh at 137% gain having the upfield shifted MAS NMR spectral peaks. In the assignment of peaks having nominal mass m/e = M + 2, both the high resolution mass and the isotopic abundance of $^{39}K$ and $^{41}K$ as well as $^{35}Cl$ and $^{37}Cl$ were considered. Similar M:$H_2$ clusters were observed by ESI-ToFMS. The energy of the interaction of $H_2(1/p)$ and the matrix compound must be greater than that of thermal energies of about 0.025 eV at room temperature since the ToF-SIMS and ESI-ToFMS clusters were stable, and the entire matrix was shifted in some cases in the MAS NMR. A high activation barrier to rotation is expected from this strong interaction with the matrix. Samples having upfield MAS NMR shifts also showed Raman matrix shifts of about 0.05-0.075 eV (400-600 $cm^{-1}$) for a linear series of Stokes peaks wherein the slope between peaks matched $H_2(1/4)$ rotational transitions of 0.241 eV energy difference to a high correlation of about 0.999 or better.

The direct identification of molecular hydrino by its characteristic extraordinarily high ro-vibrational energies was sought using electron-beam excitation emission spectroscopy and Raman spectroscopy. Another distinguishing characteristic is that the selection rules for molecular hydrino are different from those of ordinary molecular hydrogen. $H_2$ excited state lifetimes are very short, and ro-vibrational transitions having $\Delta J = 0, \pm 1$ occur during rapid electronic transitions in $H_2$. But, it is not possible for $H_2$ to undergo a pure ro-vibrational transition having the selection rule $\Delta J = \pm 1$ since $\ell = 0$ and $\Delta \ell = \pm 1$ is required in order to conserve angular momentum during the transition. In contrast, such transitions are allowed for molecular hydrinos. The quantum numbers of the atomic electron are $p$ , $\ell$, $m_\ell$ and $m_s$ [Mills GUTCP]. In the case of a hydrino state, the principal quantum number of excited states is replaced by $n = \frac{1}{p}$. Similarly to $H_2$ excited states, molecular hydrinos have states with $\ell = 0,1,2,...,p - 1$ wherein the prolate spheroidal photon fields of $H_2(1/p)$; $p = 1, 2, 3,...,137$ have spherical harmonic angular components of quantum number $\ell$ relative to the semimajor axis [Mills GUTCP]. Transitions between these prolate spheroidal harmonic states are permissive of rotational transitions of $\Delta J = \pm 1$ during a pure vibrational transition without an electronic transition as observed for $H_2$ excited states. The lifetimes of the angular states are sufficiently long such that $H_2(1/p)$ may uniquely undergo a pure ro-vibrational transition having the selection rule $\Delta J = \pm 1$.

The emitting ro-vibrational molecular hydrino state may be excited by a high-energy electron collision or the high electric field of a laser wherein due to the rotational energy of $p^2(J+1)0.01509\ eV$ [Mills GUTCP] excited rotational states cannot be populated as a statistical thermodynamic population at ambient temperatures since the corresponding thermal energy is less than 0.02 eV. Thus, the ro-vibrational state population distribution reflects the excitation probability of the external source. Moreover, due to the thirty-five times higher vibrational energy of $p^2\ 0.515\ eV$ over the rotational energy, only the first level, $\upsilon = 1$, is expected to be excited by the external source. Permitted by the change in $\ell$ quantum number, the de-excitation vibrational transition $\upsilon = 1 \rightarrow \upsilon = 0$ with a rotational energy up conversion ($J' - J'' = -1$), a down conversion ($J' - J'' = +1$), and no change ($J' - J'' = 0$) gives rise to the P, R, and Q branches, respectively. The Q-branch peak corresponding to the pure vibrational transition $\upsilon = 1 \rightarrow \upsilon = 0$; $\Delta J = 0$ is predicted to be the most intense with a rapid decrease in intensity for the P and R series of transition peaks of higher order wherein due to the available energy of internal conversion, more peaks of higher intensity are expected for the P branch relative to the R branch. An influence of the matrix is expected to cause a vibrational energy shift from that of a free vibrator, and a matrix rotational energy barrier is anticipated to give rise to about the same energy shift to each of the P and R branch peaks manifest as a nonzero intercept of the linear energy separation of the series of rotational peaks.

Ro-vibrational emission of $H_2(1/4)$ trapped in the crystalline lattice of getters was excited by an incident 6 KeV electron gun with a beam current of 10-20 $\mu A$ in the pressure range of $5 X 10^{-6}$ Torr, and recorded by windowless UV spectroscopy. An example of the resolved ro-vibrational spectrum of $H_2(1/4)$ (so called 260 nm band) in the UV transparent matrix KCl that served as a getter in a 5 W CIHT cell stack shows the peak maximum at 258 nm with representative positions of the peaks at 222.7, 233.9, 245.4, 258.0, 272.2, and 287.6 nm, having an equal spacing of 0.2491 eV. The vibrational energy of diatomic molecules such as $H_2(1/p)$ is given by $\sqrt{\frac{k}{\mu}}$ wherein k is the force constant and $\mu$ is the

reduced mass that is $\frac{1}{2}$ for $H_2(1/p)$. In the case that the molecule is in a crystalline lattice of infinite mass relative to H, the reduced mass for the vibration of a given H with the other treated as an infinite mass corresponds to a reduced mass of one giving a shift of the vibrational energy by a factor of $\frac{1}{\sqrt{2}}$. The local thermal equilibrium between the phonons of the matrix lattice and the ro-vibrationally excited molecule is anticipated to result in a cutoff to the energy of the corresponding series of lines at the matrix-shifted vibrational energy with the rotational energy expected to be that of the corresponding free rotor which is the case with $H_2$ in silicon matrix. Given that the vibrational and rotational energies of $H_2(1/p)$ are $p^2$ that of $H_2$, $p^2 0.515\ eV$ and $p^2 0.01509\ eV$ [Mills GUTCP], respectively, the ro-vibrational and rotational energies of $H_2(1/4)$ in a crystalline lattice are predicted to have a cutoff of 5.8 eV and an energy spacing of 0.24 eV, respectively. In general, the plot of the energy versus peak number yields a line given by y = -0.249 eV + 5.8 eV at $R^2$ = 0.999 or better in very good agreement with the predicted values for $H_2(1/4)$ for the transitions $\upsilon = 1 \rightarrow \upsilon = 0$ and Q(0), R(0), R(1), R(2), P(1), P(2), P(3), and P(4) wherein Q(0) is identifiable as the most intense peak of the series. Furthermore, the broadening of ro-vibrational transitions of $H_2(1/4)$ relative to ordinary $H_2$ in a crystalline lattice is expected since the energies involved are extraordinary, being sixteen times higher, and significantly couple to phonon bands of the lattice resulting in resonance broadening.

Another example is the intense 260 nm band comprising the peaks Q(0), R(0), R(1), R(2), P(1), P(2), P(3), and P(4) observed from the KCl getter from a sealed reactor of the gun powder reaction, $KNO_3$ with softwood charcoal having the formulation $C_7H_4O$. The 260 nm, e-beam band has no structure other than the broad peaks at 1.4 Å resolution when observed using a Jobin Yvon Horiba 1250 M spectrometer. Additionally, structure was found to be absent at an enhanced 0.25 Å resolution as well as at 1.65 $cm^{-1}$ resolution in the photoluminescence spectra eliminating the possibility of the series comprising unresolved ro-vibrational bands of a common molecule. Different getter matrices such as KCl versus KOH caused a discernible difference in the shift of the position of the center of the series about the Q(0) peak further eliminating the possibility of assignment of the 260 nm band to a series of common gaseous molecular ro-vibrational bands. Rather, the results support broad rotational emission of $H_2(1/4)$ within the $\upsilon = 1 \rightarrow \upsilon = 0$ transition as the source. Specifically, the slope matches the predicted rotational energy spacing of 0.249 eV (p = 4). The high energetics of the hydrino reaction (200 times conventional chemistry) is possibly a small contributor to the performance of energetic materials such as gun powder based on the observation of $H_2(1/4)$ product since the gun powder reaction is accepted to be well characterized.

The e-beam excitation emission spectrum from KOH getter sealed in the vacuum chamber containing a 65 mW, eight-layer CIHT stack, each cell comprising [Mo/LiBr-LiOH-MgO/NiO], showed a broad continuum emission feature that matched the outline of the profile of the 260 nm band assigned to $H_2(1/4)$ ro-vibration with a maximum intensity of 6000 counts at about 260 nm. The band that was not observed in the getter starting material was about ten times more intense than typically observed. Intense peaks corresponding to the 260 nm, e-beam band comprising P(1) - P(6) were resolved by Raman spectroscopy. Moreover, the energies and slight barrier to rotation for the corresponding pure rotational series were also confirmed by Raman spectroscopy.

Specifically, $H_2(1/4)$ was also sought using Raman spectroscopy wherein due to the large energy difference between ortho and para, the latter was expected to dominate the population. Given that para is even, the typical selection rule for pure rotational transitions is $\Delta J = \pm 2$ for even integers. However, orbital-rotational angular momentum coupling gives rise to a change in the $\ell$ quantum number with the conservation of the angular momentum of the photon that excites the rotational level wherein the resonant photon energy is shifted in frequency by the orbital-nuclear hyperfine energy relative to the transition in the absence of the $\ell$ quantum number change. Moreover, for $\ell \neq 0$, the nuclei are aligned along the internuclear axis as given in Chp 12 of Mills GUT. The rotational selection rule for Stokes spectra defined as initial state minus final state is $\Delta J = J' - J'' = -1$, the orbital angular momentum selection rule is $\Delta \ell = \pm 1$, and the transition becomes allowed by the conservation of angular momentum during the coupling of the rotational and the orbital angular momentum excitations [Mills GUT]. And, no intensity dependency on nuclear spin is expected. Using a Thermo Scientific DXR SmartRaman with a 532 nm laser in the macro mode, a new sharp Raman peak was observed for the K + KCl getter of the FeOOH + $H_2$ solid fuel at 1950 $cm^{-1}$ that matching the free space rotational energy of $H_2(1/4)$ (0.2414 eV) to four significant figures. This result shows that $H_2(1/4)$ is a free rotor which is the case with $H_2$ in silicon matrix.

Using a Thermo Scientific DXR SmartRaman with a 780 nm diode laser in the macro mode, a 40 cm-1 broad absorption peak was observed on MoCu hydrogen permeation anodes after the production of excess electricity. The peak was not observed in the virgin alloy, and the peak intensity increased with increasing excess energy. Moreover it was present pre and post sonication indicating that the only possible elements to consider as the source were Mo, Cu, H, and O as confirmed by SEM-EDS. Permutations of control compounds did not reproduce the peak. KOH-KCl gettered

the gas form these cell gave a very intense photoluminescence series of peaks that were assigned to $H_2(1/4)$ ro-vibration. Since no other element or compound is known that can absorb a 40 $cm^{-1}$ line at 1.33 eV (the energy of the 780 nm laser minus 2000 $cm^{-1}$) $H_2(1/4)$ was considered. The absorption peak starting at 1950 $cm^{-1}$ matched the free space rotational energy of $H_2(1/4)$ (0.2414 eV) to four significant figures. The absorption was assigned to an inverse Raman effect for the $H_2(1/4)$ rotational energy [Mills GUTCP] for the $J'=0$ to $J''=1$ transition. This result shows that $H_2(1/4)$ is a free rotor which is the case with $H_2$ in silicon matrix.

Since the $H_2(1/4)$ pure rotational transition was also predicted to be FTIR active, the spectrum of K + KCl getter of the FeOOH + $H_2$ solid fuel was recorded with a Nicolet 730 FTIR spectrometer with DTGS detector at resolution of 4 $cm^{-1}$. The peak corresponding to P(1) was absent in the starting material but was observed as a strong sharp peak at 1947 $cm^{-1}$ in the FTIR spectrum. Metaborate has a peak in this region, but the $^{10}B$ peak is absent. Moreover, the Raman spectrum of a metaborate-doped KBr crystal purchased from IC Labs showed no peak in the 1950 $cm^{-1}$ region.

In addition to molten electrolytic cells, the possibility exists to generate $H_2O$ catalyst in aqueous alkaline or carbonate electrolytic cells wherein H is produced on the cathode. Electrode crossover of H formed at the cathode by the reduction of $H_2O$ to $OH^-$ + H can give rise to the reaction of Eq. (54). Alternatively, there are several reactions involving carbonate that can give rise $H_2O$ catalyst such as those involving a reversible internal oxidation-reduction reaction such as

$$CO_3^{2-} + H_2O \rightarrow CO_2 + 2OH^- \quad (262)$$

as well as half-cell reactions such as

$$CO_3^{2-} + 2H \rightarrow H_2O + CO_2 + 2e^- \quad (263)$$

$$CO_2 + 1/2O_2 + 2e^- \rightarrow CO_3^{2-} \quad (264)$$

XPS was performed on the Ni cathode a 0.6 M $K_2CO_3$ electrolysis cell having Ni electrodes, and a peak was observed at 496.4 eV that could not be assigned to any known elements. Na being the only possibility was easy to eliminate based on the absence of any other corresponding peaks of this element. The collisional-like Compton ionization to ordinary H states such as $H_2^+$ is expected with the ionized electron conserving the incident Al X-ray energy as kinetic energy since $H_2(1/4)$ does not absorb or emit radiation and the ionized state to form $H_2^+$ (1/4) is an infinitely excited state. Given that the total energy of $H_2(1/4)$ is 522 eV, the binding of $H_2^+$ in the Ni lattice with energy comparable to the first ionization energy of $H_2$ would result in a peak at the observed energy [Mills GUTCP]. Depending on the matrix and final H species other shifts in this region are possible. Peaks have been observed on CIHT anodes as well as solid fuel products.

Using a Thermo Scientific DXR SmartRaman with a 780 nm diode laser in the macro mode, a 40 $cm^{-1}$ broad absorption peak was observed on MoCu hydrogen permeation anodes after the production of excess electricity. The peak was not observed in the virgin alloy, and the peak intensity increased with increasing excess energy and laser intensity. Moreover it was present pre and post sonication indicating that the only possible elements to consider as the source were Mo, Cu, H, and O as confirmed by SEM-EDX. Permutations of control compounds did not reproduce the peak. In separate experiments, KOH-KCl gettered gas from these cells gave a very intense photoluminescence series of peaks that were assigned to $H_2(1/4)$ ro-vibration. Since no other element or compound is known that can absorb a single 40 $cm^{-1}$ (0.005 eV) near infrared line at 1.33 eV (the energy of the 780 nm laser minus 2000 $cm^{-1}$) $H_2(1/4)$ was considered. The absorption peak starting at 1950 $cm^{-1}$ matched the free space rotational energy of $H_2(1/4)$ (0.2414 eV) to four significant figures, and the width of 40 $cm^{-1}$ matches the orbital-nuclear coupling energy splitting [Mills GUTCP].

The absorption peak matching the $H_2(1/4)$ rotational energy is a real peak and cannot be explained by any known species. The excitation of the hydrino rotation may cause the absorption peak by two mechanisms. In the first, the Stokes light is absorbed by the lattice due to a strong interaction of the rotating hydrino as a lattice inclusion. This is akin to resonance broadening observed with the 260 nm e-beam band. The second comprises a known inverse Raman effect. Here, the continuum caused by the laser is absorbed and shifted to the laser frequency wherein the continuum is strong enough to maintain the rotational excited state population to permit the antiStokes energy contribution. Typically, the laser power is very high for an IRE, but molecular hydrino may be a special case due to its non-zero $\ell$ quantum number and corresponding selections rules. So, the results are discussed from the context of the latter mechanism.

The absorption was assigned to an inverse Raman effect (IRE) for the $H_2(1/4)$ rotational energy for the $J' = 1$ to $J'' = 0$ transition. This result shows that $H_2(1/4)$ is a free rotor which is the case with $H_2$ in silicon matrix . Moreover, since $H_2(1/4)$ may form complexes with hydroxide as shown by MAS NMR and ToF-SIMs, and a matrix shift is observed with the electron-bean excitation emission spectrum and the photoluminescence spectrum due to the influence of the local environment at the $H_2(1/4)$ site in the lattice, the IRE is anticipated to shift as well in different matrices and also with pressure. Likewise, the Raman peaks of $H_2$ as a matrix inclusion shift with pressure. Several instances were observed by Raman spectral screening of metals and inorganic compounds. Ti and Nb showed a small absorption peak of about 20 counts starting at 1950 $cm^{-1}$. Al showed a much larger peak. Instances of inorganic compounds included LiOH and LiOH-LiBr that showed the peak at 2308 $cm^{-1}$ and 2608 $cm^{-1}$, respectively. An especially strong absorption peak was observed at 2447 $cm^{-1}$ from $Ca(OH)_2$ that forms $H_2O$. The latter may serve as a catalyst to form $H_2(1/4)$ upon dehydration of $Ca(OH)_2$ at 512 °C or by reaction with $CO_2$. These are solid fuel type reactions to form hydrinos as reported previously. LiOH and $Ca(OH)_2$ both showed a $H_2(1/4)$ IRE peak, and the LiOH is commercially formed from $Ca(OH)_2$ by reaction with $Li_2CO_3$. Thus, $Ca(OH)_2$ + $Li_2CO_3$ mixture was caused to react by ball milling, and a very intense $H_2(1/4)$ IRE peak was observed centered at 1997 $cm^{-1}$.

$H_2(1/4)$ as the product of solid fuel reactions was reported previously. The energy released by forming hydrinos according to Eqs. (44-47) was shown to give rise to high kinetic energy $H^-$. Using solid fuel Li + $LiNH_2$ + dissociator Ru-$Al_2O_3$ that can form H and HOH catalyst by decomposition of $Al(OH)_3$ and reaction of Li with $H_2O$ and $LiNH_2$, ions arriving before m/e = 1 were observed by ToF-SIMS that confirmed the energy release of Eq. (47) is manifest as high kinetic energy $H^-$. Other ions such as oxygen (m/e = 16) showed no early peak. The relation between time of flight T, mass m, and acceleration voltage V is

$$T = A\sqrt{\frac{m}{V}} \qquad (265)$$

where A is a constant that depends on ion flight distance. From the observed ToF-SIMS early peak at m/e = 0.968 with an acceleration voltage of 3 kV, the kinetic energy imparted to the H species from the hydrino reaction is about 204 eV that is a match to the HOH catalyst reaction given by Eqs. (44-47). The same early spectrum was observed in the positive mode corresponding to $H^+$, but the intensity was lower.

XPS was performed on the solid fuel. The XPS of LiHBr formed by the reaction of Li, LiBr, $LiNH_2$, dissociator R-Ni (comprising about 2wt% $Al(OH)_3$), and 1 atm $H_2$, shows a peak at 494.5 eV and 495.6 eV for XPS spectra on reaction products of two different runs that could not be assigned to any known elements. Na, Sn, and Zn being the only possibilities were easy to eliminate based on the absence of any other corresponding peaks of these elements since only Li, Br, C, and O peaks were observed. The peak matched the energy of the theoretically allowed double ionization of molecular hydrino $H_2(1/4)$. Molecular hydrino was further confirmed as a product by Raman and FTIR spectroscopy. The Raman spectrum of solid fuel product LiHBr showed a $H_2(1/4)$ inverse Raman effect absorption peak centered at 1988 $cm^{-1}$. The FTIR spectrum of solid fuel product LiHBr showed a new sharp peak at 1987 $cm^{-1}$ that is a close match to the free rotor energy of $H_2(1/4)$. Furthermore, the MAS NMR showed a strong up-field shift peak consistent with prior results.

An interrelated confirmatory observation of the identification of hydrino is that the molecular orbital-nuclear coupling energy of $H_2(1/4)$ that is manifest as splitting of the pure rotational Raman transitions is consistent with the spin-nuclear coupling energy predicted and observed for the corresponding atomic hydrino H(1/4). Similar to the case with the 21 cm (1.42 GHz) line of ordinary hydrogen, hydrino atoms were identified by its predicted 642 GHz spin-nuclear hyperfine transition observed by TeraHz absorption spectroscopy of cryogenically cooled $H_2$ below 35K. Using a long path length (60 m), multi-reflection absorption cell coupled to a Fourier transform interferometer, Wishnow [E.H. Wishnow, The Far-Infrared Absorption Spectrum of Low Temperature Hydrogen Gas, Ph.D. Thesis, University of British Columbia, Canada, (1993).] recorded the $H_2$ spectrum at a spectral resolution of 0.24 $cm^{-1}$ over the wavenumber, temperature, and pressure ranges of 20-320 $cm^{-1}$, 21-38 K, and 1-3 atmospheres, respectively. A sharp line at 21.4 $cm^{-1}$ was observed at 25.5 K, but is absent at 36 K. The wavenumber of the line is a match to the predicted 21.4 $cm^{-1}$ H(1/4) hyperfine line and could not be assigned to a known species. TeraHz spectroscopy may also serve to identify orbital-nuclear transitions of $H_2(1/4)$.

Another successful cross-confirmatory technique in the search for hydrino spectra involved the use of the by Raman spectrometer wherein the ro-vibration of $H_2(1/4)$ matching the 260 nm e-beam band was observed as second order fluorescence. The first sample comprised the KOH getter from the 65 mW, eight-layer CIHT stack, each cell comprising [Mo/LiBr-LiOH-MgO/NiO], that showed an intense (6000 count) e-beam excitation emission of the 260 nm band profile. Using the Horiba Jobin Yvon LabRAM Aramis Raman spectrometer with a HeCd 325 nm laser in microscope mode with a magnification of 40X, an intense series of 1000 $cm^{-1}$ equal-energy spaced Raman peaks were observed at 8340, 9438, 10,467, 11,478, 12,457, 13,433, and 14,402 $cm^{-1}$ with the maximum peak intensity at 12,457 $cm^{-1}$. The

conversion of the Raman spectrum into the fluorescence or photoluminescence spectrum which was then deconvolved revealed that the Raman spectrum is the superposition of a series of evenly-spaced peaks and a continuum band emission having its maximum intensity at green wavelengths. Green emission was observed from the sample when laser irradiated. Green emission was further observed from the KOH getter sample during e-beam excitation to produce the 260 nm band emission assigned to $H_2(1/4)$ ro-vibration indicating that the series of peaks are a separate spectral feature from the green fluorescence. The fluorescence spectrum in second order calculated from the Raman peak positions comprises the peaks at 446, 469, 493, 518, 546, 577, and 611 nm. The spacing of 1000 $cm^{-1}$ or 0.1234 eV matches the second order rotational spectrum of $H_2(1/4)$ very well; thus, the series of peaks matches the second order fluorescence of the 260 nm band first observed by e-beam excitation. In fact, considering the slight contraction at the extremes of the wavelength range due to the matrix shift, halving the wavelength of the calculated fluorescence spectrum and correcting to the transition between matrices results in the e-beam and Raman spectra superimposing, including the peaks intensities. Considering maximum peak intensity at 12,457 $cm^{-1}$ being Q(0), the assignments are Q(0), R(0), R(1), R(2), R(3), P(1), and P(2) at 12,457, 11,478, 10,467, 9438, 8340, 13,433, and 14,402 $cm^{-1}$, respectively. The excitation was deemed to be by the high-energy UV and EUV He and Cd emission of the laser wherein the laser optics are transparent to at least 170 nm and the grating (Labram Aramis 2400g/mm 460mm focal length system with 1024 X 26 $\mu m^2$ pixels CCD) is dispersive and has its maximum efficiency at the shorter wavelength side of the spectral range, the same range as the 260 nm band. For example, cadmium has a very intense line at 214.4 nm (5.8 eV) that matches the ro-vibrational excitation energy of $H_2(1/4)$ in KCl matrix based on the e-beam excitation data. The CCD is also most responsive at 500 nm, the region of the second order of the 260 nm band centered at 520 nm. On a repeat scan to higher wavenumbers, additional members of the P-branch of the ro-vibrational series were observed.

The 260 nm band was observed in second order as fluorescence emission of additional reaction products and getters that were shown to comprise $H_2(1/4)$ by other analytical methods. When $K_2CO_3$-KCl (1:1) was used as the getter for the cell [laminated-CNi6 1.5"X1.5" + CNi8 1.5"X1.5" + Mo 1"X1" CNi8 + 1.5"X1.5" + Ag 1"X1" + CNi8 1.5"X1.5"+ CNi6 1.5"X1.5")/LiOH-LiBr-MgO/NiO] (50 mA charge and discharge current; 2.65 Wh discharge energy, 200% gain) the 260 nm e-beam band was observed intensely. The Raman spectrum was recorded to 22,500 $cm^{-1}$, and the corresponding laser-excited second-order fluorescence band having a slight shift due to the different matrix was observed to extend to 17,000 $cm^{-1}$. The series comprised Q(0), R(0), R(1), R(2), R(3), P(1), P(2), P(3), P(4), and P(5) at 12,199, 11,207, 10,191, 9141, 8100, 13,183, 14,168, 15,121, 16,064, and 16,993 $cm^{-1}$, respectively. The photo luminescence band was also correlated with the upfield shifted NMR peaks. For example, the KOH-KCl (1:1) getter from the scale-up 5 W stack of 10 CIHT cells comprising [Mo/LiOH-LiBr-MgO/NiO] that output 1029 Wh at 137% gain having upfield shifted matrix peaks at -4.06 and -4.41 ppm showed the series of photoluminescence peaks corresponding to the 260 nm e-beam band. Q(0), R(0), R(1), R(2), R(3), R(4), P(1), P(2), P(3), P(4), P(5), and P(6) were observed at 12,199, 11,207, 10,191, 9141, 8100, 13,183, 14,168, 15,121, 16,064, 16,993, and 17,892 $cm^{-1}$, respectively. This sample also showed intense $M:H_2$ (M = KOH or $K_2CO_3$) ToF-SIMS clusters. The equivalent photoluminescence spectrum also observed from getters in solid fuels reactors such as that of KCl + K (to form KOH in situ) getter in the reactor with solid fuel FeOOH + $H_2$ + Ni screen hydrogen dissociator.

Overall, the Raman results such as the observation of the 0.241 eV (1940 $cm^{-1}$) Raman peak and the 0.2414 eV-spaced Raman photoluminescence band that matched the 260 nm e-beam spectrum is strong confirmation of molecular hydrino having an internuclear distance that is 1/4 that of $H_2$. The evidence in the latter case is further substantiated by being in a region having no known first order peaks or possible assignment of matrix peaks at four significant figure agreement with theoretical predictions.

## Claims

1. An electrochemical power system that generates at least one of a voltage and
electricity and thermal energy comprising a vessel, the vessel comprising at least one cathode;
at least one anode,
at least one bipolar plate, and
reactants that constitute hydrino reactants during cell operation with separate electron flow and ion mass transport, the reactants comprising at least two components chosen from:

   a) at least one source of $H_2O$;
   b) a source of oxygen
   c) at least one source of catalyst or a catalyst comprising at least one of the group chosen from nH, O, $O_2$, OH, $OH^-$, and nascent $H_2O$, wherein n is an integer; and
   d) at least one source of atomic hydrogen or atomic hydrogen,

one or more reactants to form at least one of the source of catalyst, the catalyst, the source of atomic hydrogen, and the atomic hydrogen; and
one or more reactants to initiate the catalysis of atomic hydrogen, and
the system further comprising an electrolysis system.

**2.** The electrochemical power system of Claim 1 comprising at least one of a porous electrode, a gas diffusion electrode, and a hydrogen permeable anode wherein at least one of oxygen and $H_2O$ is supplied to the cathode and $H_2$ is supplied to the anode.

**3.** The electrochemical power system of Claim 2 comprising at least one of a hydrided anode and a closed hydrogen reservoir having at least one surface comprising a hydrogen permeable anode.

**4.** The electrochemical power system of Claim 2 comprising back-to-back hydrogen permeable anodes with counter cathodes comprising a unit of a stack of cells that are electrically connected in at least one manner of series and parallel.

**5.** The electrochemical power system of Claim 2 further comprising at least one gas supply system each comprising a manifold, gas line, and gas channels connected to the electrode.

**6.** The electrochemical power system of Claim 2 wherein the cathode comprises at least one of a capillary system and radial gas channels with circumferential perforations, a porous electrode, and a porous layer to transport at least one of $H_2O$ and $O_2$ towards the center of the cell relative to the periphery.

**7.** The hydrogen permeable anode of Claim 2 comprising at least one of Co tape cast, Ni tape cast, Mo tape cast, Mo, a Mo alloy, MoNi, MoCu, MoCo, TZM, H242, Ni, Co, a Ni alloy, NiCo, and other transition and inner transition metals and alloys, and CuCo.

**8.** The hydrogen permeable anode of Claim 2 wherein the pressure is maintained in the range of about 1 Torr to 500 atm and the hydrogen permeation rate is in the range of\ about 1 X $10^{-13}$ mole $s^{-1}$ $cm^{-2}$ to 1 X $10^{-4}$ mole $s^{-1}$ $cm^{-2}$.

**9.** The hydrogen permeable anode of Claim 2 comprising a highly permeable membrane coated with a material that is effective at facilitating the catalysis of atomic hydrogen to form hydrinos.

**10.** The hydrogen permeable anode of Claim 9 wherein at least one of the coating material comprises at least one of Mo, a Mo alloy, MoNi, MoCu, MoCo, MoB, MoC, MoSi, MoCuB, MoNiB, MoSiB, Co, CoCu, CoNi, and Ni and the H permeable material comprises at least one of $Ni(H_2)$, $V(H_2)$, $Ti(H_2)$, $Nb(H_2)$, $Pd(H_2)$, $PdAg(H_2)$, $Fe(H_2)$, $Ta(H_2)$, stainless steel (SS), and 430 SS $(H_2)$.

**11.** The electrochemical power system of Claim 1, wherein the electrolysis system intermittently electrolyzes $H_2O$ to provide a source of atomic hydrogen or atomic hydrogen and discharges the cell such that there is a gain in the net energy balance of the cycle.

**12.** The electrochemical power system of Claim 1, wherein the reactants comprise at least one electrolyte chosen from:

at least one molten hydroxide;
at least one eutectic salt mixture;
at least one mixture of a molten hydroxide and at least one other compound;
at least one mixture of a molten hydroxide and a salt;
at least one mixture of a molten hydroxide and halide salt;
at least one mixture of an alkaline hydroxide and an alkaline halide;
at least one alkaline earth, transition metal, or Bi hydroxide additive;
an additive comprising at least one of $Ni(OH)_2$, $Co(OH)_2$, $Cu(OH)_2$, $Ca(OH)_2$ and $Bi(OH)_3$, LiOH-LiBr, LiOH-NaOH, LiOH-LiBr-NaOH, LiOH-LiX-NaOH, LiOH-LiX, NaOH-NaBr, NaOH-NaI, NaOH-NaX, and KOH-KX, wherein X represents a halide), at least one matrix, and
at least one additive comprising a compound that is a source of a common ion of at least one anode corrosion product wherein the corresponding common ion effect at least partially prevents the anode from corroding.

**13.** The electrochemical power system of Claim 12, wherein the source of a common ion prevents the formation of at

least one of CoO, NiO, and $MoO_2$.

**14.** The electrochemical power system of Claim 12, wherein the additive comprises at least one of a compound comprising a metal cation of the anode and an anion, hydroxide, a halide, oxide, sulfate, phosphate, nitrate, carbonate, chromate, perchlorate, and periodate and a compound comprising the matrix and an oxide, cobalt magnesium oxide, nickel magnesium oxide, copper magnesium oxide, CuO, CrO4, ZnO, MgO, CaO, $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $P_2O_3$, $P_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, and $CrO_3$.

**15.** The electrochemical power system of Claim 12, wherein the matrix comprises at least one of
oxyanion compounds, aluminate, tungstate, zirconate, titanate, sulfate, phosphate, carbonate, nitrate, chromate, and manganate, oxides, nitrides, borides, chalcogenides, silicides, phosphides, and carbides, metals, metal oxides, nonmetals, and nonmetal oxides;
oxides of alkali, alkaline earth, transition, inner transition, and earth metals, and Al, Ga, In, Sn, Pb, S, Te, Se, N, P, As, Sb, Bi, C, Si, Ge, and B, and other elements that form oxides or oxyanions;
at least one oxide such as one of an alkaline, alkaline earth, transition, inner transition, and rare earth metal, and Al, Ga, In, Sn, Pb, S, Te, Se, N, P, As, Sb, Bi, C, Si, Ge, and B, and other elements that form oxides, and one oxyanion and further comprise at least one cation from the group of alkaline, alkaline earth, transition, inner transition, and rare earth metal, and Al, Ga, In, Sn, and Pb cations;
$LiAlO_2$, MgO, $Li_2TiO_3$, or $SrTiO_3$;
an oxide of the anode materials and a compound of the electrolyte;
at least one of a cation and an oxide of the electrolyte;
an oxide of the electrolyte MOH (M = alkali);
an oxide of the electrolyte comprising an element, metal, alloy, or mixture of the group of Mo, Ti, Zr, Si, Al, Ni, Fe, Ta, V, B, Nb, Se, Te, W, Cr, Mn, Hf, Co, and M', wherein M' represents an alkaline earth metal;
$MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $P_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO;
an oxide of the cathode material and optionally an oxide of the electrolyte;
$Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2PO_4$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and M'O, wherein M' represents an alkaline earth metal, and MgO;
an oxide of an element of the anode or an element of the same group, and
$Li_2MoO_4$, $MoO_2$, $Li_2WO_4$, $Li_2CrO_4$, and $Li_2Cr_2O_7$ with a Mo anode, and
the additive comprises at least one of S, $Li_2S$, oxides, $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $P_2O_3$, $P_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MgO, Li2TiO3, LiAlO2, $Li_2MoO_3$ or $Li_2MoO_4$, $Li_2ZrO_3$, $Li_2SiO_3$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_3$, or $LiCoO_2$, MnO, and $CeO_2$.

**16.** The electrochemical power system of Claim 12, wherein the electrolyte is aqueous and alkaline and at least one of the pH of the electrolyte and the cell voltage are controlled to achieved stability of the anode.

**17.** The electrochemical power system of Claim 11, wherein the cell voltage per cell during the intermittent electrolysis and discharge is maintained above the potential that prevents the anode from substantially oxidizing.

**18.** A power system that generates thermal energy comprising:

at least one vessel capable of a pressure of at least one of atmospheric, above atmospheric, and below atmospheric;
at least one heater,
reactants that constitute hydrino reactants comprising:

a) a source of catalyst or a catalyst comprising nascent $H_2O$;
b) a source of atomic hydrogen or atomic hydrogen;
c) reactants comprising a hydroxide compound and a halide compound to form at least one of the source of catalyst, the catalyst, the source of atomic hydrogen, and the atomic hydrogen; and

one or more reactants to initiate the catalysis of atomic hydrogen wherein the reaction occurs upon at least one of mixing and heating the reactants.

**19.** A power system of Claim 18 wherein at least one of the hydroxide compound and a halide compound comprise at least one of alkaline, alkaline earth, transition, inner transition, and rare earth metals, and Al, Ga, In, Sn, Pb, Bi, Cd, Cu, Co, Mo, and Ni, Sb, Ge, Au, Ir, Fe, Hg, Mo, Os, Pd, Re, Rh, Ru, Se, Ag, Tc, Te, Tl, Sn, W, and Zn.

**20.** A power system of Claim 19 wherein, the reactants further comprise a source of $H_2O$ that is reacted with the products to regenerate the reactants.

Fig. 1

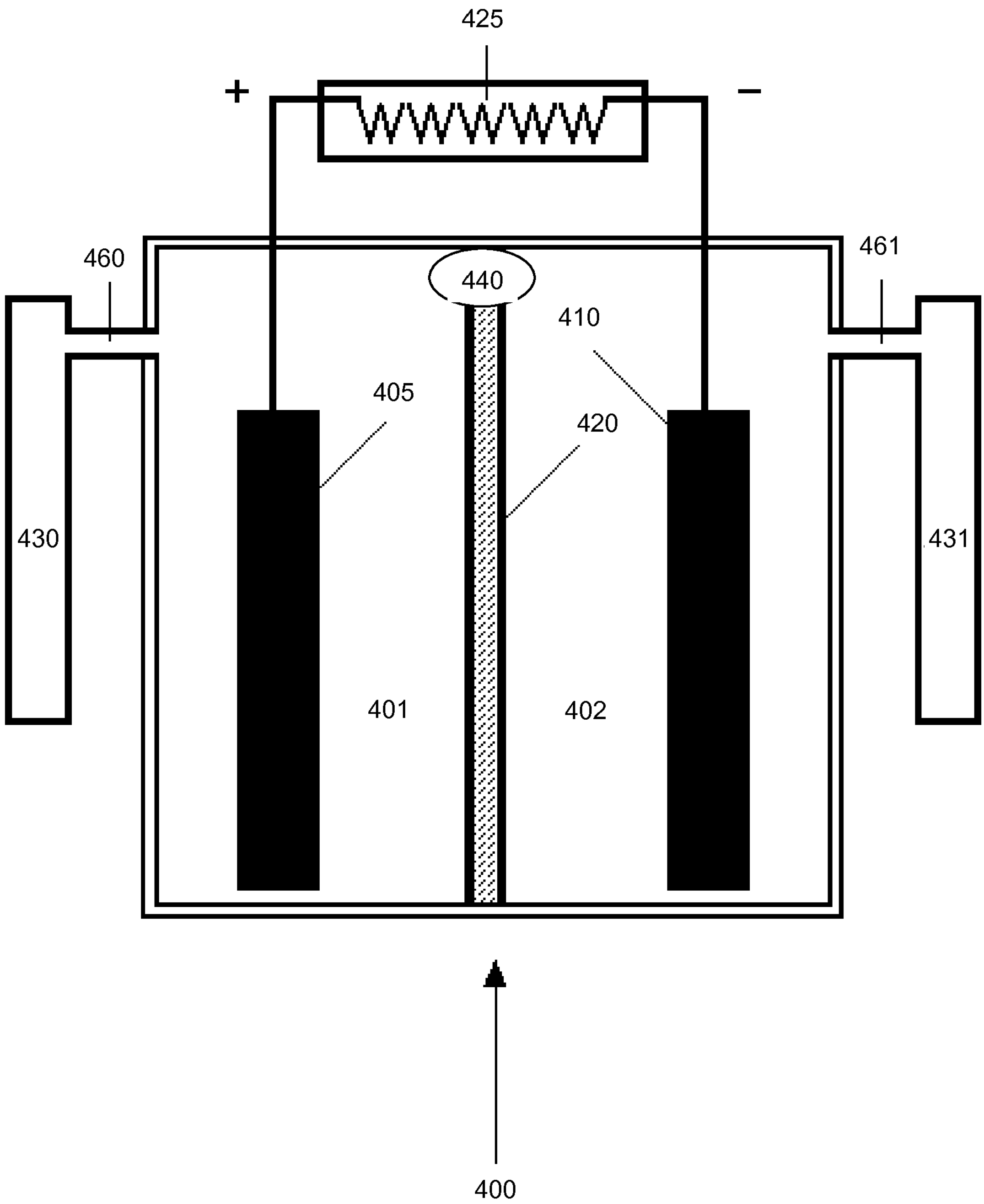

Fig. 2

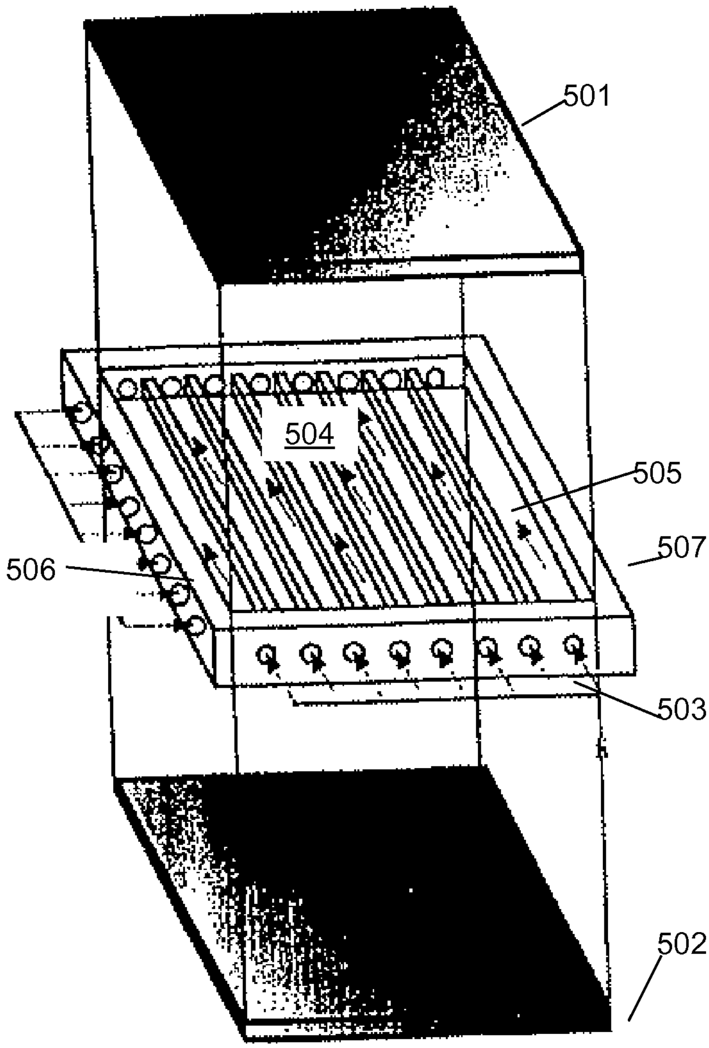


500

Fig. 3

(a)

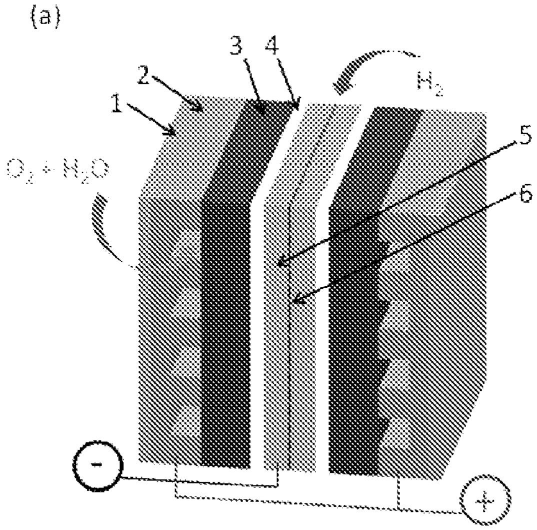


(b)

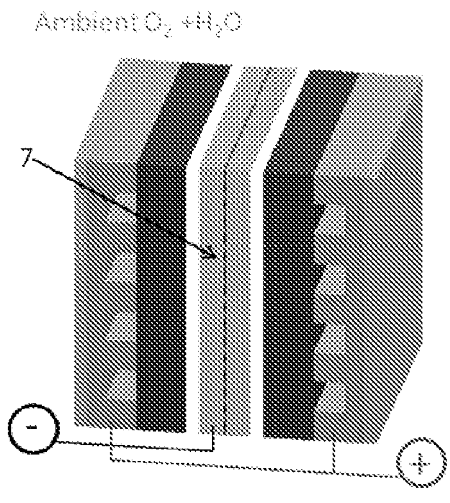

Fig. 4

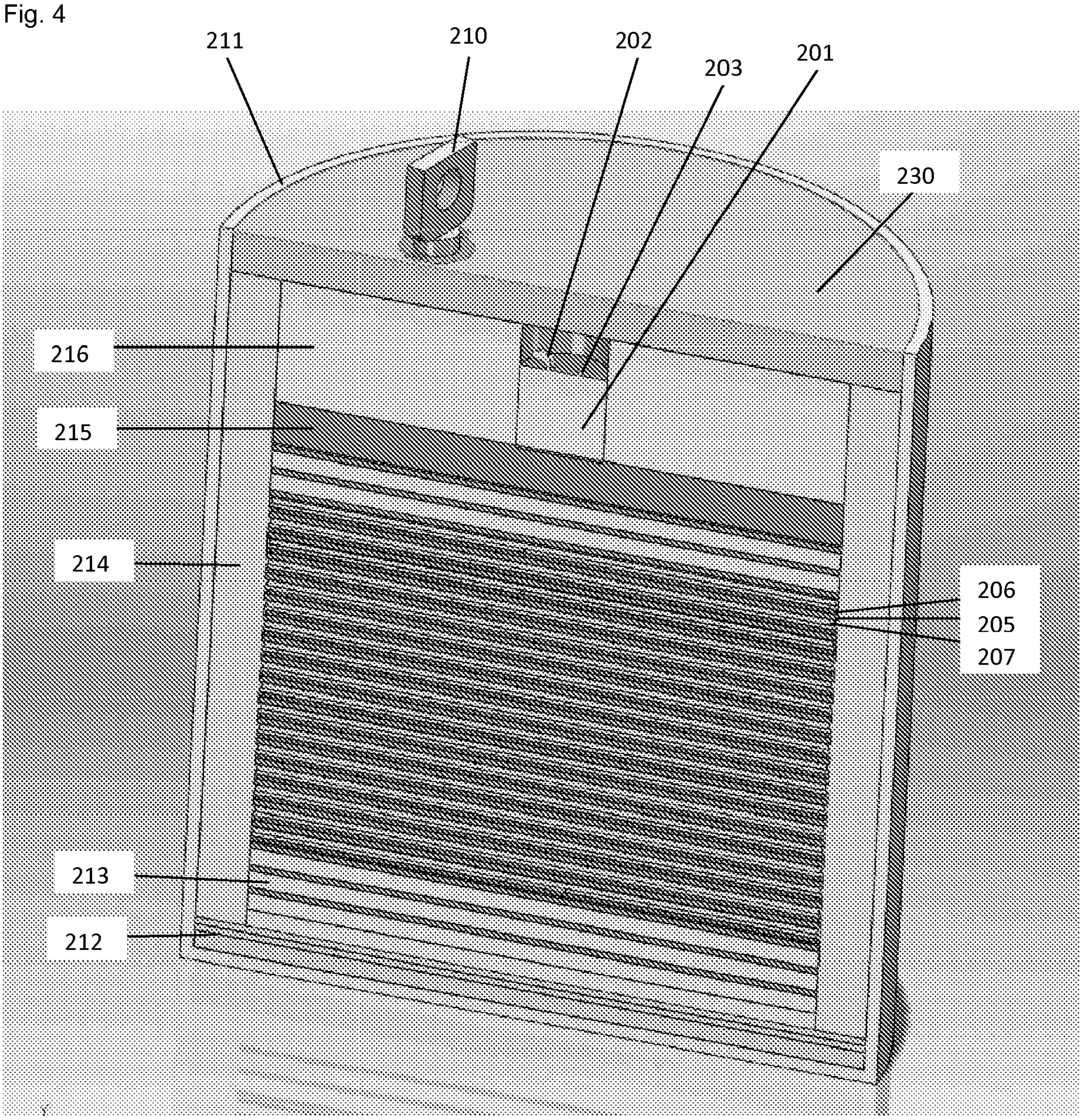


200

Fig. 5

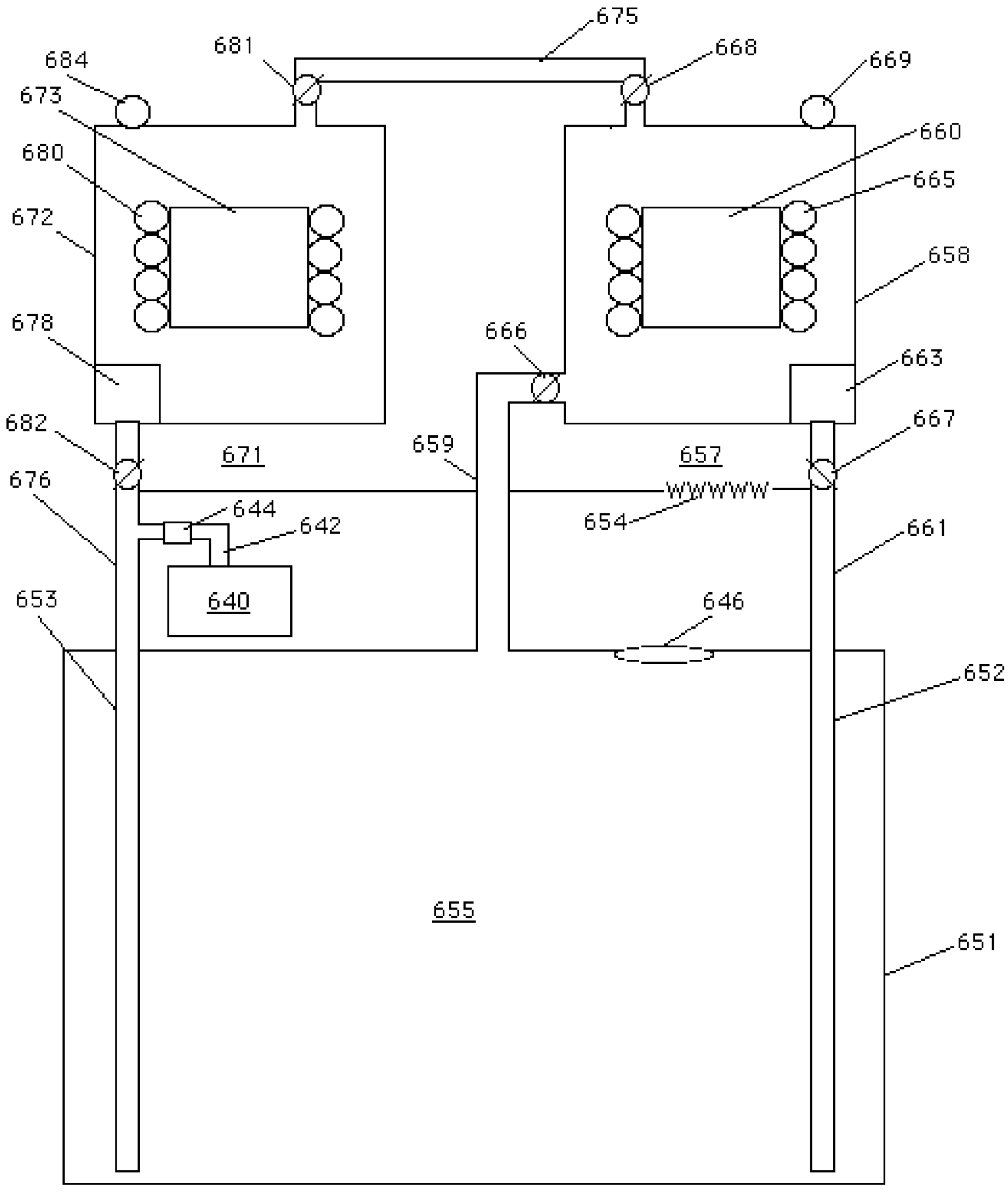
675
681
668
684
669
673
660
680
665
672
658
678
666
663
682
671
659
657
667
676
644
642
654
661
640
653
646
652
655
651

650

Europäisches Patentamt
European Patent Office
Office européen des brevets

# EUROPEAN SEARCH REPORT

Application Number
EP 19 19 9490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/282063 A1 (ZECEVIC STRAHINJA [US] ET AL) 22 December 2005 (2005-12-22) * pages 13-28; figures 1-3 * | 1-20 | INV. H01M8/14 H01M4/86 |
| X | US 3 471 335 A (MOULTON DAVID MCL ET AL) 7 October 1969 (1969-10-07) * column 2, line 32 - column 4, line 37; figure 1 * | 1-20 | ADD. H01M8/22 |
| T | A RATHKE: "A critical analysis of the hydrino model", NEW JOURNAL OF PHYSICS, vol. 7, 19 May 2005 (2005-05-19), pages 127-127, XP055096289, DOI: 10.1088/1367-2630/7/1/127 | | |
| T | A VIJH: "Hydrino atom: novel chemistry or invalid physics?", INTERNATIONAL JOURNAL OF HYDROGEN ENERGY, vol. 26, no. 3, 1 March 2001 (2001-03-01), page 281, XP055096781, ISSN: 0360-3199, DOI: 10.1016/S0360-3199(00)00072-0 | | TECHNICAL FIELDS SEARCHED (IPC) |
| | | | H01M |
| A | WO 2011/016878 A1 (BLACKLIGHT POWER INC [US]; MILLS RANDELL L [US]) 10 February 2011 (2011-02-10) * the whole document * | 1-20 | |

The present search report has been drawn up for all claims

1

| Place of search | Date of completion of the search | Examiner |
|---|---|---|
| Munich | 17 October 2019 | Brune, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 19 9490

This annex lists the patent family members relating to the patent documents cited in the above-mentioned European search report. The members are as contained in the European Patent Office EDP file on
The European Patent Office is in no way liable for these particulars which are merely given for the purpose of information.

17-10-2019

| Patent document cited in search report | Publication date | Patent family member(s) | Publication date |
|---|---|---|---|
| US 2005282063 A1 | 22-12-2005 | NONE | |
| US 3471335 A | 07-10-1969 | NONE | |
| WO 2011016878 A1 | 10-02-2011 | AP 3353 A | 31-07-2015 |
| | | AU 2010281658 A1 | 02-02-2012 |
| | | AU 2017202706 A1 | 18-05-2017 |
| | | BR 112012002587 A2 | 22-03-2016 |
| | | CA 2767683 A1 | 10-02-2011 |
| | | EA 201200254 A1 | 28-09-2012 |
| | | EP 2462653 A1 | 13-06-2012 |
| | | EP 2966723 A1 | 13-01-2016 |
| | | EP 3441359 A1 | 13-02-2019 |
| | | JP 2013501602 A | 17-01-2013 |
| | | JP 2017185479 A | 12-10-2017 |
| | | JP 2019048292 A | 28-03-2019 |
| | | KR 20120107457 A | 02-10-2012 |
| | | KR 20170123711 A | 08-11-2017 |
| | | MX 362975 B | 28-02-2019 |
| | | SG 178258 A1 | 29-03-2012 |
| | | SG 10201701293Q A | 27-04-2017 |
| | | US 2012122017 A1 | 17-05-2012 |
| | | WO 2011016878 A1 | 10-02-2011 |
| | | ZA 201200250 B | 26-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61649606
- US 61671348 B
- US 61693462 B
- US 61708869 B
- US 61718959 B
- US 61783698 B
- US 61821594 B
- US 0861455 W
- US 09052072 W
- US 1027828 W
- US 1128889 W
- US 1231369 W


### Non-patent literature cited in the description


- **M. S. ANTLEMAN ; F. J. HARRIS.** Encyclopedia of Chemical electrode Potentials. Plenum Press, 1982
- **R. L. MILLS ; R. BOOKER ; Y. LU.** *Soft X-ray continuum radiation from low-energy pinch discharges of hydrogen*
- **R. L. MILLS ; Y. LU.** Time-resolved hydrino continuum transitions with cutoffs at 22.8 nm and 10.1 nm. *Eur. Phys. J. D,* 2011, vol. 64, 63
- **R. L. MILLS ; Y. LU.** Hydrino continuum transitions with cutoffs at 22.8 nm and 10.1 nm. *Int. J. Hydrogen Energy,* 2010, vol. 35, 8446-8456
- **A. F. H. VAN GESSEL ; MASTERS THESIS.** EUV spectroscopy of hydrogen plasmas. Eindhoven University of Technology, April 2009, 61-70
- **K. AKHTAR ; J. SCHARER ; R. L. MILLS.** Substantial Doppler broadening of atomic-hydrogen lines in DC and capacitively coupled RF plasmas. *J. Phys. D, Applied Physics,* 2009, vol. 42 (42), 135207
- **F. BOURNAUD ; P. A. DUC ; E. BRINKS ; M. BOQUIEN ; P. AMRAM ; U. LISENFELD ; B. KORIBALSKI ; F. WALTER ; V. CHARMANDARIS.** Missing mass in collisional debris from galaxies. *Science,* 2007, vol. 316, 1166-1169
- **B. G. ELMEGREEN.** Dark matter in galactic collisional debris. *Science,* 2007, vol. 316, 32-33
- **M. J. JEE ; A. MAHDAVI ; H. HOEKSTRA ; A. BABUL ; J. J. DALCANTON ; P. CARROLL ; P. CAPAK.** A study of the dark core in A520 with the Hubble Space Telescope: The mystery deepens. *Astrophysical J.,* 2012, vol. 747 (96), 96-103
- **H. CONRADS ; R. L. MILLS ; TH. WRUBEL.** Emission in the Deep Vacuum Ultraviolet from a Plasma Formed by Incandescently Heating Hydrogen Gas with Trace Amounts of Potassium Carbonate. *Plasma Sources Science and Technology,* 2003, vol. 12, 389-395
- **R. L. MILLS ; P. C. RAY ; R. M. MAYO ; M. NANSTEEL ; B. DHANDAPANI ; J. PHILLIPS.** Spectroscopic Study of Unique Line Broadening and Inversion in Low Pressure Microwave Generated Water Plasmas. *J. Plasma Physics,* 2005, vol. 71, 877-888
- **R. L. MILLS ; P. RAY ; R. M. MAYO.** CW HI Laser Based on a Stationary Inverted Lyman Population Formed from Incandescently Heated Hydrogen Gas with Certain Group I Catalysts. *IEEE Transactions on Plasma Science,* 2003, vol. 31 (2), 236-247
- **R. L. MILLS ; E. DAYALAN ; P. RAY ; B. DHANDAPANI ; J. HE.** Highly stable novel inorganic hydrides from aqueous electrolysis and plasma electrolysis. *Electrochimica Acta,* 2002, vol. 47 (24), 3909-3926
- **R. L. MILLS ; B. DHANDAPANI ; M. NANSTEEL ; J. HE ; T. SHANNON ; A. ECHEZURIA.** Synthesis and characterization of novel hydride compounds. *Int. J. of Hydrogen Energy,* 2001, vol. 26 (4), 339-367
- **E.H. WISHNOW.** The Far-Infrared Absorption Spectrum of Low Temperature Hydrogen Gas. *Ph.D. Thesis, University of British Columbia,* 1993